# EUROPEAN PATENT APPLICATION

(11) **EP 1 089 166 A2**
(43) Date of publication of application: **04.04.2001**
(21) Application number: 00308584.2
(22) Date of filing: 29.09.2000
(51) Int. Cl.: G06F 9/312, G06F 9/315, G06F 9/305

(54) **An integer instruction set architecture and implementation**

(30) Priority: 01.10.1999 US 410683
(71) Applicant: Hitachi, Ltd., Chiyoda-ku, Tokyo (JP)
(72) Inventor: Krishnan, Sivaram, Los Altos, California 94024-5321 (US); Mandavilli, Srinivas, Santa Clara, California 95050 (US); Kuo, Liang Cheng, Cupertino, California 95014 (US)
(74) Representative: Calderbank, Thomas Roger

(57) **Abstract**

The present invention is directed to a processor element, such as a microprocessor or a micro-controller, structured to execute an integer instruction set architecture. In a specific embodiment, the present invention provides a method for loading an arbitrary constant number into a memory location, through a series of immediate integer instructions. In another specific embodiment present invention provides a method for normalizing a number. The method includes, counting a total number of sign bits in the binary number and then determining a result by subtracting one from the total number. The result may be used for normalizing a number by left-shifting the binary number by the result.

## Description

The invention relates generally to microprocessor/microcontroller architecture, and more particularly to an integer instruction set architecture.

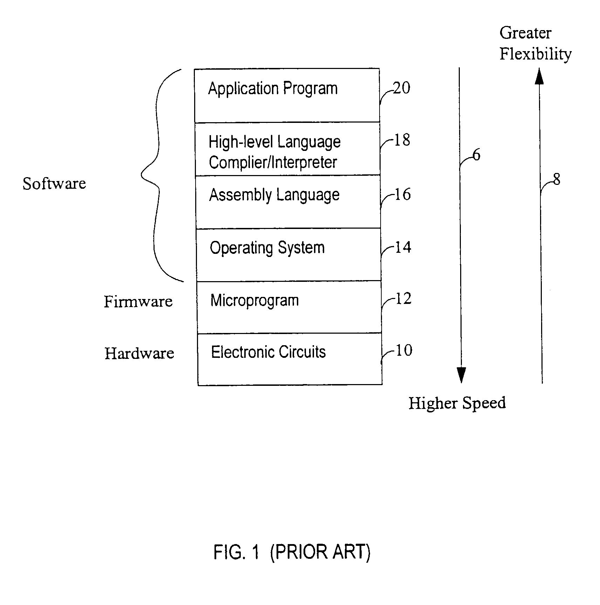

FIG. 1 illustrates the layering of a typical computer system, showing the tradeoff between using software versus hardware for microprocessor design and implementation. As FIG. 1 shows that shifting the microprocessor functions toward hardware typically increases speed 6, but reduces flexibility 8, while replacing hardware functions by software normally increases the flexibility of use 8, but at the cost of lower speed 6.

The introduction of microprograms 12 in firmware allowed more hardware functions to be done in software. The instruction sets, as a result, at the assembly language layer 16 became more complex. With the reduction in hardware costs, the balance moved back to hardware with some software functions being done in specialized hardware, e.g., floating point processors. This allowed an increase in performance. Thus, there is a continuing need to evaluate if a software function should be done in specialized hardware.

At the time hardware costs were coming down, application programs 20 were becoming more complex and diverse. This , in part, drove a trend for more complex Electronic circuits 10 to execute the Application programs 20 without loss in performance. For example, Application programs 20 using 16 bits, then 32 bits, drove or were in response to electronic circuits 10 using 16 bit, 32 bit, or 64 bit words. Thus Assembly Language 16 instruction sets are being designed to handle the increase in application and hardware complexity.

Typical computer programs contain Integer Instructions which perform operations on integer numbers. For example, such operations may include adding, subtracting, comparing, loading a constant, shifting, moving, logically ORing, or logically NANDing, one or more operands into a result. Some of these integer operations were executed by several Assembly Language 14 instructions. With the complex application programs being more widespread and with wider bus microprocessors, new instruction set architectures are needed to take full advantage of the increased software and hardware complexity.

Therefore, there is a need for an Integer instruction set which makes efficient use of the wider word, e.g., 64 bit architectures, to execute the more complex and diverse application programs. This may include designing some instructions to be executed on customized hardware to increase performance.

### IN THE DRAWINGS

FIG. 1 illustrates the different levels of prior art computer systems (PRIOR ART);
FIG. 2 illustrates a specific embodiment of the SHORI instruction of the present invention;
FIG. 3 illustrates a simplified example of the NSB instruction of the present invention;
FIG. 4 illustrates an example block diagram of the Integer/Multimedia Unit of the present invention;
FIG. 5 shows an example of a one cycle XHW instruction being executed in a pipeline of the present invention;
FIG. 6 shows a block diagram of the one specific embodiment of the XHW of the present invention.

### Example Integer Instructions

In a specific embodiment a list of example Integer Instructions isgiven in Appendix 1. From the list of Integer Instructions, several are described to illustrate the features of the Integer Instruction set.

One example is the loading of an arbitrary constant value. Instructions of this type typically have an immediate operand to allow a range of constant values to be encoded directly in the instruction. If the required constant does not fit in the space provided in the instruction, then the constant is loaded separately from the instruction.

In a specific embodiment of the present invention the arbitrary constant is loaded by a series of immediate instructions, each including a part of the arbitrary constant value. For example, two instructions are provided for loading constants: MOVI loads a register with sign-extended 16-bit immediate value, and SHORI shifts its source operand 16 bits to the left, and then combines it with its 16-bit immediate value using an 'OR' operation. Constants, of arbitrary length, can be loaded by using a MOVI instruction followed by zero or more SHORI instructions. For example, for 32-bit instructions and a 64-bit destination register, sign-extended 16-bit constants can be loaded in 1 instruction (MOVI), sign-extended 32-bit constants in 2 instructions (MOVI then SHORI), sign-extended 48-bit constants in 3 instructions (MOVI then SHORI then another SHORI)and 64-bit constants in 4 instructions (MOVI then three SHORI's). **Table 1** illustrates examples of formats for the MOVI and SHORI instructions.

**Table 1**

| Instruction | Summary |
|---|---|
| MOVI source, result | move immediate |
| SHORI source, result | shift then "or" immediate |

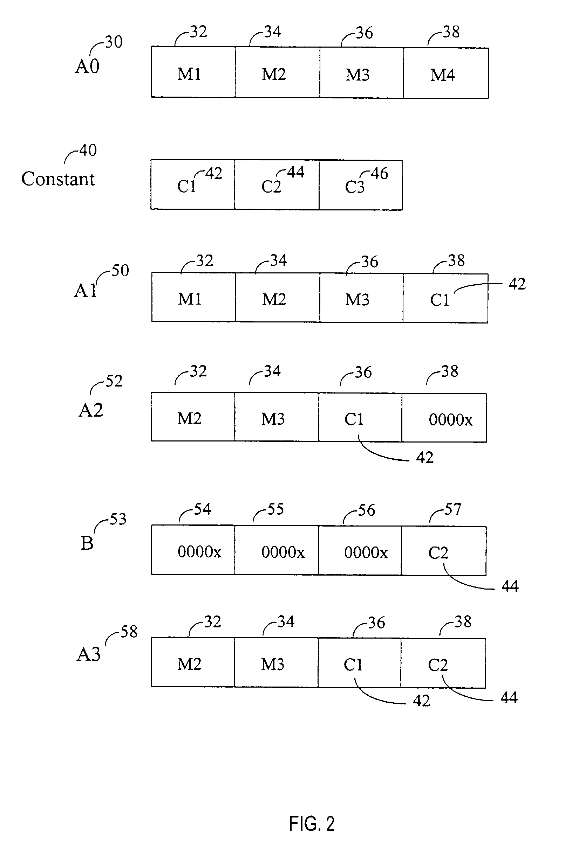

FIG. 2 illustrates a specific embodiment of the SHORI instruction of the present invention. FIG. 2 shows two registers A, as shown in various stages as: A0 30, A1 50, A2 52, and A3 56, and Register B 54. Register A in step 1 is A0 30 and includes four sections 32, 34, 36, 38, each of 16-bits and containing data M1 in section one 32, data M2 in section two 34, data M3 in section three 36, and data M4 in section four. 38. An example constant 40 is partitioned into three 16-bit parts, C1 42, C2 44, and C3 46.

The MOVI instruction loads C1 42 into A1 50 in the fourth location 38. The SHORI instruction performs several functions: shifting C1 42 in register A, i.e., A2 52, from location 38 to location 36; loading register B 53 at the forth position 57 with C2 44 and zero extending it for locations 54, 55, 56 in register B 53; and bit-wise "ORing" register A2 52 with register B 53 to get the result, i.e., A3 58 in which C1 42 is in location 36 and C2 44 in location 38. Using another SHORI instruction, C3 46 may be loaded into register B 53 at location 57 and "OR'd" with a left shifted A3 58, hence loading the constant 40 into register A. In another embodiment M1, M2 and M3 may be set to zero in A1 50.

Table 2 illustrates a detailed description of the MOVI instruction in a specific embodiment of the present invention. The microprocessor has 64 bit registers and the instructions are 32 bits in length. The MOVI instruction with opcode "110011", sign-extends the 16-bit immediate field "s" and stores the result in the register "d", i.e., R_{d}. The "r" field may be for four reserved bits.

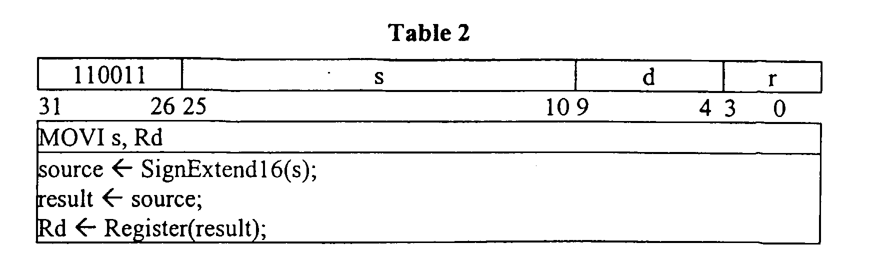

Table 3 illustrates a detailed description of the SHORI instruction in a specific embodiment of the present invention. The SHORI instruction with opcode "11010", left shifts the contents of register "w", i.e., R_{w,} by 16, performs a bitwise "OR" with the 16-bit immediate field "s", and stores the result in the register R_{w}. R_{w} may be, in this embodiment, 64 bits in length.

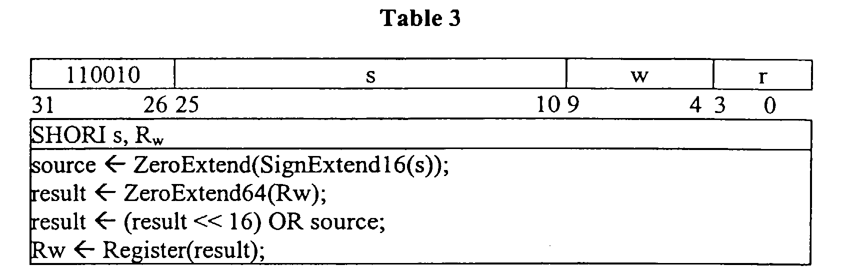

Another example of where an integer instruction is used is in the counting of the sign bits in a signed integer number. An application were this may be useful is in the execution of a Digital Signal Processing (DSP) algorithm. The instruction set should include instructions which are efficient in the normalizing of signed fractional numbers so that their value lies in the range [0.5 - 1.0] and [-0.5 - -1.0]. The typical normalization function on a microprocessor chip does a series of left shift and compares. The value of an efficient normalization function may be seen by its use on a DSP chip. For example a standard normalization operation in a ITU speech coder may have a complexity weight of 30, indicating that it would consume 30 cycles on a DSP not supporting normalization as an instruction. In the G.729E speech coder the normalization function maybe called about 15000 times per second. Thus, as DSP algorithms may be used in Application Programs 20, but not enough to need a separate DSP chip, an instruction which assists in normalization, such as the NSB instruction, would improve the performance of a general microprocessor executing a DSP algorithm.

In a specific embodiment of the present invention the NSB instruction counts the number of sign bits in its 64 bit source register, subtracts 1 and stores the result in its destination register. The number of sign bits is the number of consecutive bits, including the most significant bit and moving down towards the least significant bit, that have the same bit value. If the source register is then left shifted by the result of the NSB instruction, the result is normalized within the 64-bit signed number space.

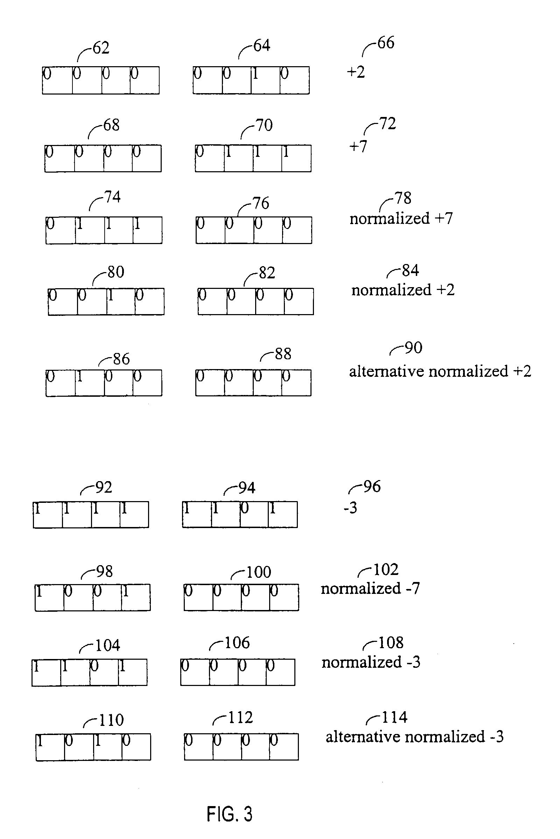

FIG. 3 illustrates a simplified example of the NSB instruction of the present invention; The integer "+2" 66 is shown in two's complement format for a byte, i.e., 8-bits, nibble (4-bits) 62 and nibble 64. For this example, assume that the largest positive number is "+7" 72 with nibbles 68, 70. Applying the method in the previous paragraph, there are five sign bits in "+7" 72. The NSB may return a count of 5- 1 = 4. And by shifting "+7" 72 four bits to the left, we get nibbles 74, 76 for "normalized +7" 78. To normalize "+2," nibbles 62, 64 are shifted left by four to give nibbles 80, 82. As two's complement may be used, a similar normalization for "-3" 96 with nibbles 92, 94 and with assumed maximum negative magnitude -7 is shown in "normalized -3" 108 with nibbles 104, 106. The largest magnitude is one example of normalizing numbers. In another embodiment, each number may have an NSB calculated for it and the number left shifted by the NSB. This may be similar to normalizing a floating point mantissa and changing the exponent by an opposite like amount. The alternative "normalized +2" 90 with nibbles 86, 88 is "+2" 66 shifted to the left by the NSB, i.e., five bits, for this alternative embodiment. This alternative "normalized +2" 90 may be considered a two's-complement number normalized in the range [-128,+127] or +2 divided by about 128 (2**7).

Table 4 illustrates a detailed description of the NSB instruction in a specific embodiment of the present invention. The NSB instruction with split opcode "000000" and "1101" , counts the number of consecutive sign bits in register "m" (Rₘ), subtracts one and stores the result in register "d" (R_{d}). "r" stands for reserved bits and the registers are 64 bits. The algorithm given in Table 4 is an another specific embodiment of the NSB instruction.

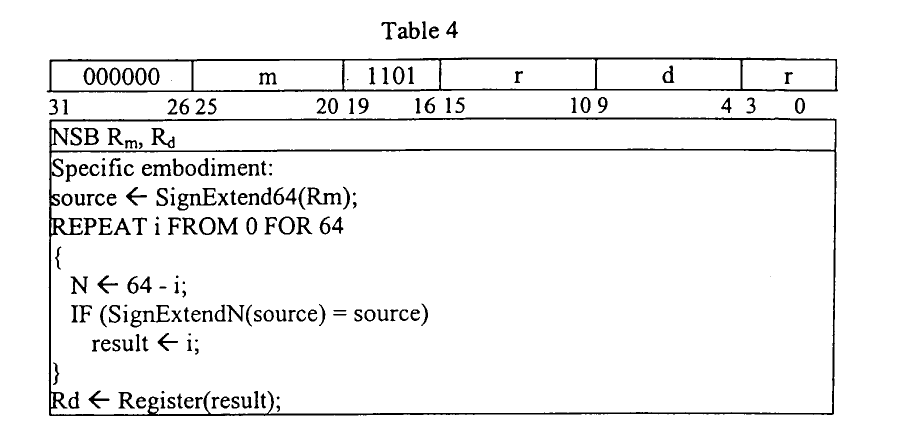

### Specific Embodiments of Hardware Implementations of Some Integer Instructions

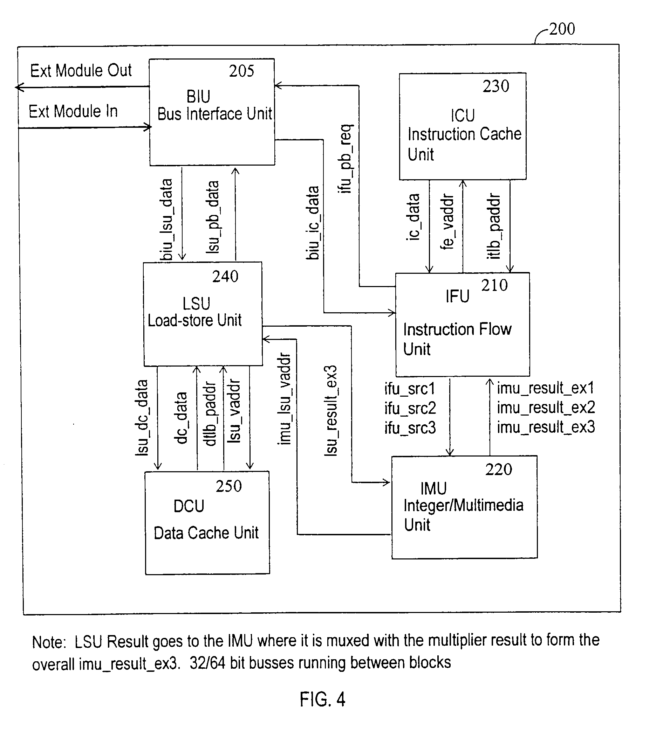

In a specific embodiment, the present invention may be implemented in a CPU having a core 200 unit at the zero or root hierarchy level. The Core 200 may include six units at the hierarchy level 1. FIG. 4 illustrates an example of the top level partitioning of the Core 200. Table 5 describes the functions of each unit in the S5 core. The Instruction Flow Unit (IFU) 210 which includes processing the Integer instruction is further described in Appendix 2.

**Table 5**

| **Hierarchy Level** | **Unit** | **Acronym** | **Description** |
|---|---|---|---|
| 0 | S5 Core 200 | S5 | Top level core block |
| 1 | Bus interface unit 205 | BIU | Controls bus access to external modules such as peripheral modules and external memory interface. |
| 1 | Instruction Flow Unit 210 | IFU | The front end of the CPU pipe: fetch, decode, issue & branch. Also contains mode B emulation. |
| 1 | Instruction multimedia unit 220 | IMU | Handles all integer and multimedia instructions. The main CPU datapath. |
| 1 | Instruction cache Unit 230 | ICU | Comprises the Instruction Cache and the Instruction Translation Lookaside Buffer (TLB) |
| 1 | Load Store Unit 240 | LSU | Handles all memory instructions and Data cache control. |
| 1 | Data cache Unit 250 | DCU | Comprises the Data Cache and the Data Translation Lookaside Buffer (TLB) |
| 1 | Floating Point Unit (not shown) | FPU | Detachable Floating point decoder, pipe control and execution pipe (not shown in FIG. 4). |

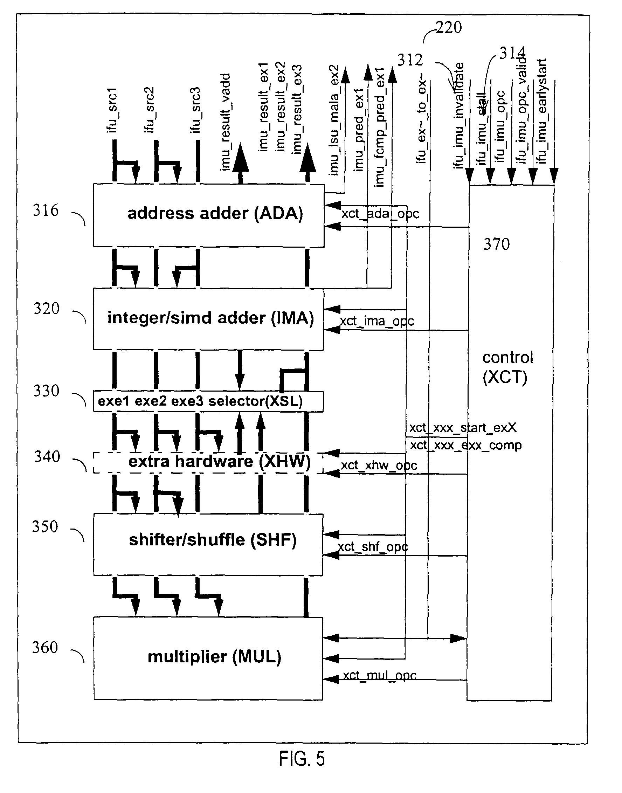

FIG. 5 illustrates an example block diagram of the Integer/Multimedia Unit (IMU) 220. In a specific embodiment, an IMU 220 may handle the cpu arithmetic instructions, including integer, multimedia arithmetic and logic instructions; load/store address calculation and out-of- range (maladdress) detection; branch and partial branch comparisions; and branch target address calculations. The IMU 220 computations may occur during the first (exe1), second (exe2), or third (exe3) pipeline stages. Many of the sub-units have a one cycle execution time, while the multiplier may have a 3 cycle latency. The IMU 220 in this embodiment may be a simple pipe. Unless a ifu_imu_stall signal 312 or ifu_imu_invalidate signal 314 is received, data progress in the pipe each cycle without being blocked by dependent signals.The IMU 220 gets many of its inputs from the IFU 210. Main signals may be source operands and opcode word. The IMU 220 may send its result at exe1 and exe2 pipe stages (one and two cycles instructions), or at exe3 pipe stage(3 or 4 cycle instructions).

In a specific embodiment, the IMU 220 includes seven units . Table 6 gives the description of the IMU blocks in FIG. 5. Appendix 3 has a detailed explanation of the embodiment of the IMU.

**Table 6**

| Hierarchy Level | Unit Function | Acronym | Description |
|---|---|---|---|
| 2 | adder | ADA 316 | integer and address adder |
| 2 | adder | IMA 320 | simd adder |
| 2 | selector | XSL 330 | exe1 exe2 exe3 result mux |
| 2 | extra exe hw | XHW 340 | special instructions support |
| 2 | shifter/shuffle | SHF 350 | shifter and shuffle |
| 2 | multiplier | MUL 360 | integer and simd multiplier |
| 2 | control | XCT 370 | control block |

The ADA 316, for example, may do addressing of the IFU 210 or LSU 240 and integer addition, subtraction or comparison. The ADA 316 may include, a 64 bit adder . The second input may be inverted for substraction or compare. Range checking may also be done.

The IMA 320, for example, may include two adders wherein each performs one 32-bit additions, two 16-bit additions or four 8-bit additions. Each type of addition may include a carry in, activated simultaneously for all additions. This allows byte processing, where the results may be 8 bit vectors. The second source operand may be inverted to allow subtraction and comparison.

The XHW 340 in a specific embodiment handles instructions that are difficult to implement by re-using other blocks hardware. The instructions may have their own hardware for implementations since each have a behavior can not be matched in any other instruction. The XHW 340 may include the MOVI, SHORI, and NSB instructions.

The SHF 350, for example, performs the shift related instructions as well as the instructions involving the displacement of byte quantities in a 64 bit source. It executes many of them in one cycle (exe1) except for saturation's issued one cycle later (exe 2). It also muxes the saturation values if saturation commands are generated at exe2 stage.

Shuffle and byte displacement functions, are preferably performed by the SHF 350 in 3 steps as well. First step creates control signals for the shuffle matrix. Step 2 moves the bytes. Last step muxes saturation value if required at exe3.

Saturation detection may be done separately by the SHF 350. It uses the operands and masks from the shift paths and may produce the saturation commands for the second cycle (exe 2) of the shift and shuffle.

The MUL function 360, for example, executes the multiplier related instructions, including SIMD (Single Instruction Multiple Data) integer multiplies. Many of the instructions complete in three cycles, but a few instructions may require four cycles to complete. Booth encoding algorithm may be used to perform the multiplication.

The XCT 370 operates to buffer and broadcast the various control signals provided by IFU 210 that need to be duplicated for each execution block. It may control the block in the pipe as well, by keeping a small table of instruction position in the pipe. The XCT 370 may take into account the validation, stalling and invalidation signals.

In a specific embodiment the XHW 340 has no complex instruction to handle, but it does handles instructions that are difficult to implement by re-using other blocks hardware. The instructions may have their own hardware for implementations, since each has a behavior that may not be matched in any other instruction. The MOVI, SHORI, and NSB instructions may be implemented in the XHW 340.

XHW 340 may handle the move-like instructions, e.g., MOVI. The XHW 340 may not overload the IMA 320 critical path with extra muxes, and may avoid forcing zeroes on some source operands. And since it is a typically one cycle, 3 inputs operator, it can handle SHORI without any impact on the decoder critical path (no register swap). Since XHW 340 has a simple local opcode, it may also reduce decoder complexity for these instructions.

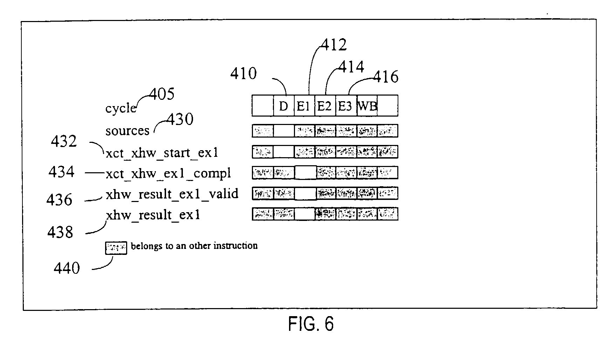

FIG. 6 shows an example of a one cycle XHW instruction being executed in a pipeline of the present invention, where that instruction may be in a specific embodiment MOVI, SHORI, or NSB. In FIG. 6 "cycle" 405 shows the stages of the pipeline. The "D" Stage 410 shows the instruction in the cycle 405 just before execution. The control signal (xct_xhw_start_ex1 432)to start execution is then given, by the XCT 370. "E1" 412, "E2" 414, and "E3" 416, represent the exe1, exe2, and exe3 execution stages, i.e., cycles, respectively. The XHW 340 executes the instruction and gives the result, 434-438, all in one cycle, E1 412.

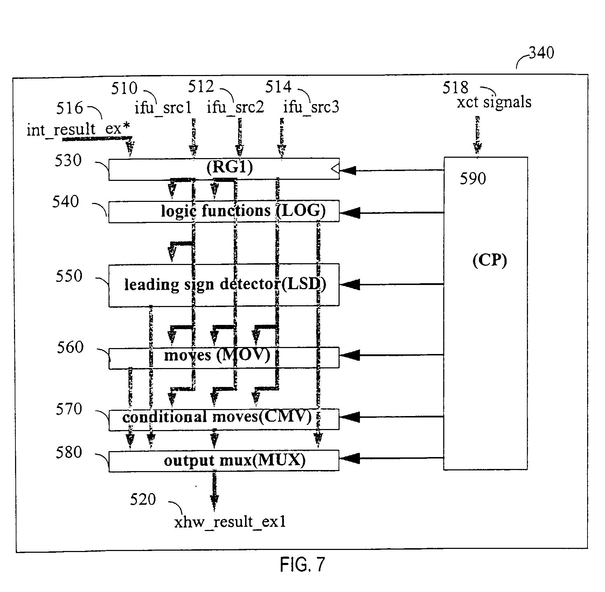

FIG. 7 shows a block diagram of the one specific embodiment of the XHW 340 of the present invention. Table 7 illustrates examples of the external interfaces of the XHW 340.

**Table 7**

| Bus | Dir | Src/Dest | Size | Time | Description |
|---|---|---|---|---|---|
| ---- Source operand busses | | | | | |
| ifu_src1 510 | in | ifu | 64 | ck1** | operand1 bus |
| ifu_src2 512 | in | ifu | 64 | ck1** | operand2 bus |
| ifu_src3 514 | in | ifu | 64 | ck1** | operand3 bus |
| int_result_ex1 516 | in | xsl | 64 | ck1** | internal forwarded result 1 |
| int_result_ex2 516 | in | xsl | 64 | ck1** | internal forwarded result 2 |
| int_result_ex3 516 | in | xsl | 64 | ck1** | internal forwarded result 3 |
| int_src1_from 518 | in | xct | 4 | ck1** | source 1 selection |
| int_src2_from 518 | in | xct | 4 | ck1* | source 2 selection |
| int_src3_from 518 | in | xct | 4 | ck1* | source 3 selection |

| ---- Instruction input signals | | | | | |
|---|---|---|---|---|---|
| xct_xhw_opc 518 | in | xct | 13 | ck1* | xhw opcode |

| ---- Pipe control input signals | | | | | |
|---|---|---|---|---|---|
| xct_xhw_start_ex1 518 | in | xct | 1 | ck1** | xhw starts ex1 |
| xct_xhw_shf_ex1_comp1 518 | in | xct | 1 | ck1* | ex1 gets xhw data |

| ---- Output data | | | | | |
|---|---|---|---|---|---|
| xhw_result_ex1 520 | out | ifu | 64 | ck1* | exe1 result |
| xhw_result_ex1_valid (not shown) | out | ifu | 1 | ck1 | exe1 result is valid |

In a specific embodiment the XHW may include seven modules: RG1 530, LOG 540, LSD 550, MOV 560, CMV 570, MUX 580, and CP 590, which includes the control signals.

Input latch or Flip-flop (RG1 530) receives and stores the three source operands (ifu_src1, ifu_src2, and ifu_src3).

Logic function(LOG 540) performs a logical AND, OR, ANDC, XOR and one result is selected.

Leading sign counter(LSD 550) function, i.e., NSB, is based on a leading zero counter. The sign is inverted when number is negative. The NSB may be, for example, a two stage process: bits are counted on a byte format for the lower 3 bits of the result, and then on the full double format, by byte, for the higher 3 bits of the result. The RTL code is given in Appendix 4.

Move functions (MOV 560) may include MOVI which may forward operand 2 to the result bus (Input source is already sign extended) and SHORI which may shift by 16 and abut. The RTL code is given in Appendix 5.

For SHORI : the 16-bit immediate constant value is zero extended and the rg1_data3 is 16-bit left shifted, then these two values are "OR'd". An example of an RTL statement that does this is: (48'b0,rg1_data2[15:0]} {rg1_data3[47:0],16'b0}, which is equivalent to {rg1_data3[47:0], rg1_data2[15:0]} given in Appendix 5.

Conditional move (CMV 570)may include compare instructions which select the entire or part of the source operands for generating the result, e.g., EQ and NE detect zero or non-zero operand 1.

There may be an output mux(MUX 580) which selects the result.

### Conclusion

In the foregoing specification, the invention has been described with reference to specific exemplary embodiments thereof. Other embodiments will be apparent to those of ordinary skill in the art. For example, the instructions may be 16 or 64 bits in length and the microprocessor may operate with 16, 32, or 128 bit busses and words. Thus, it is evident that various modifications and changes may be made thereunto without departing from the broader spirit and scope of the invention as set forth in the appended claims and their full scope of equivalents.

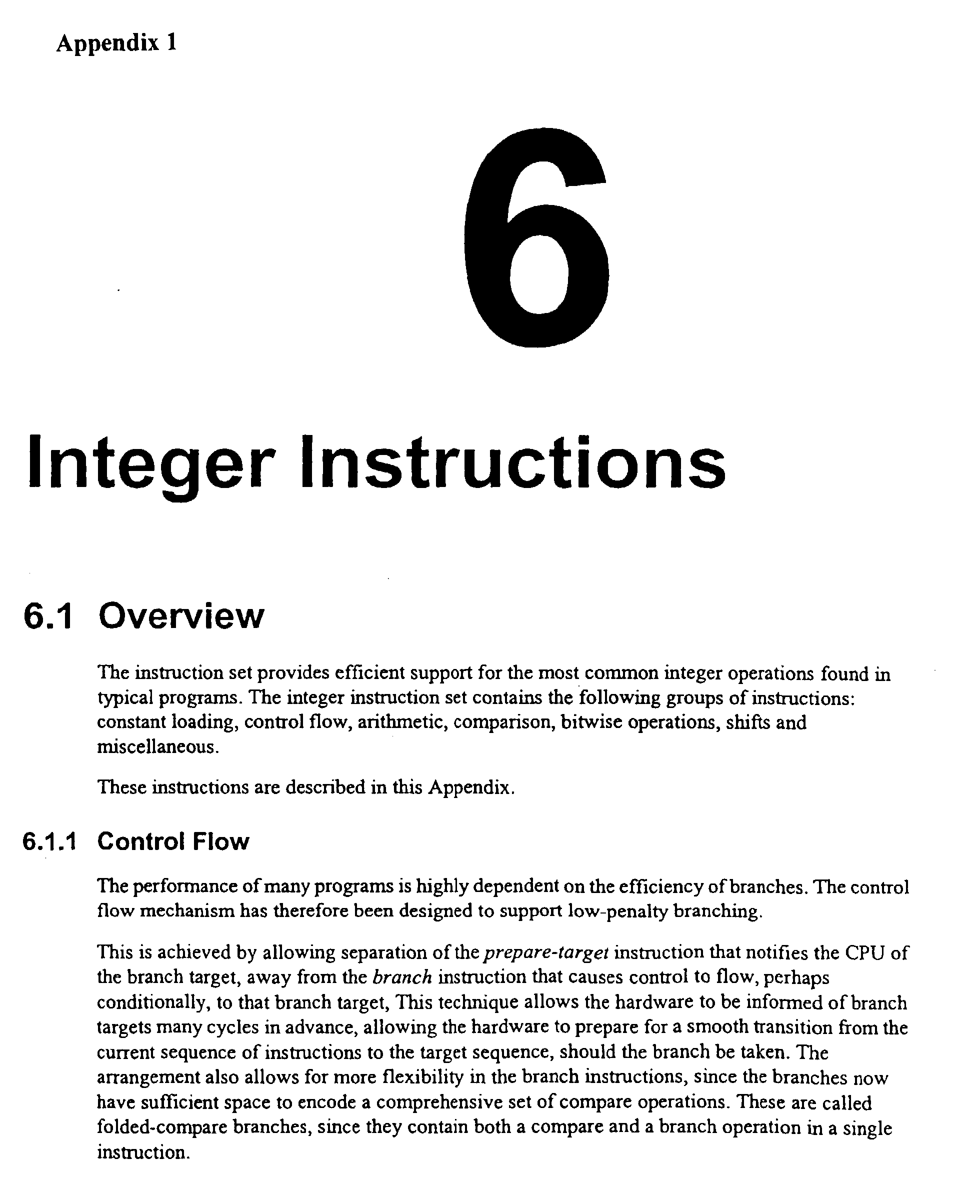

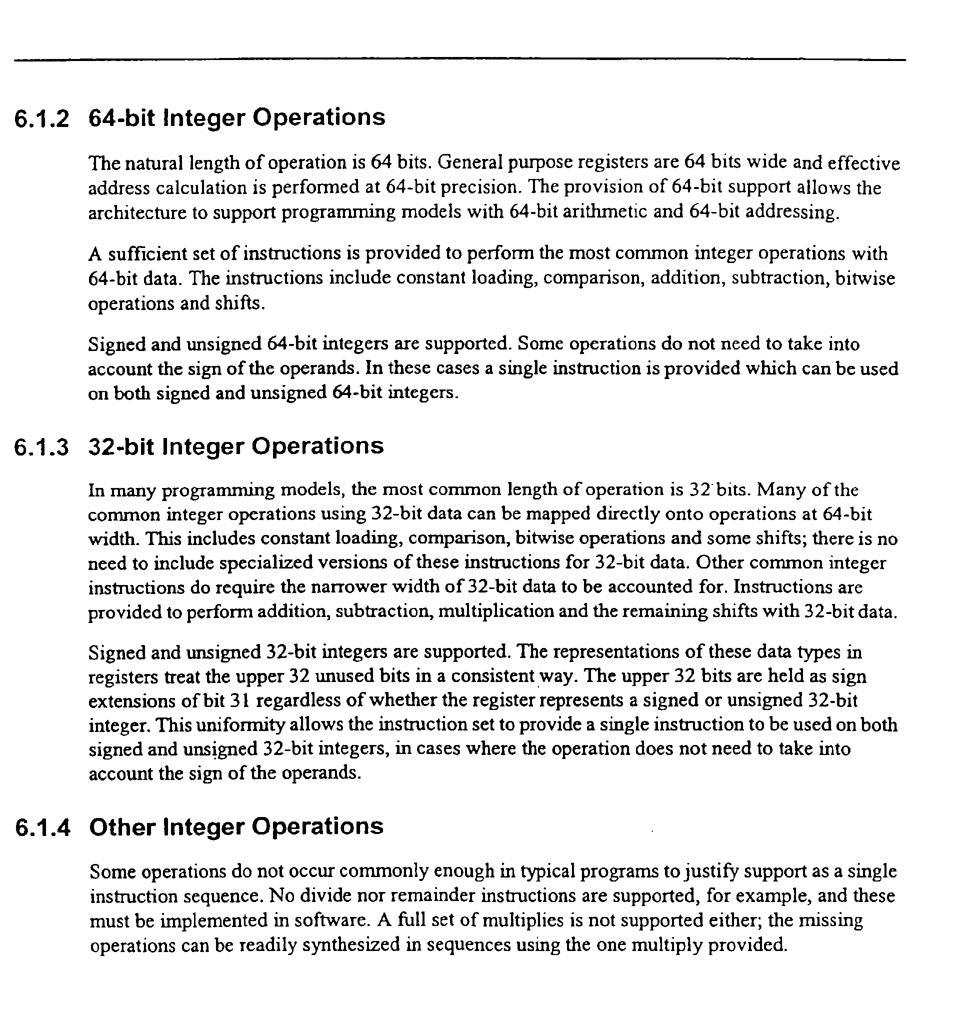

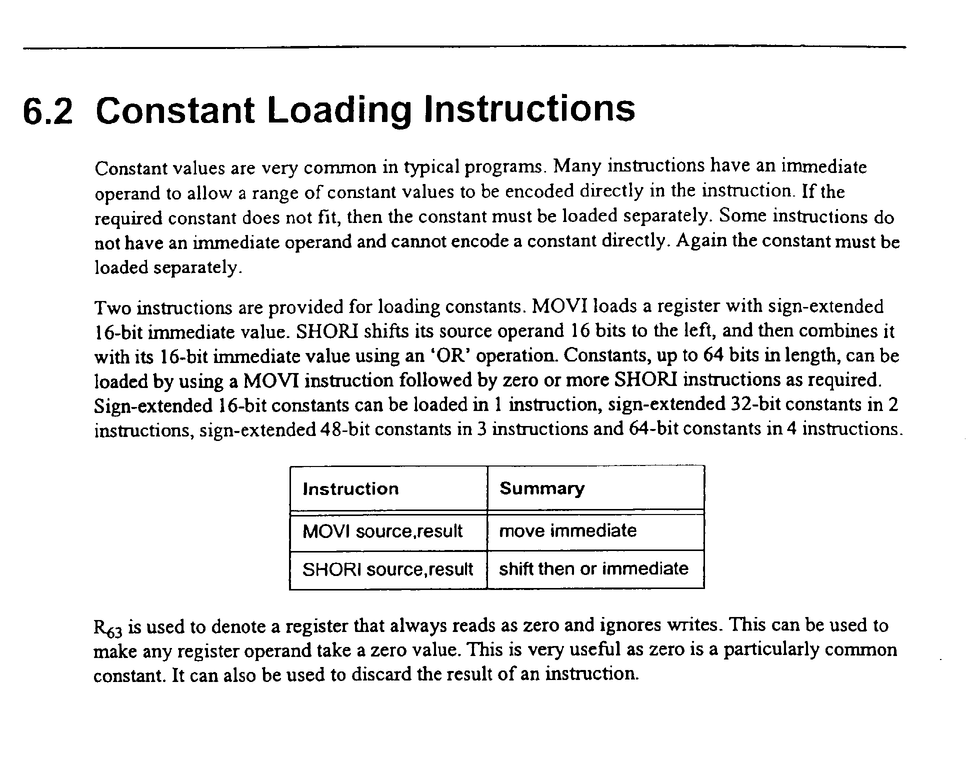

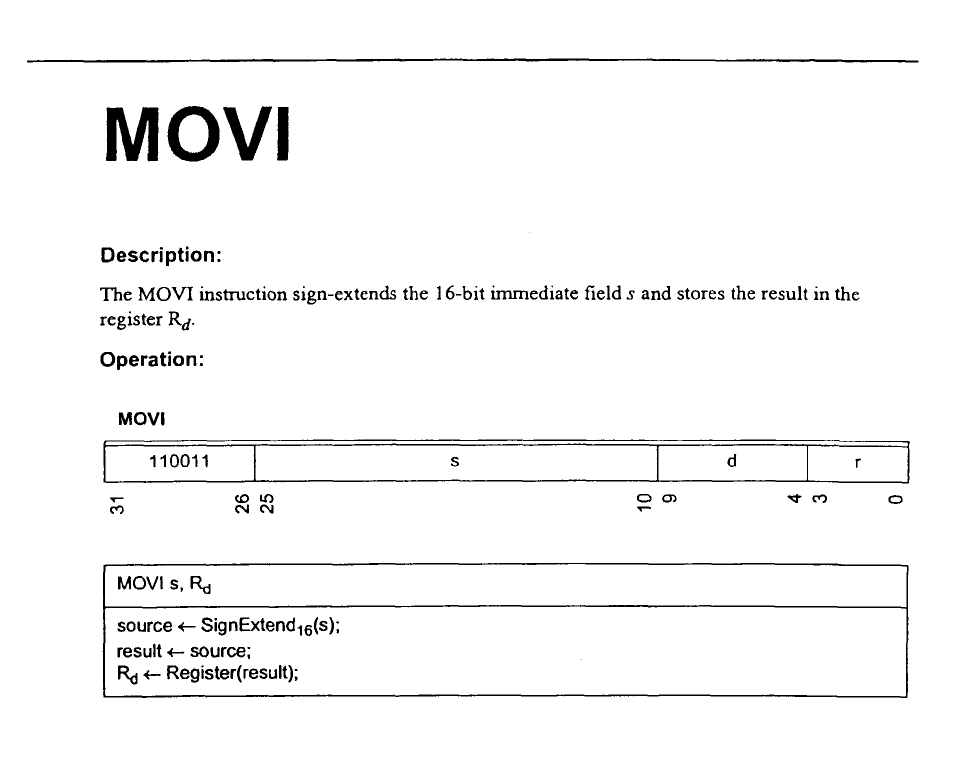

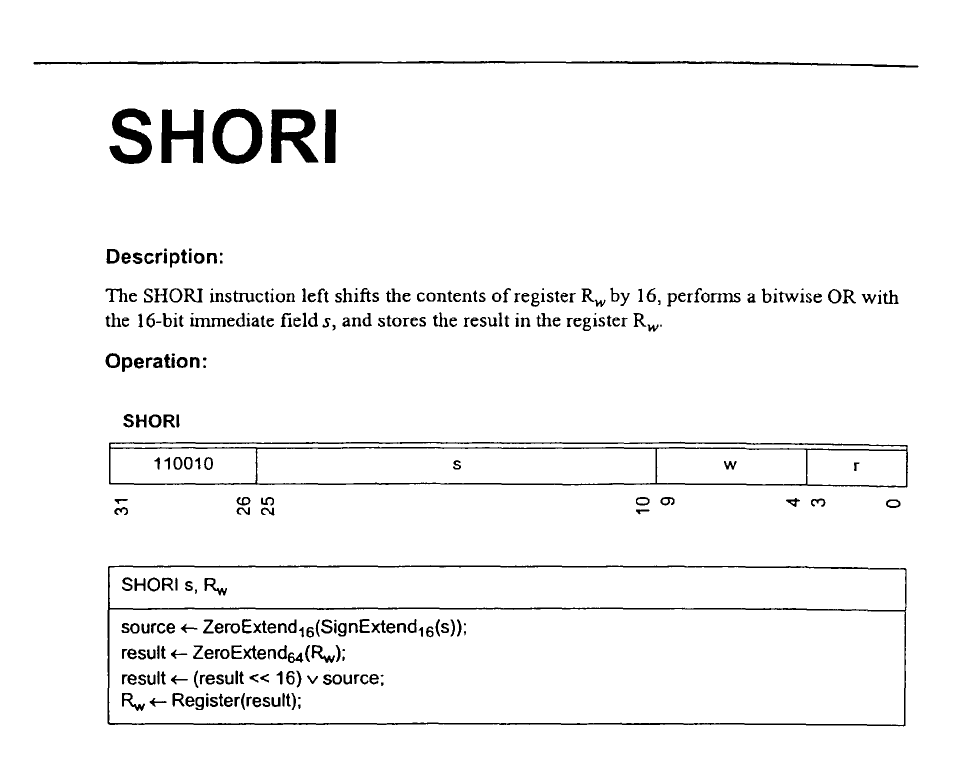

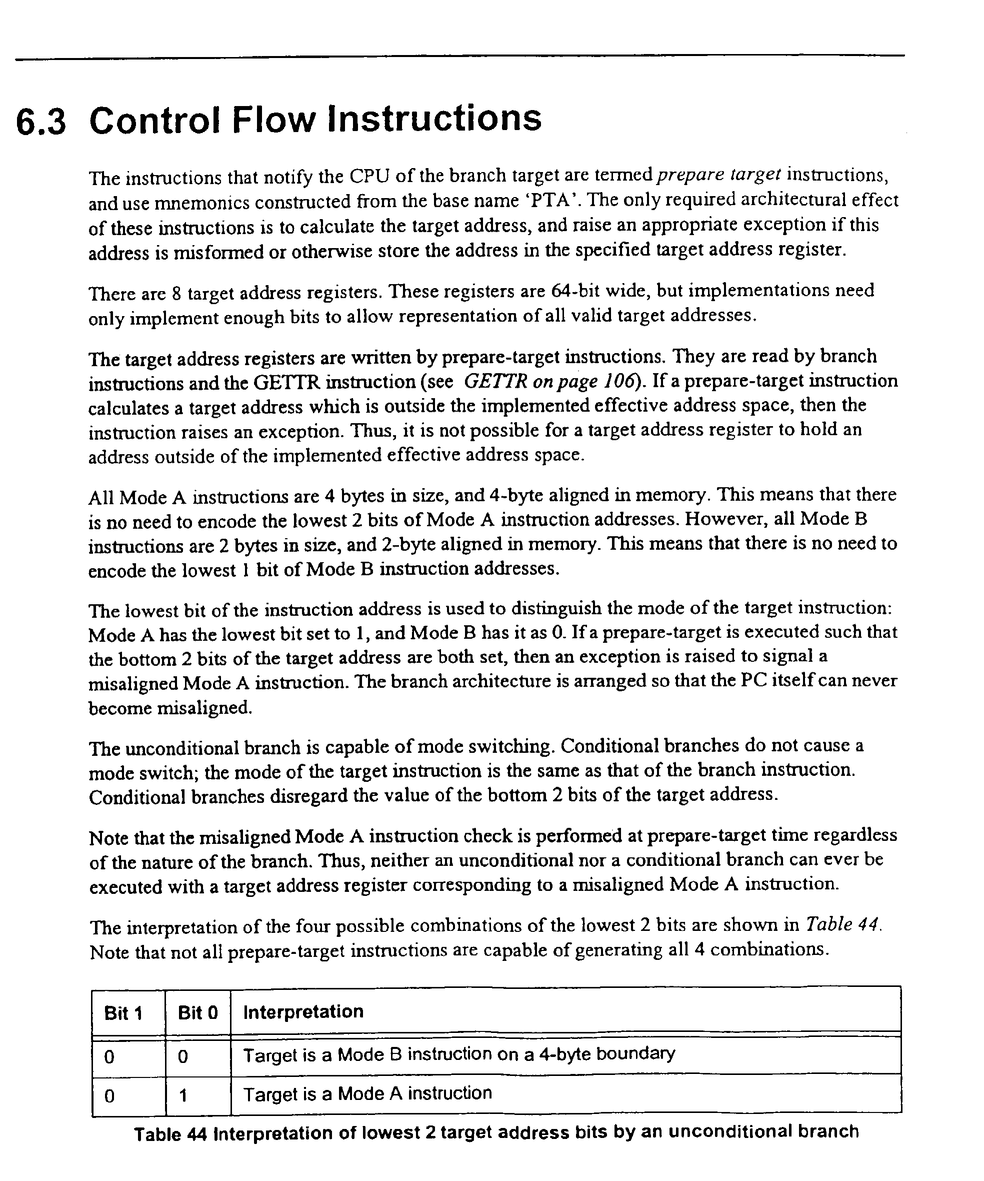

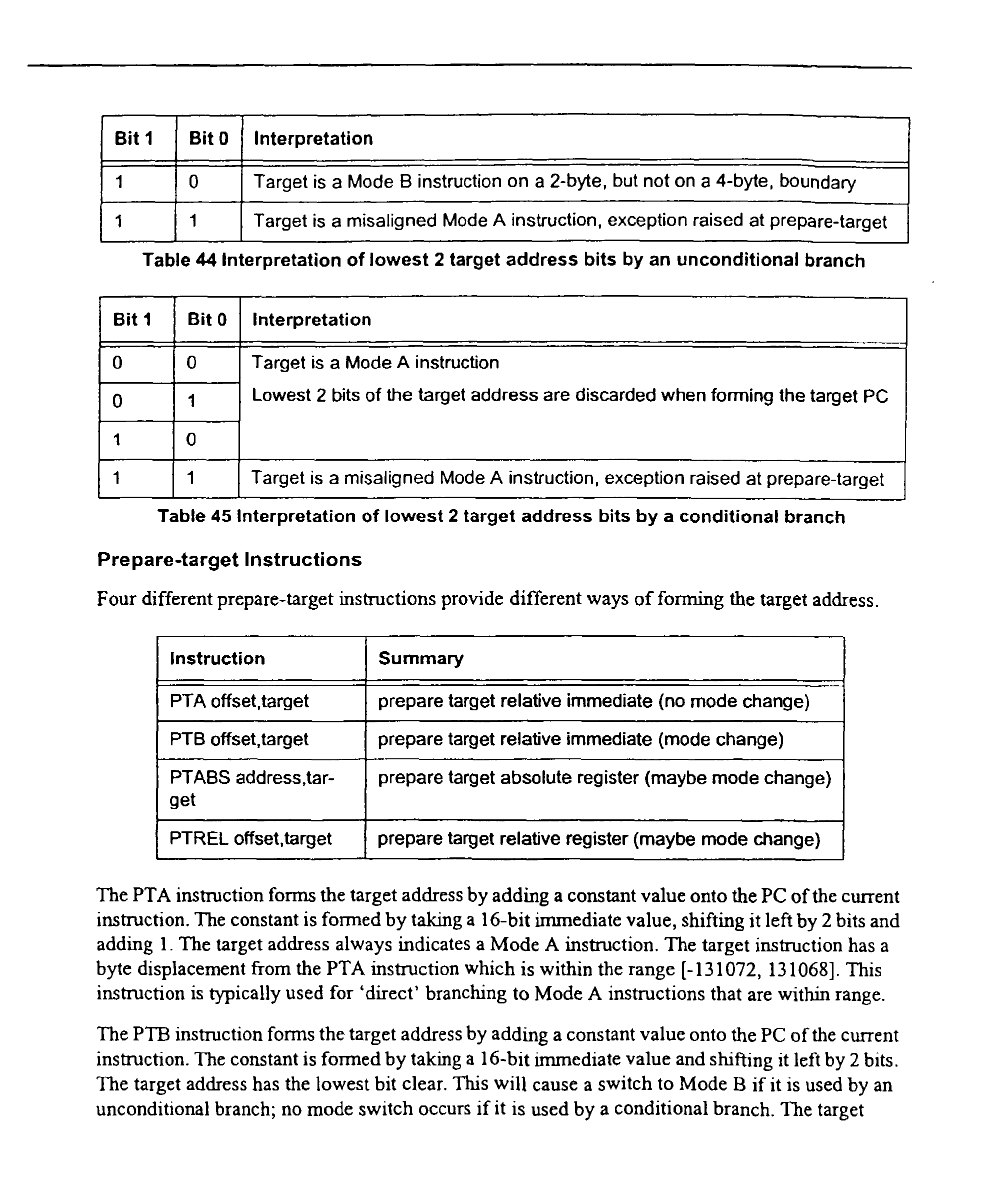

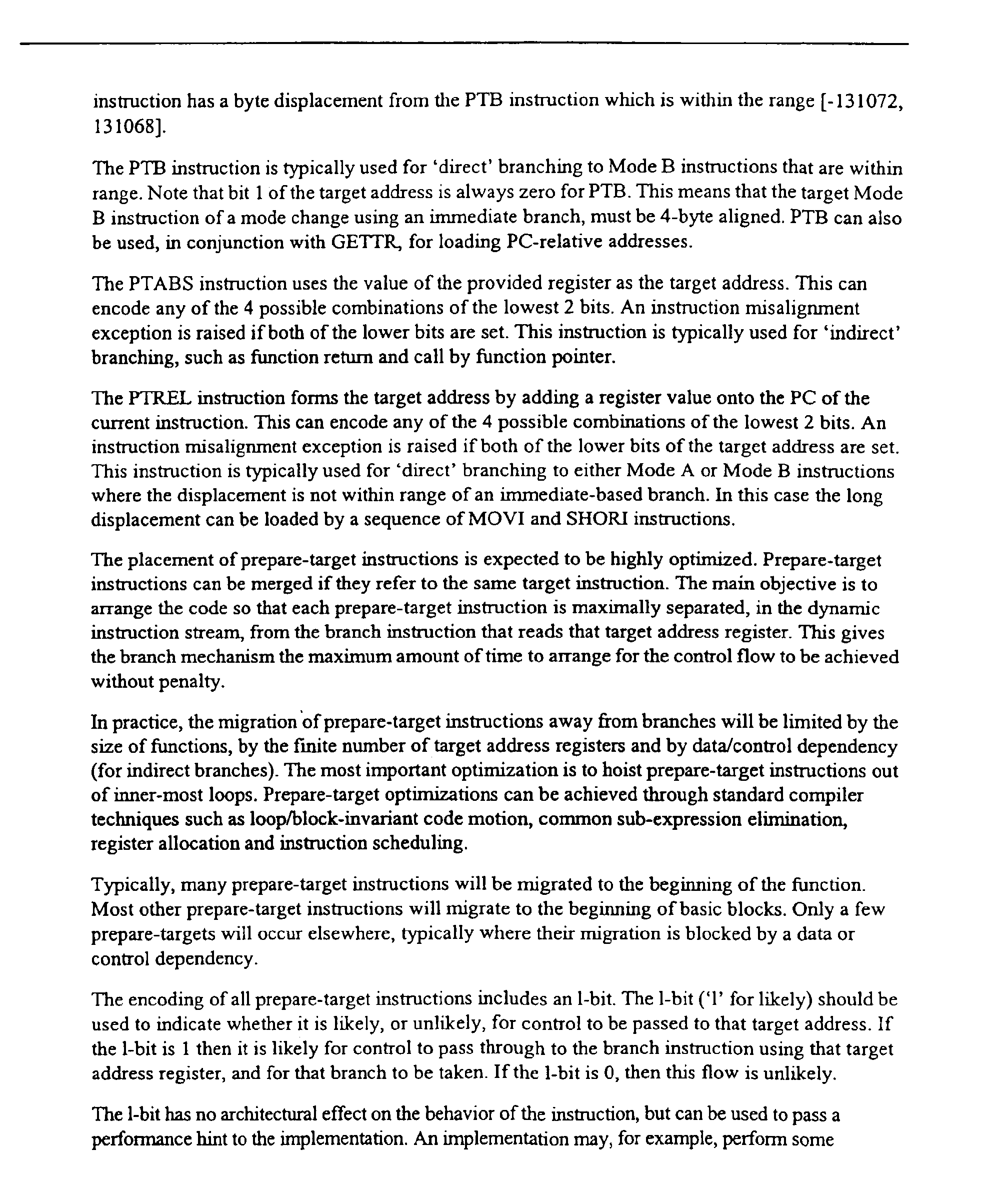

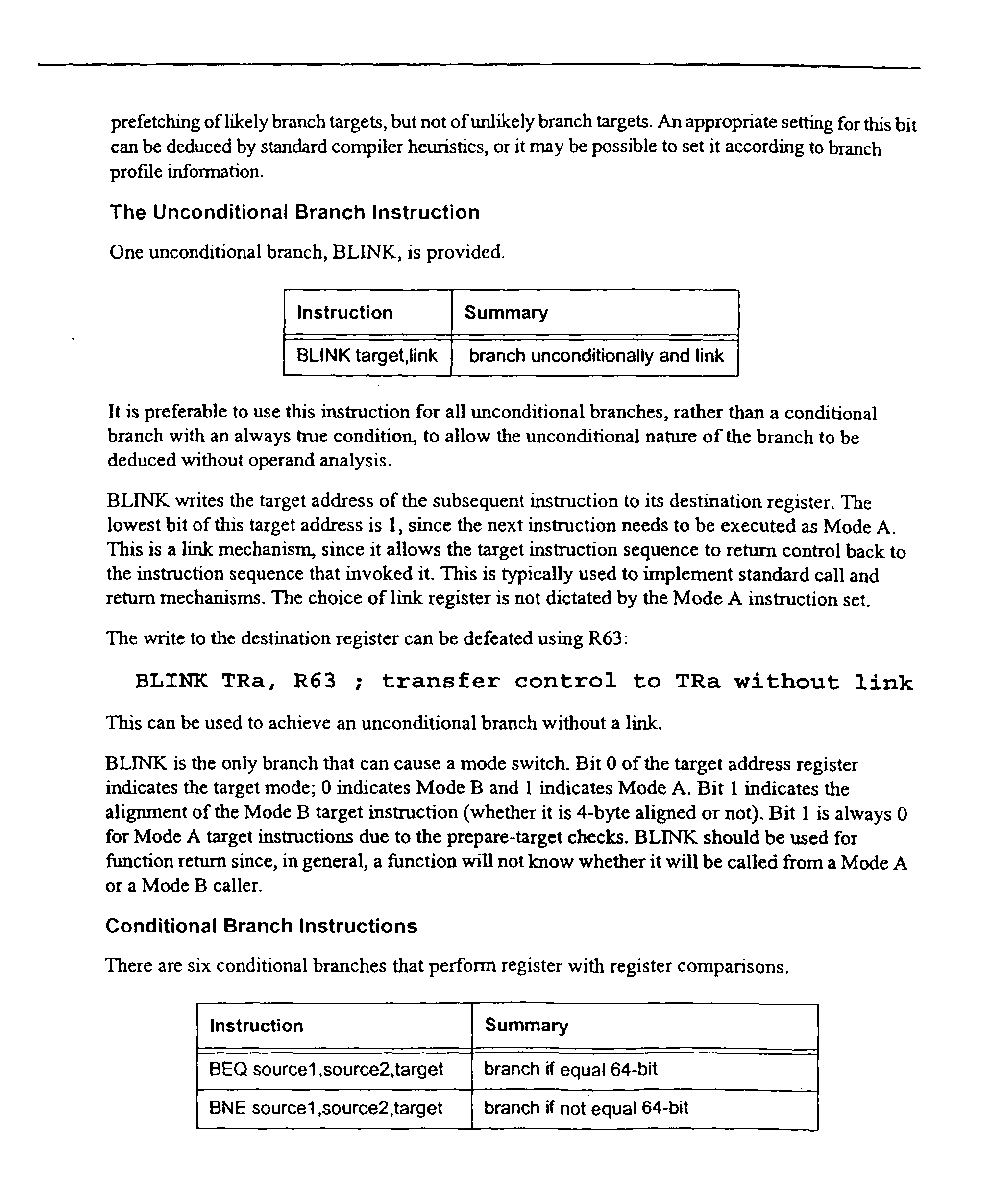

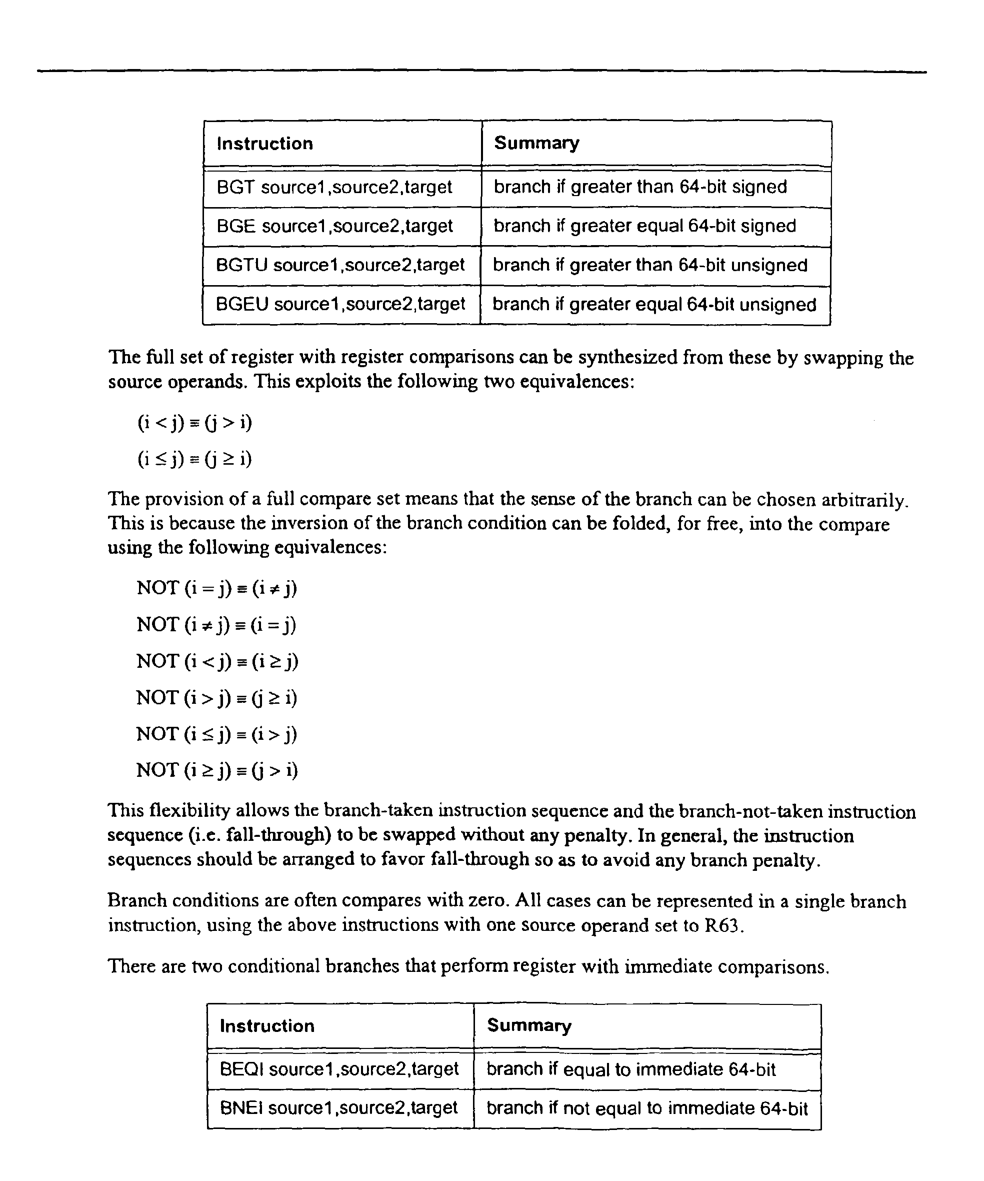

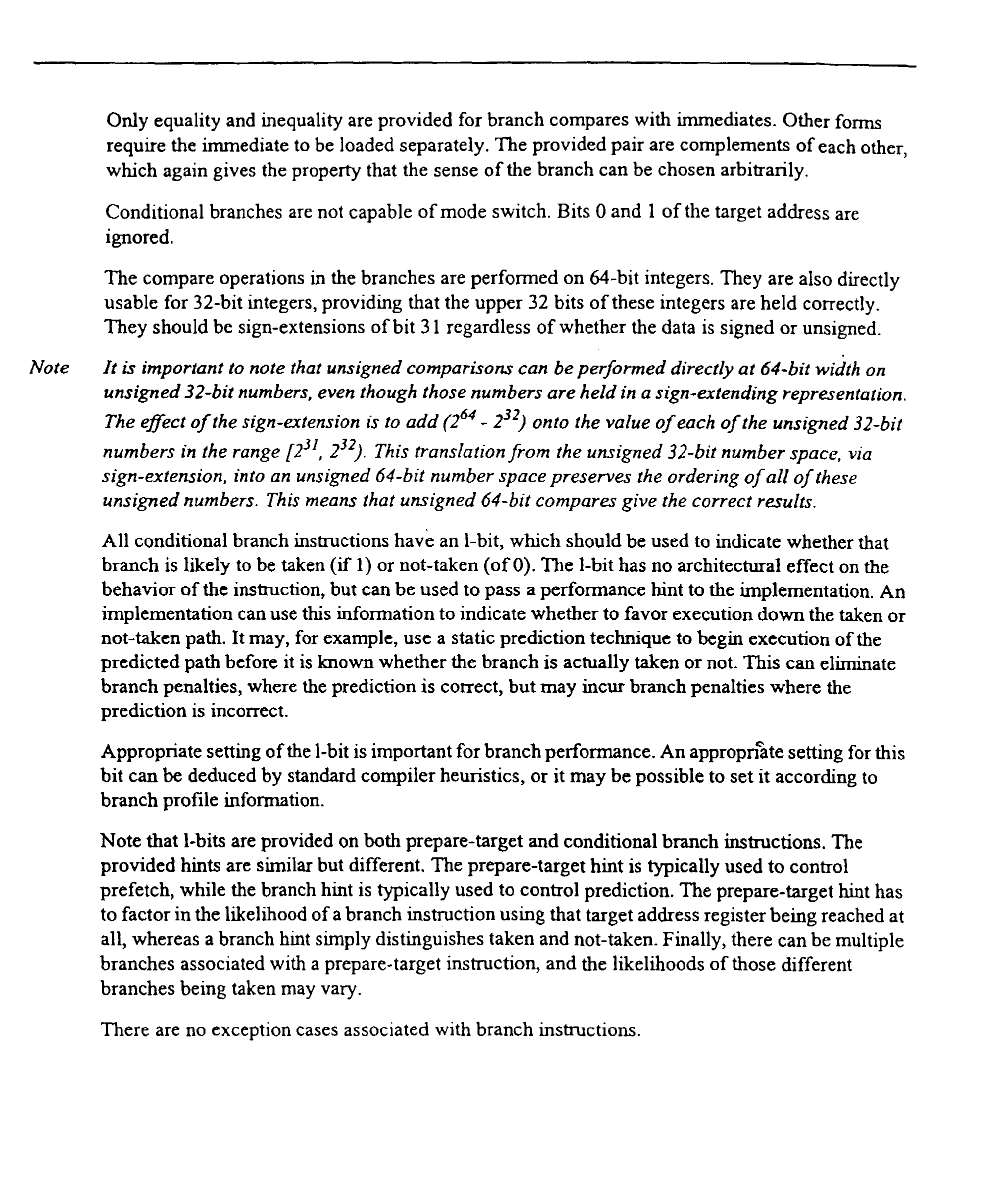

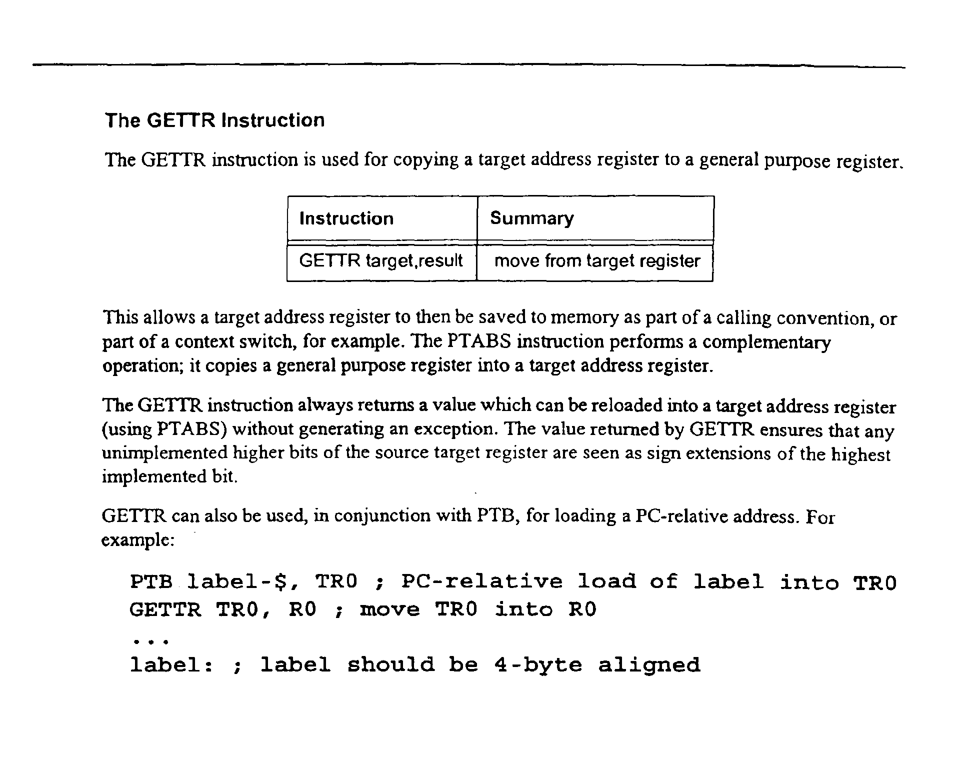

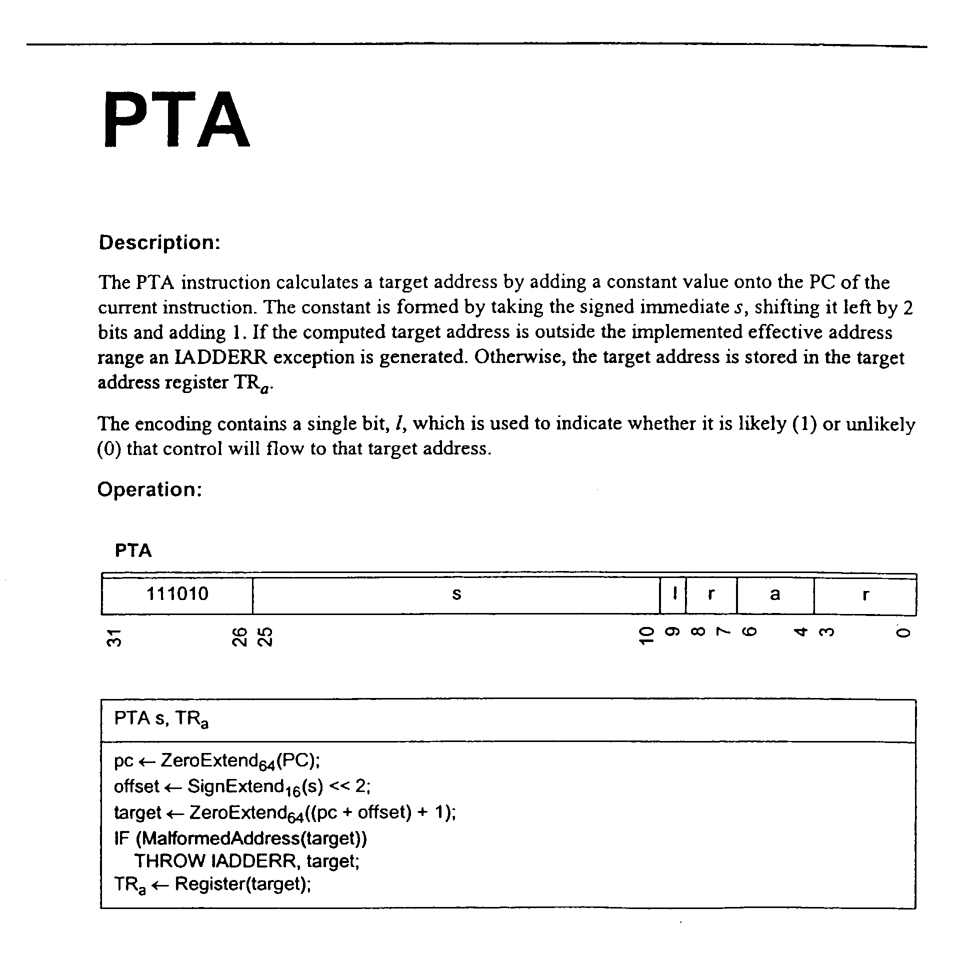

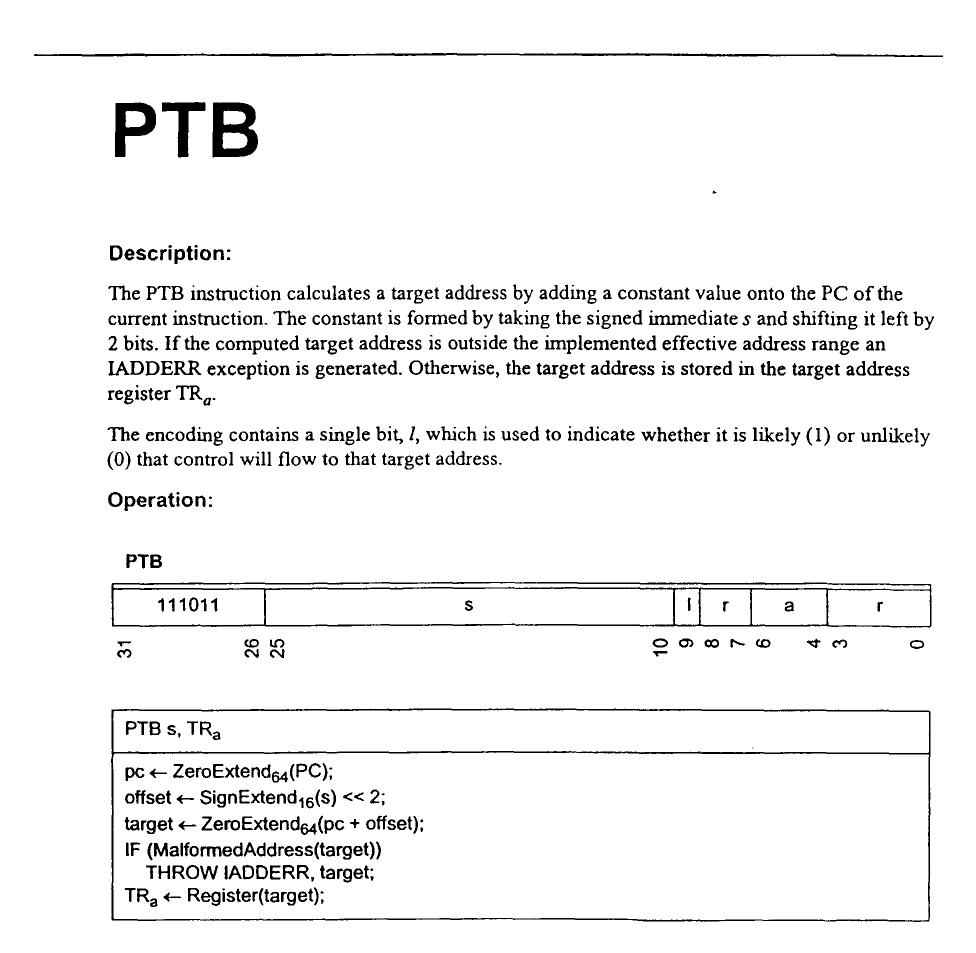

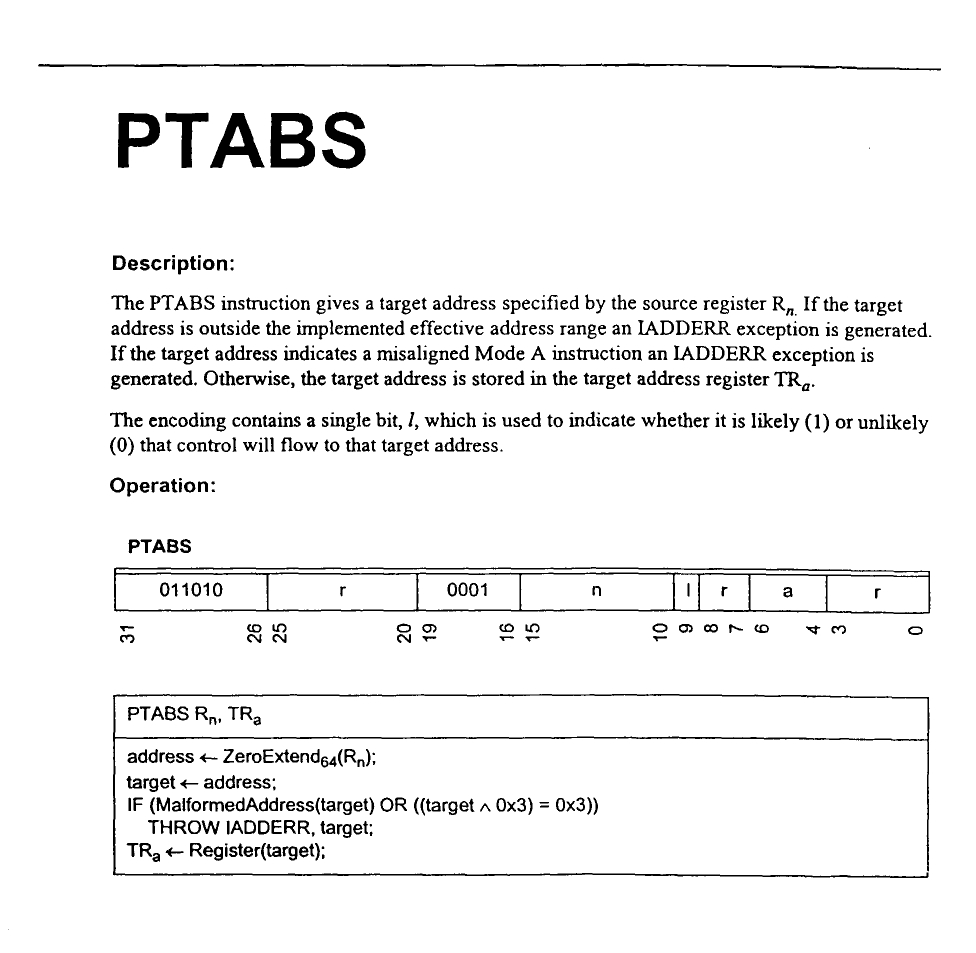

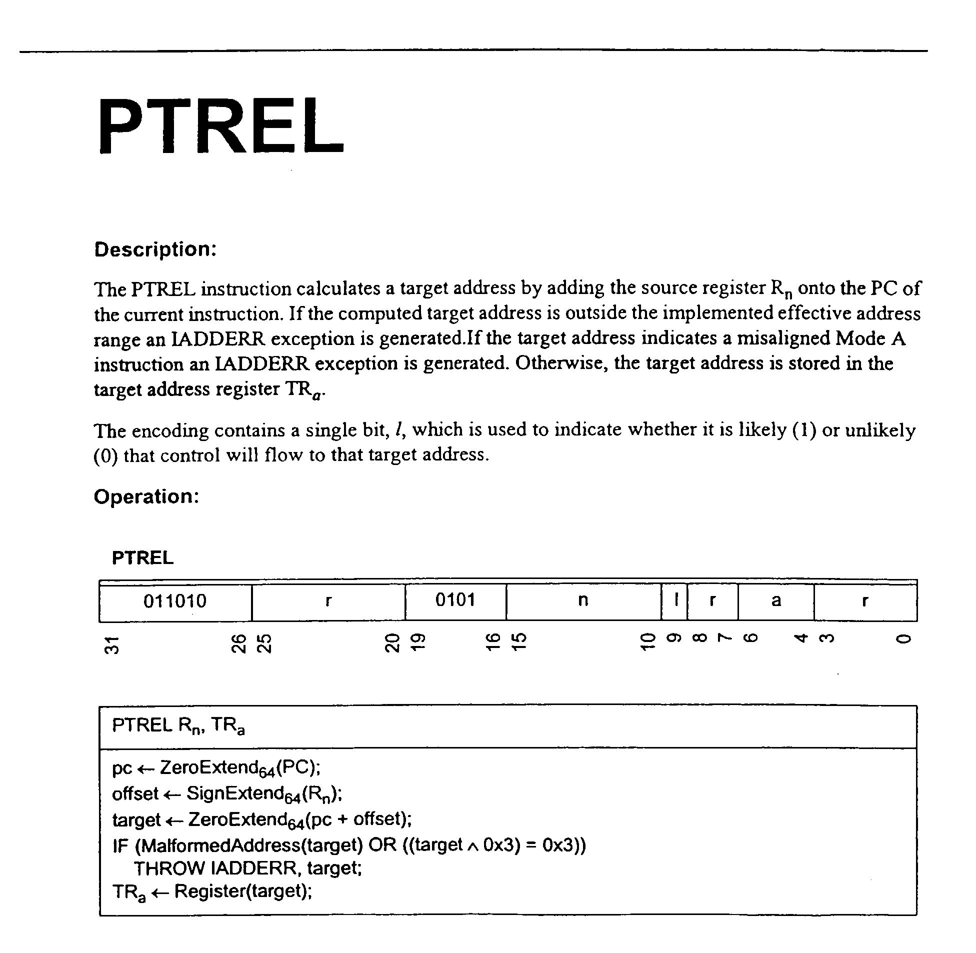

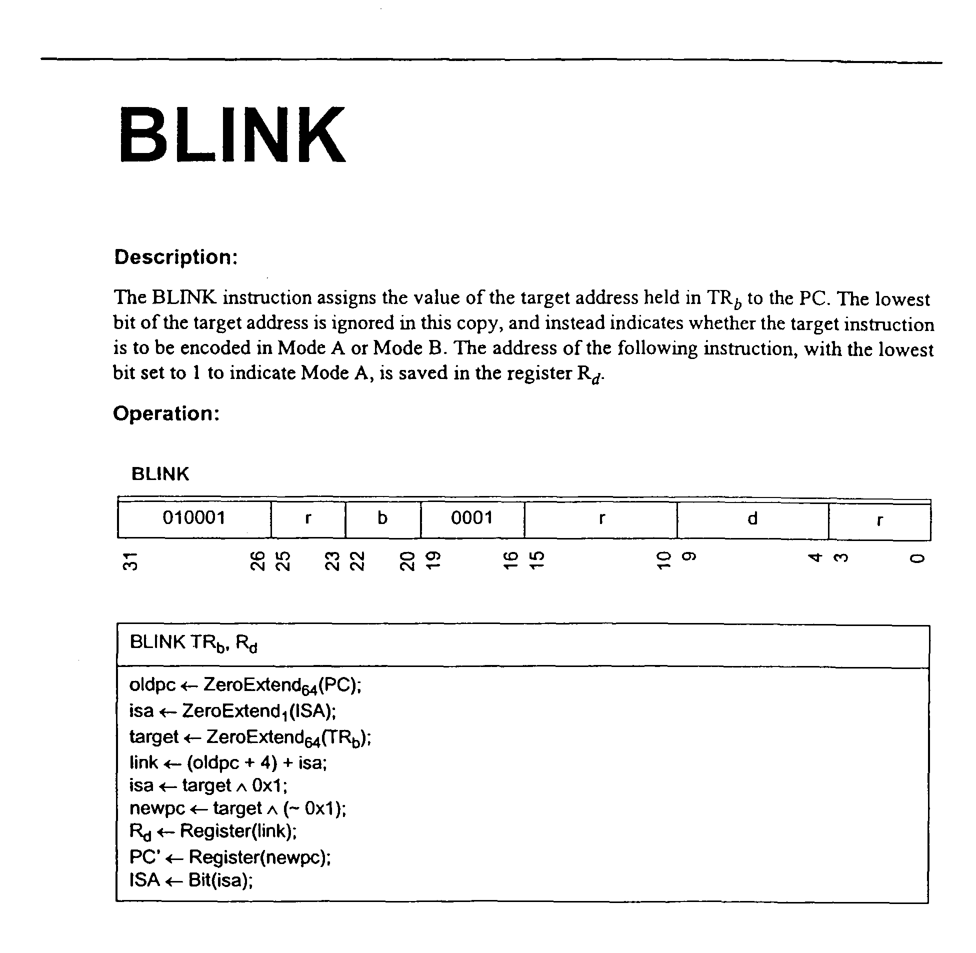

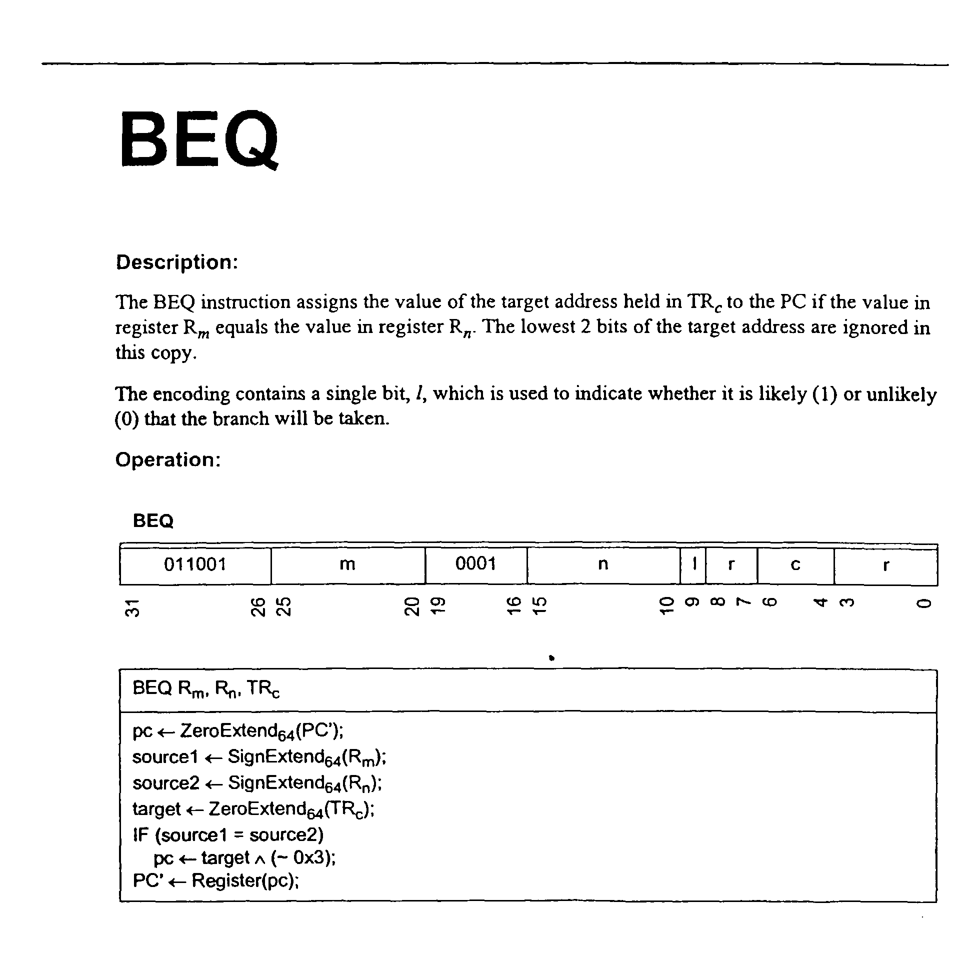

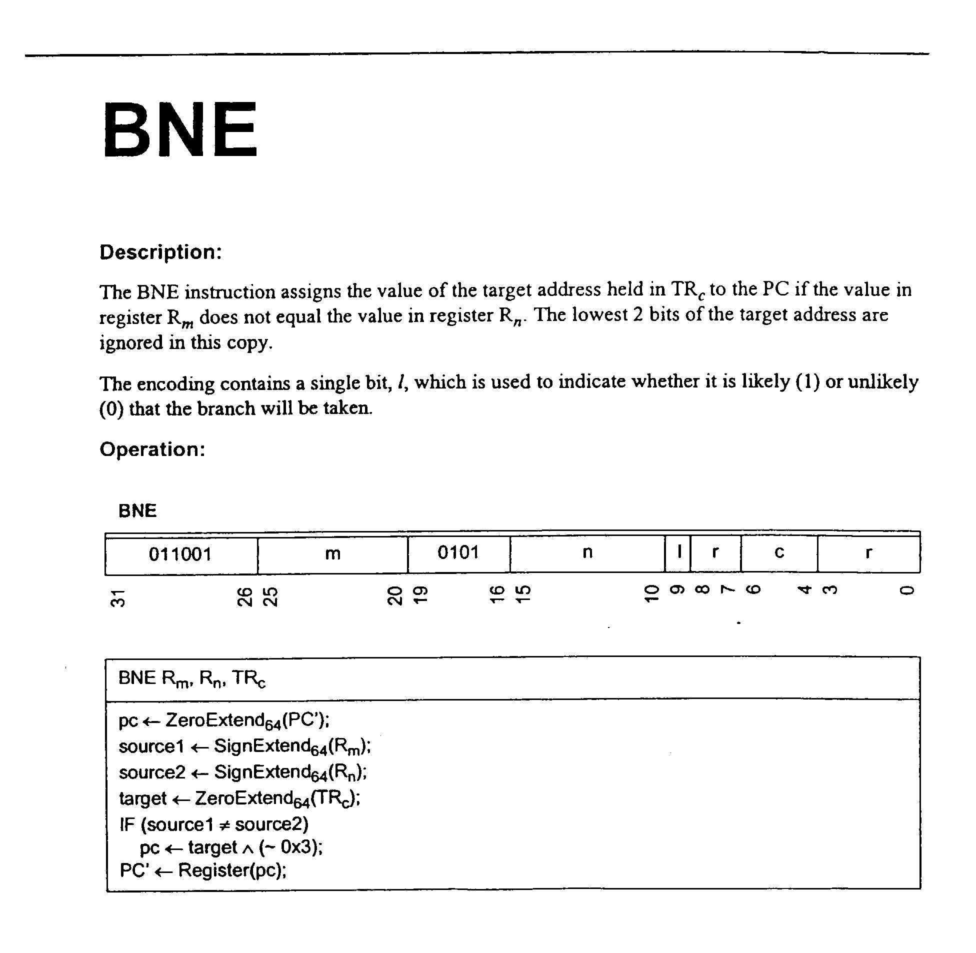

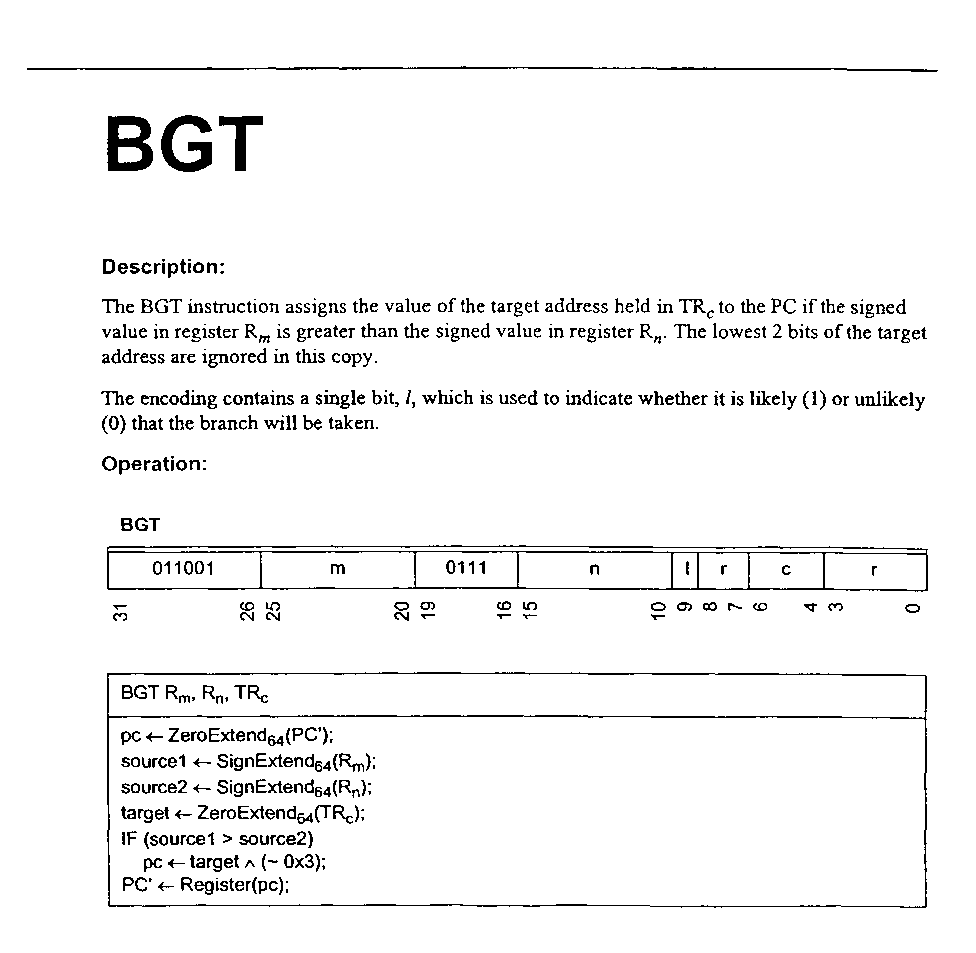

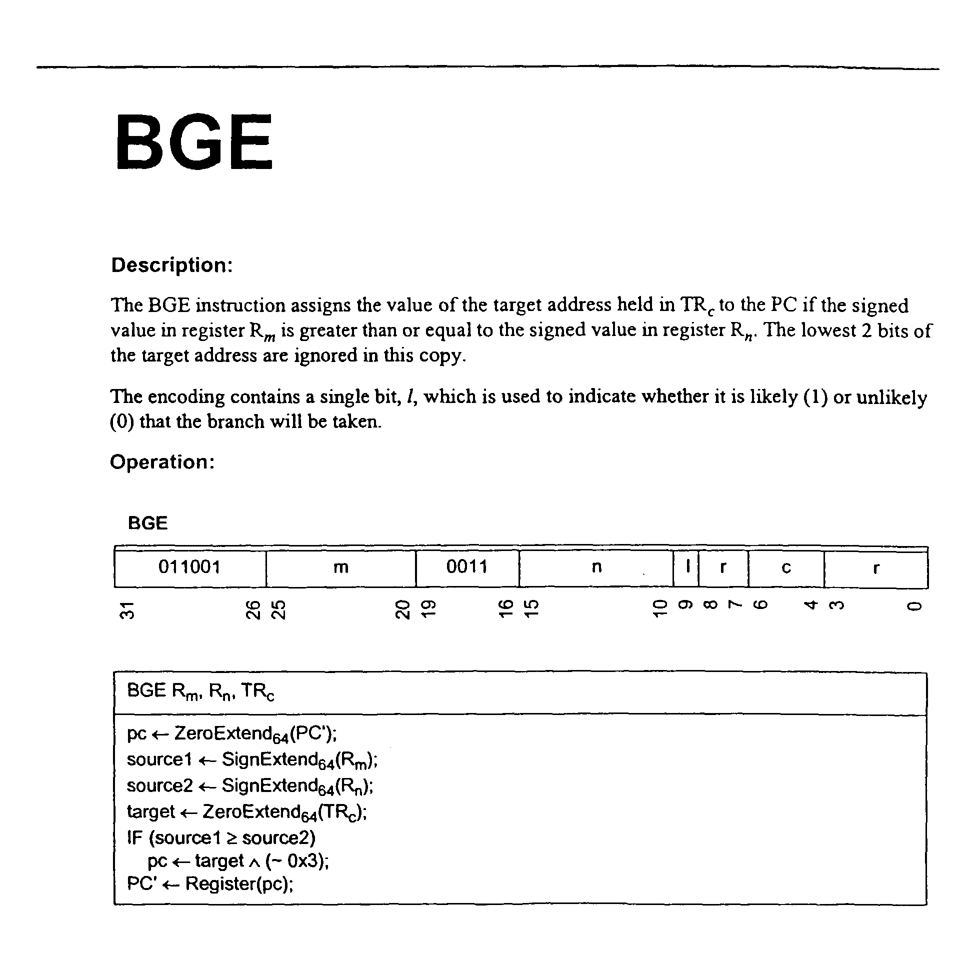

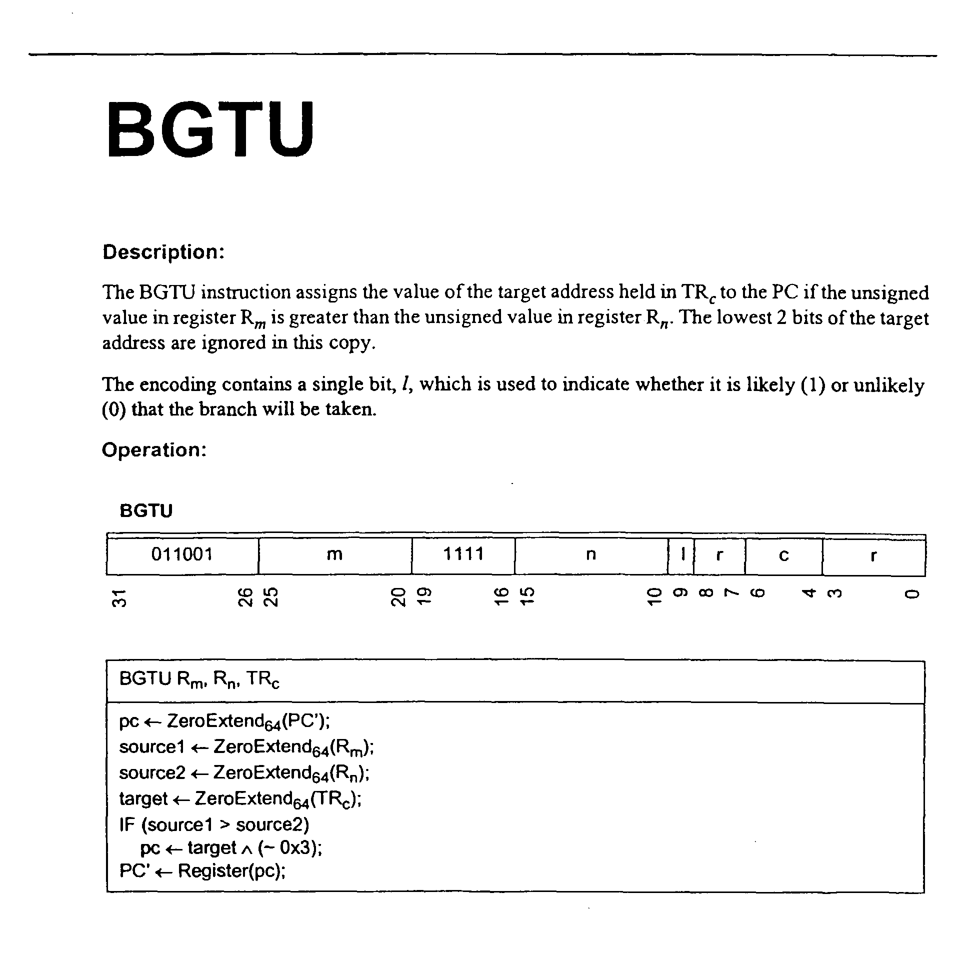

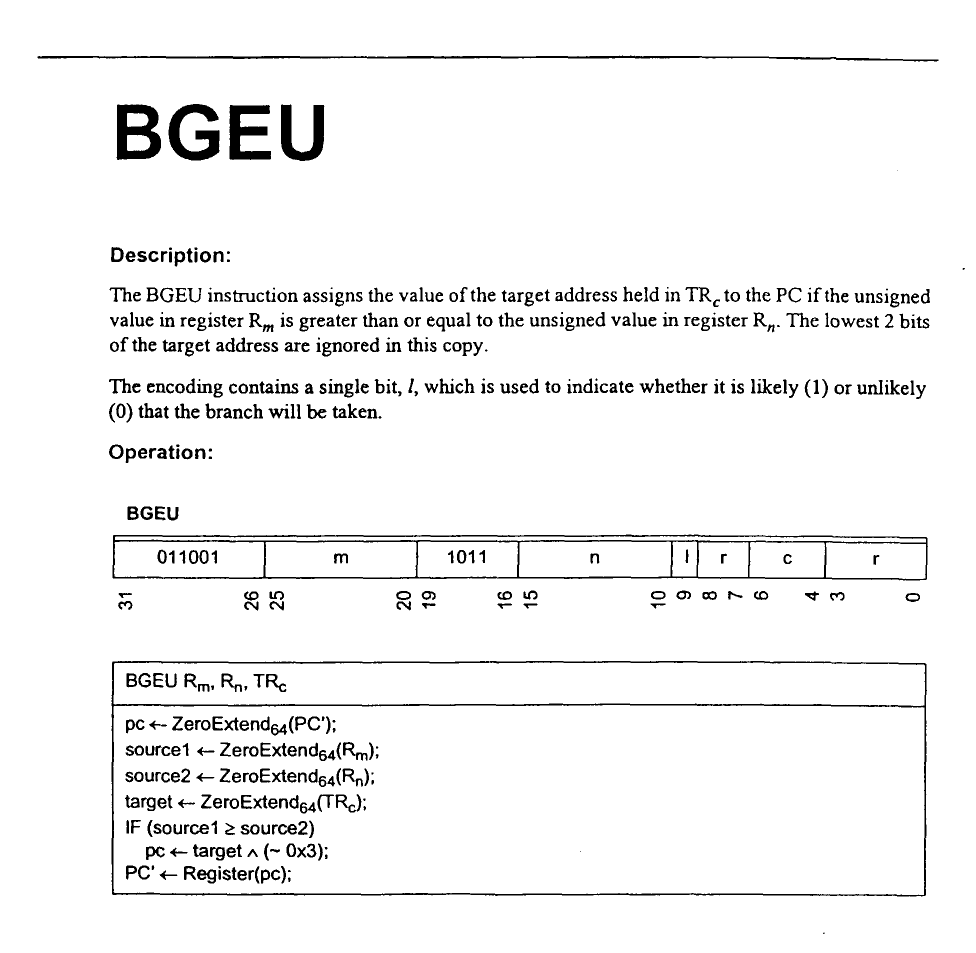

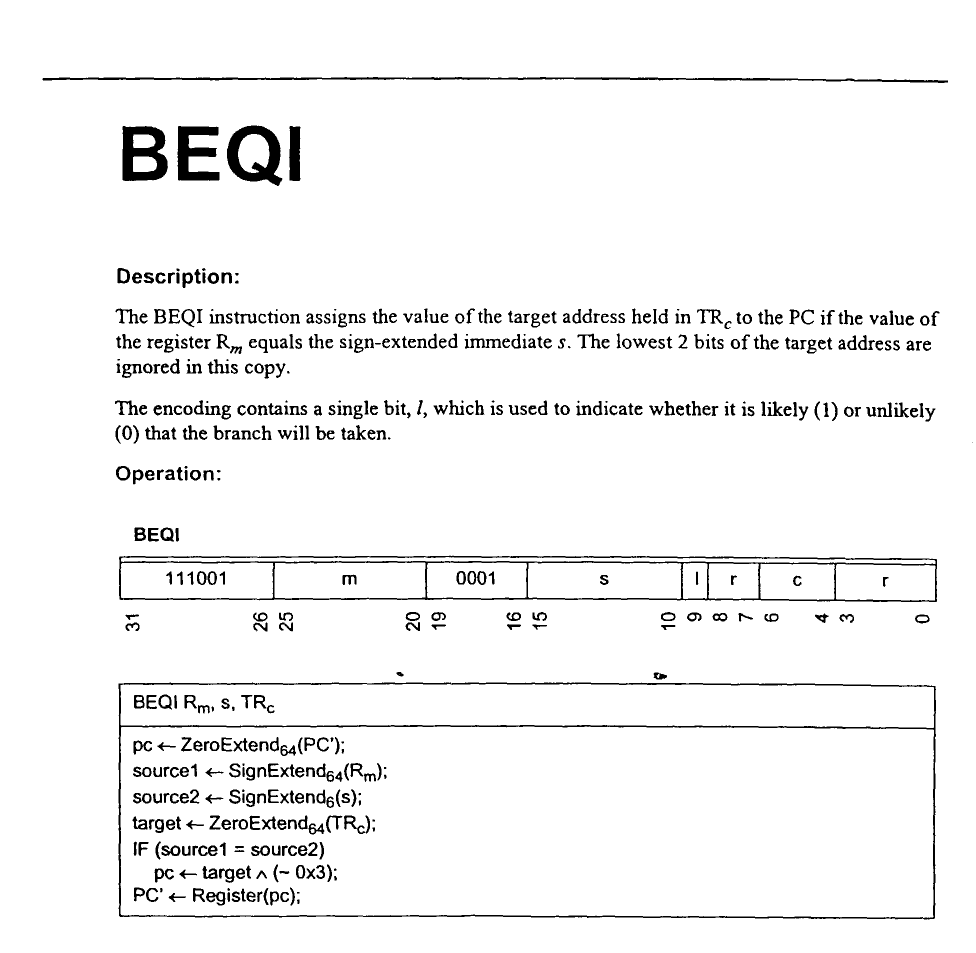

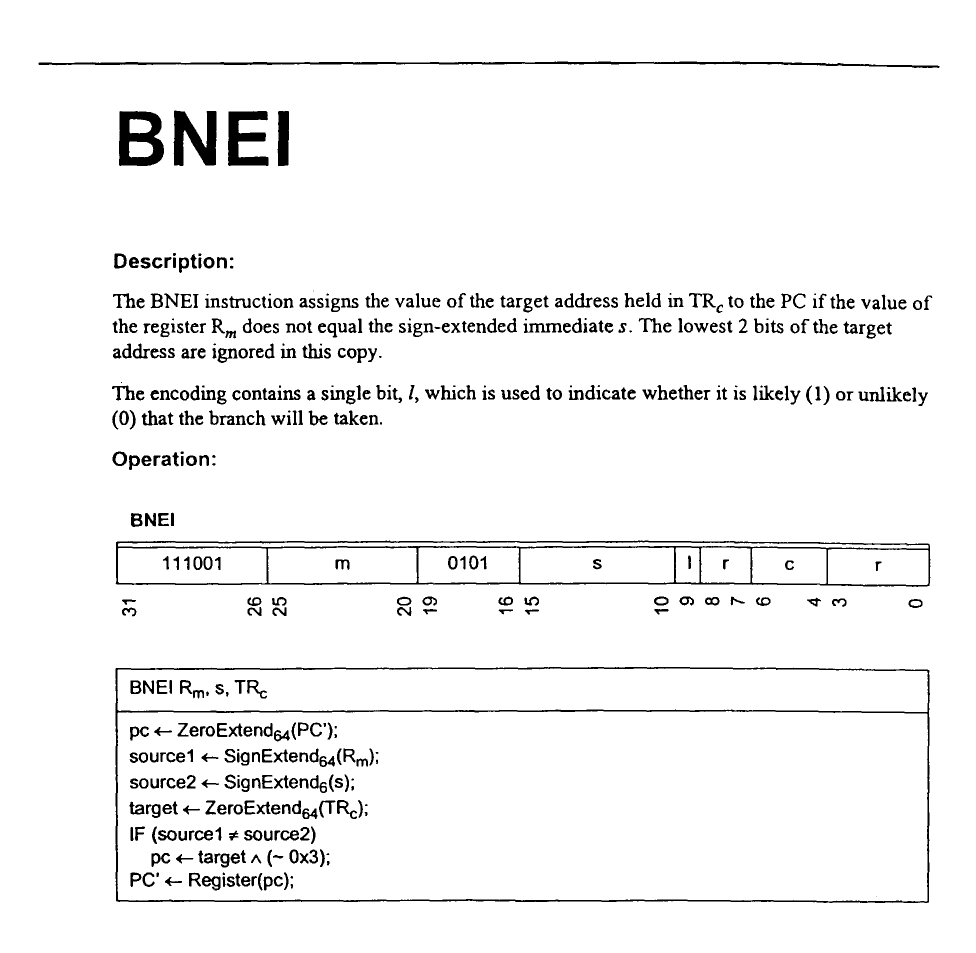

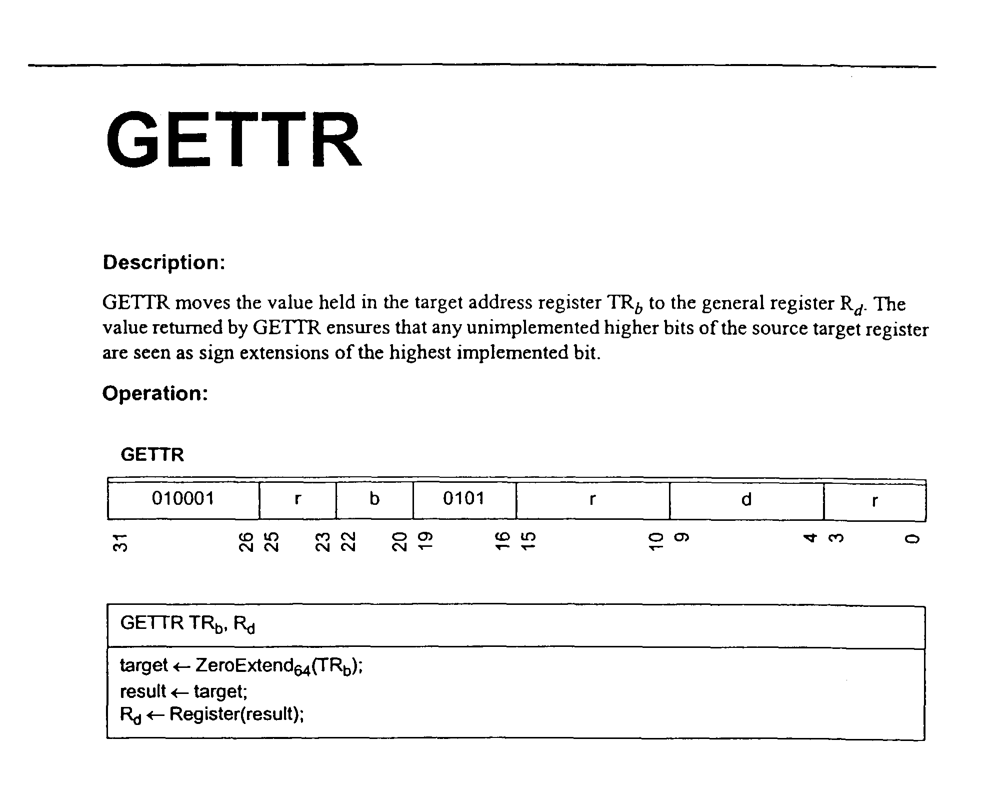

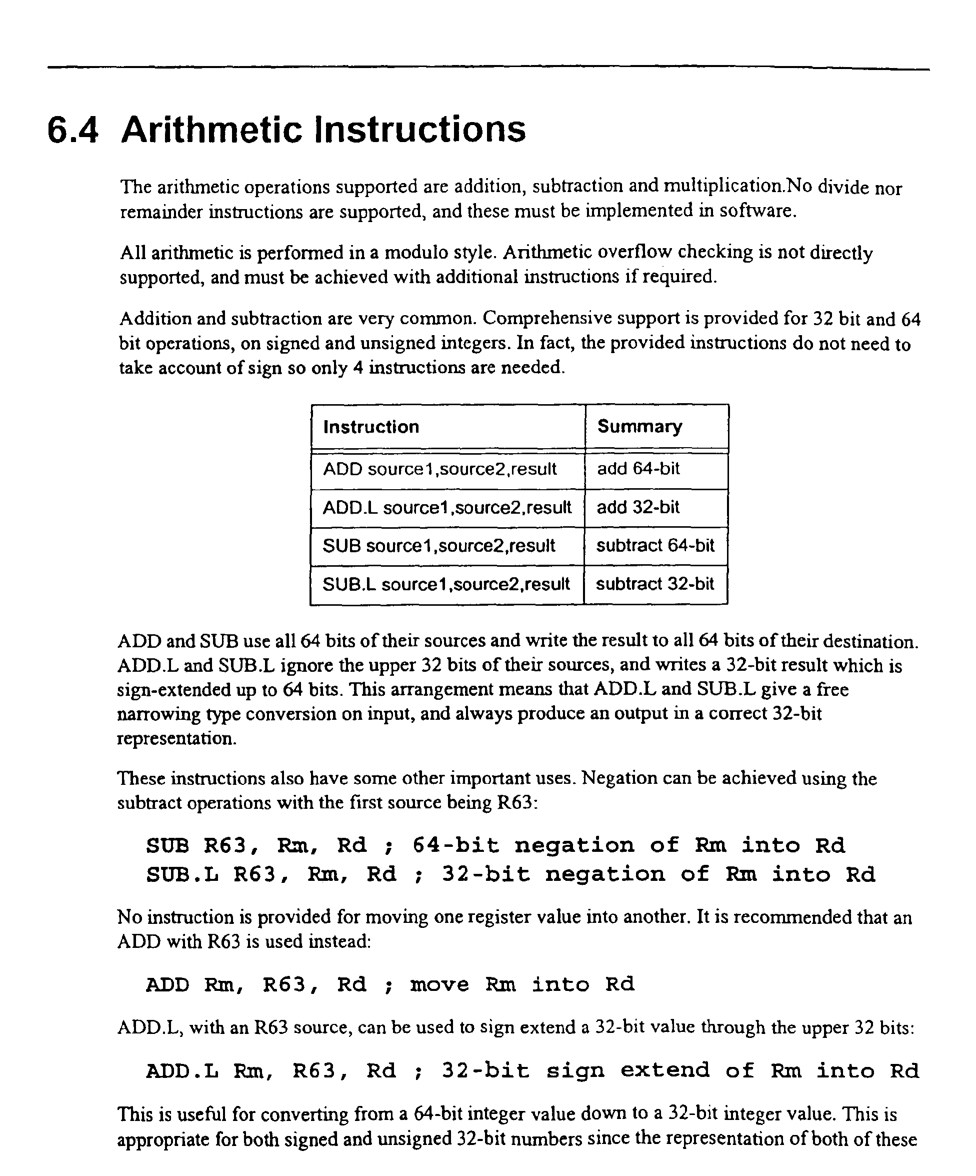

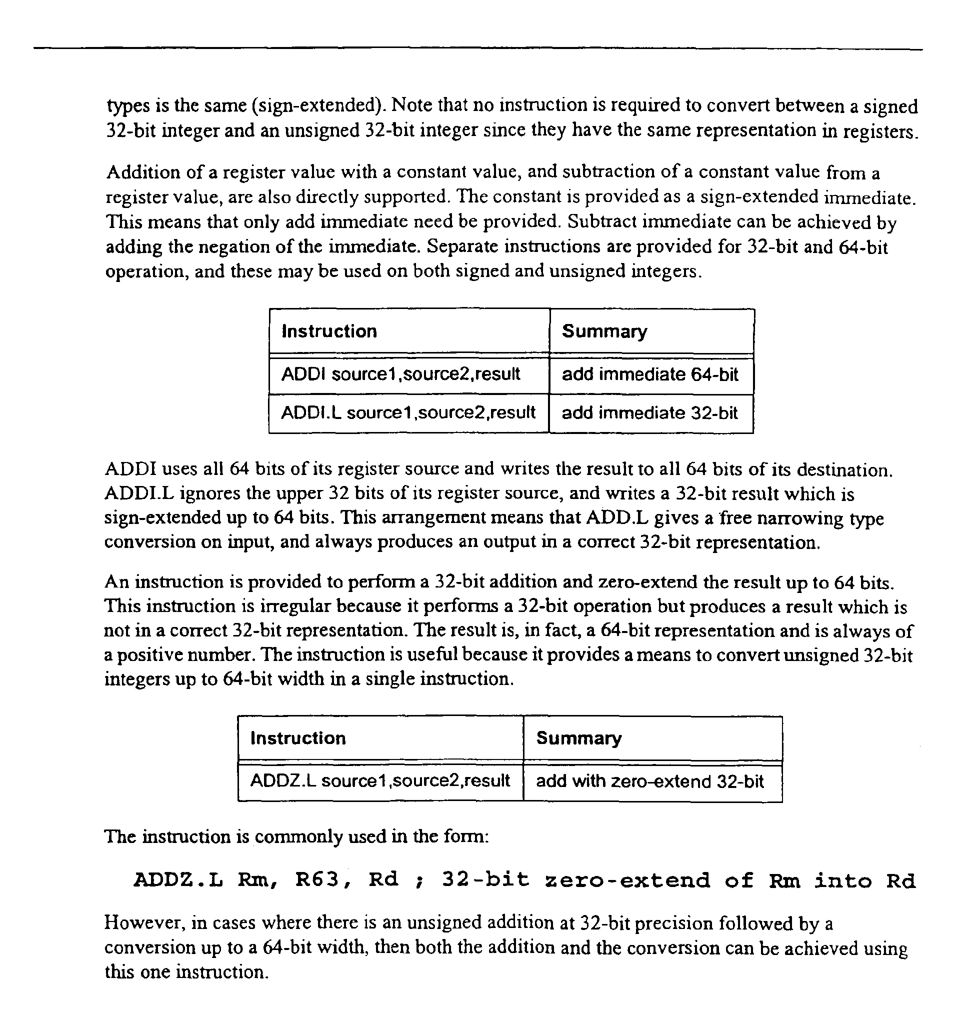

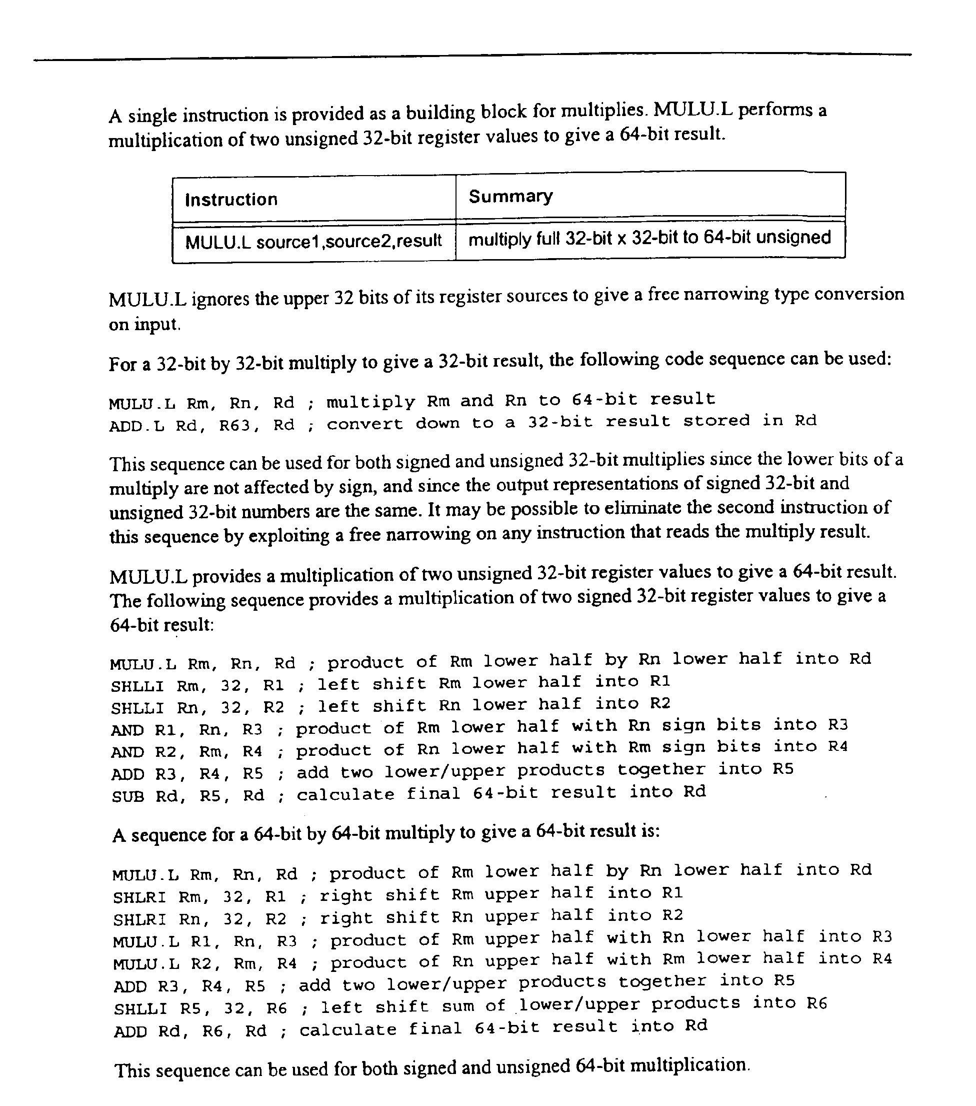

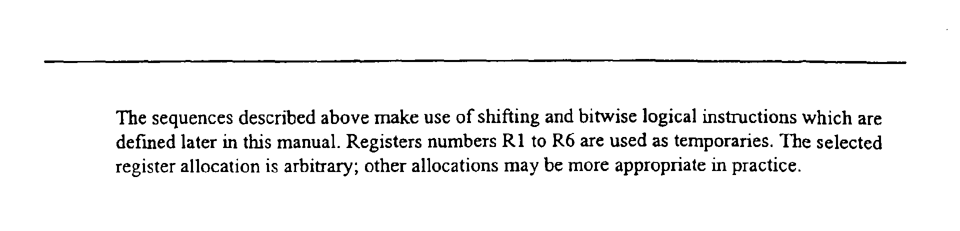

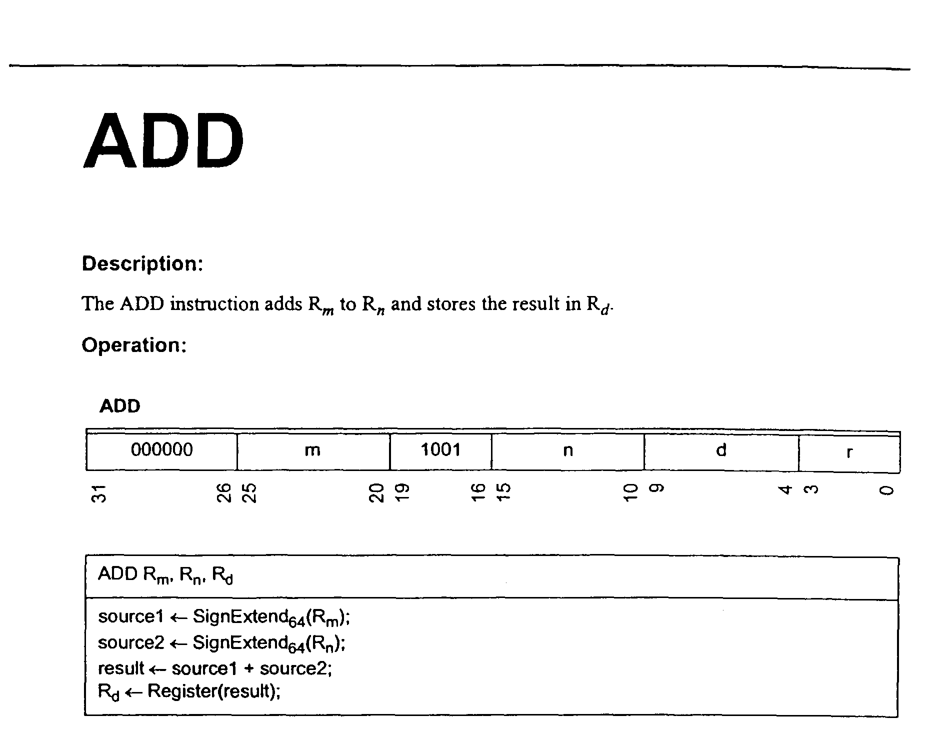

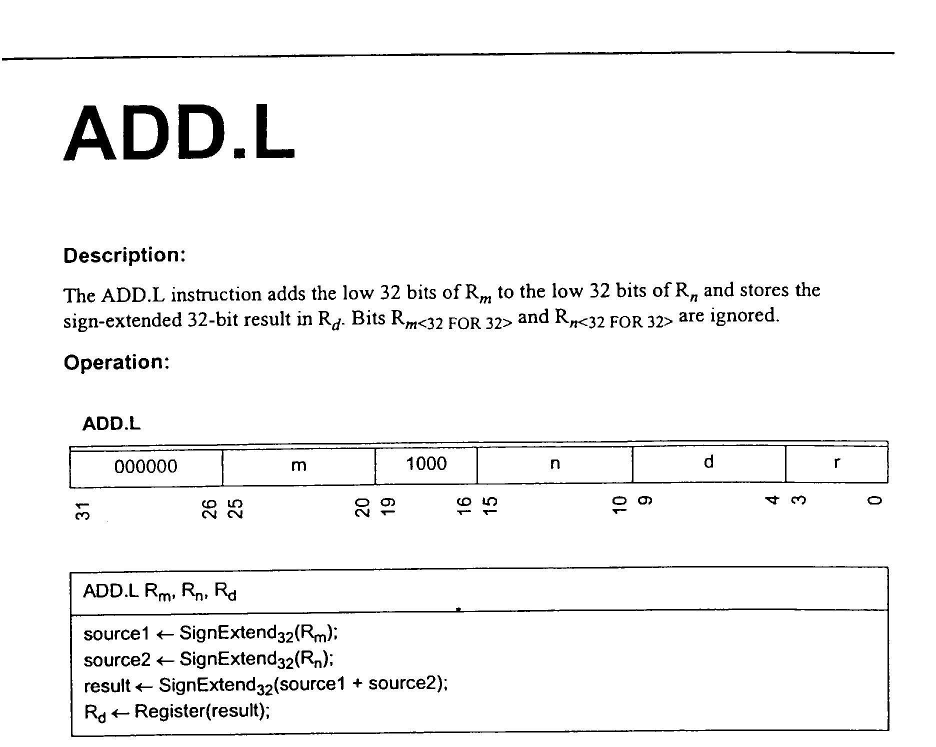

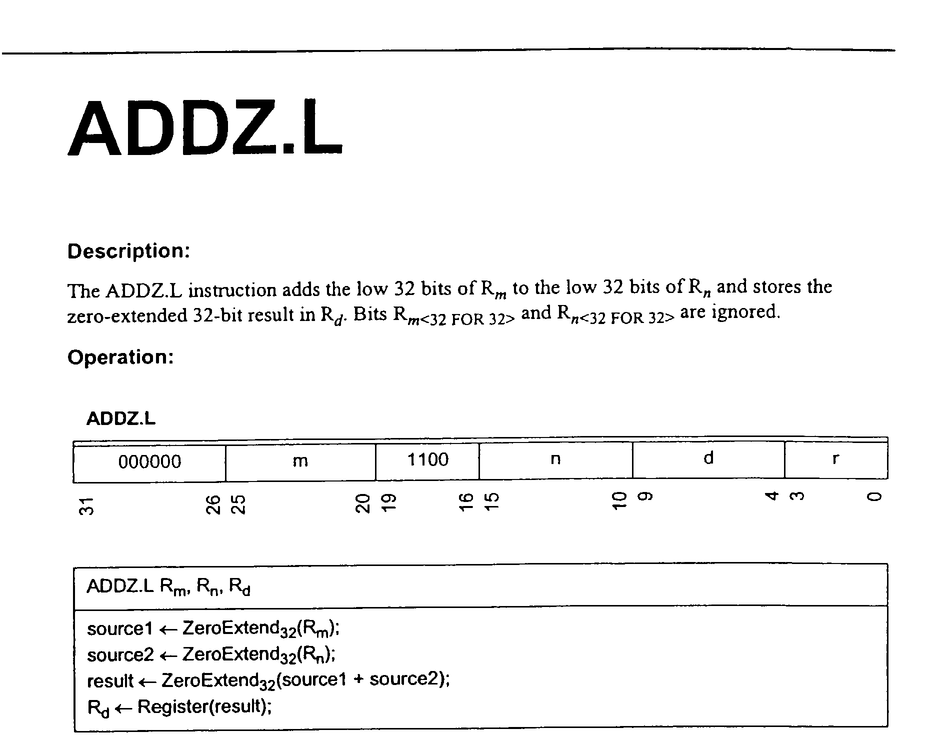

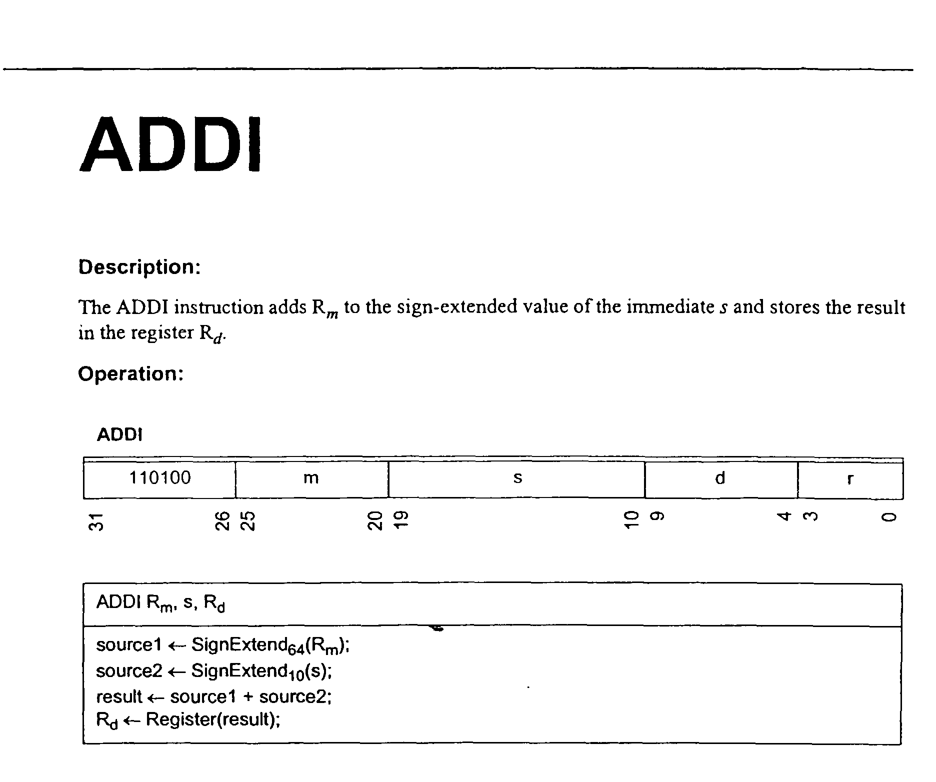

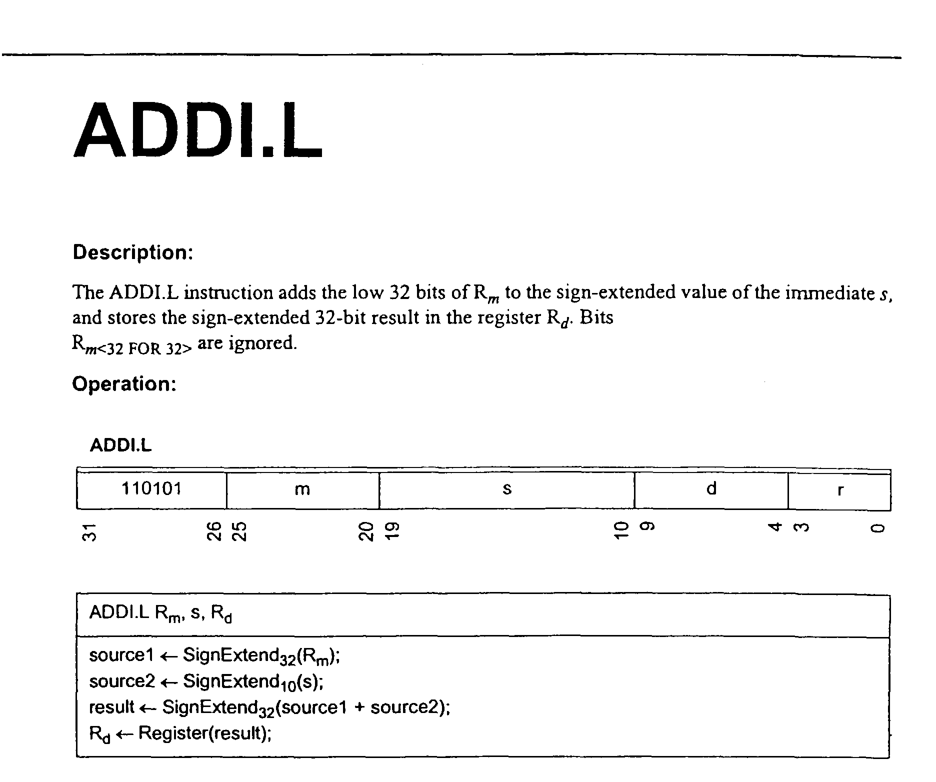

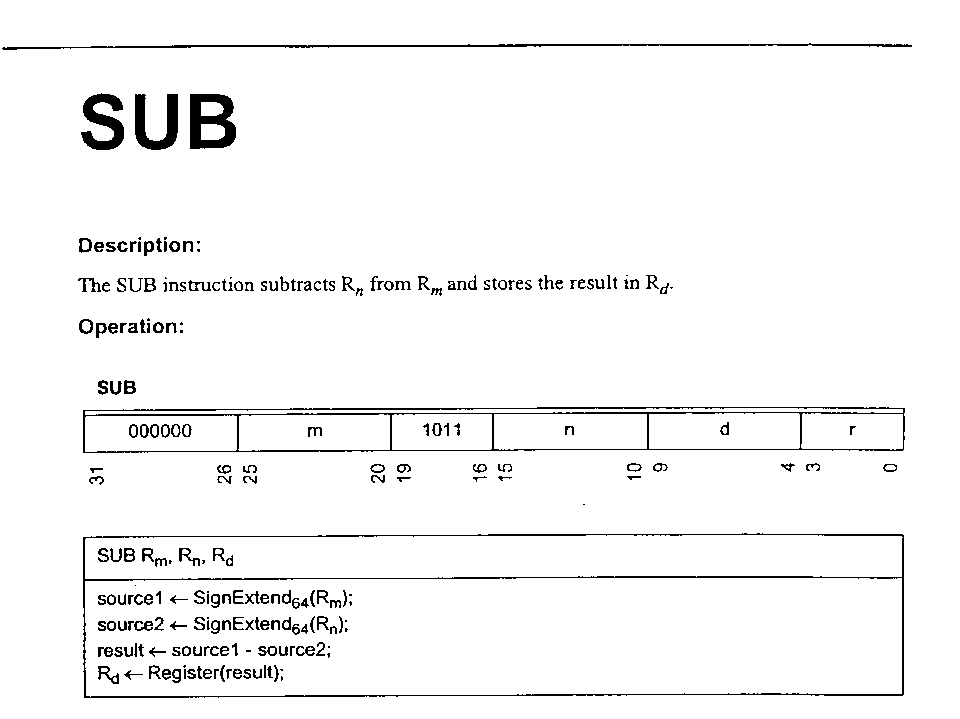

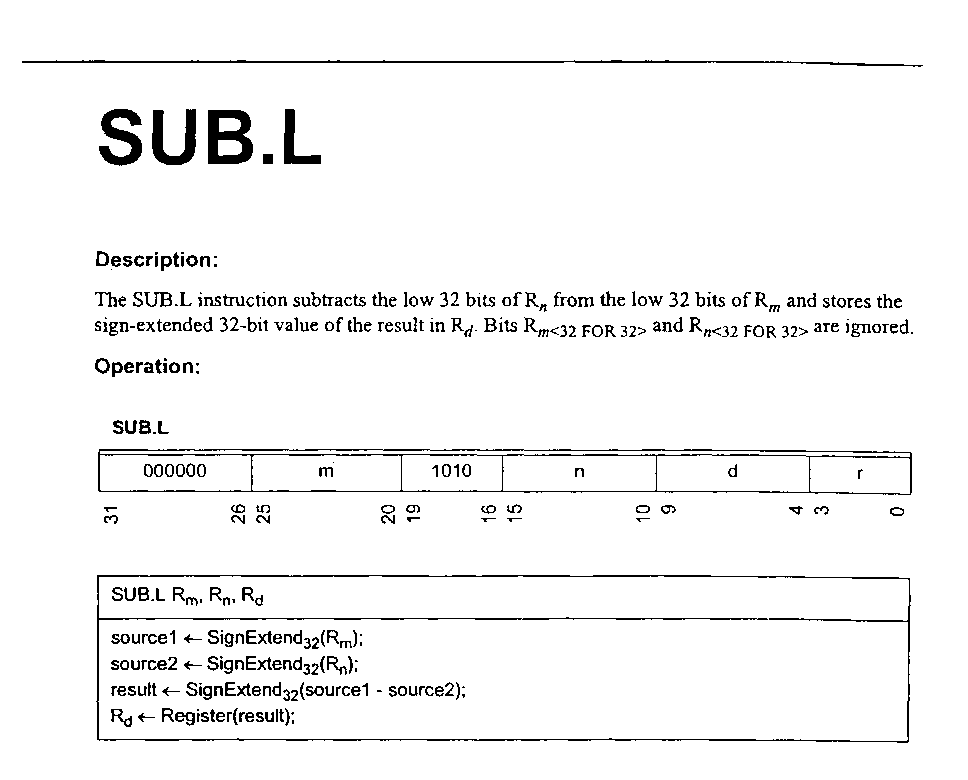

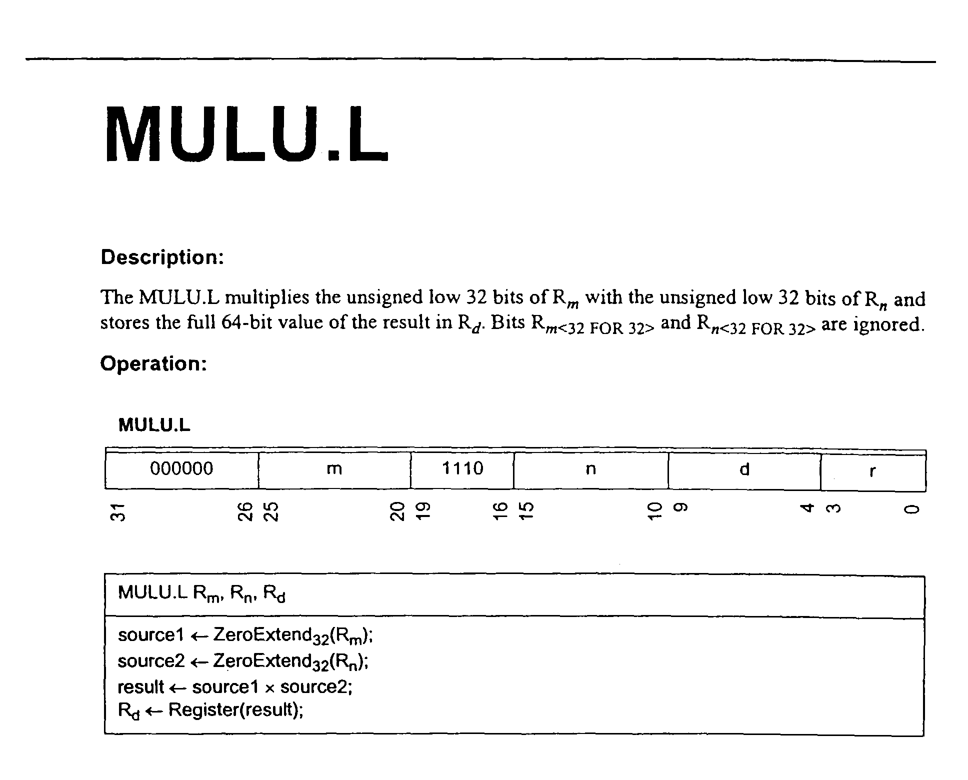

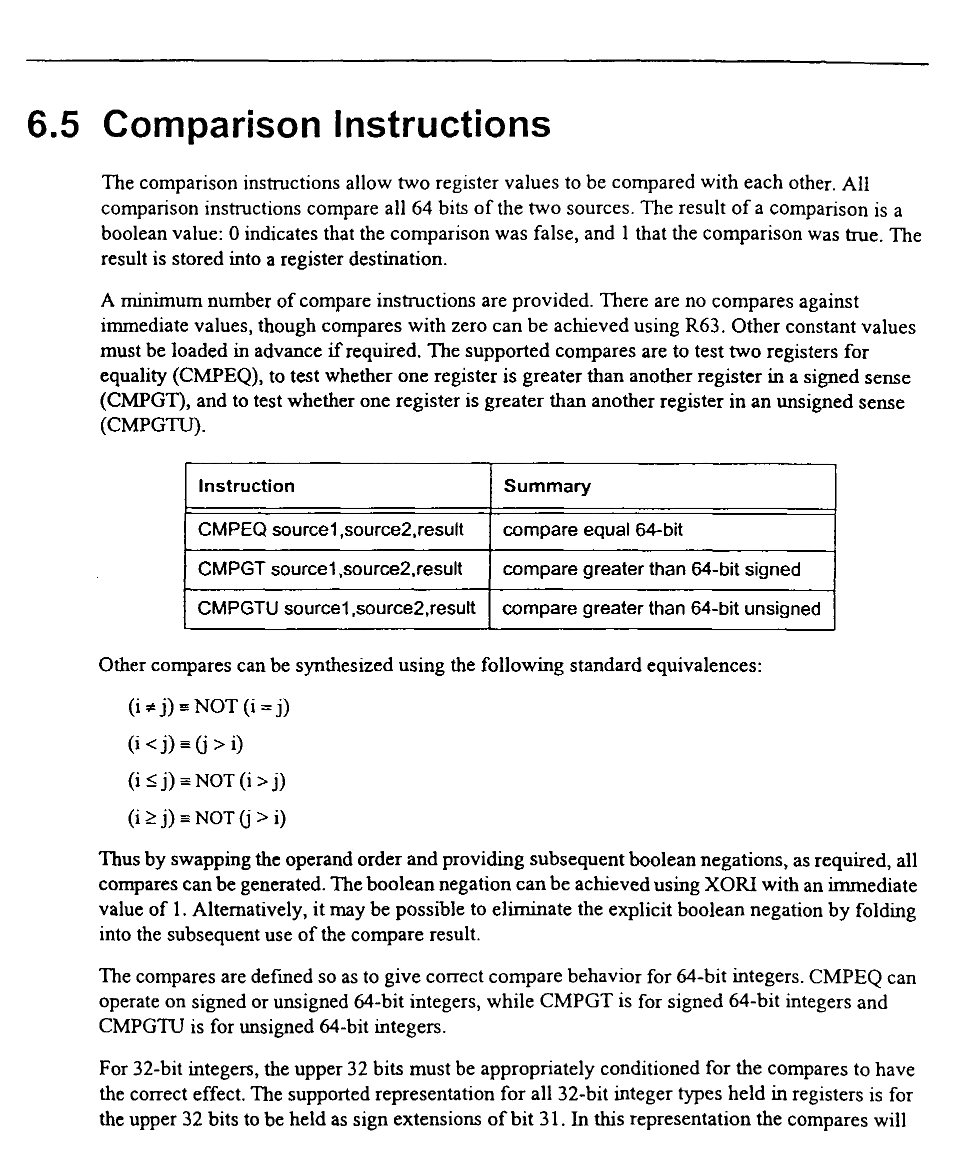

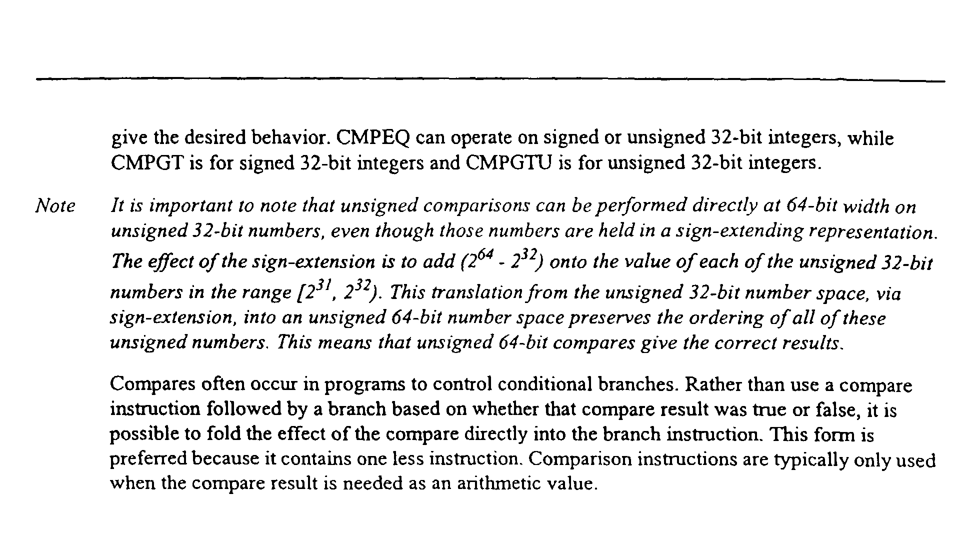

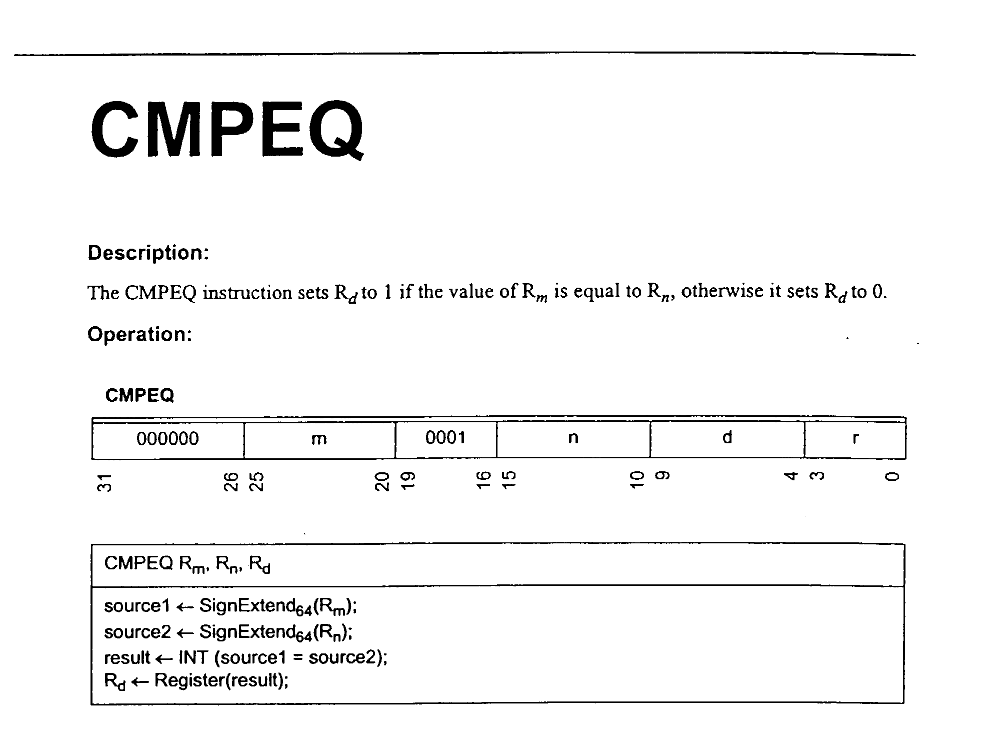

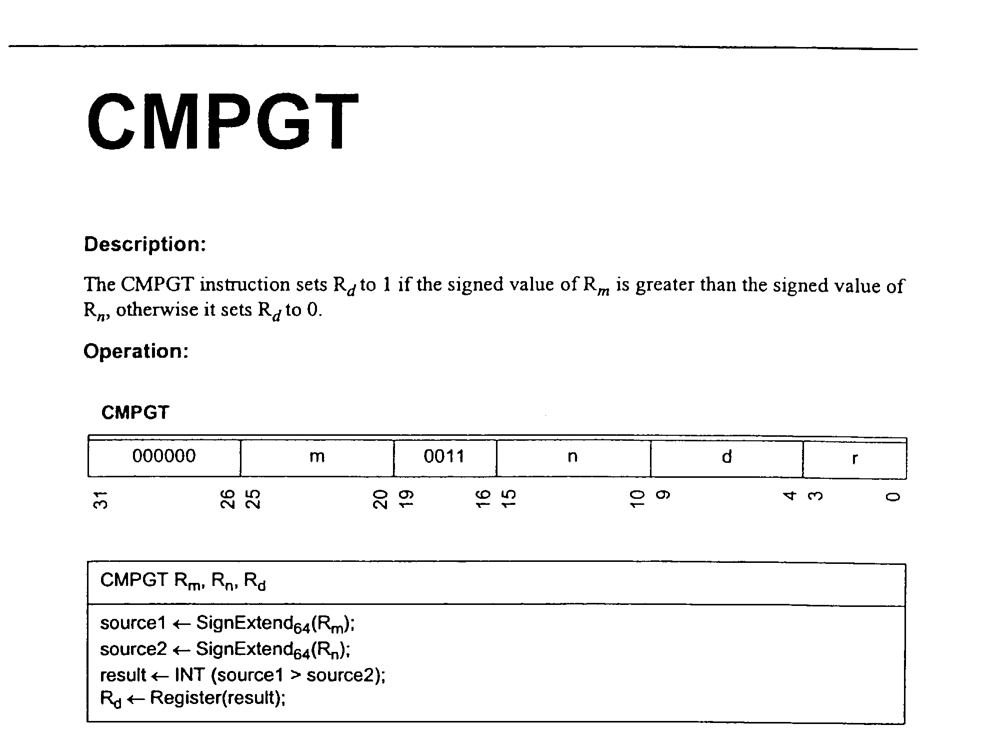

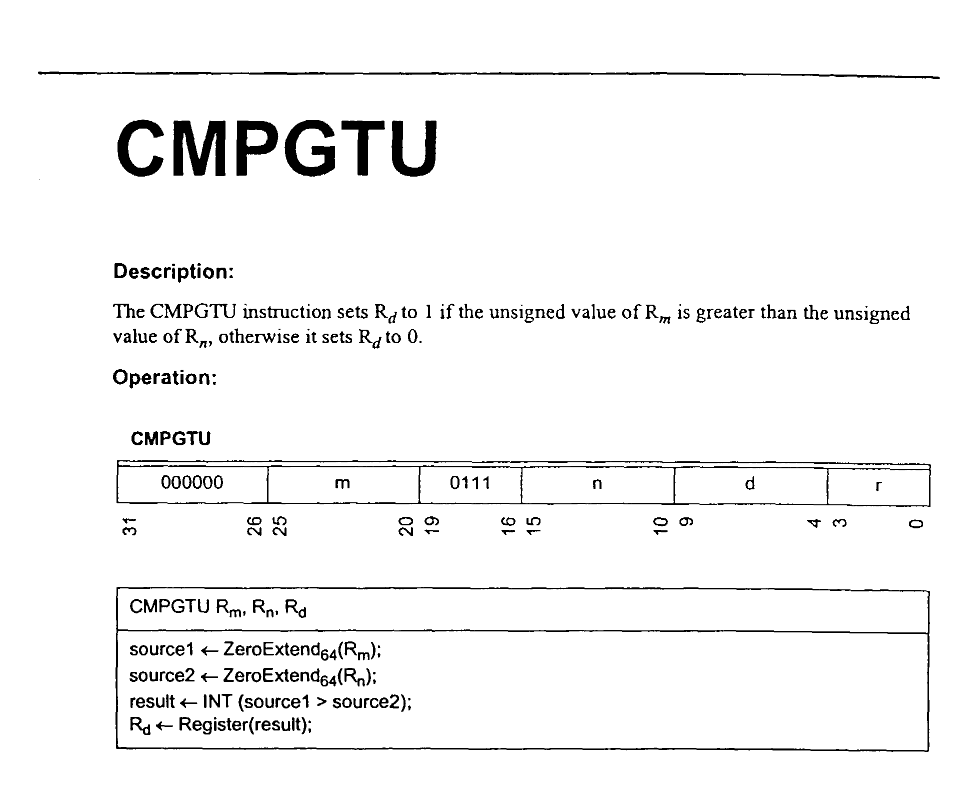

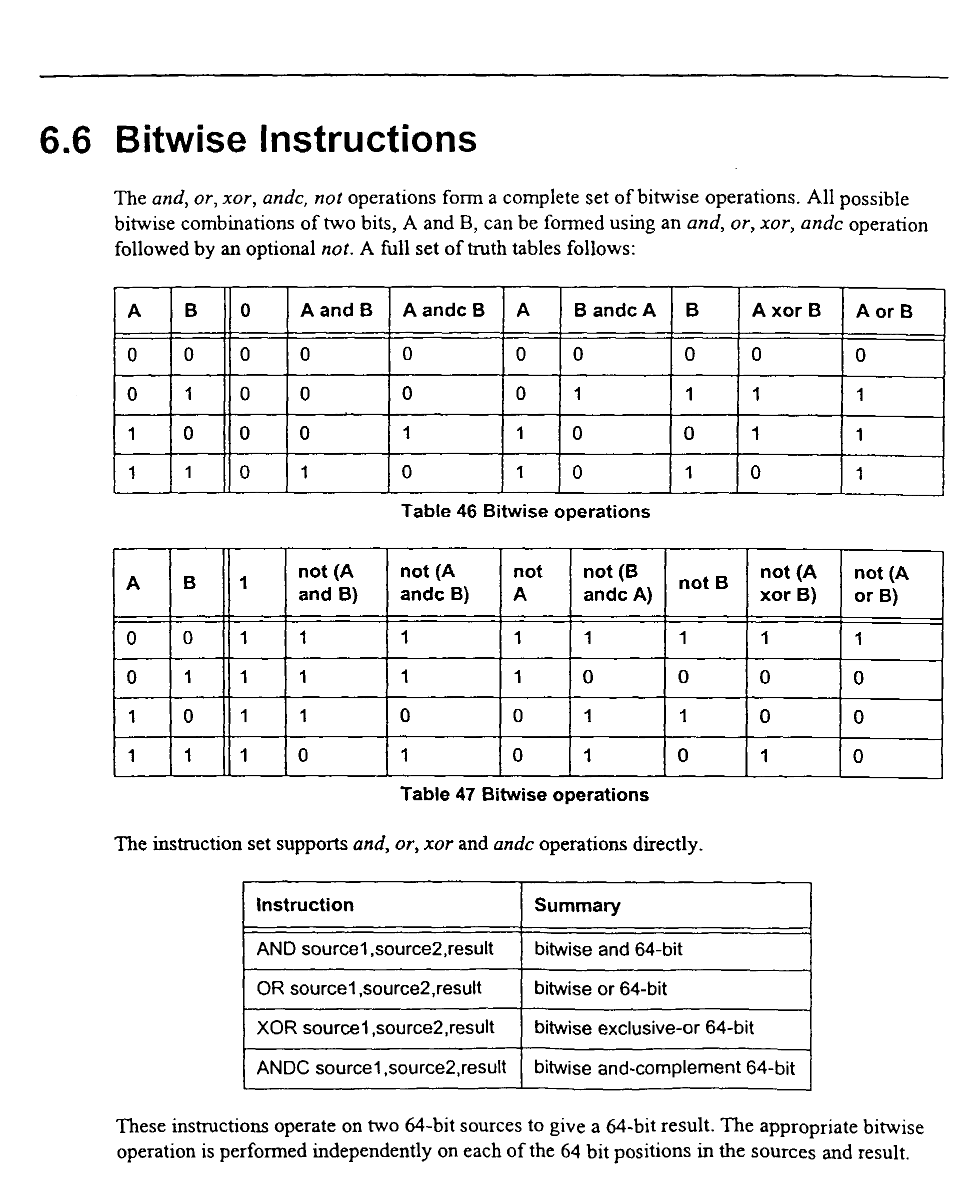

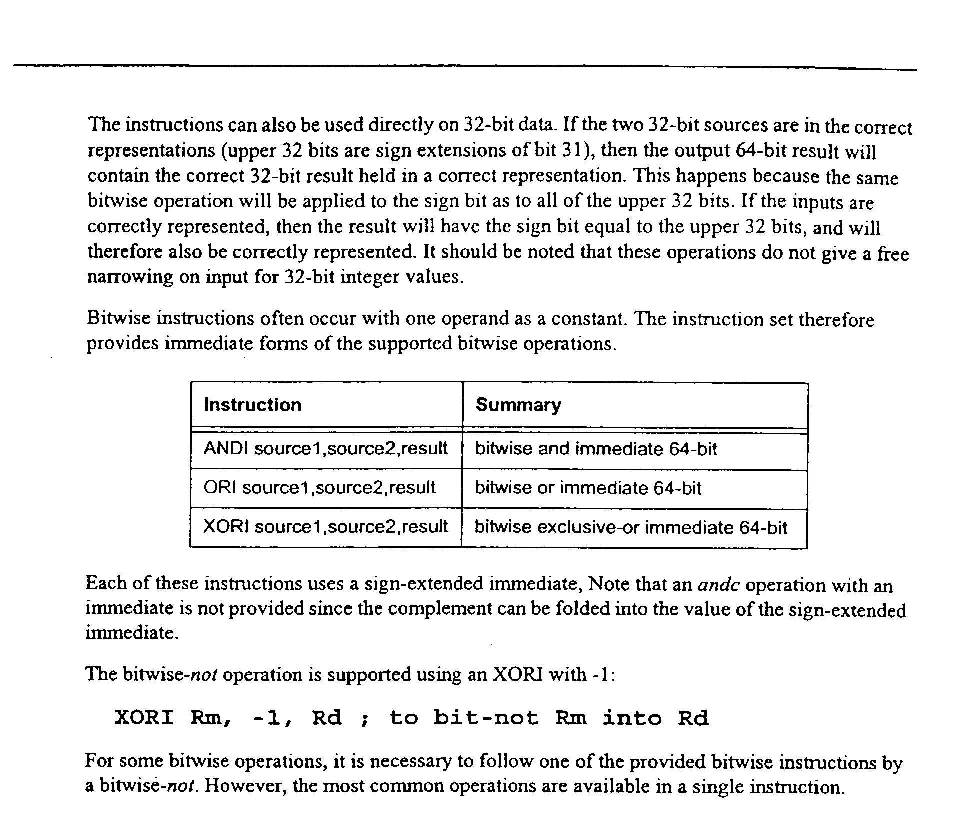

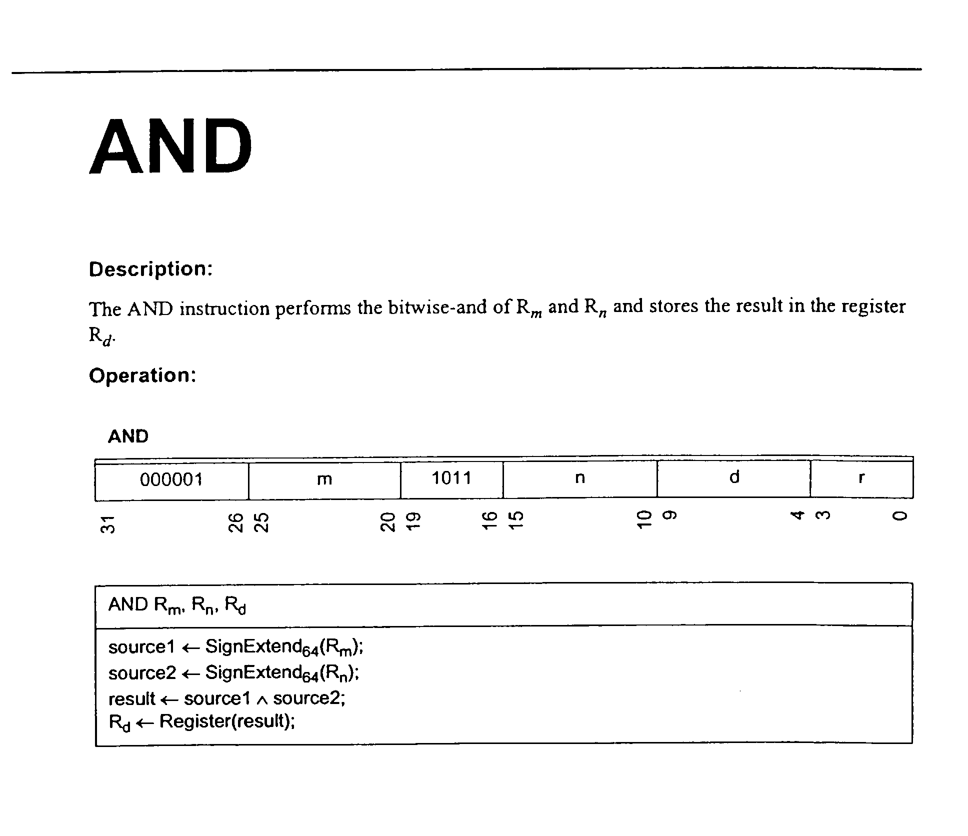

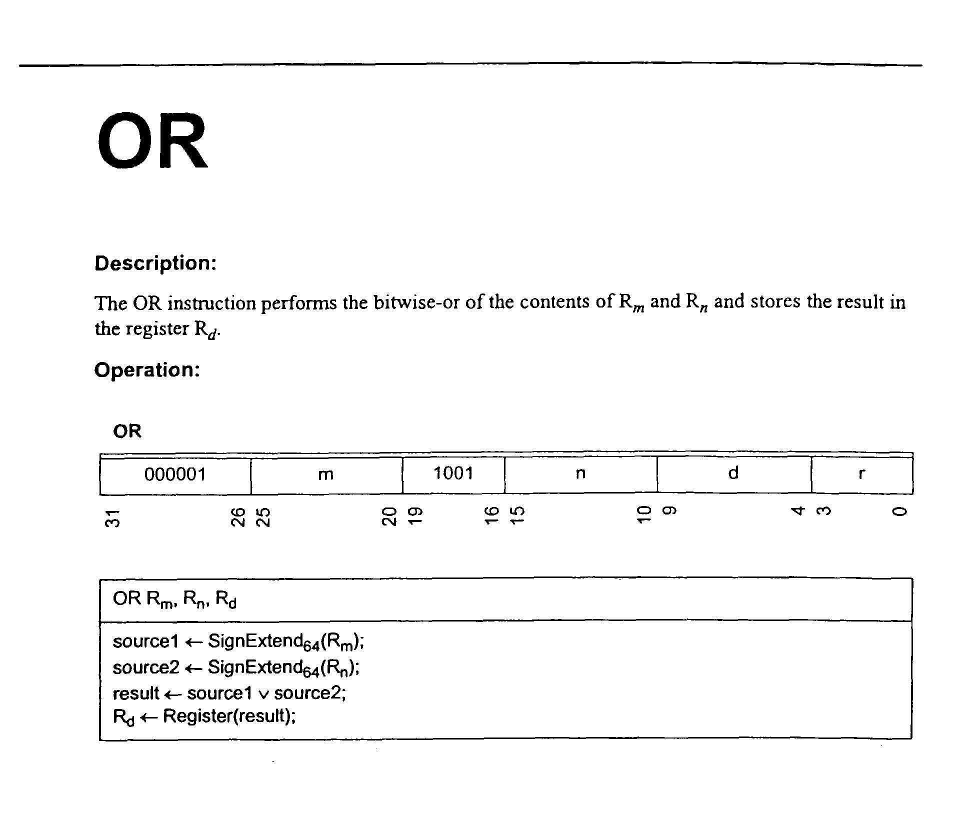

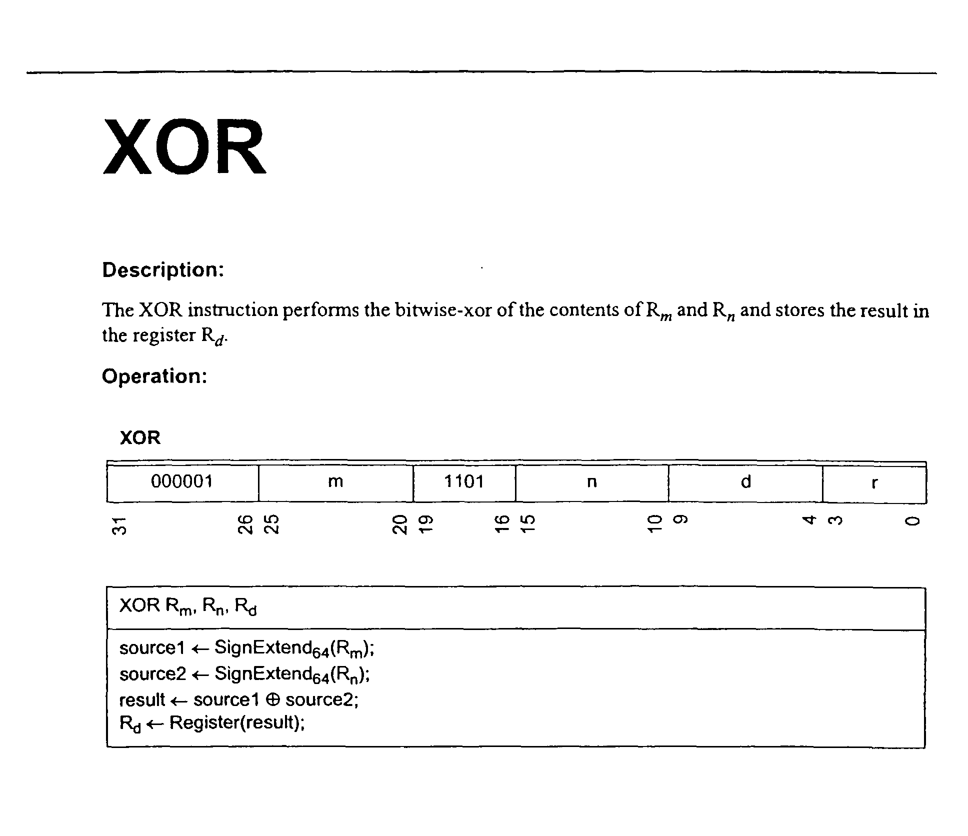

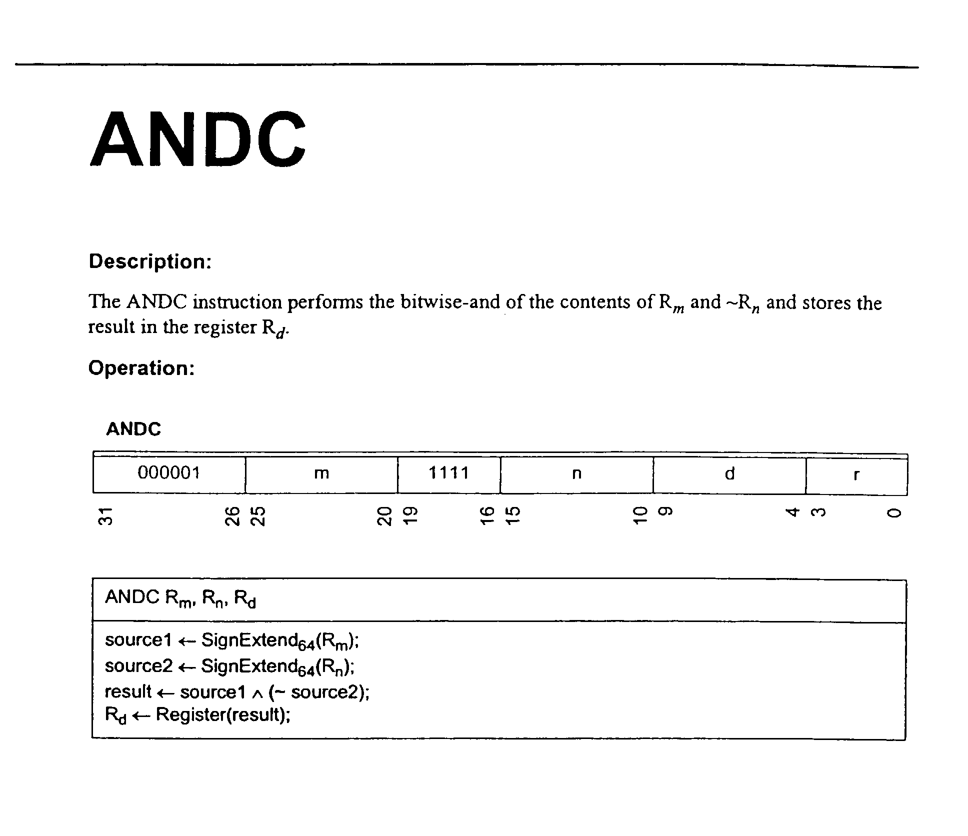

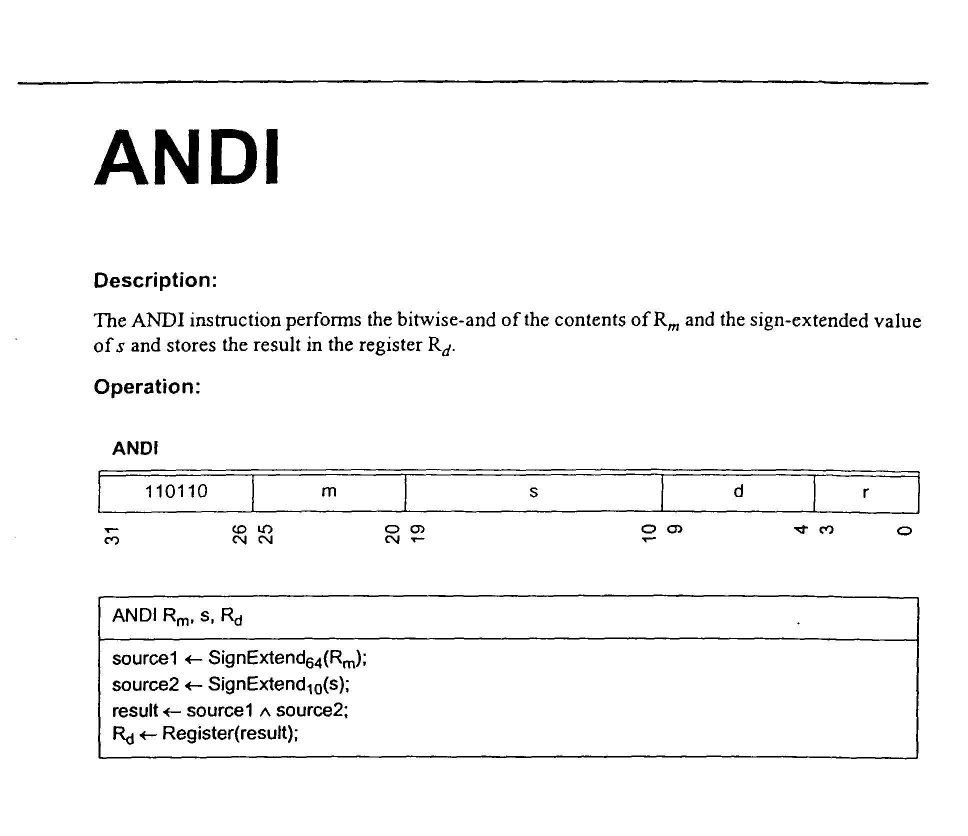

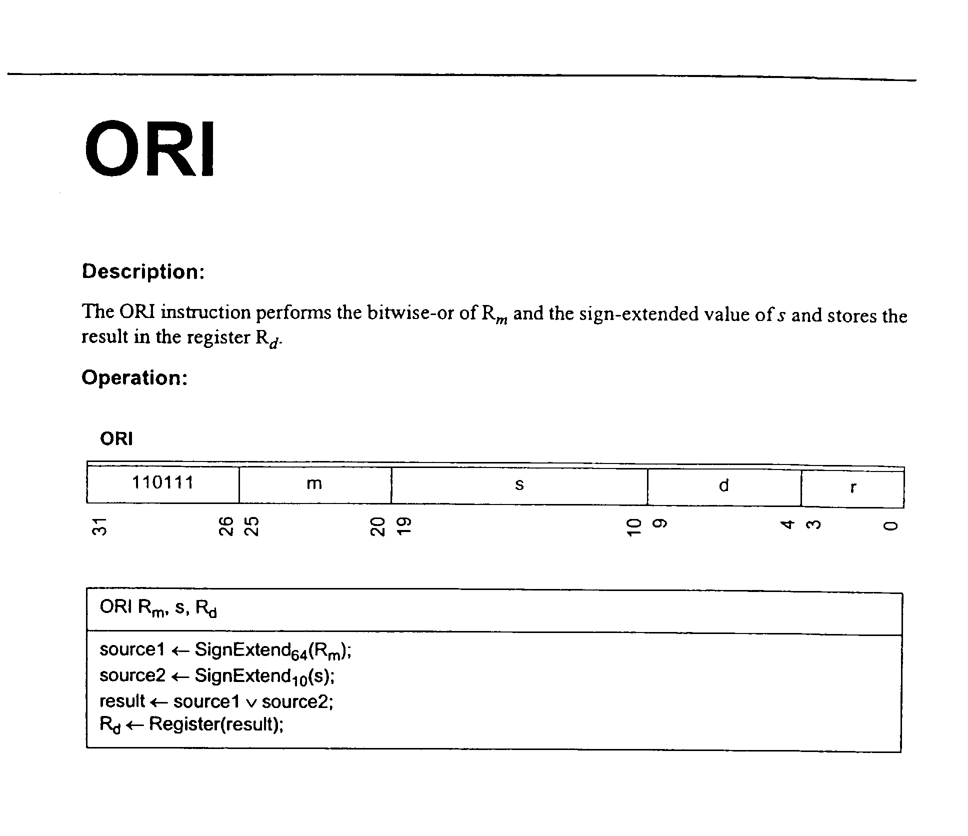

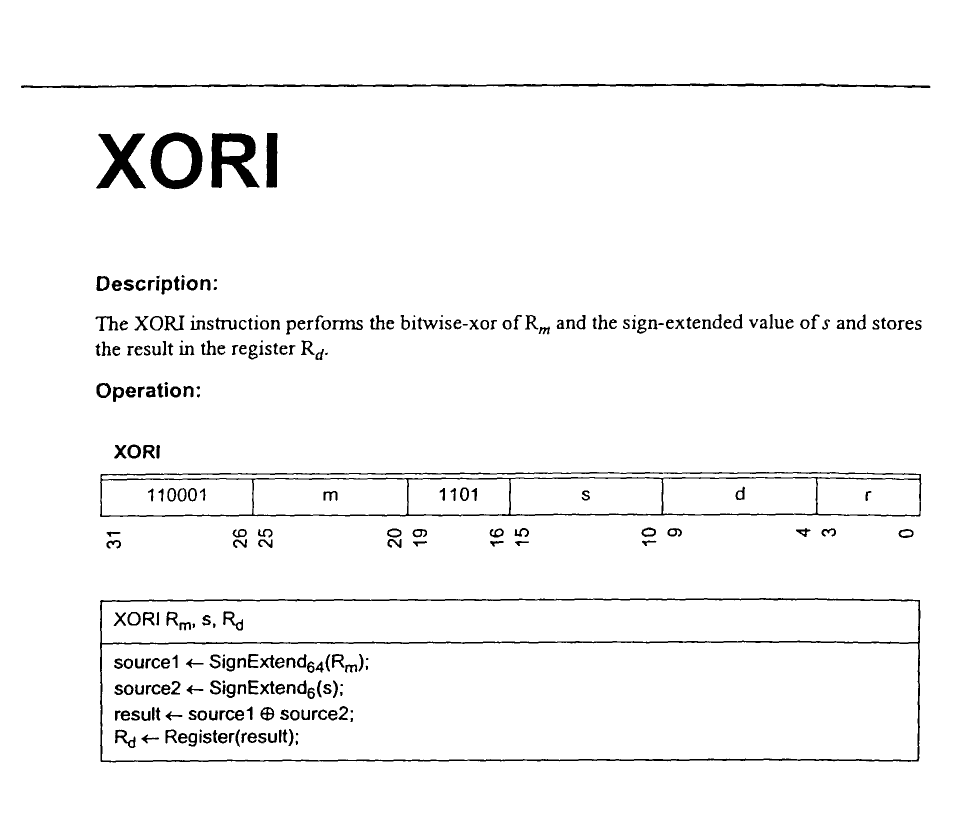

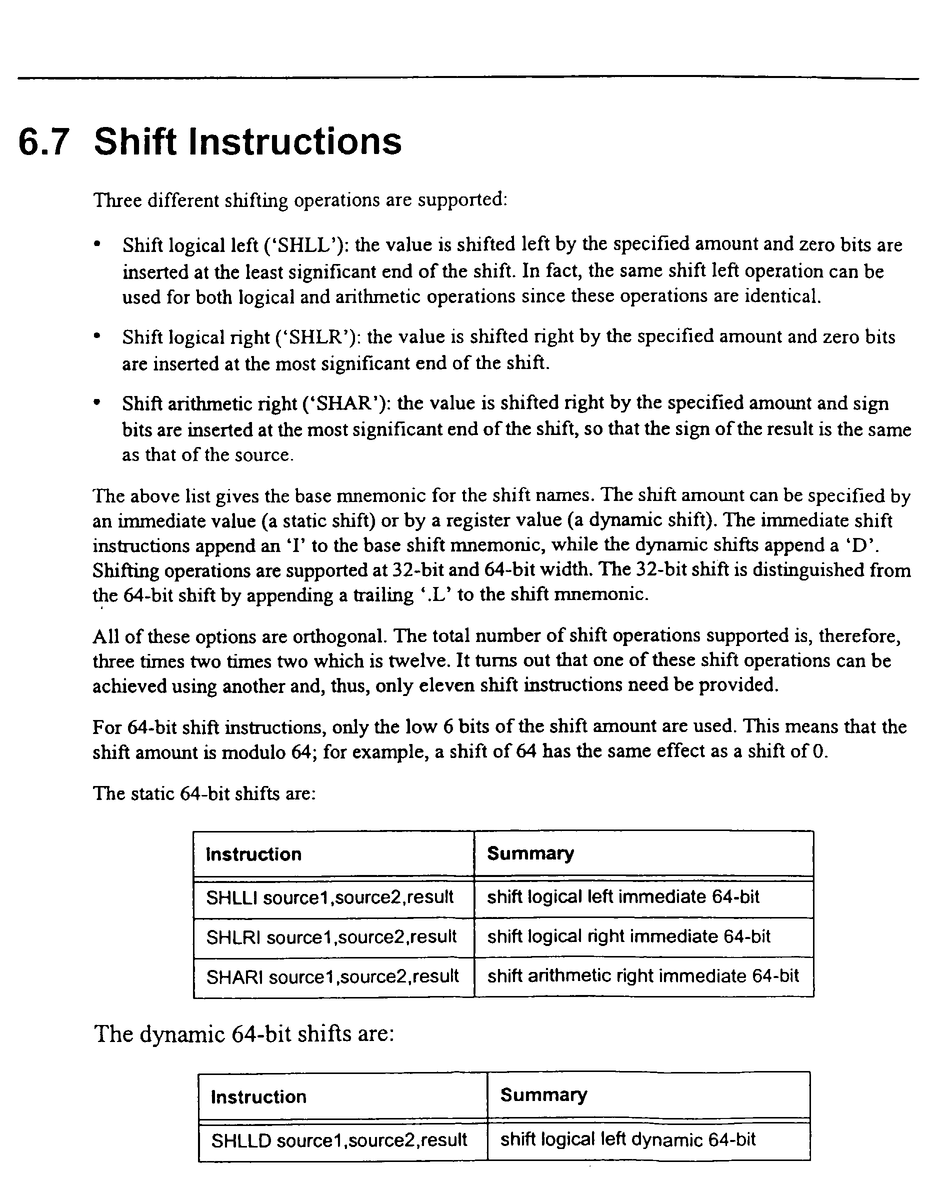

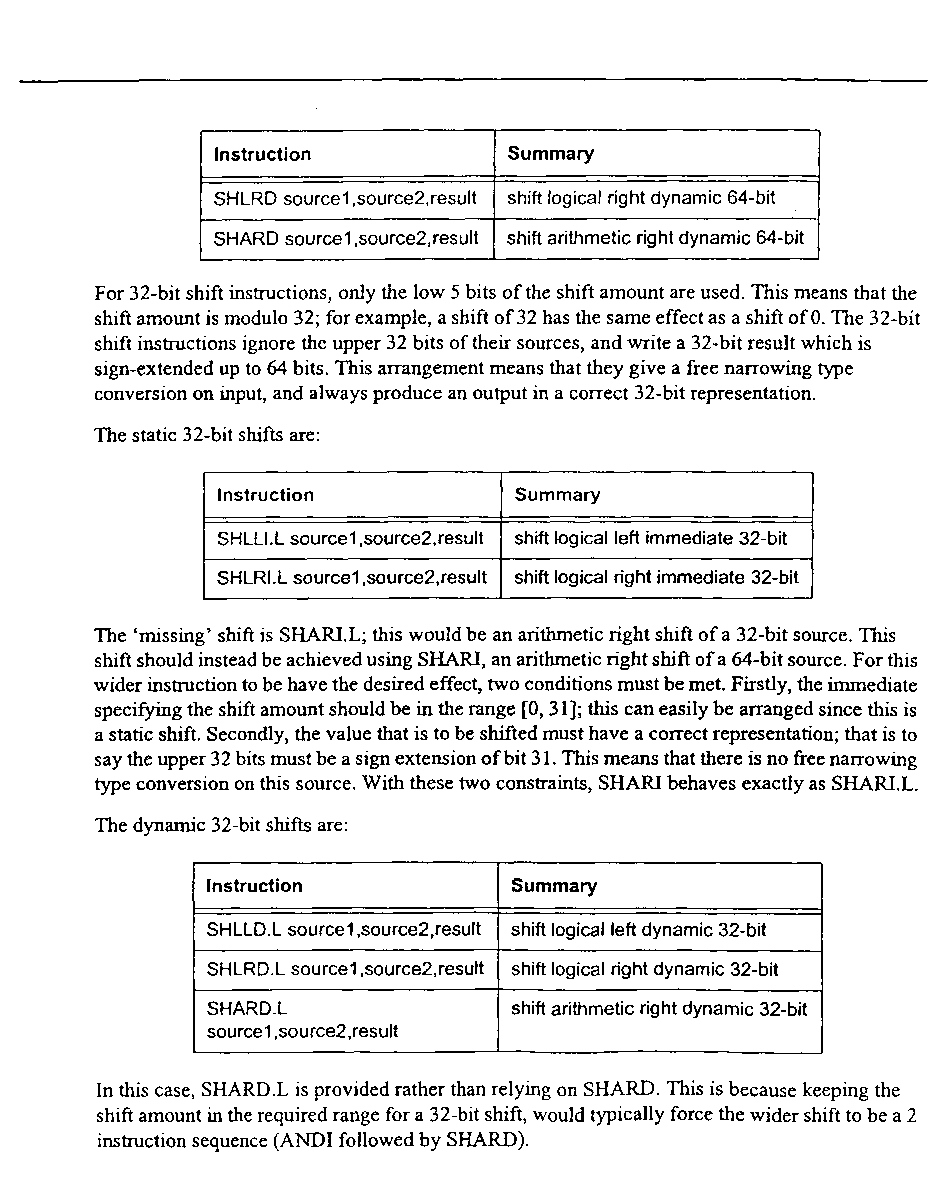

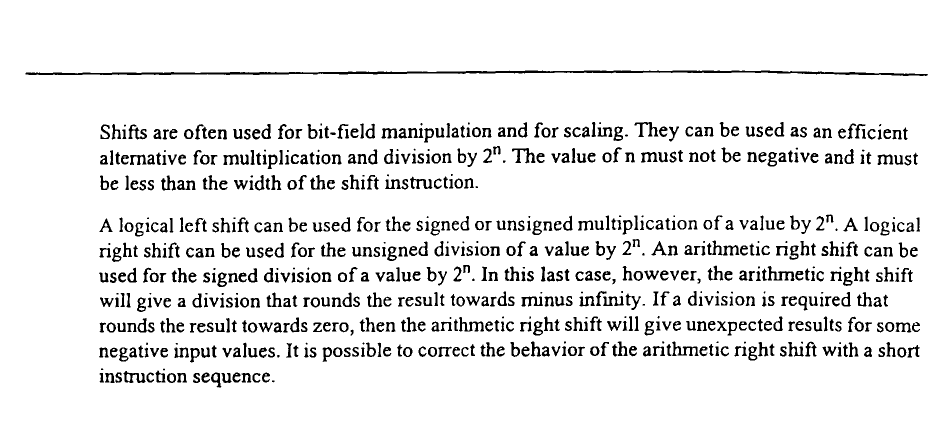

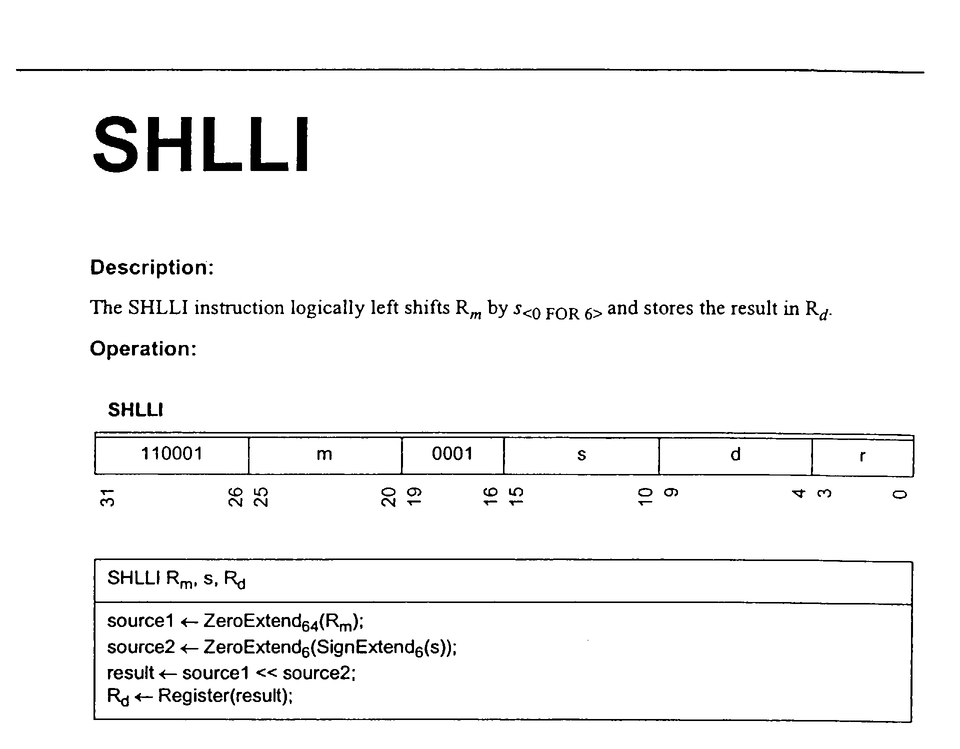

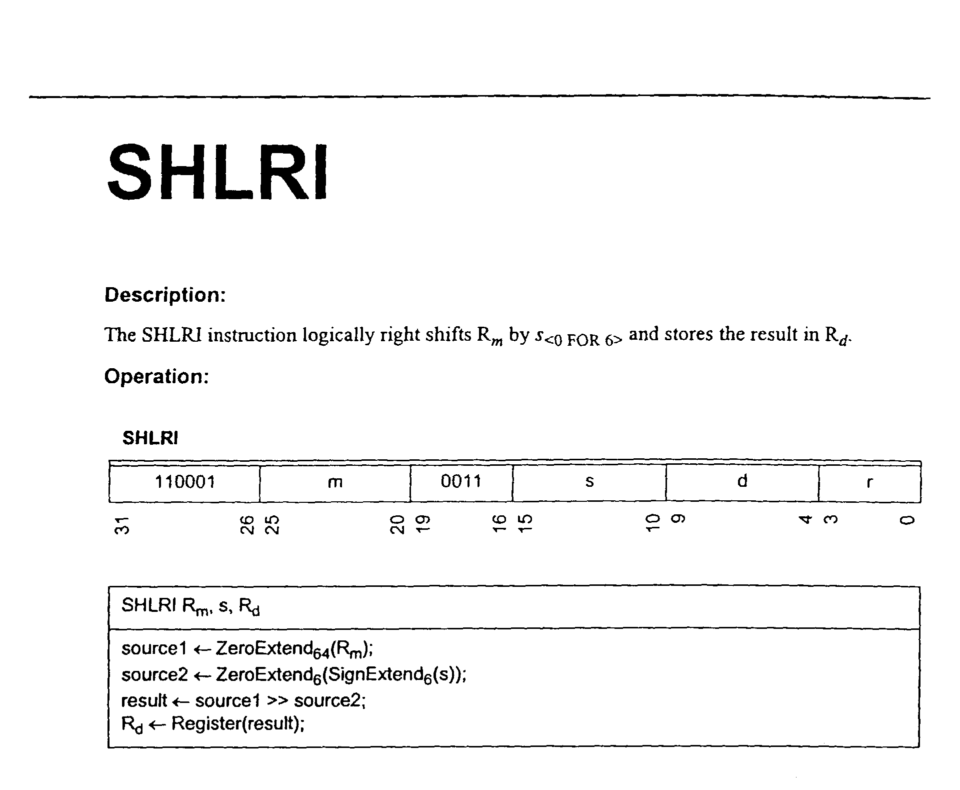

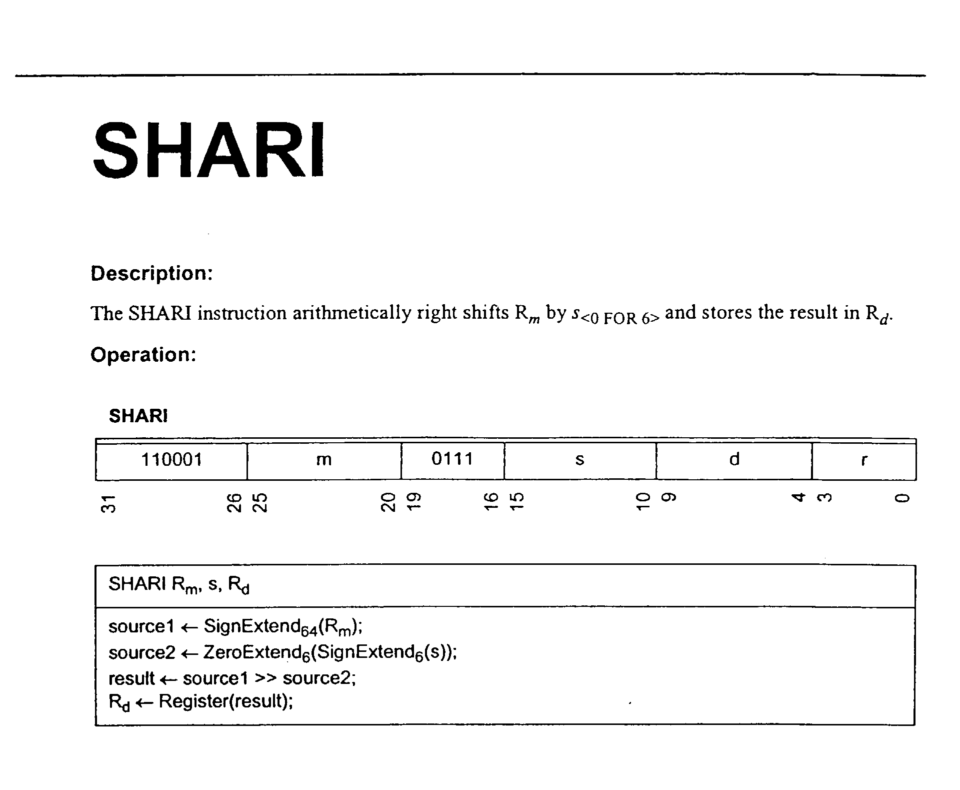

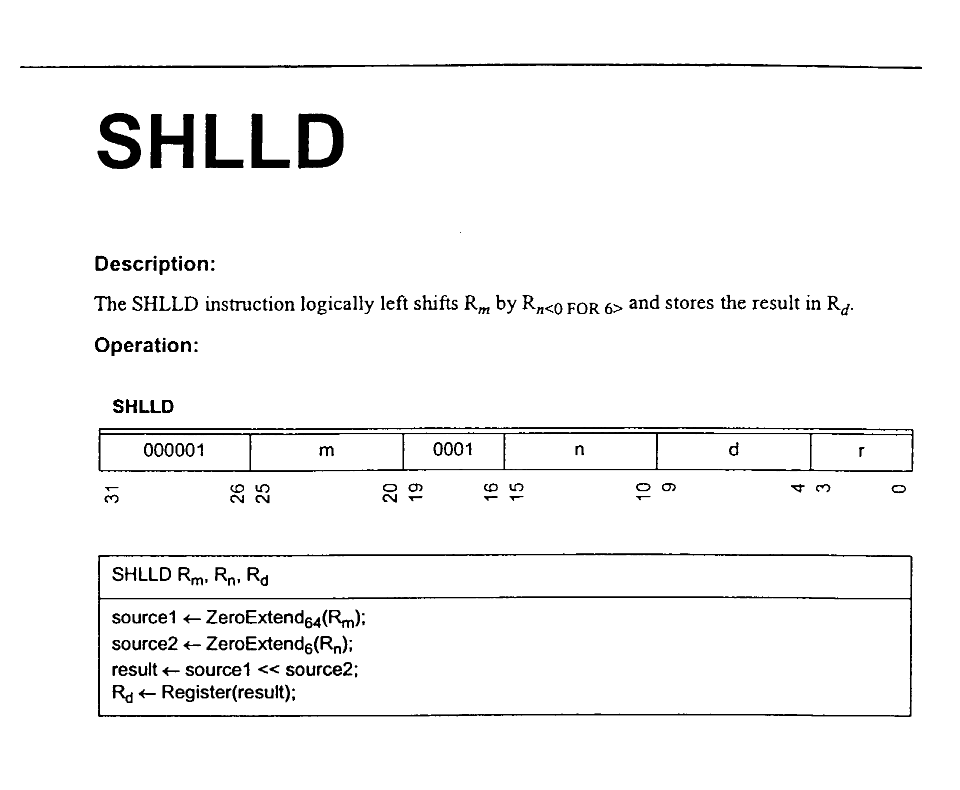

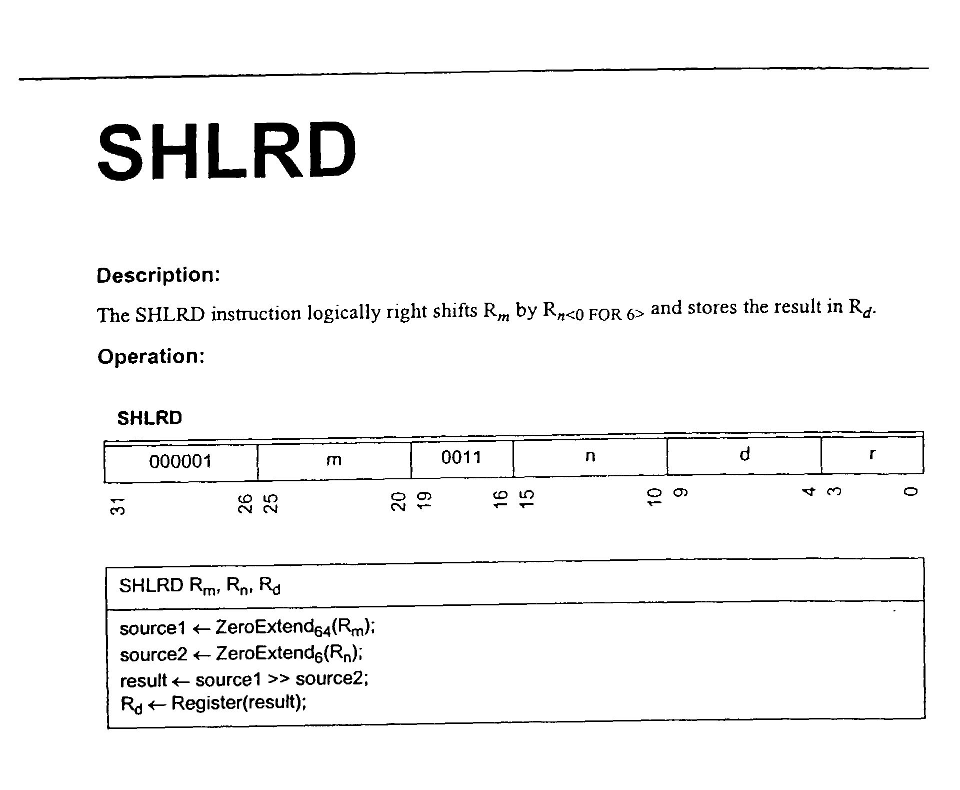

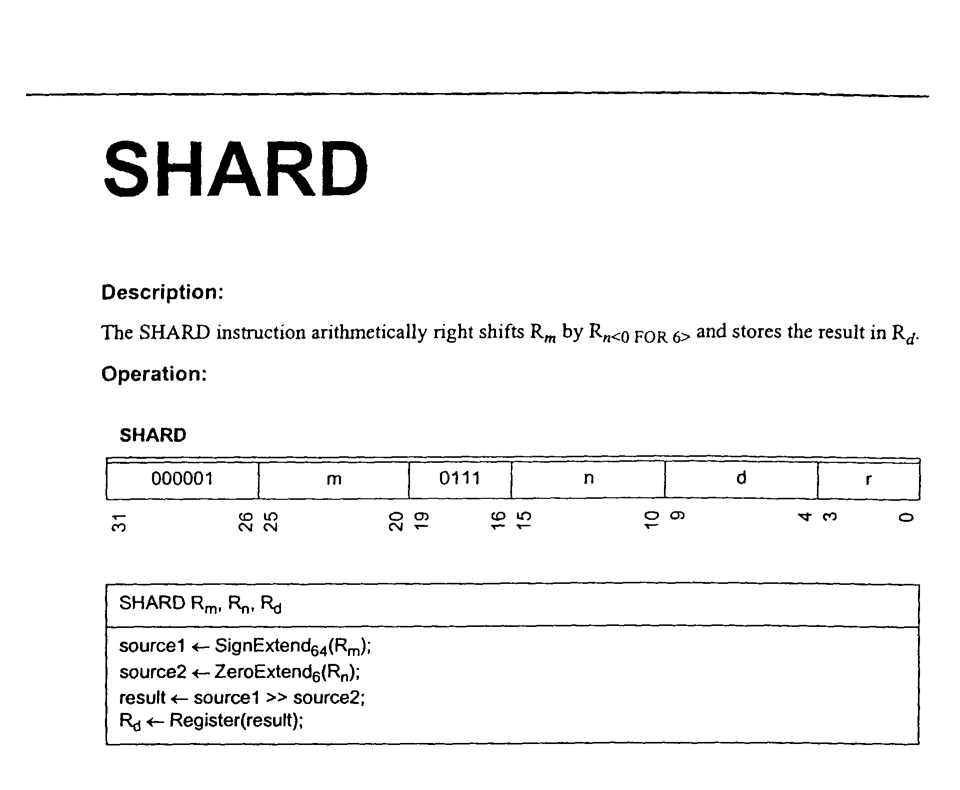

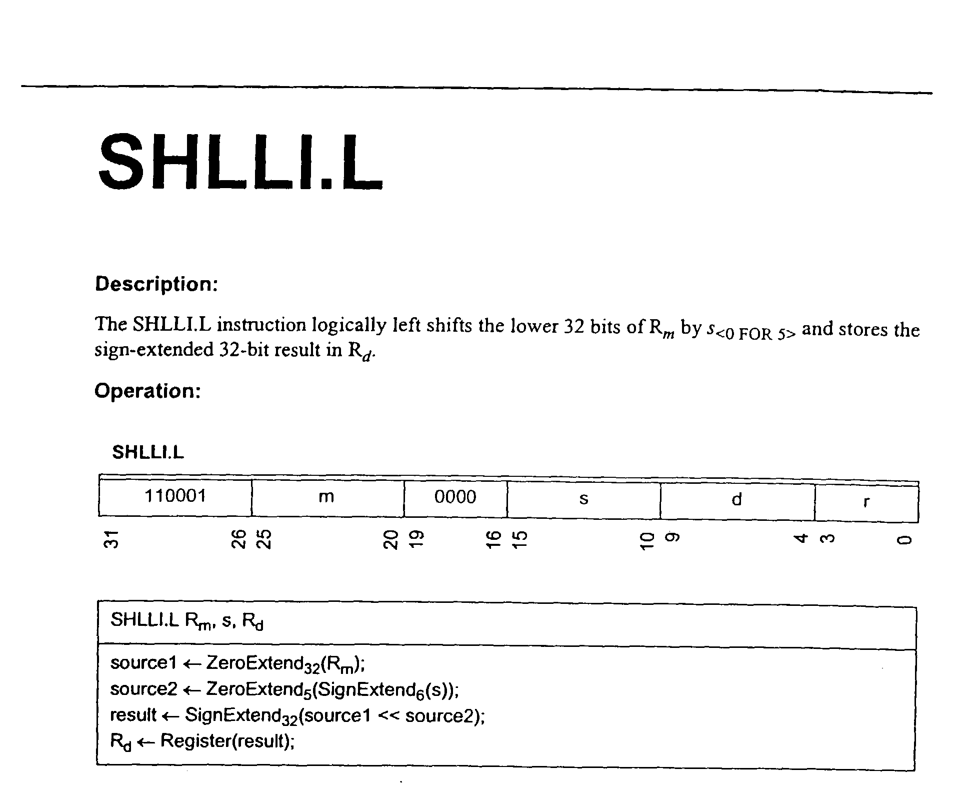

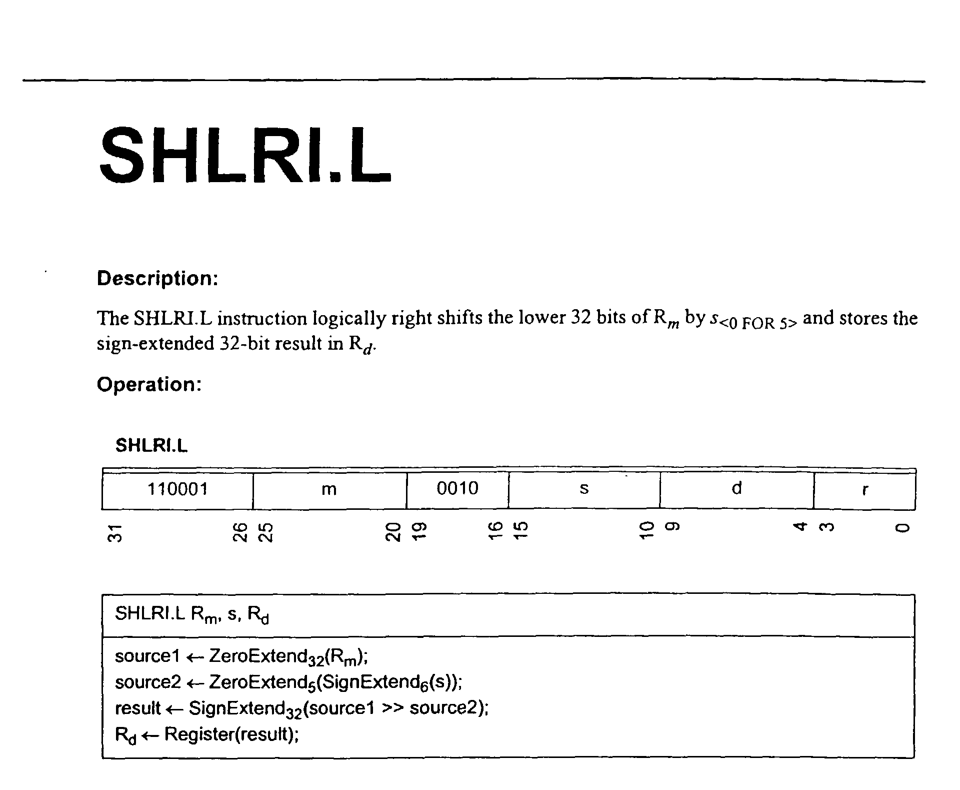

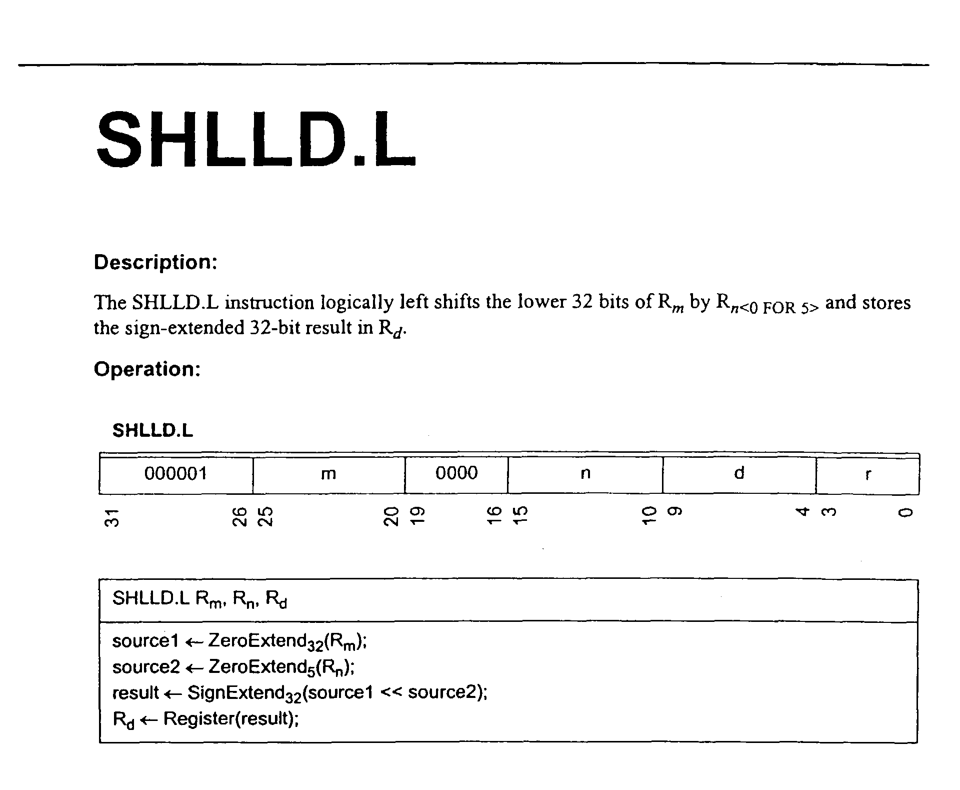

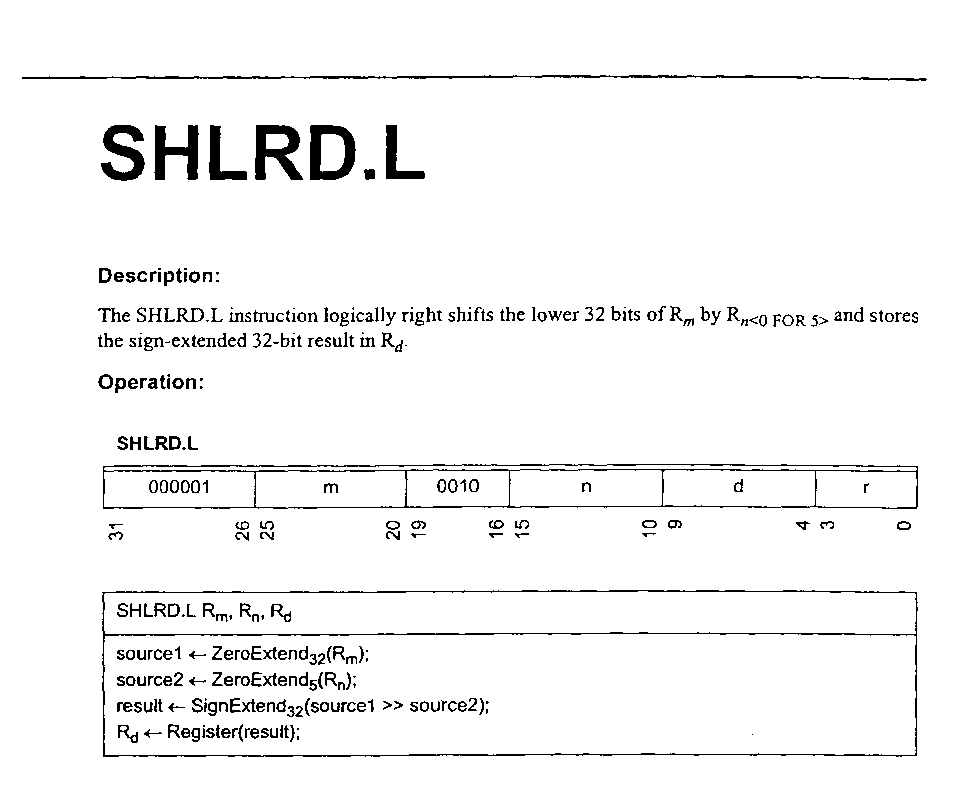

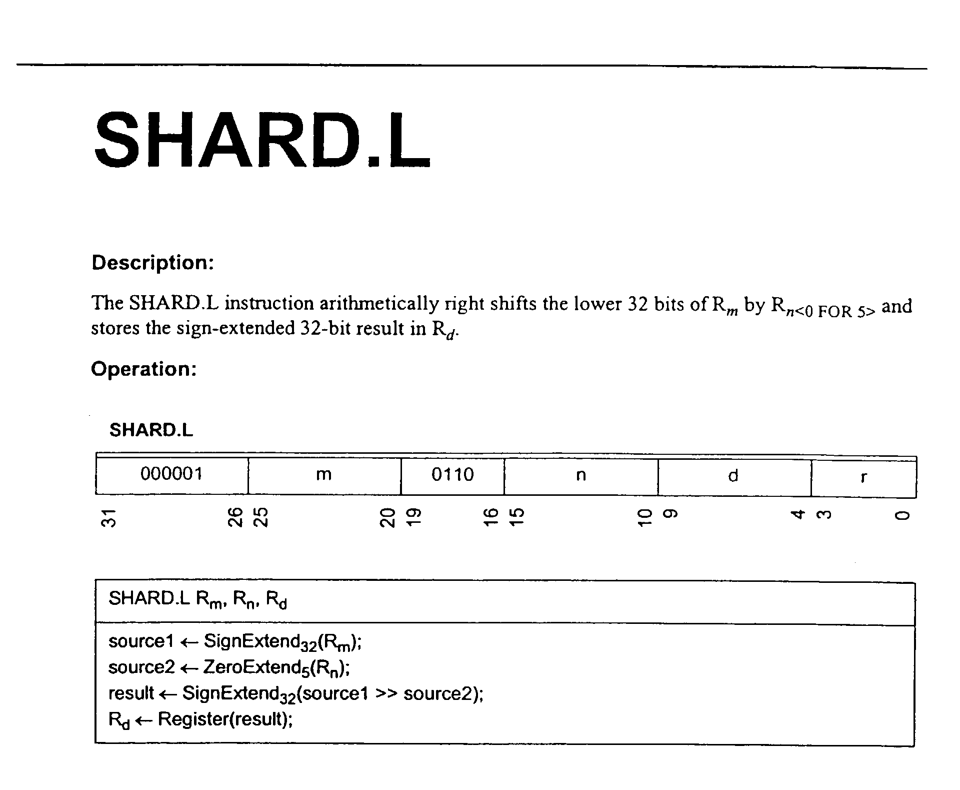

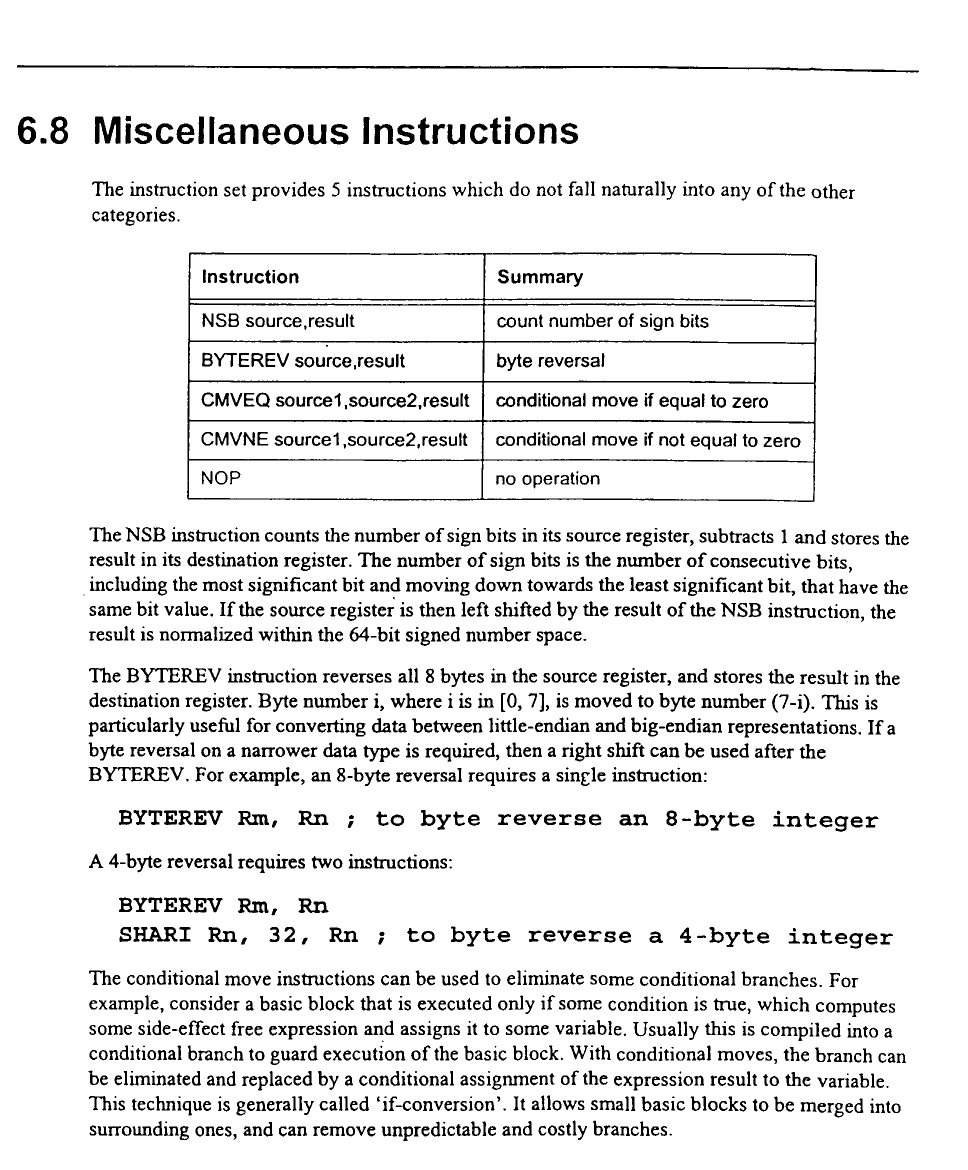

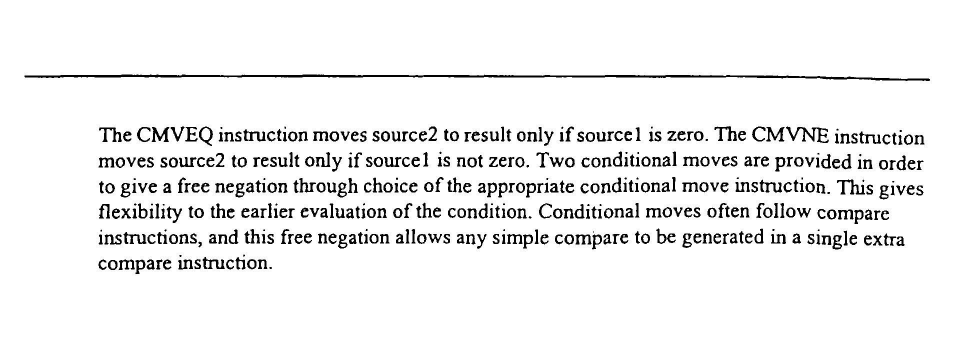

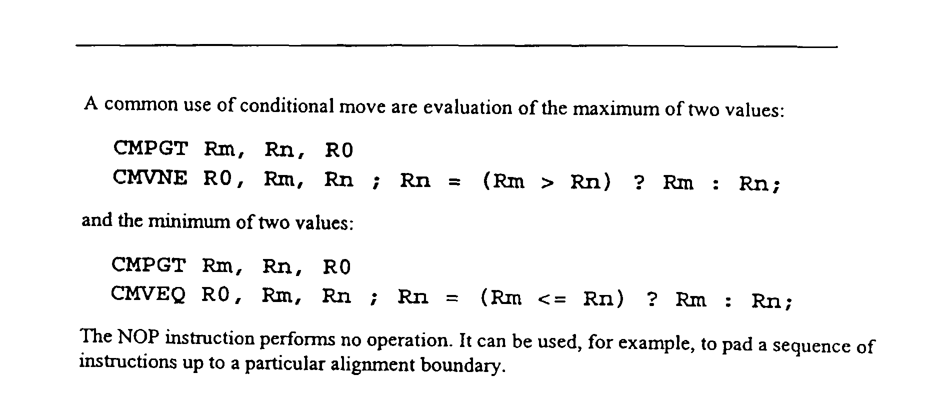

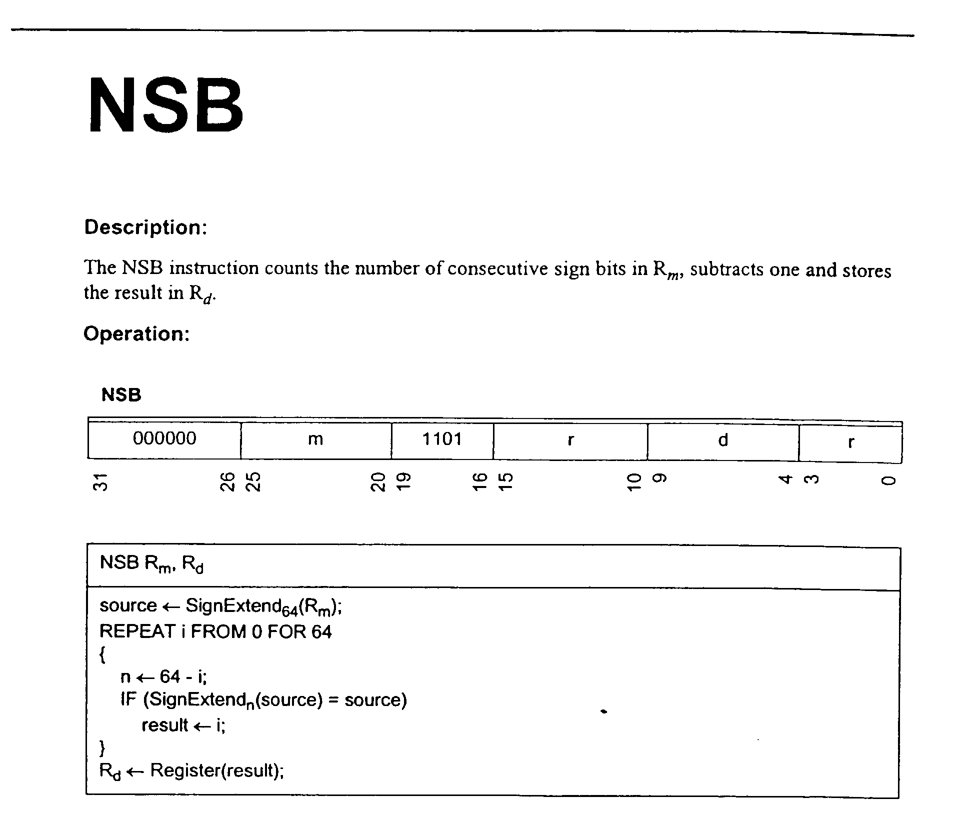

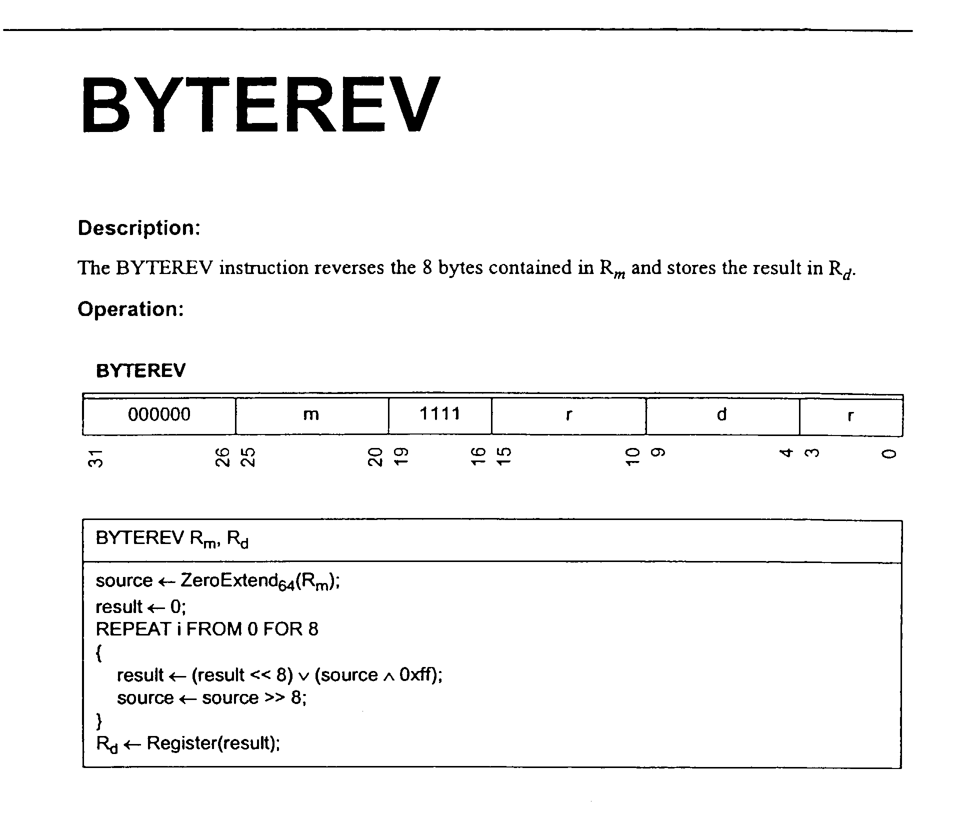

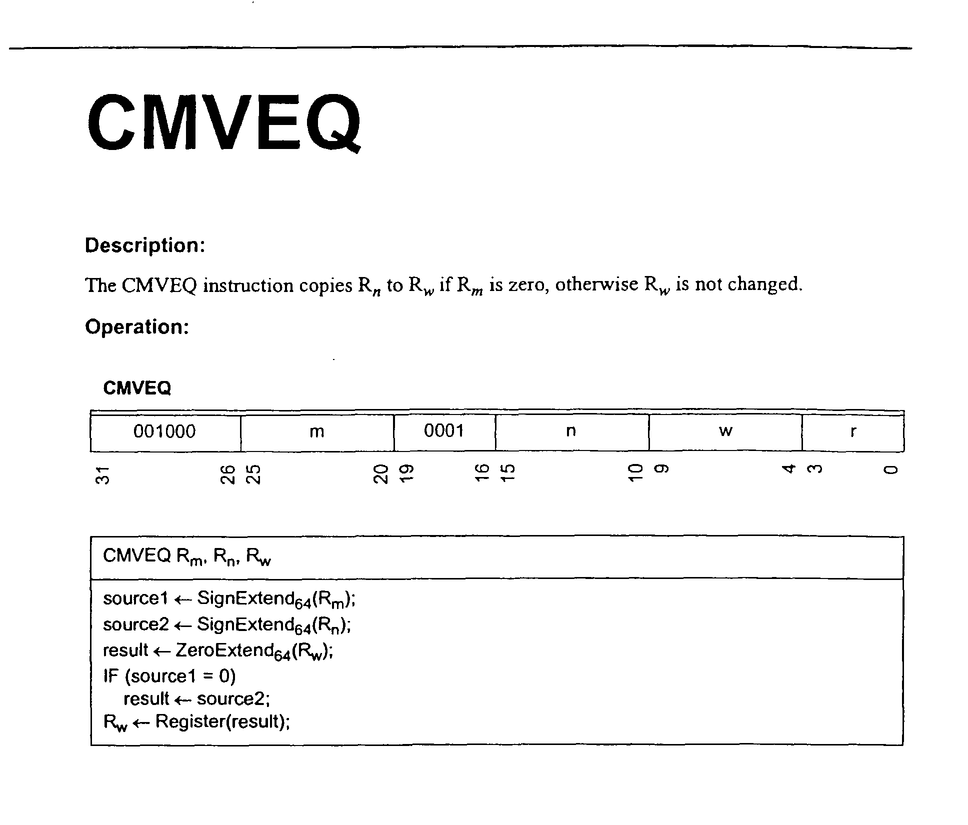

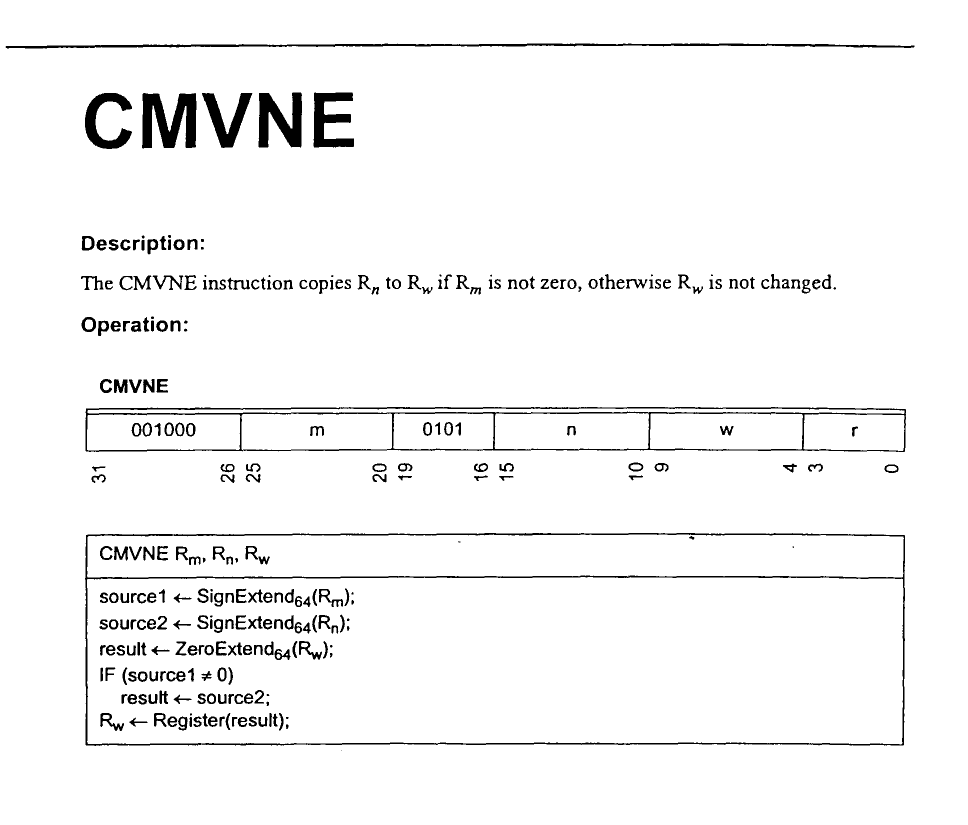

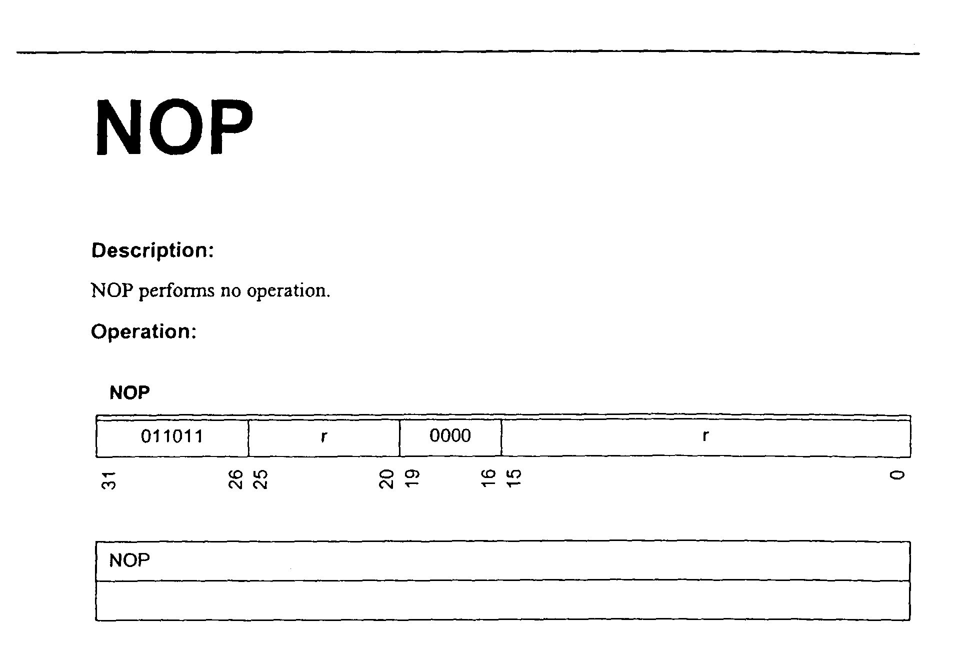

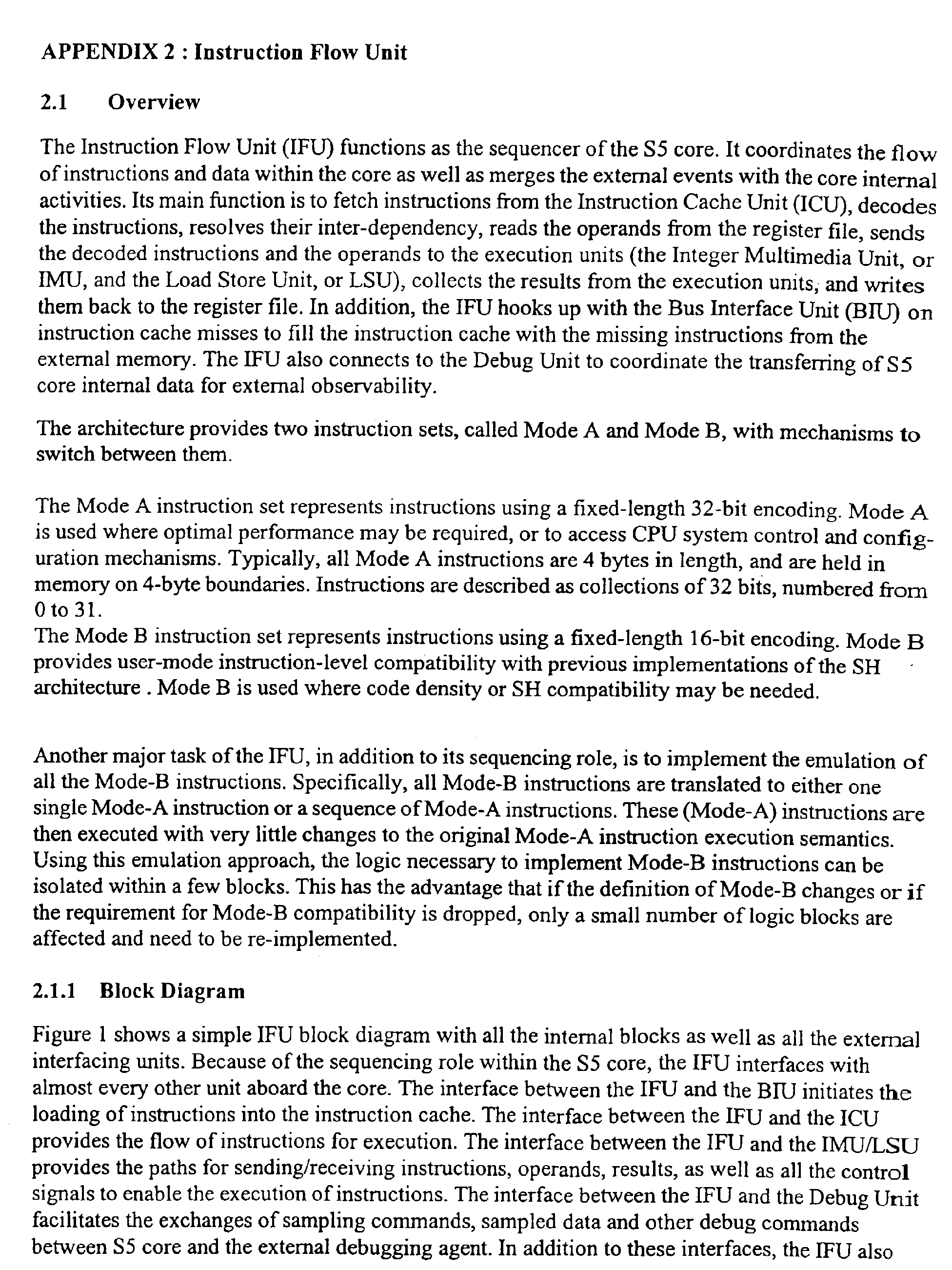

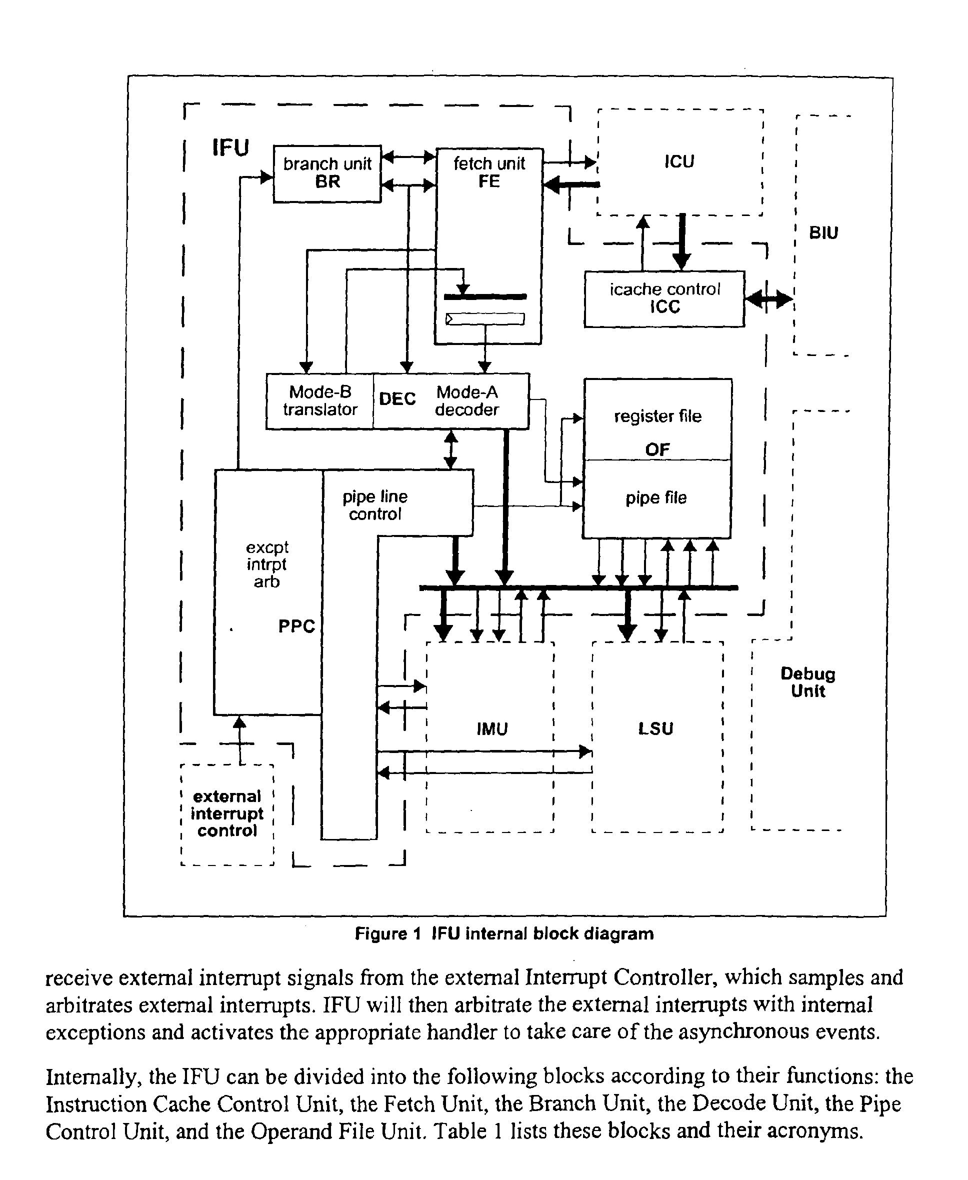

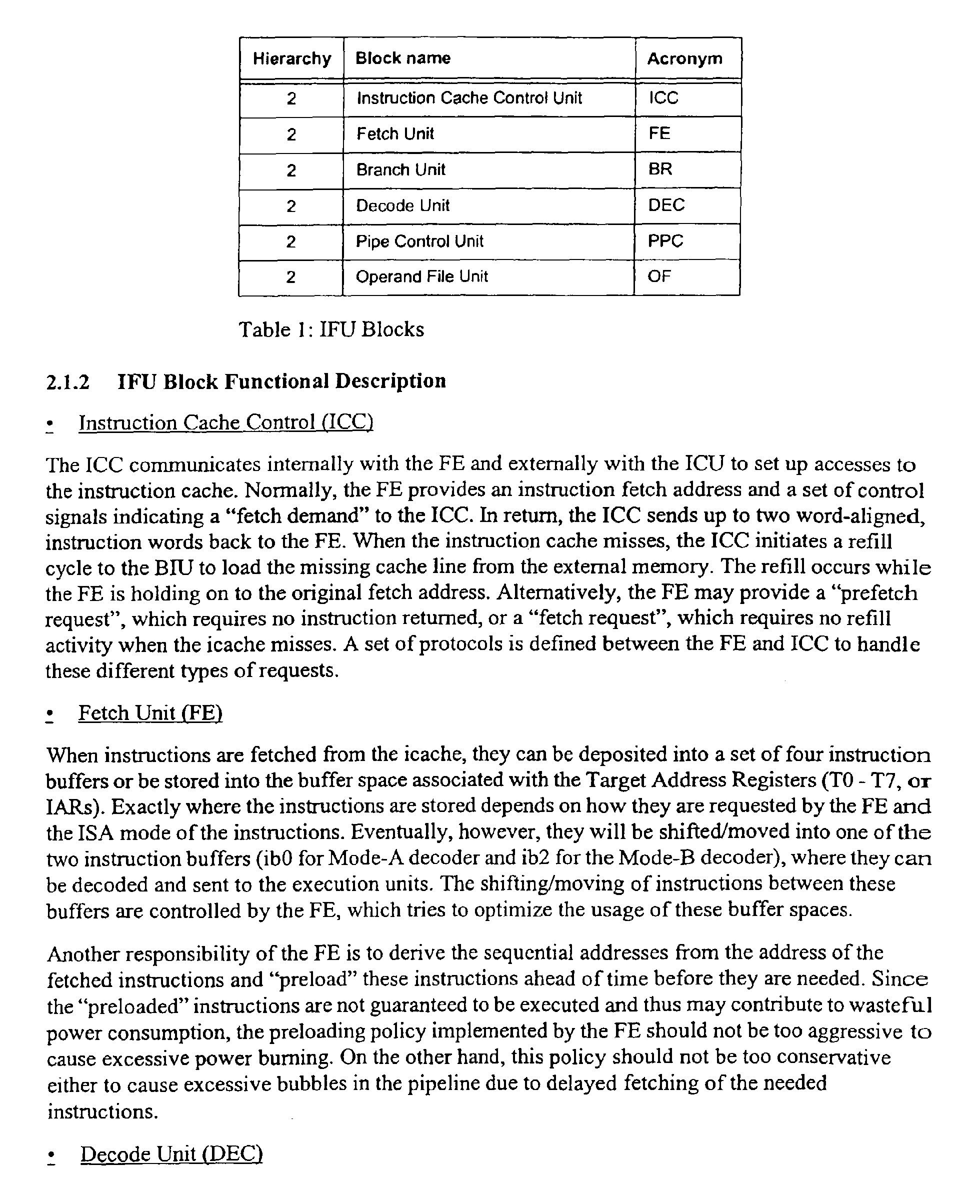

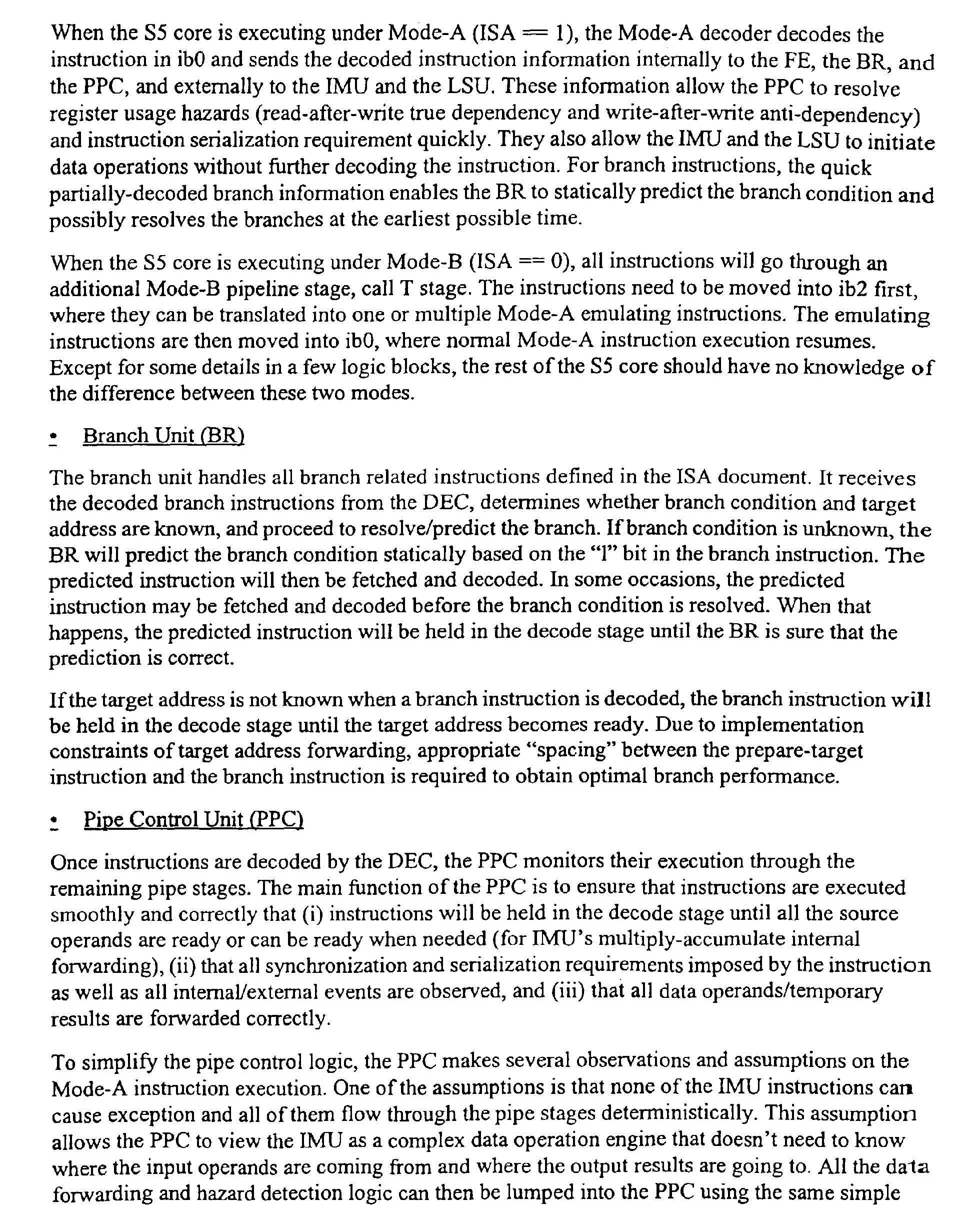

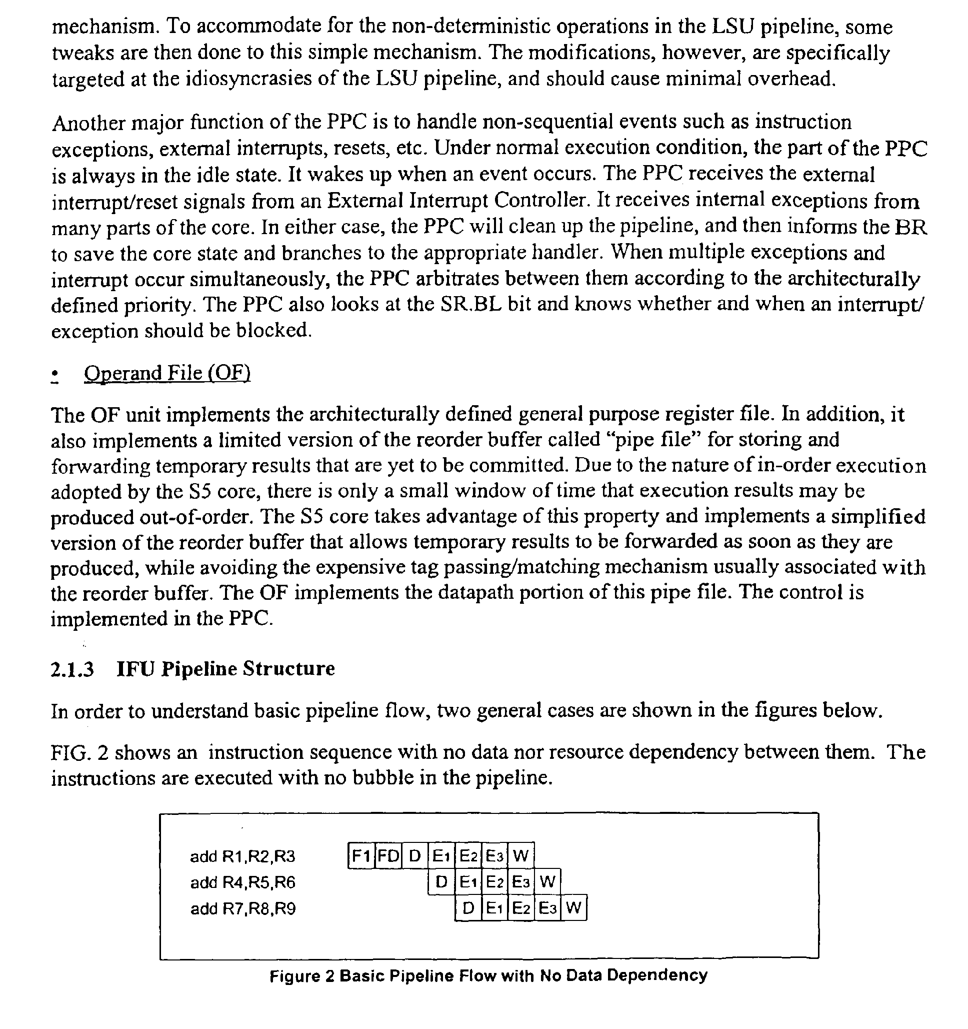

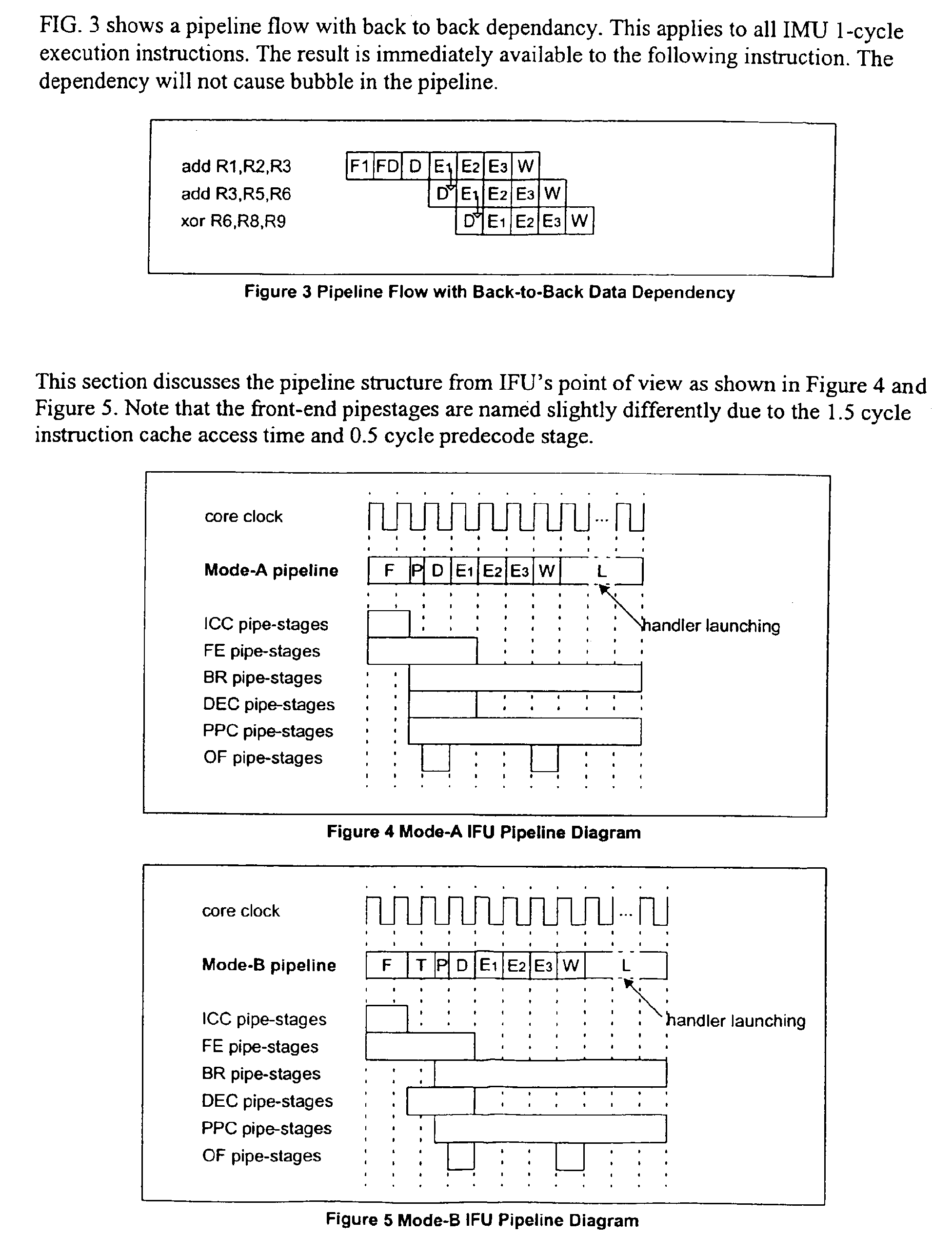

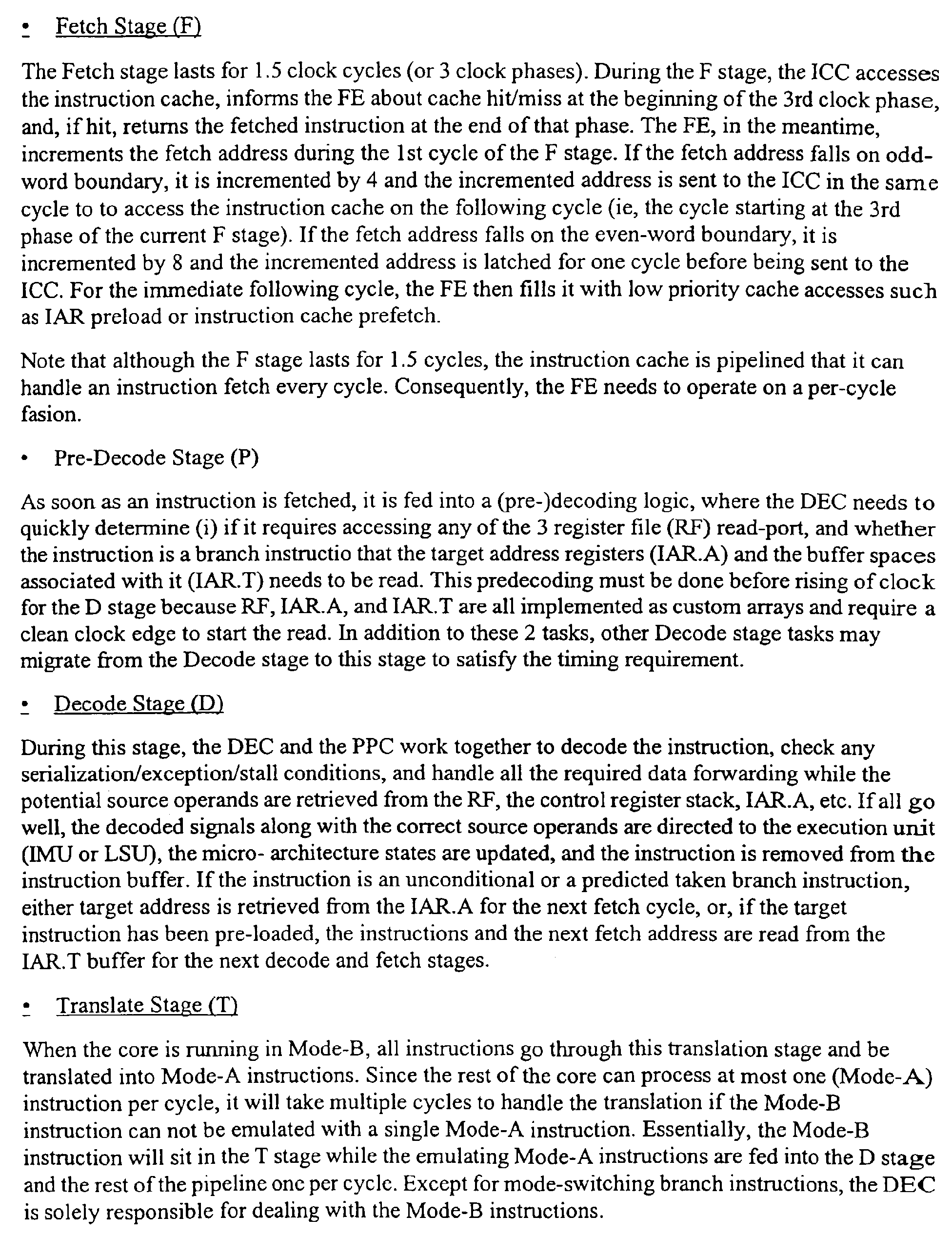

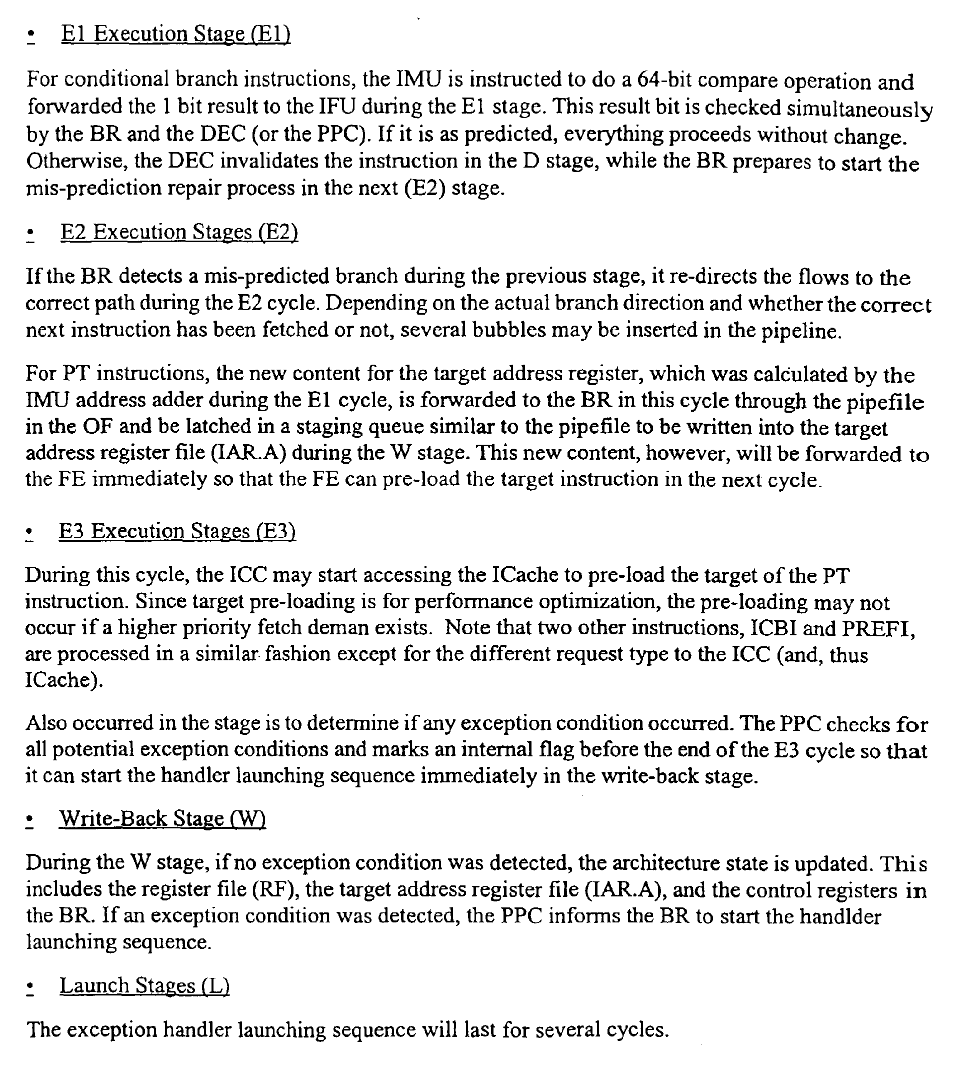

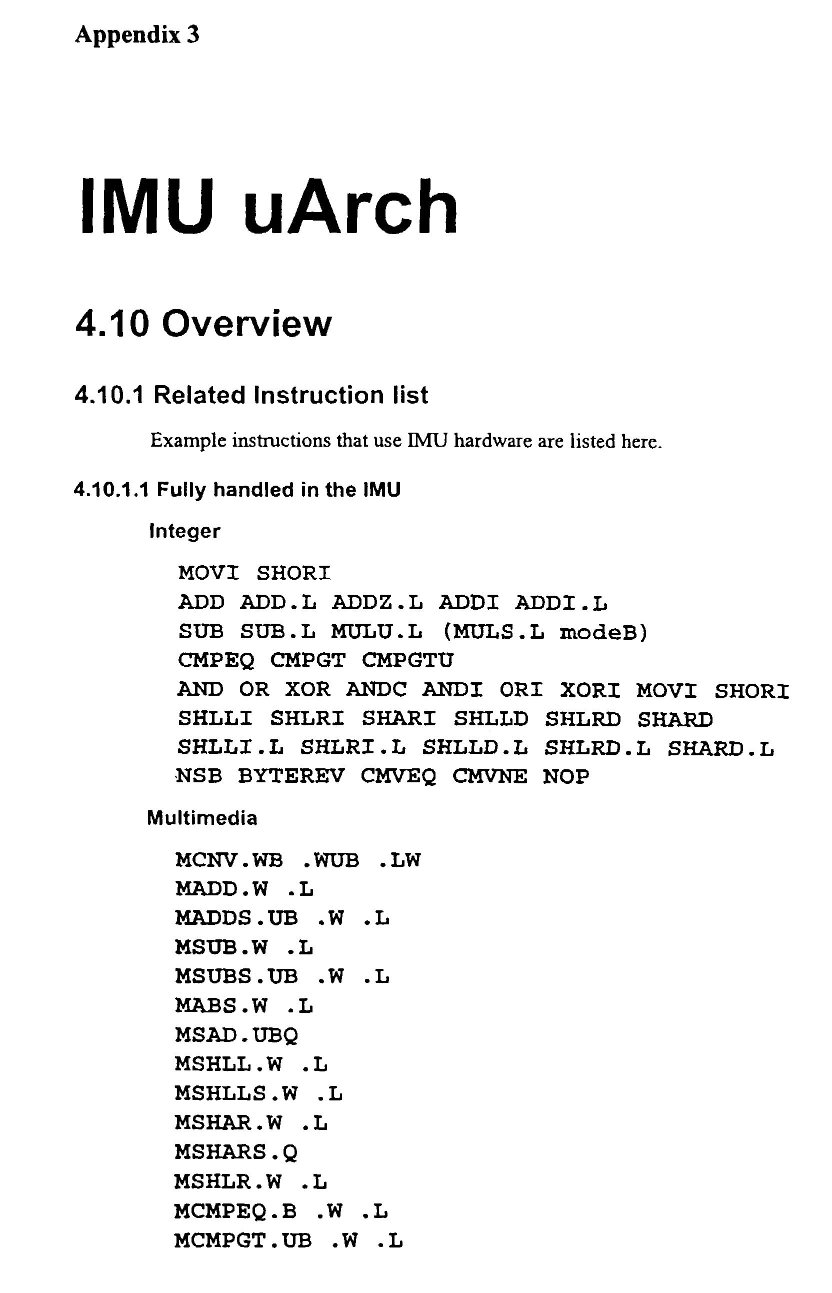

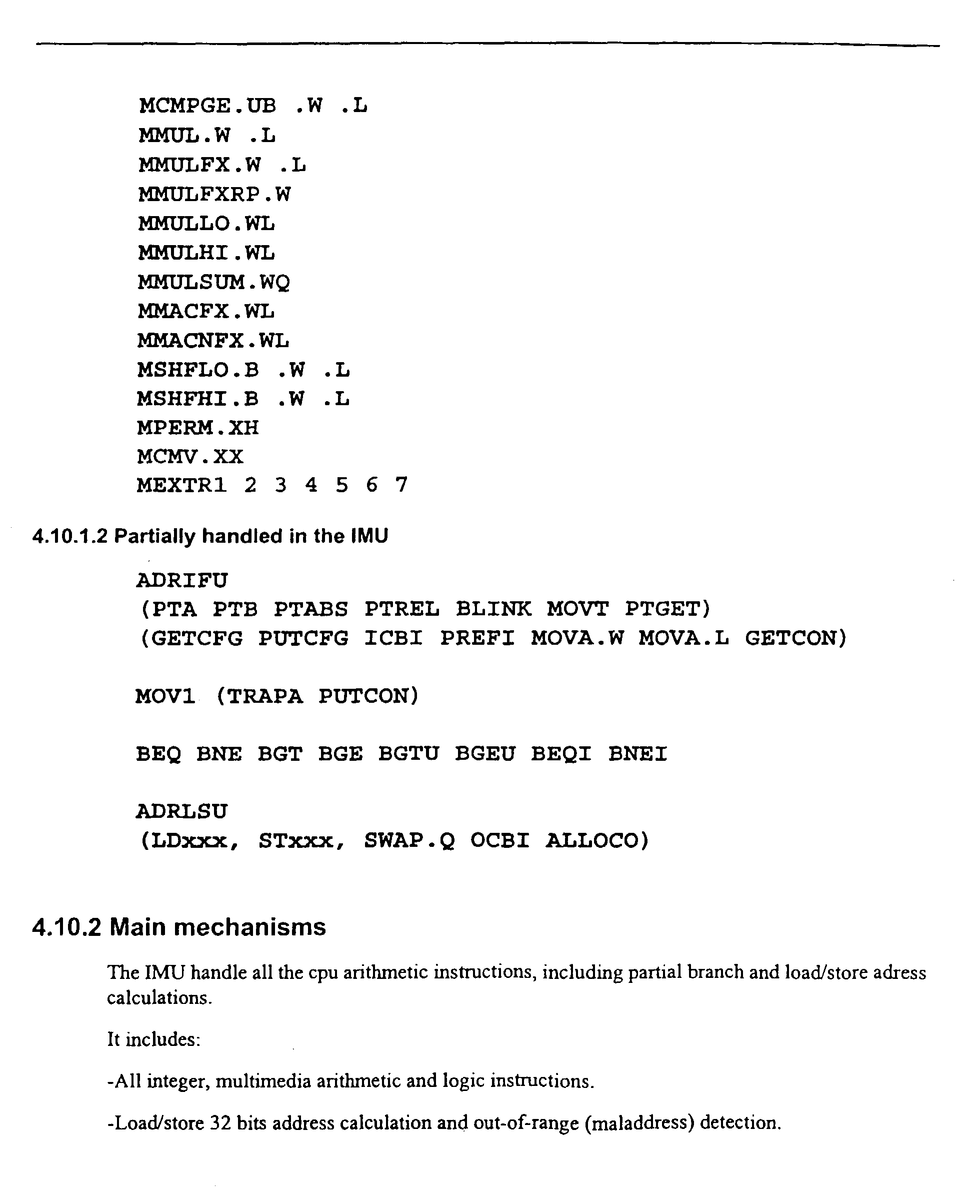

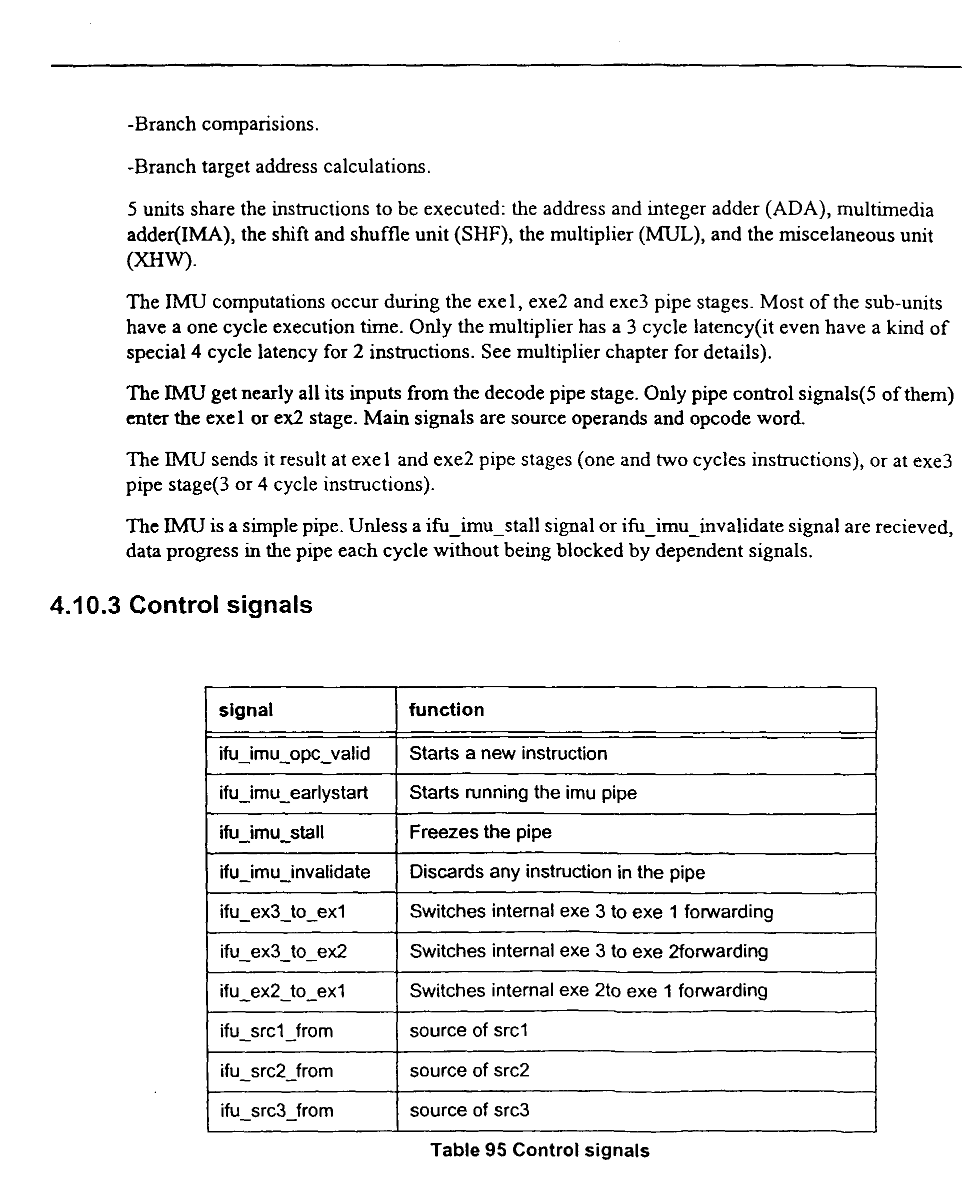

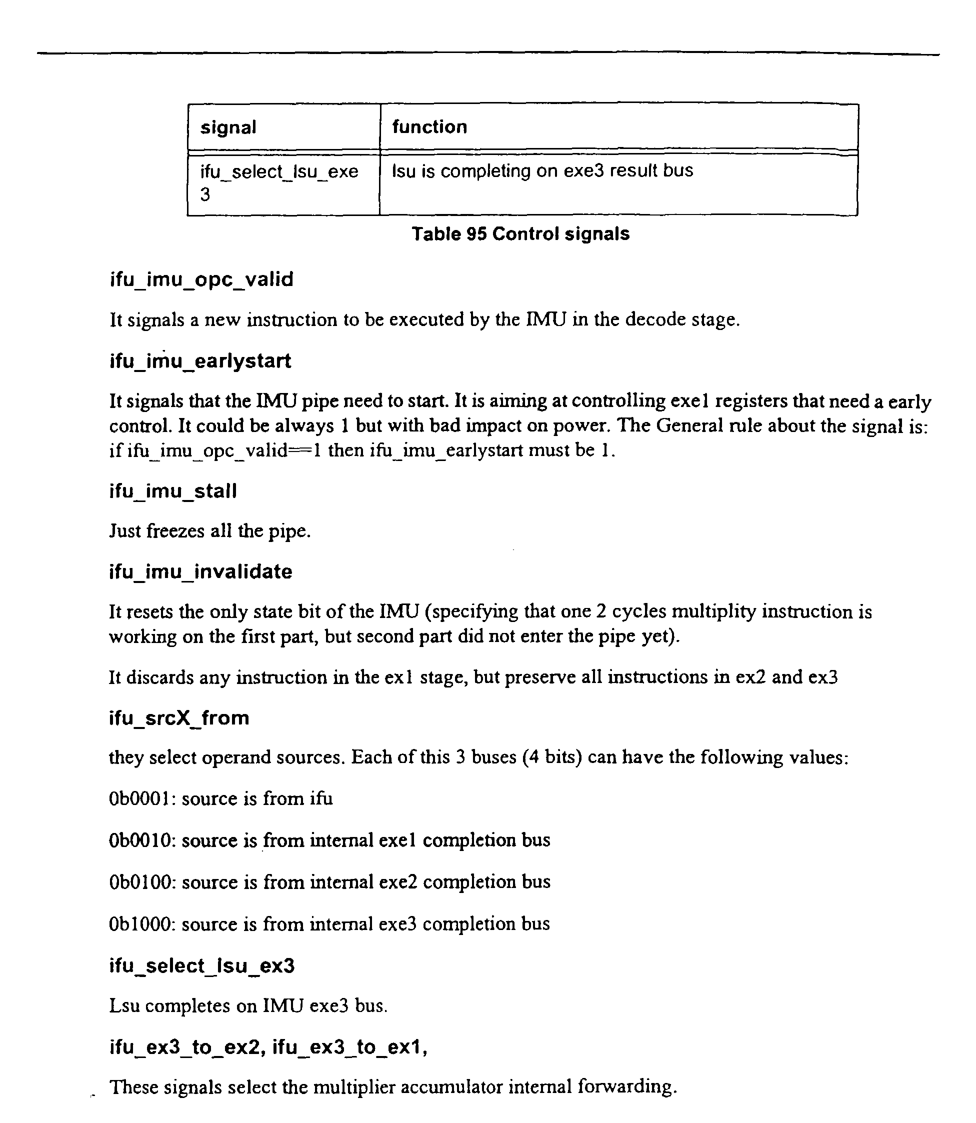

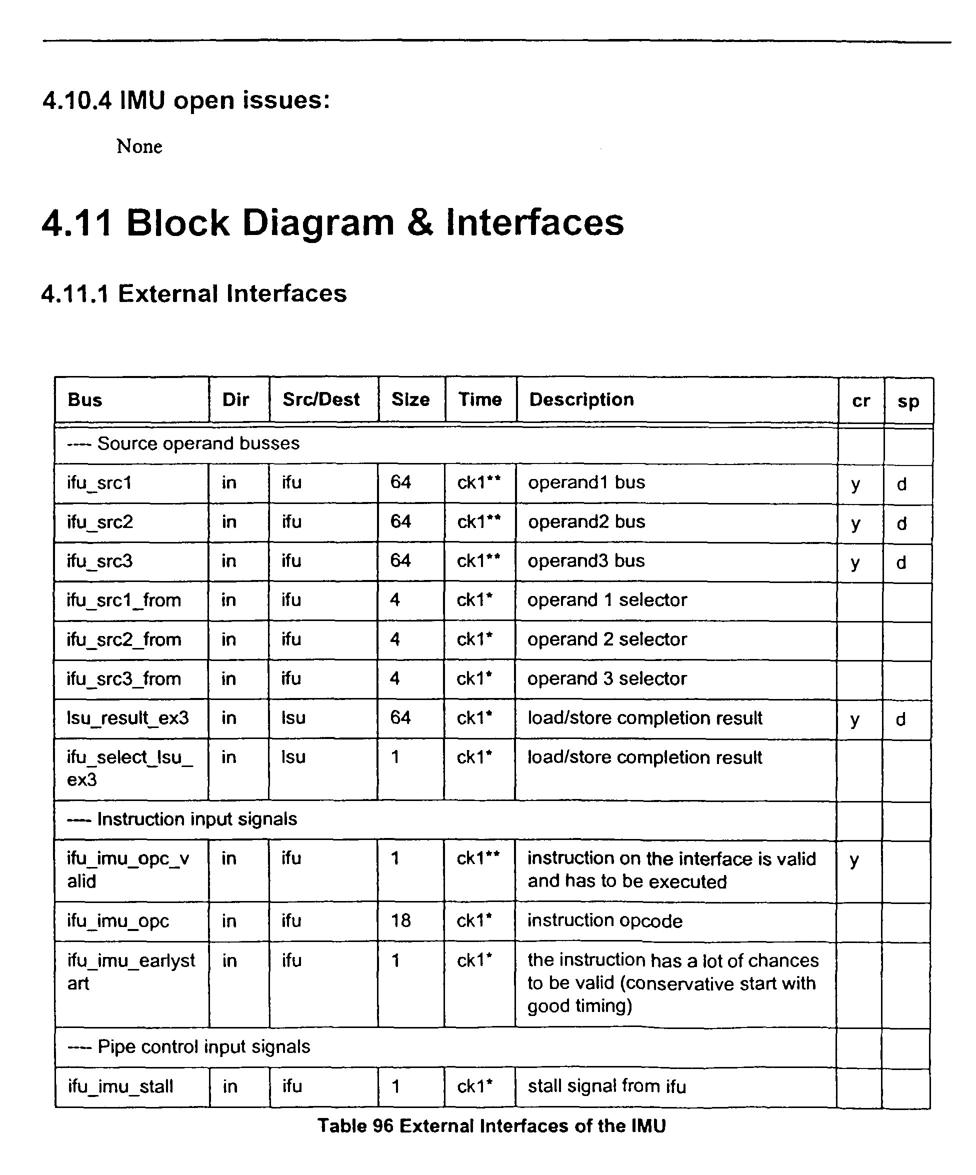

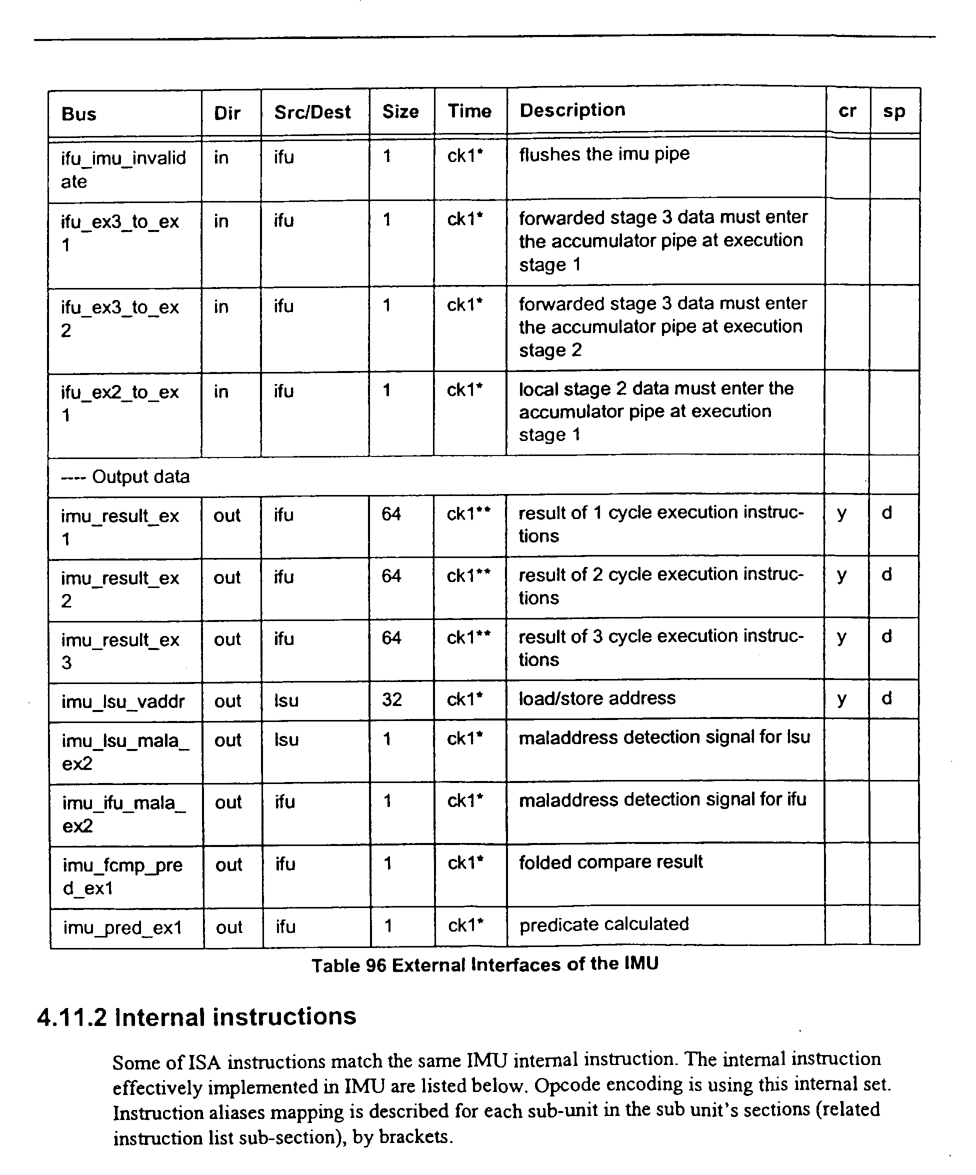

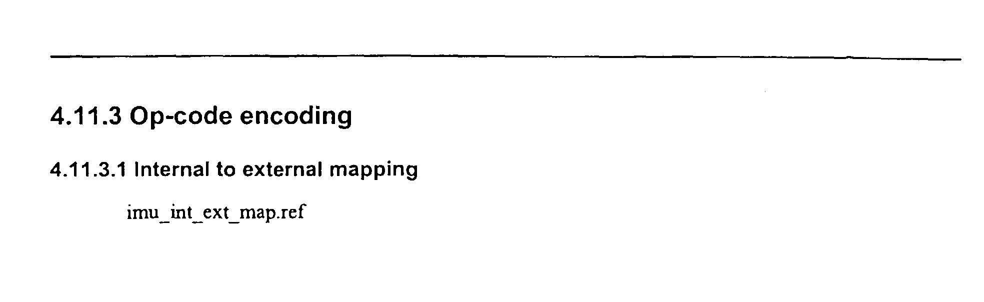

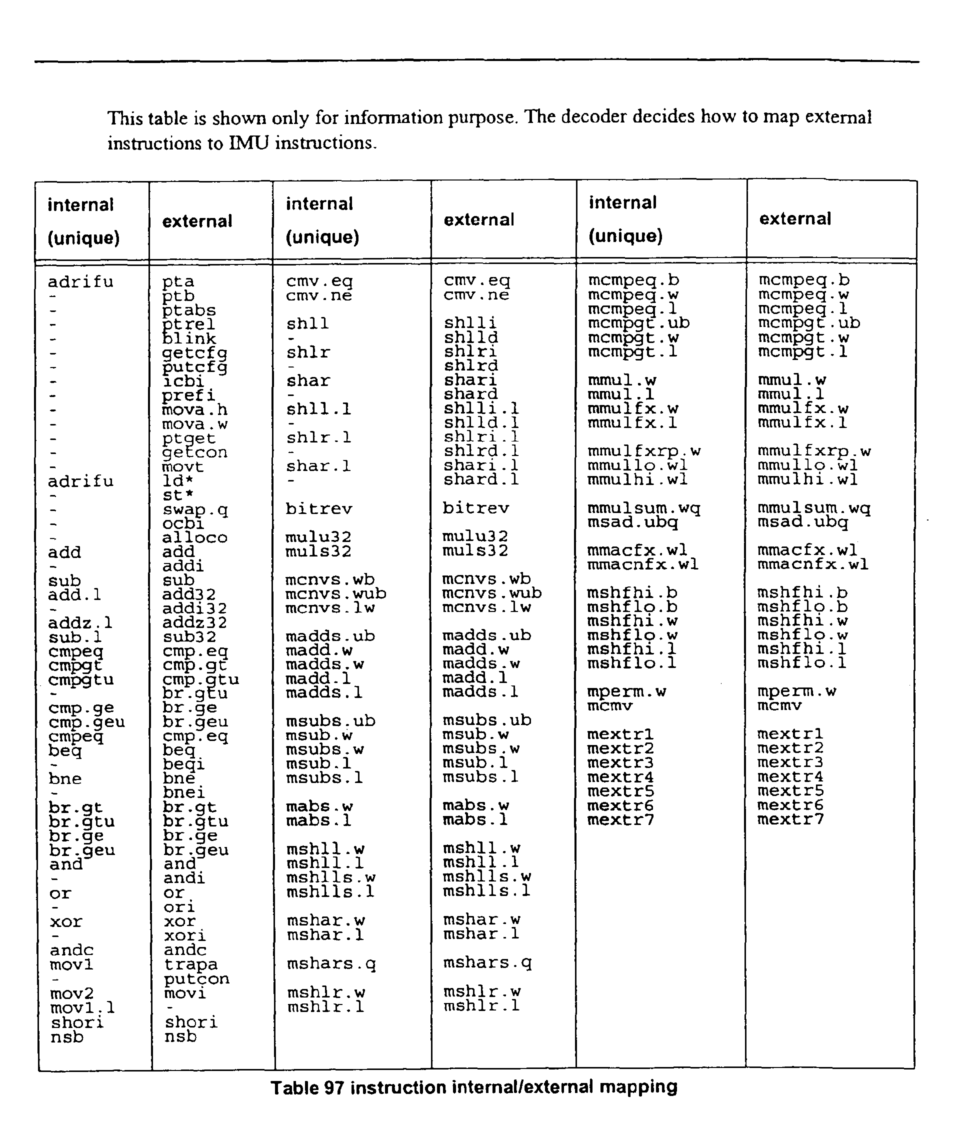

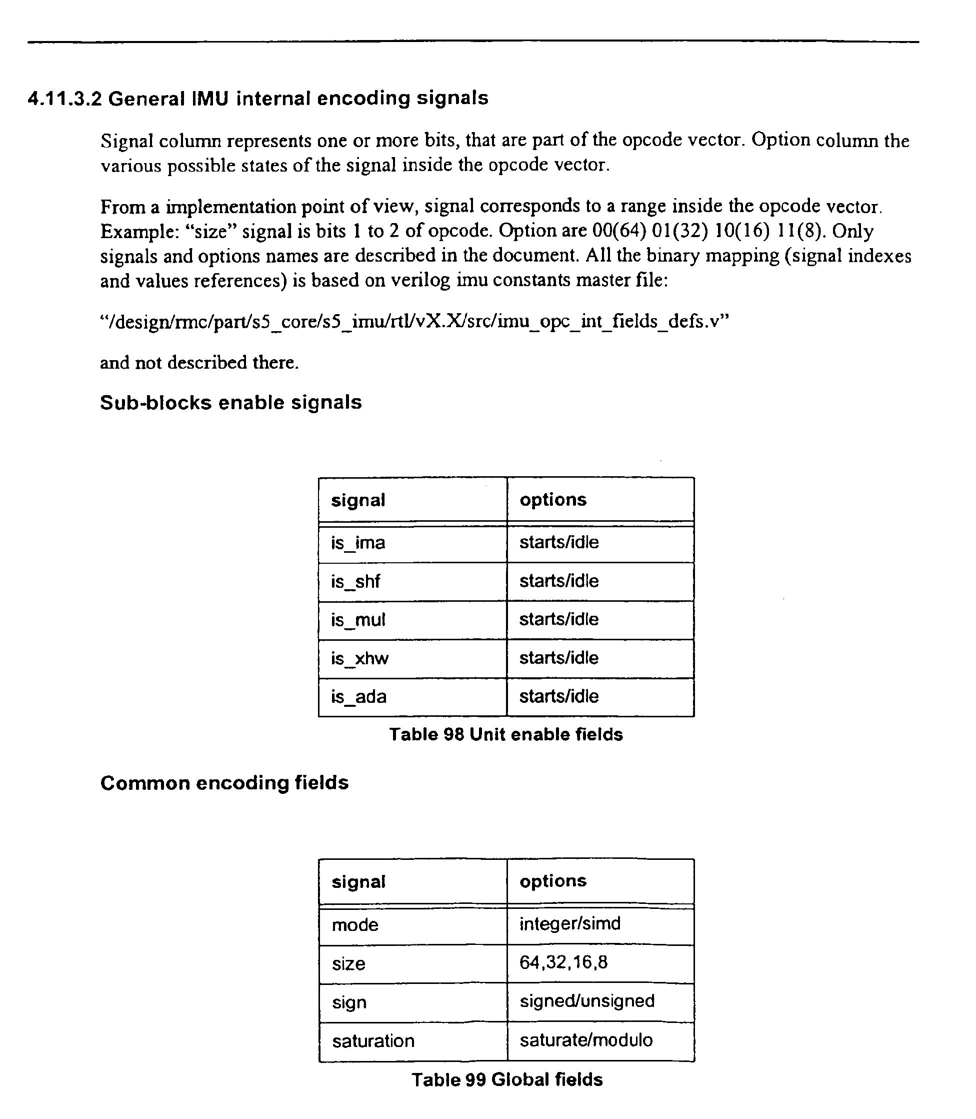

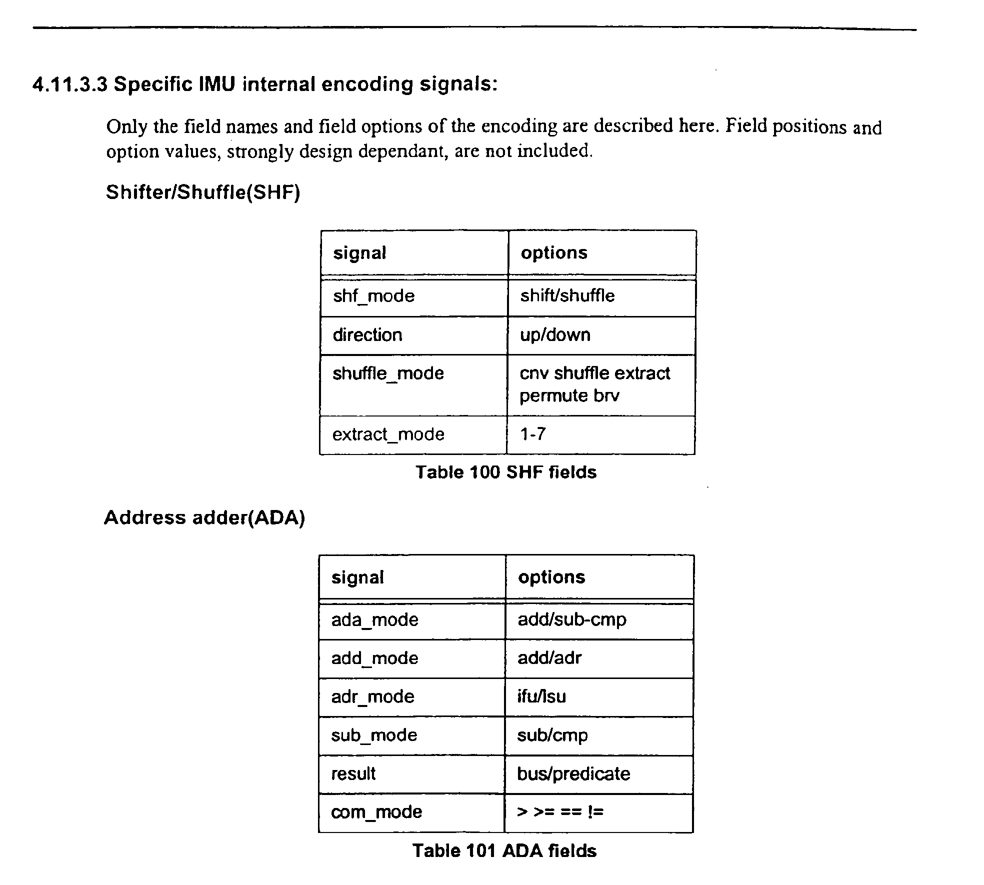

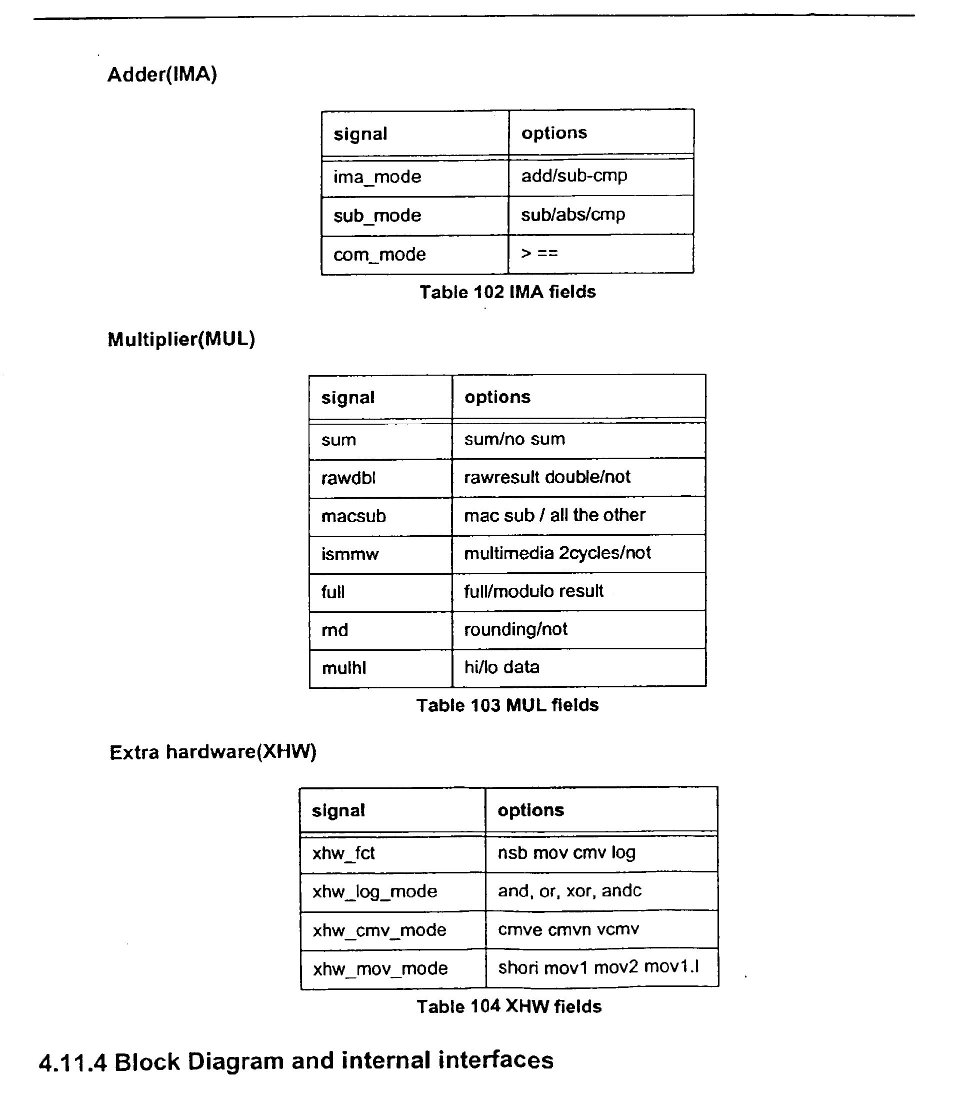

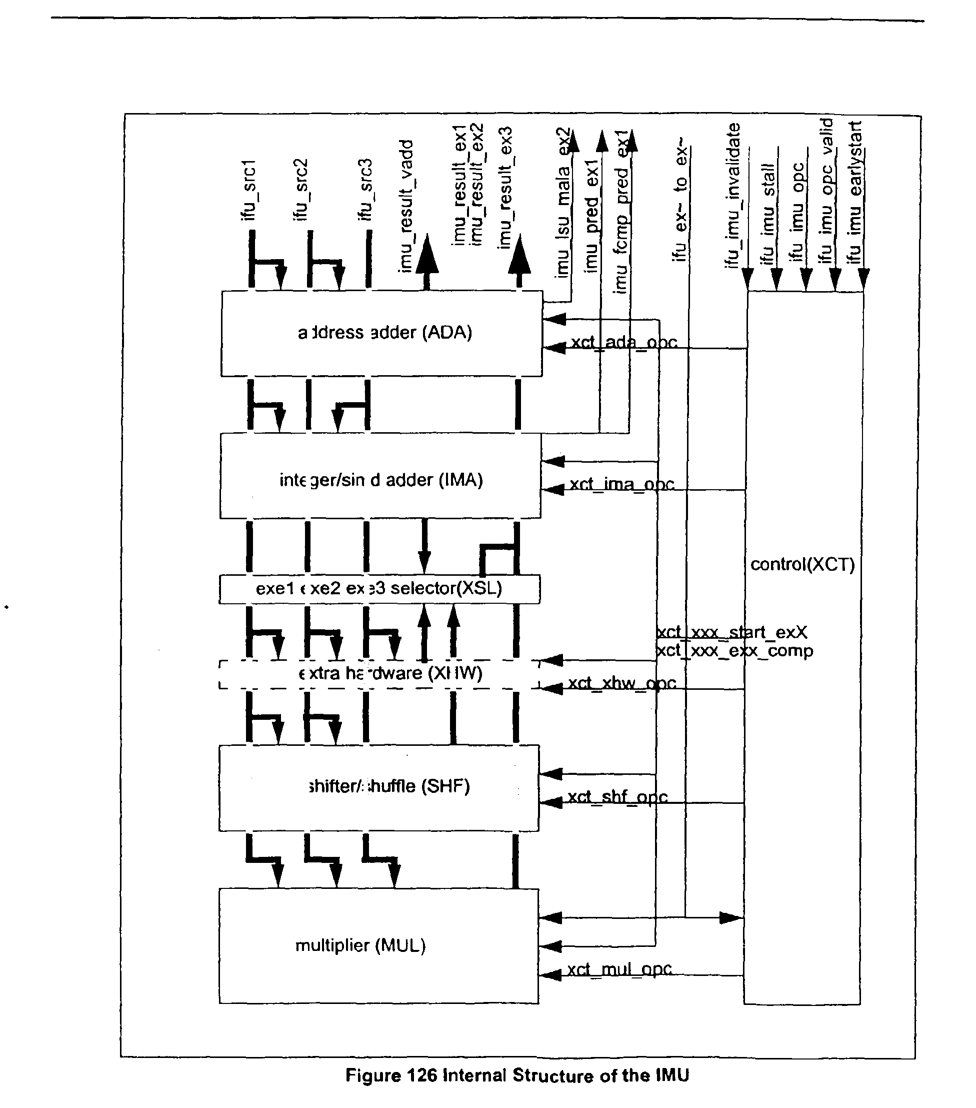

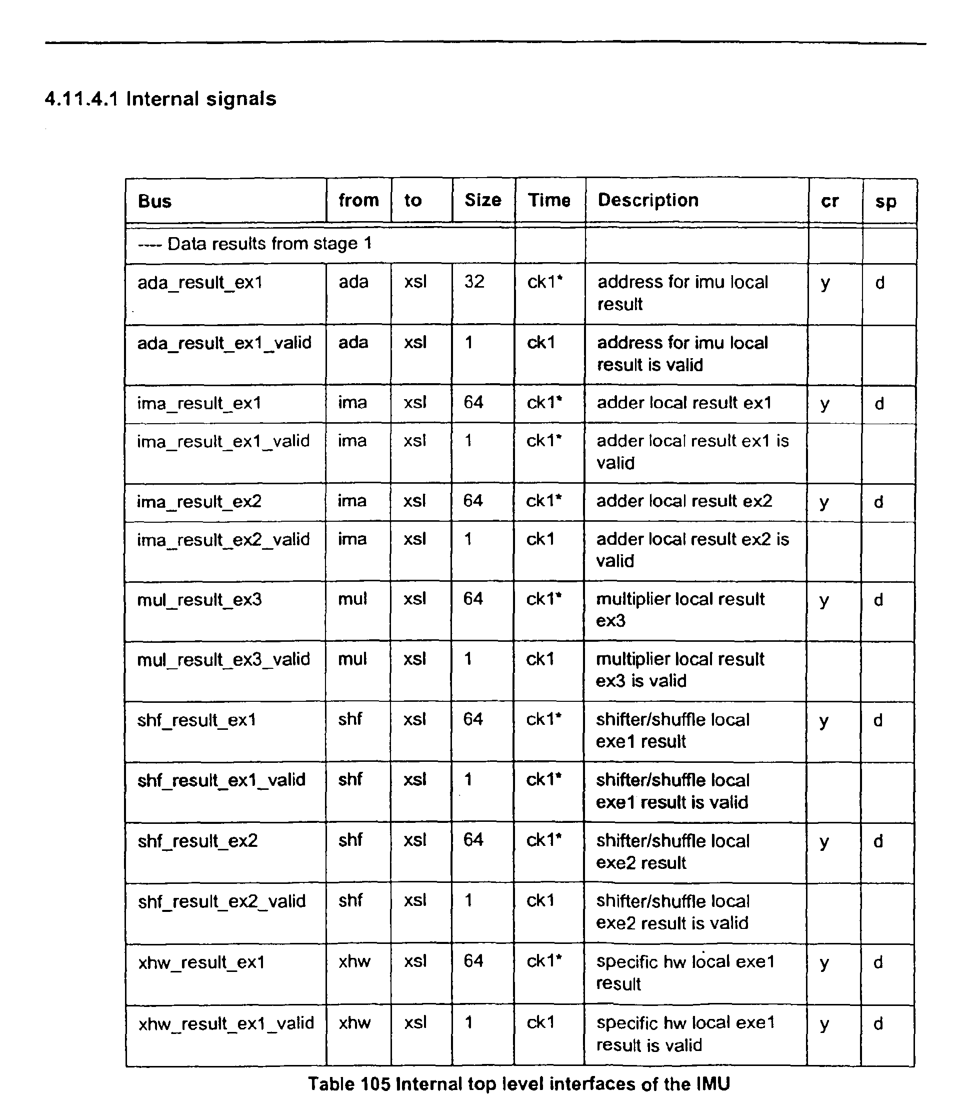

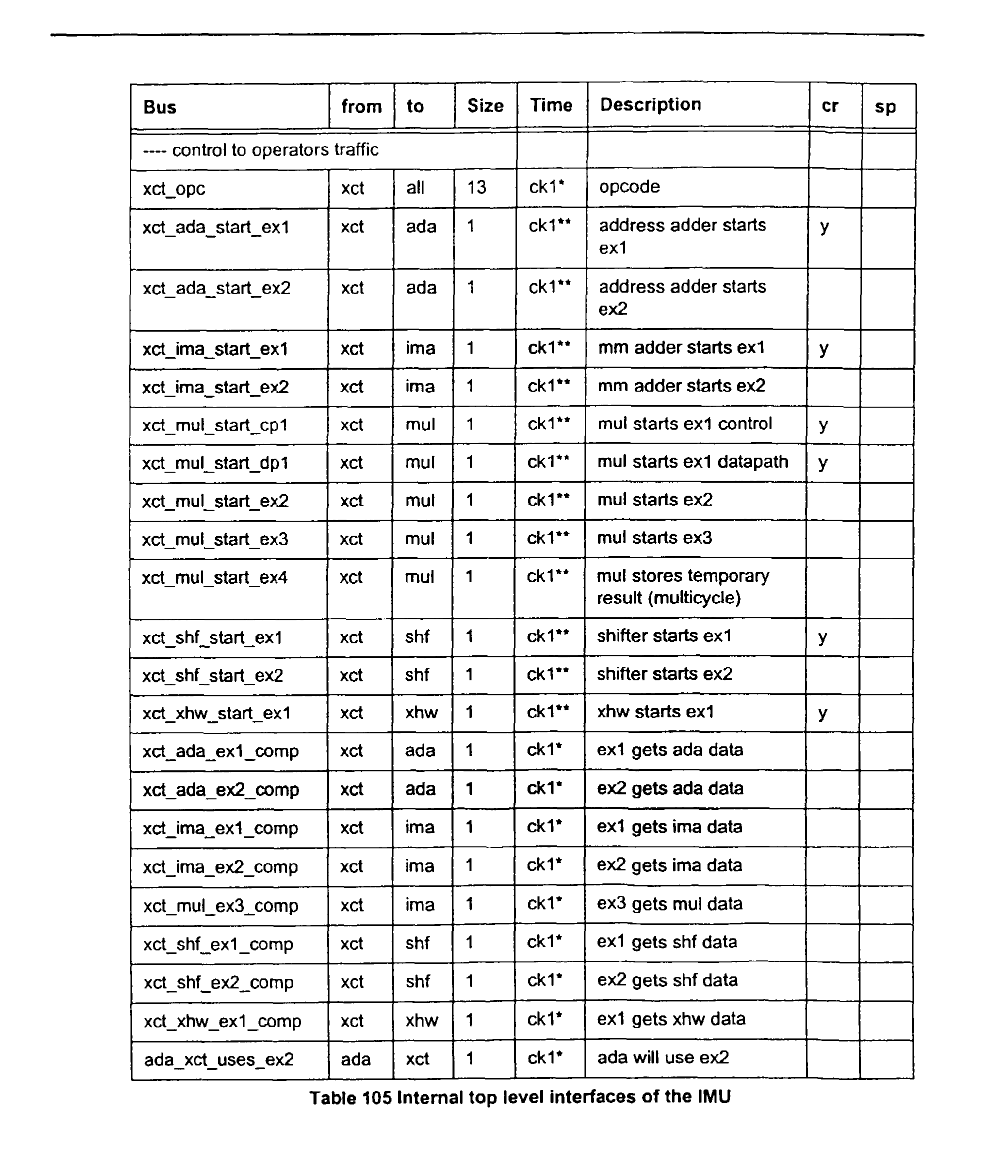

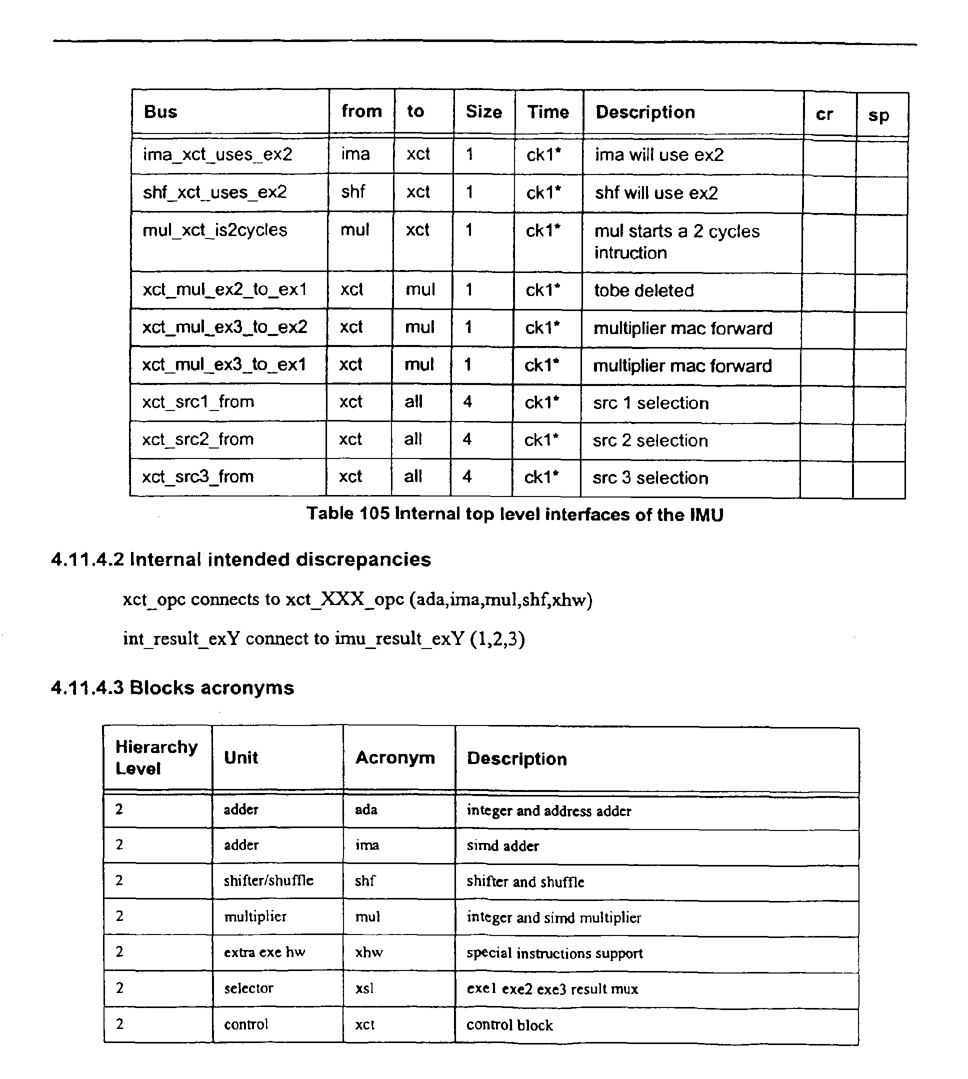

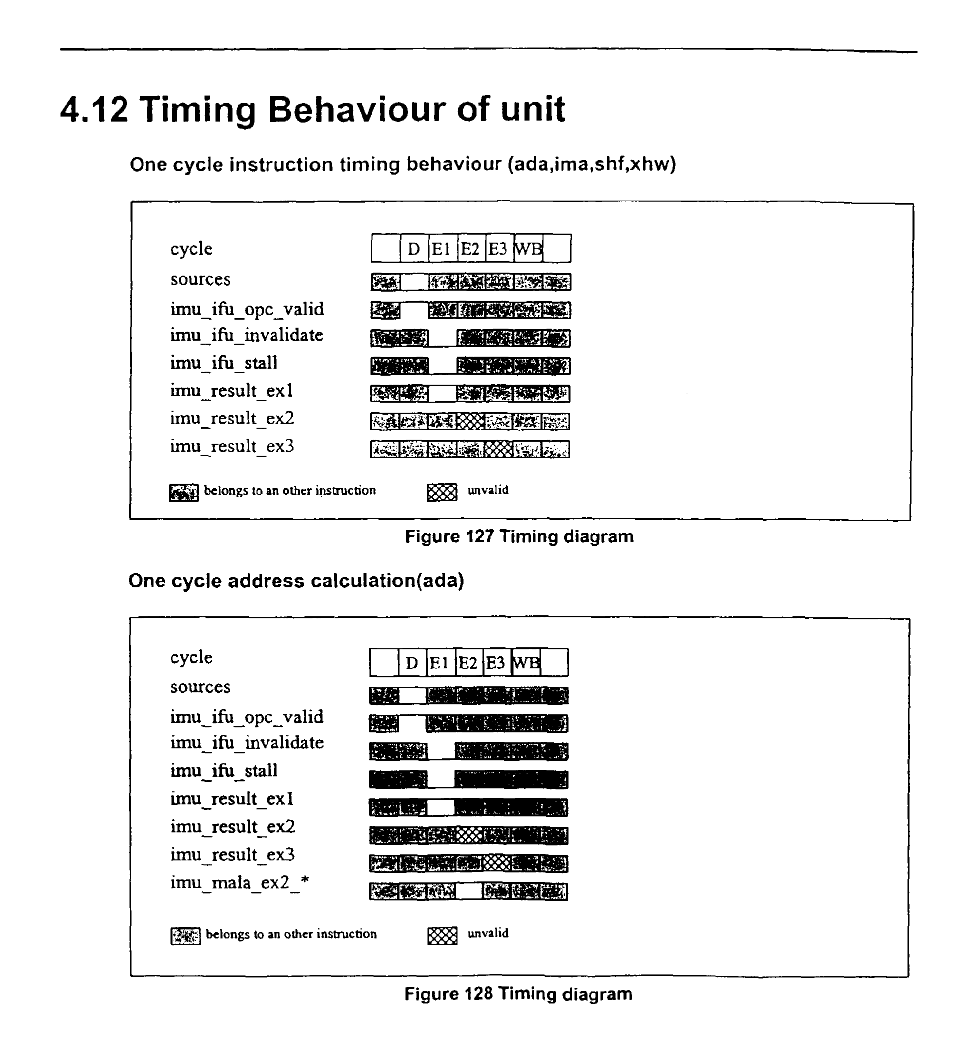

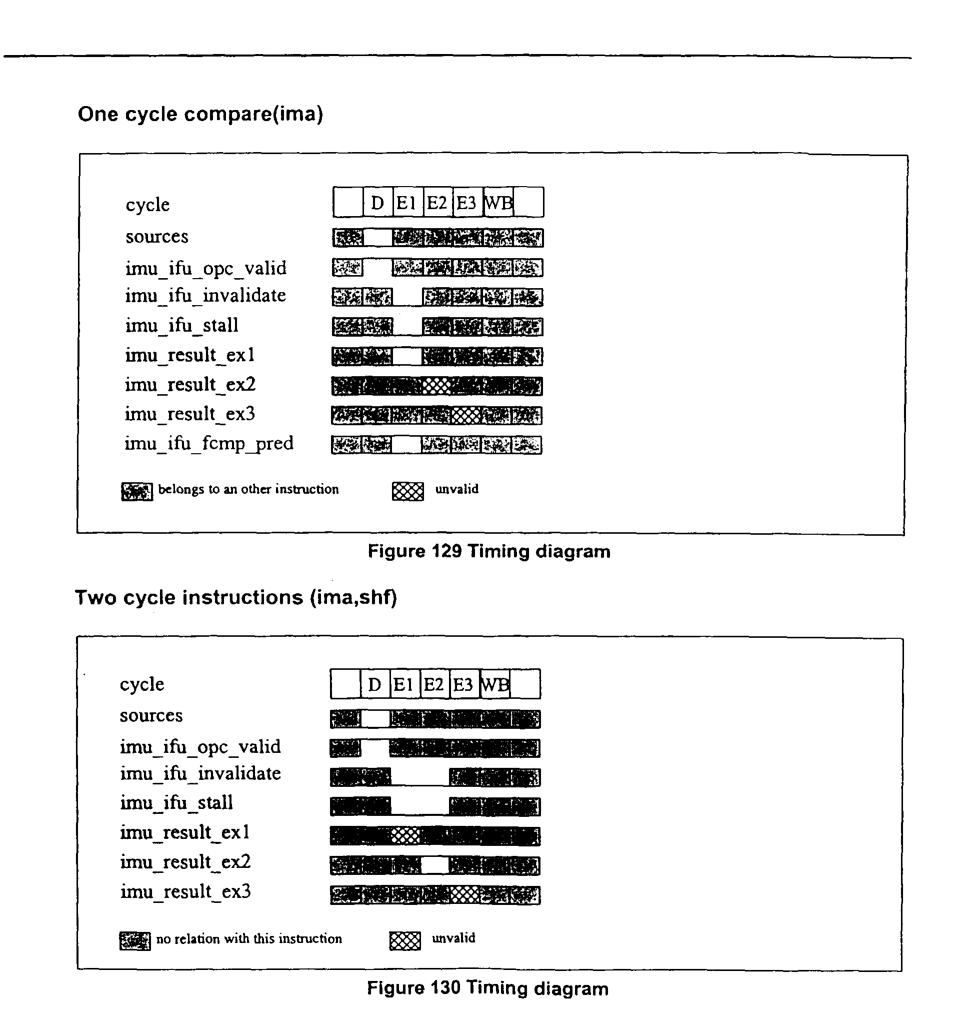

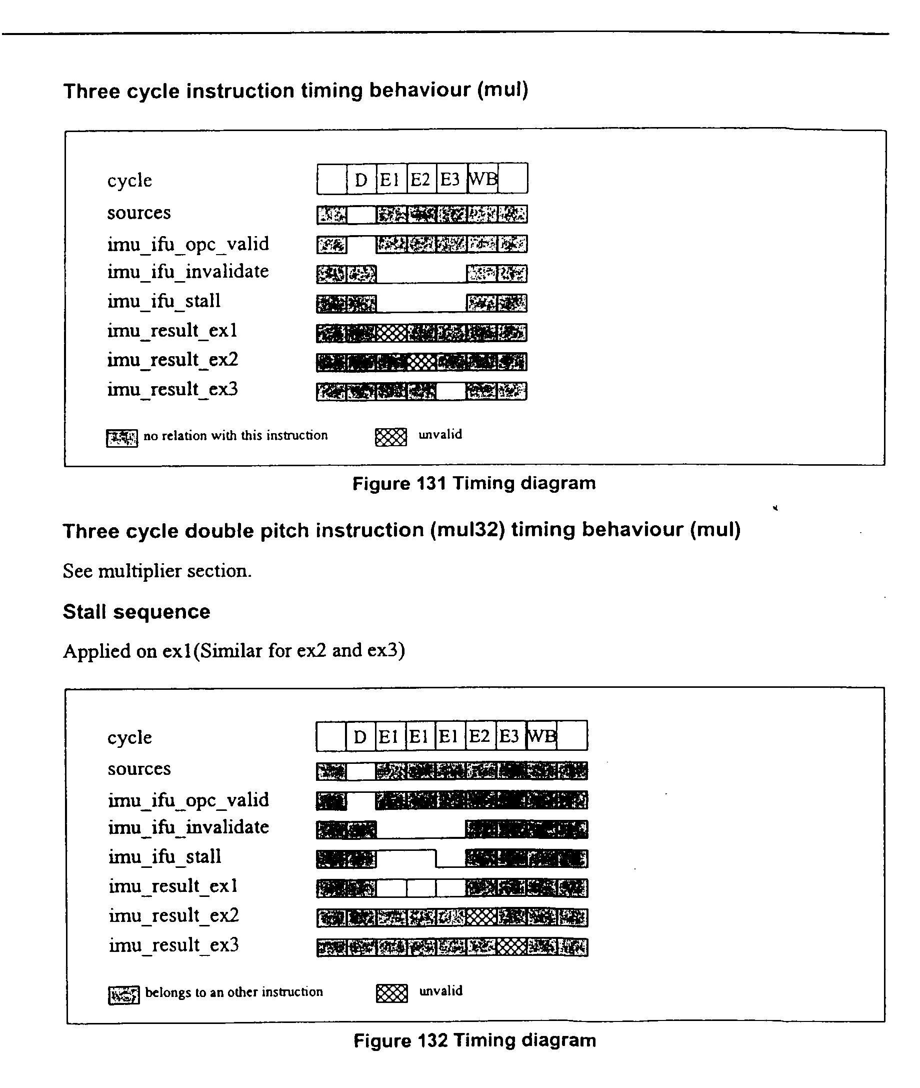

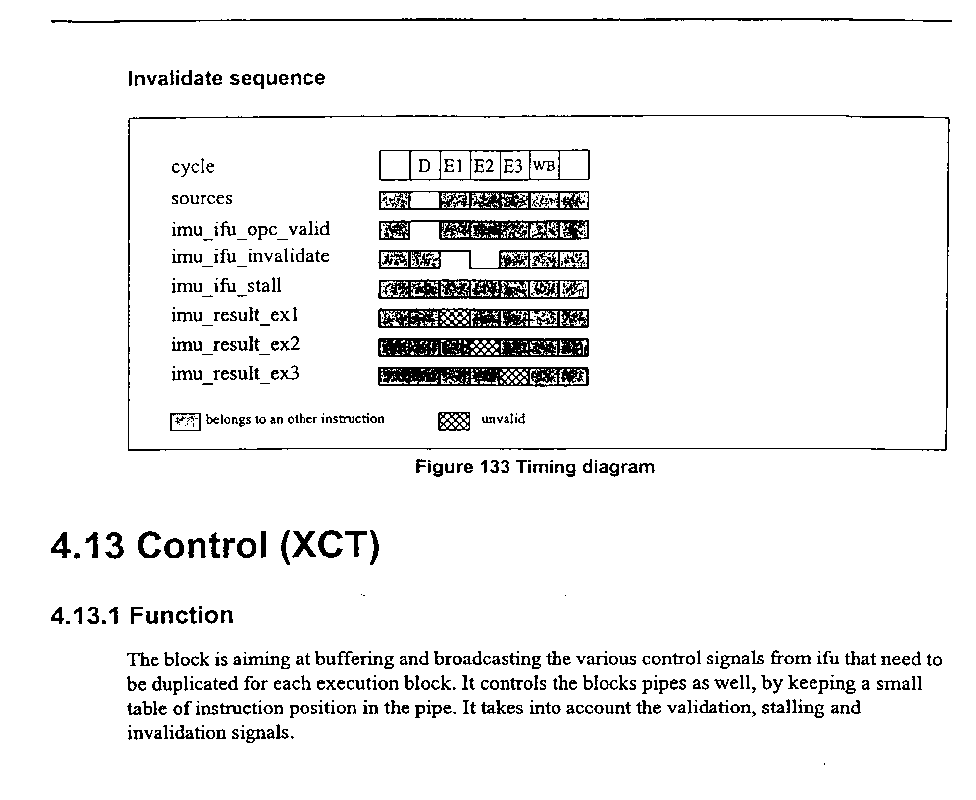

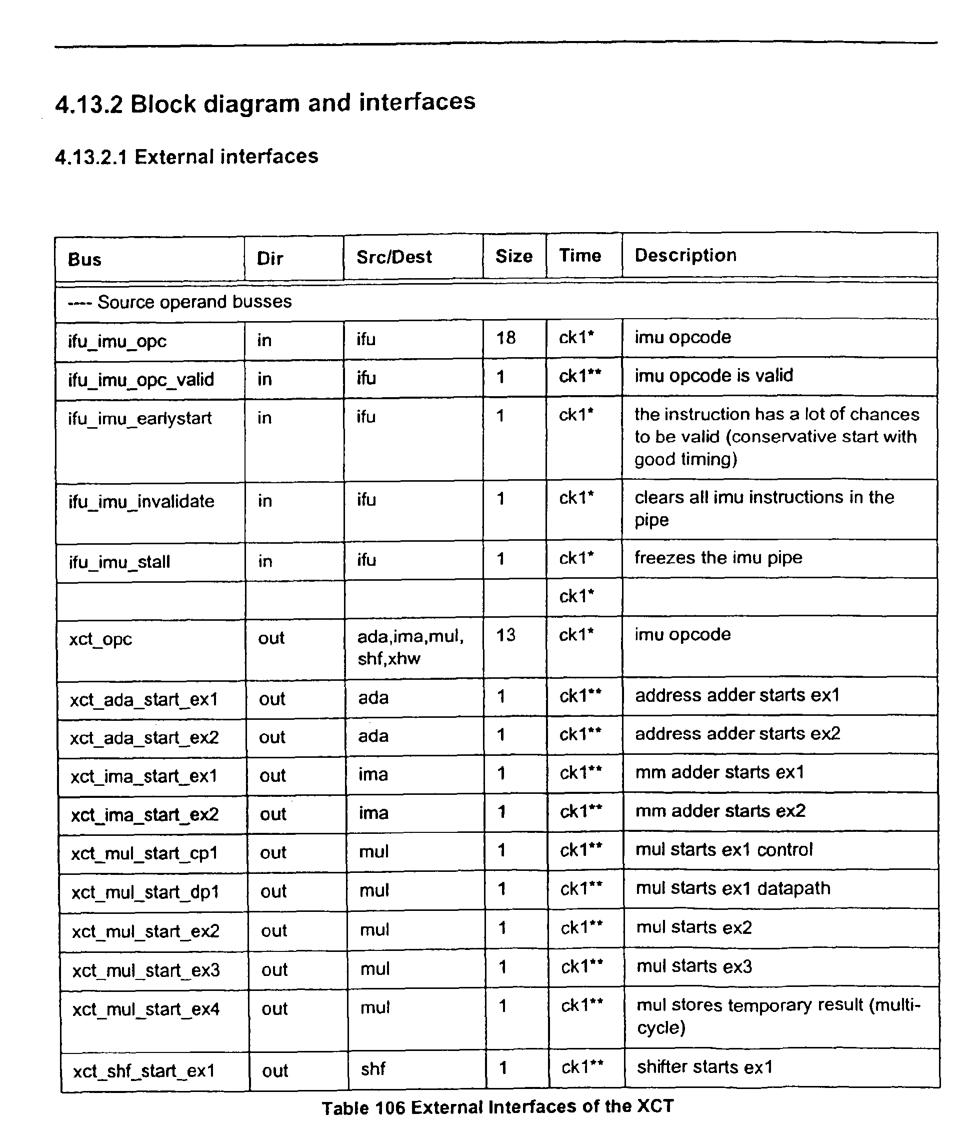

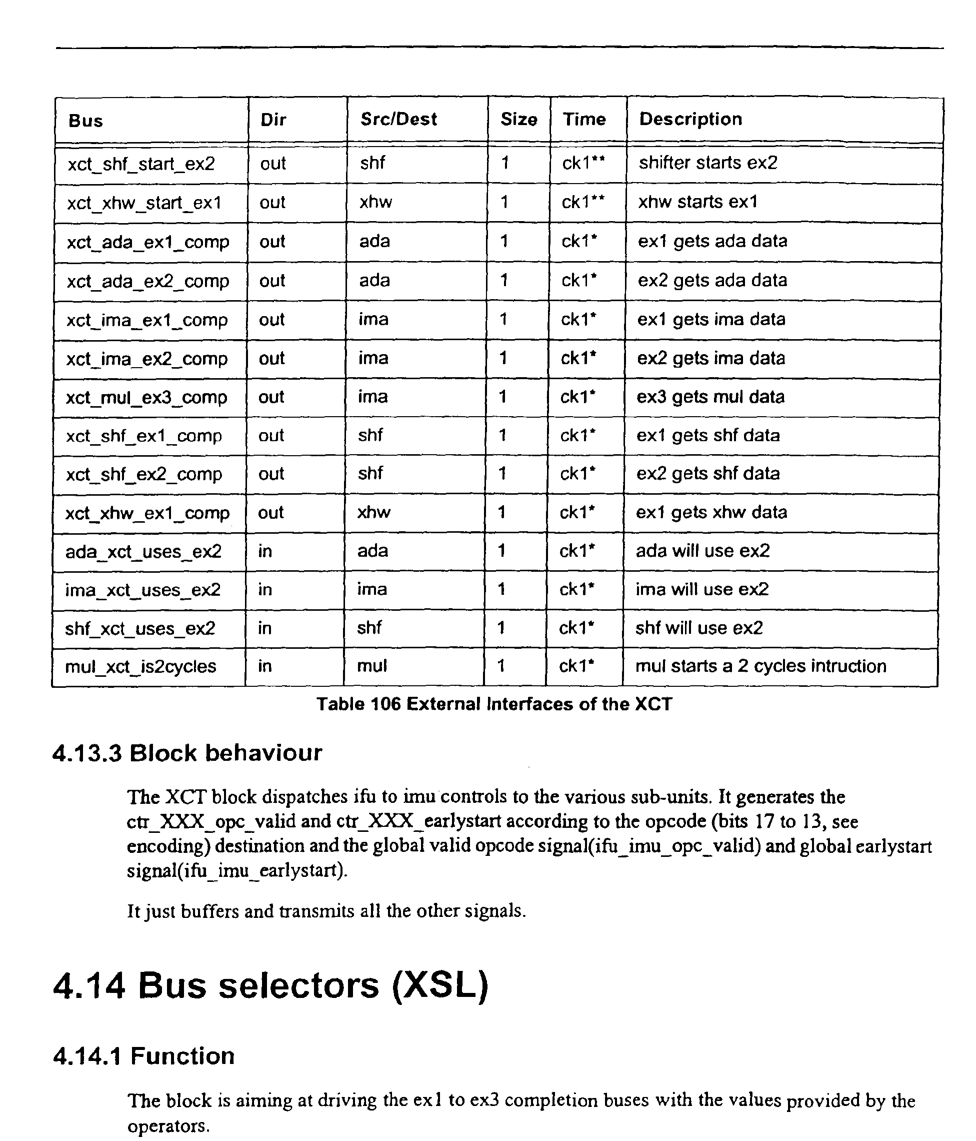

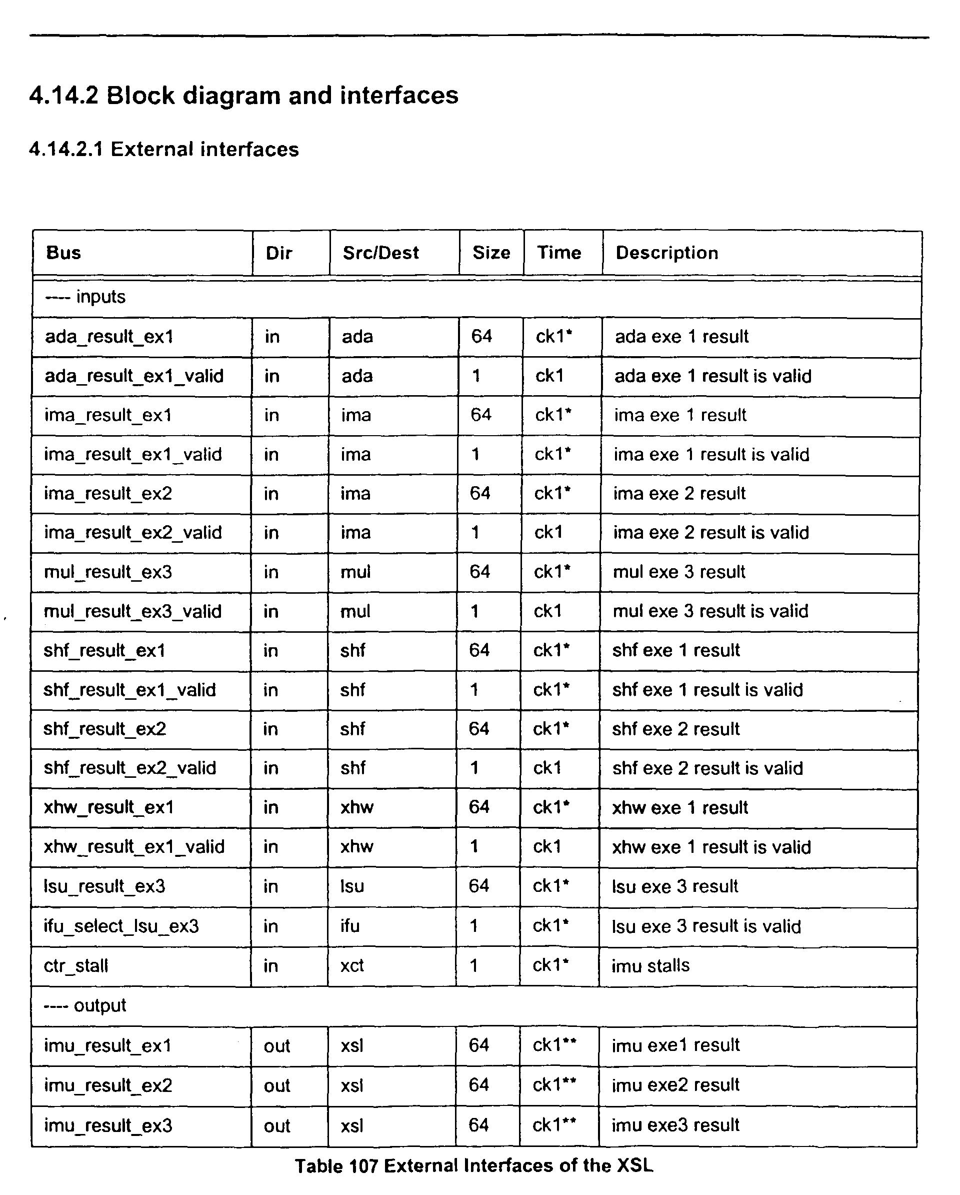

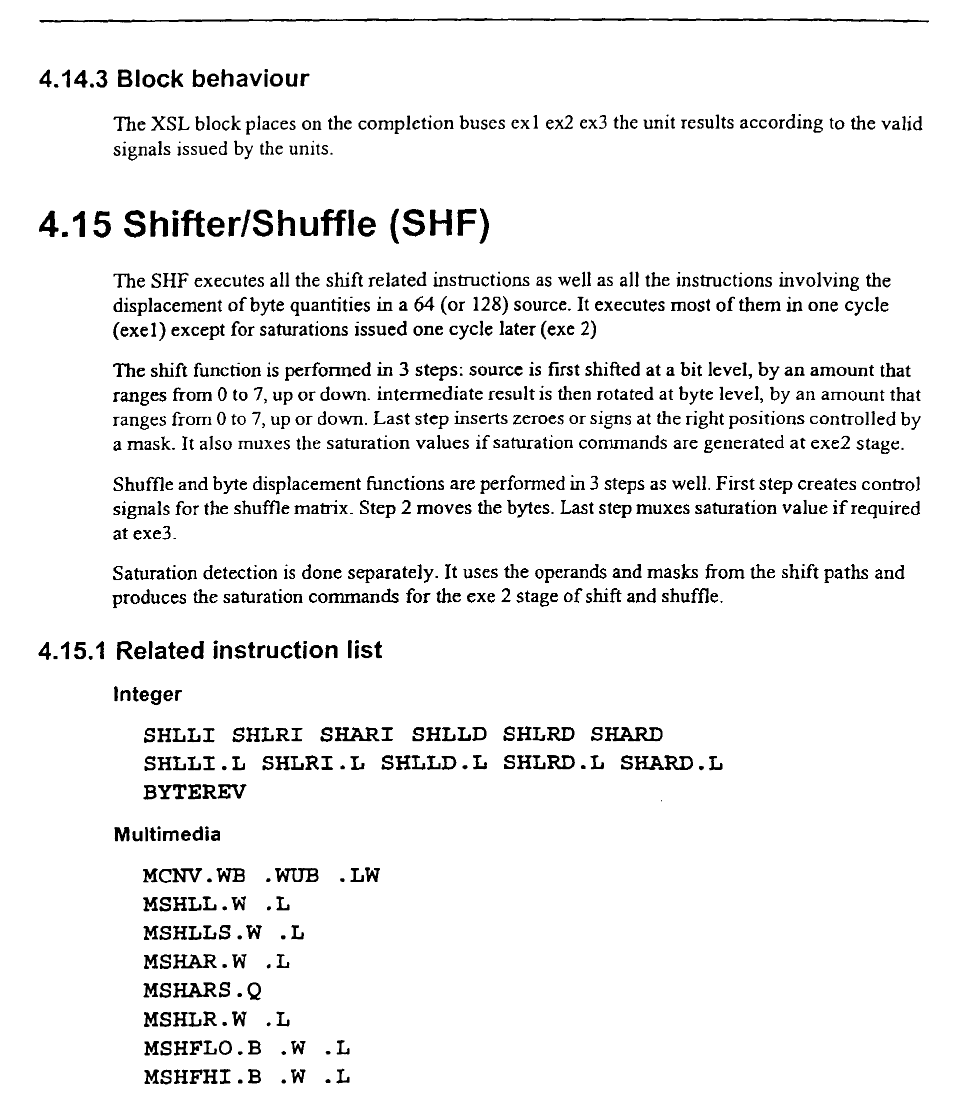

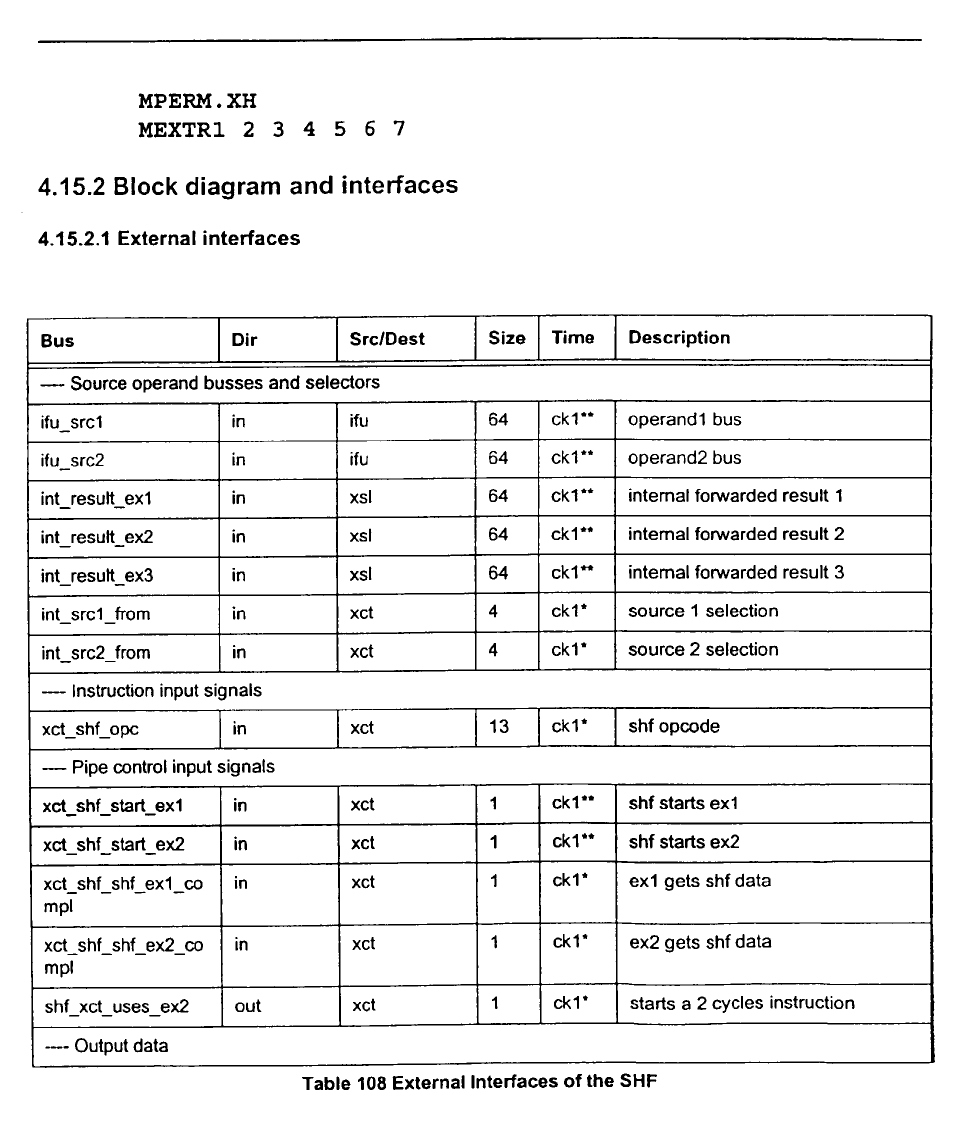

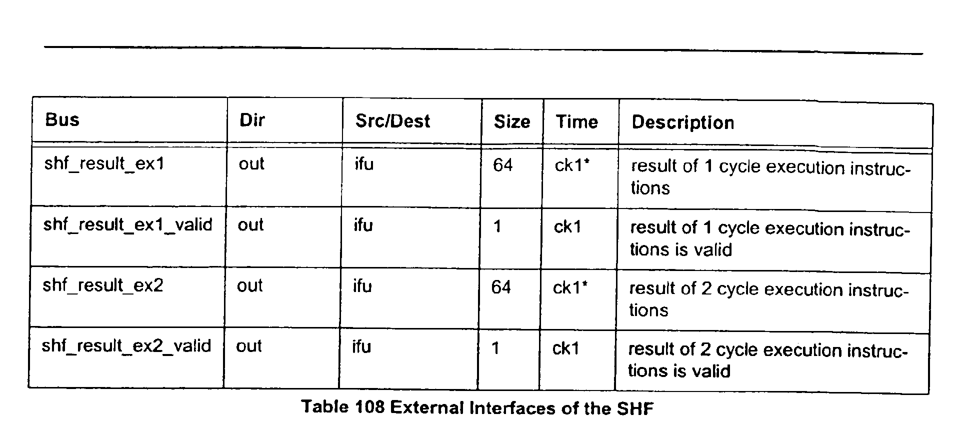

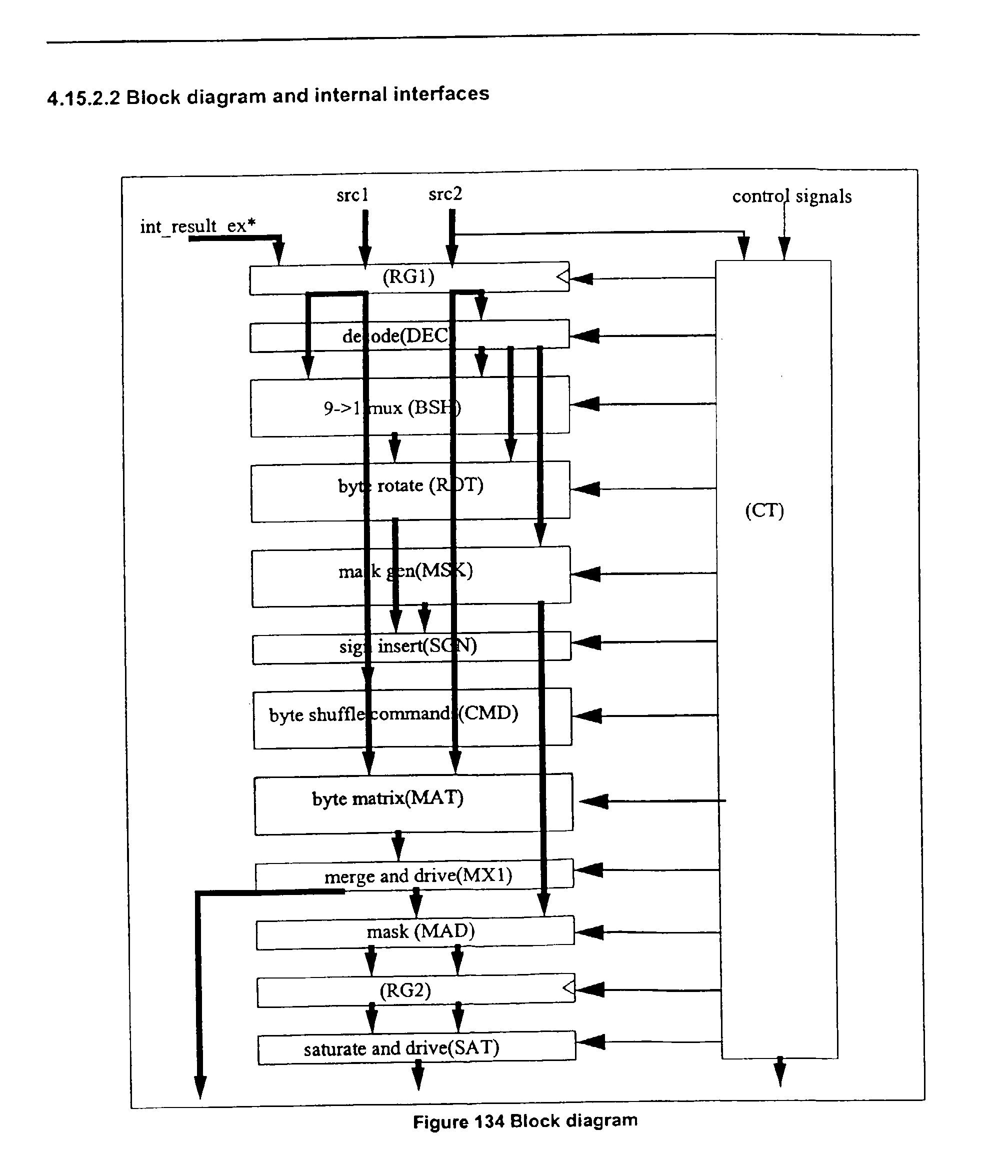

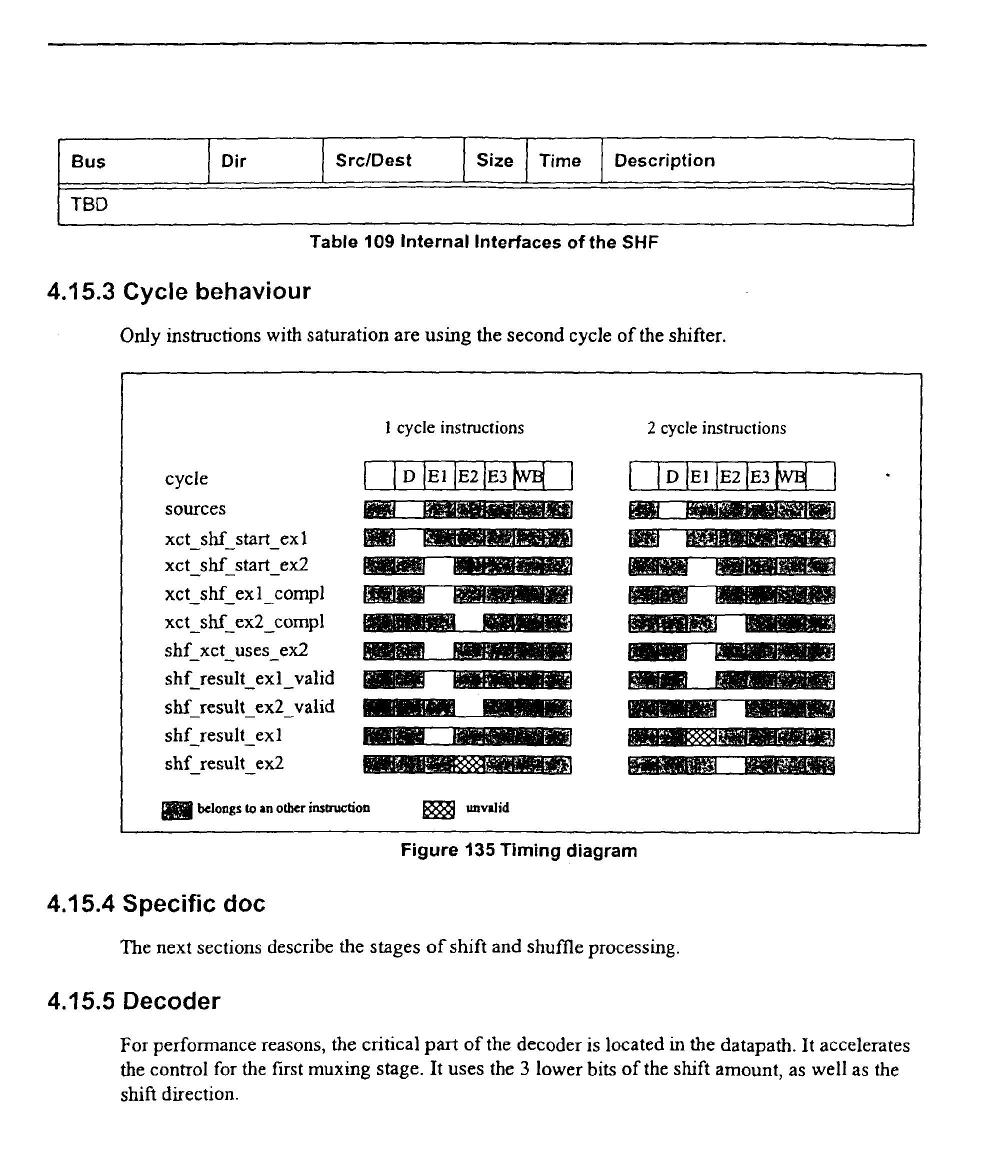

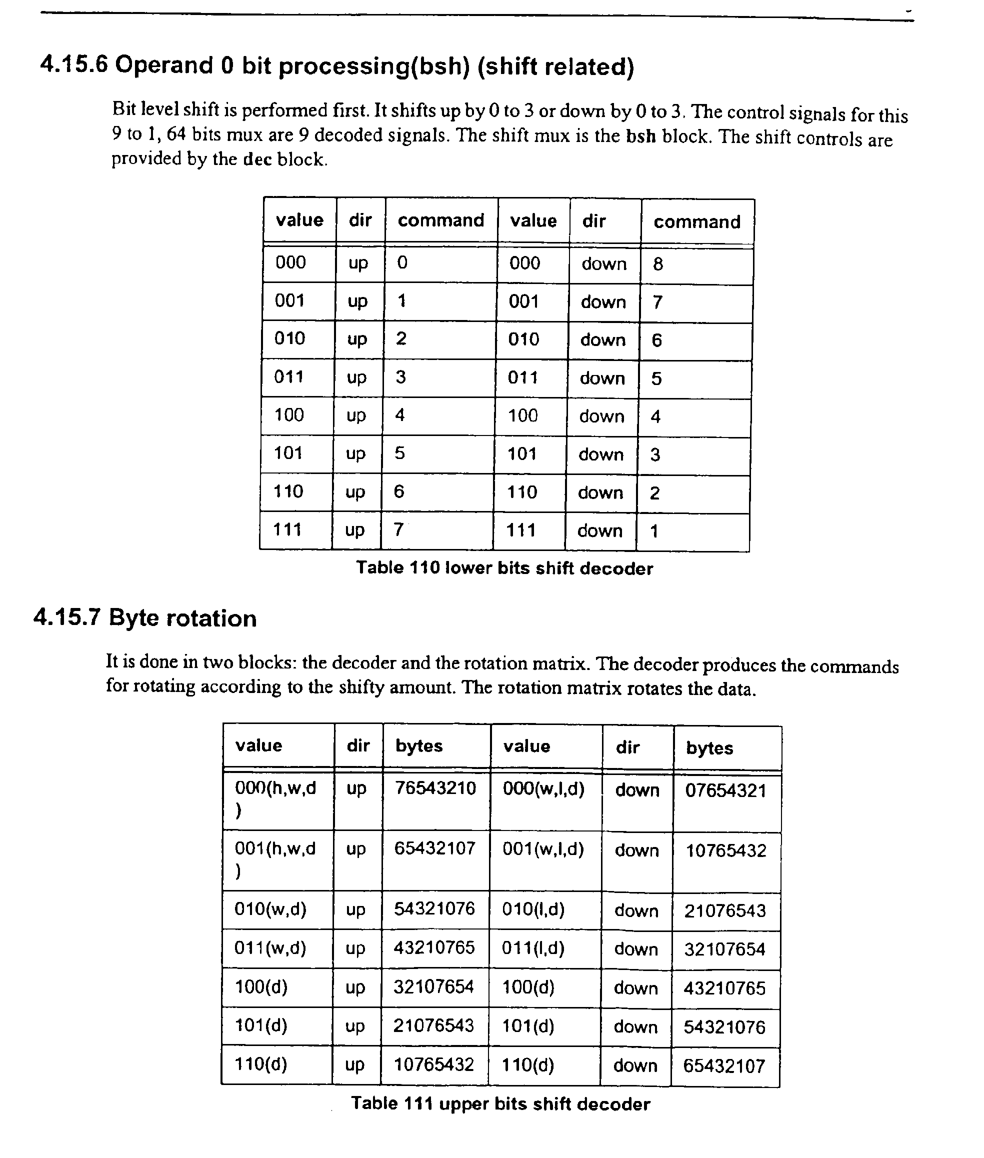

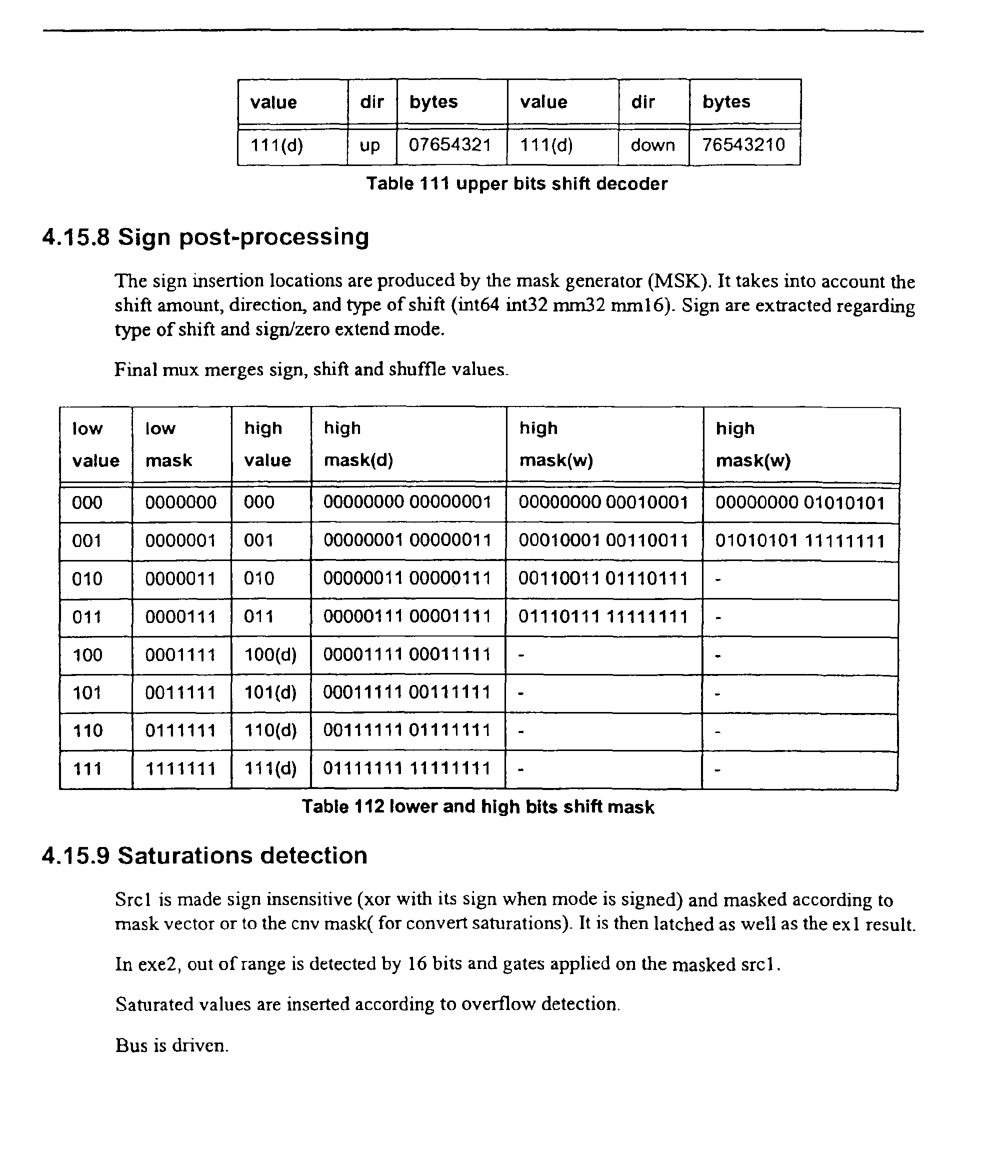

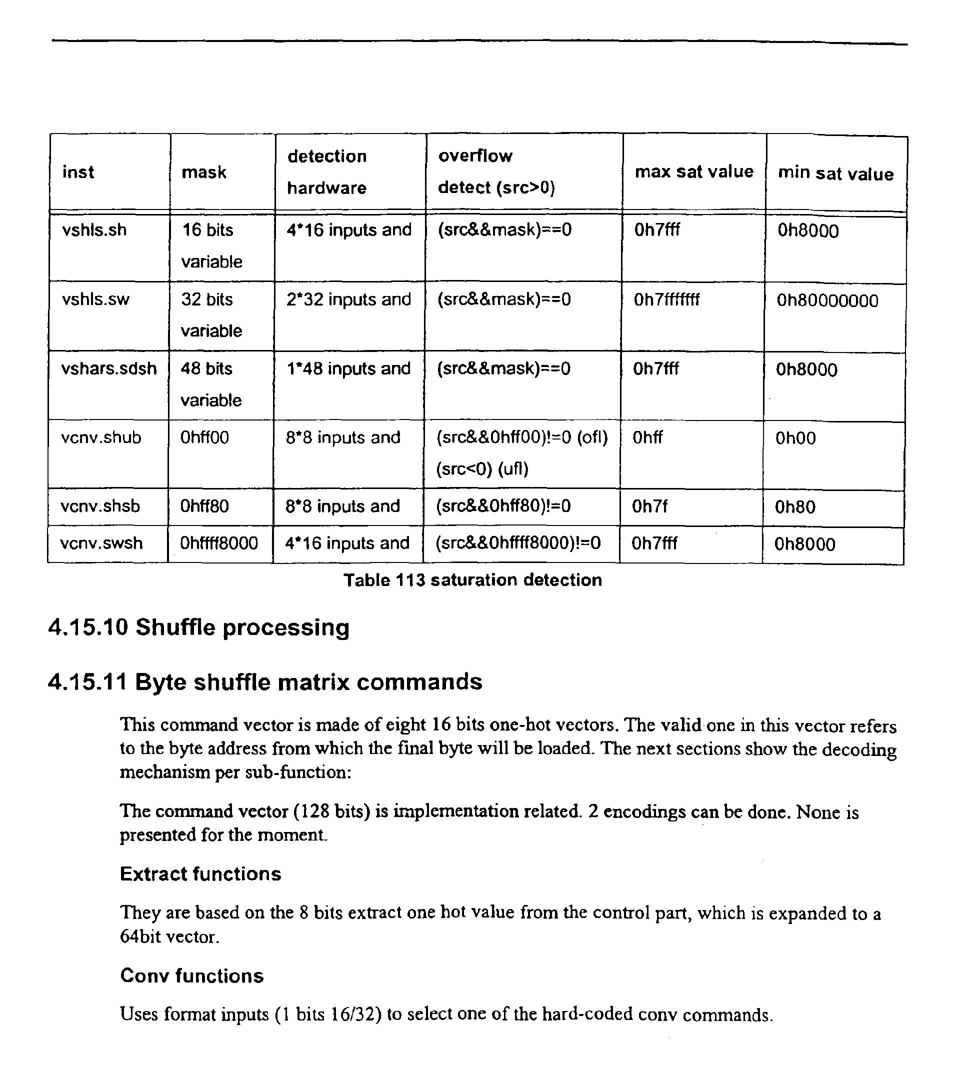

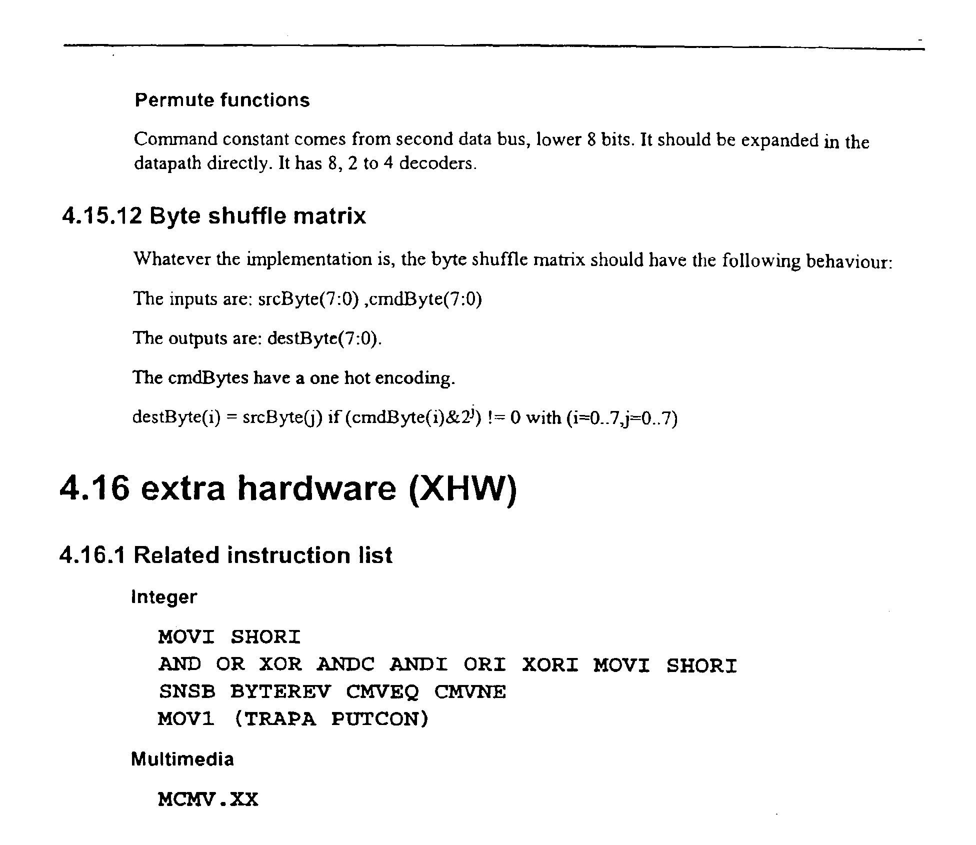

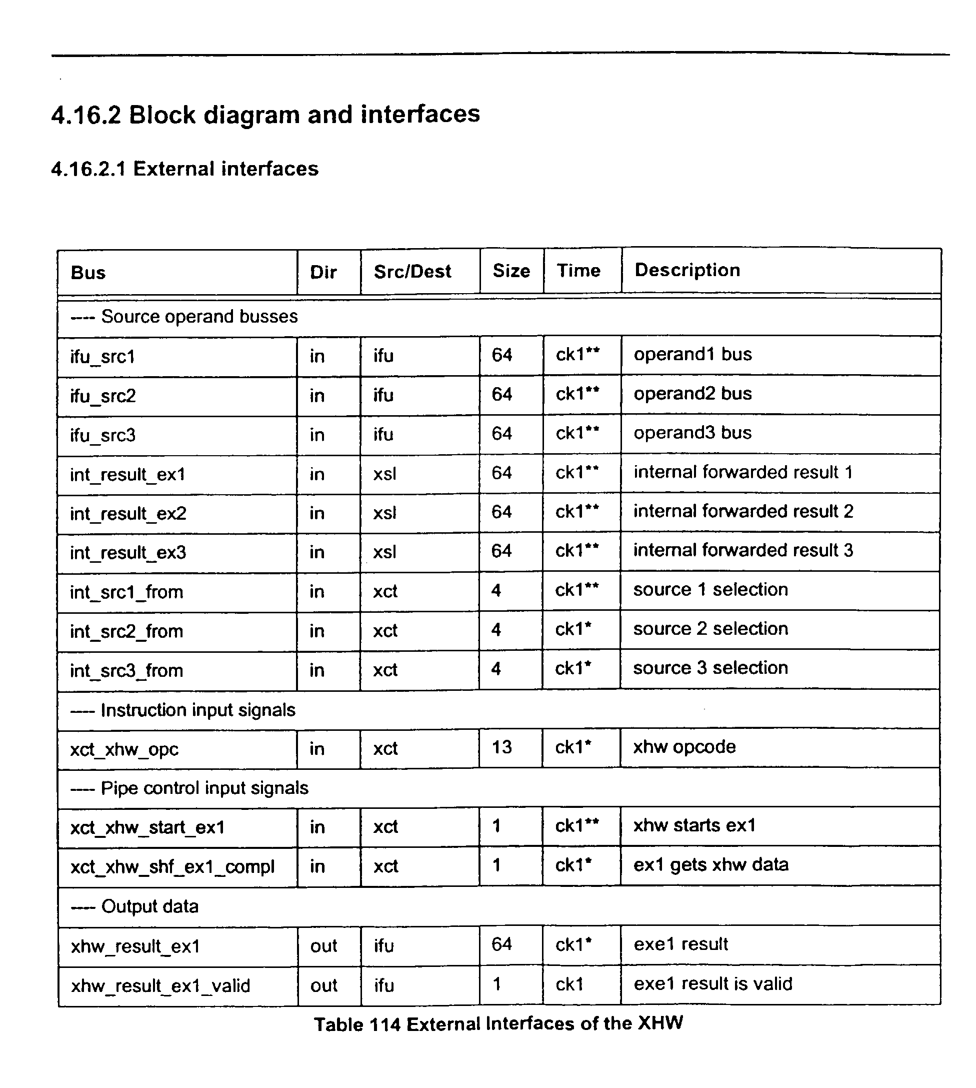

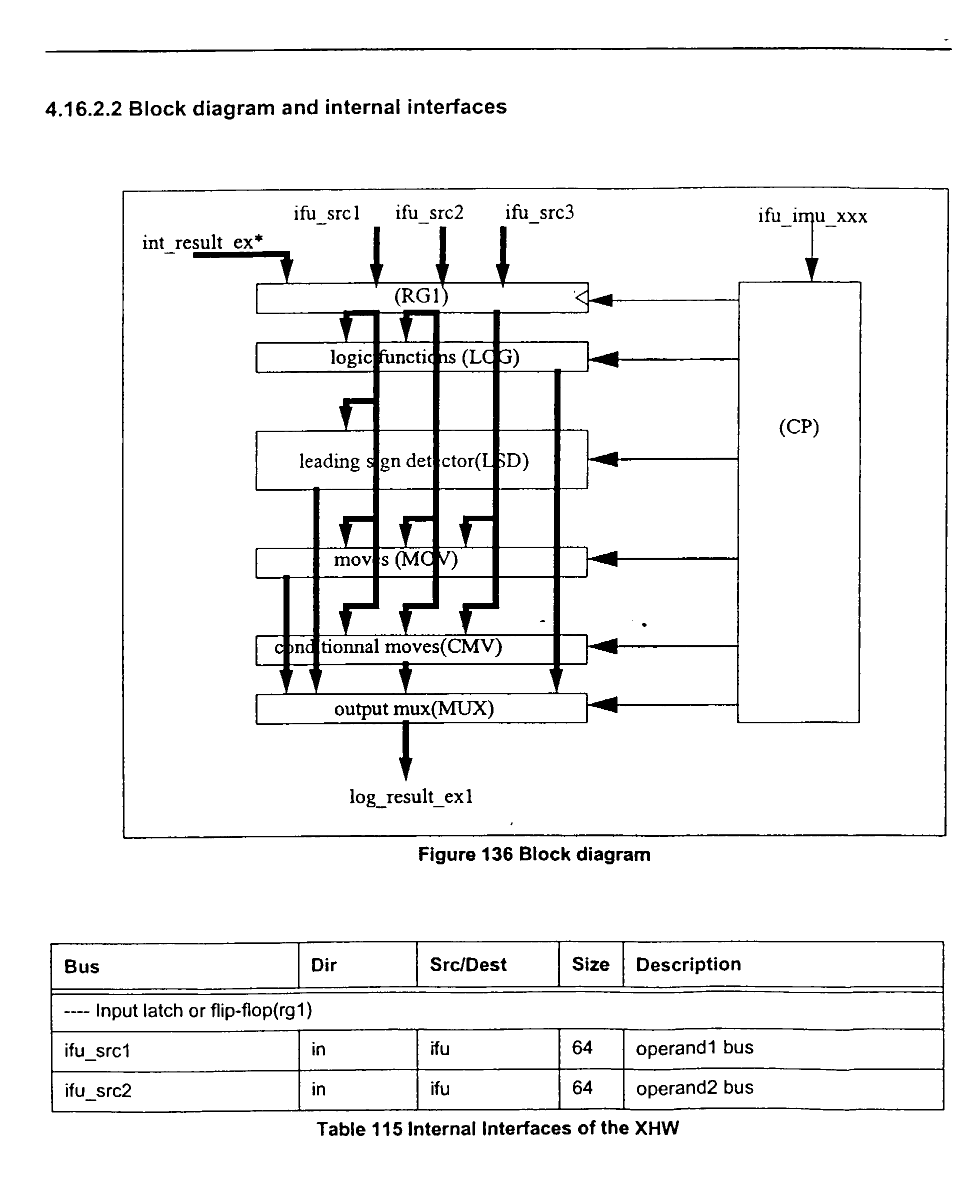

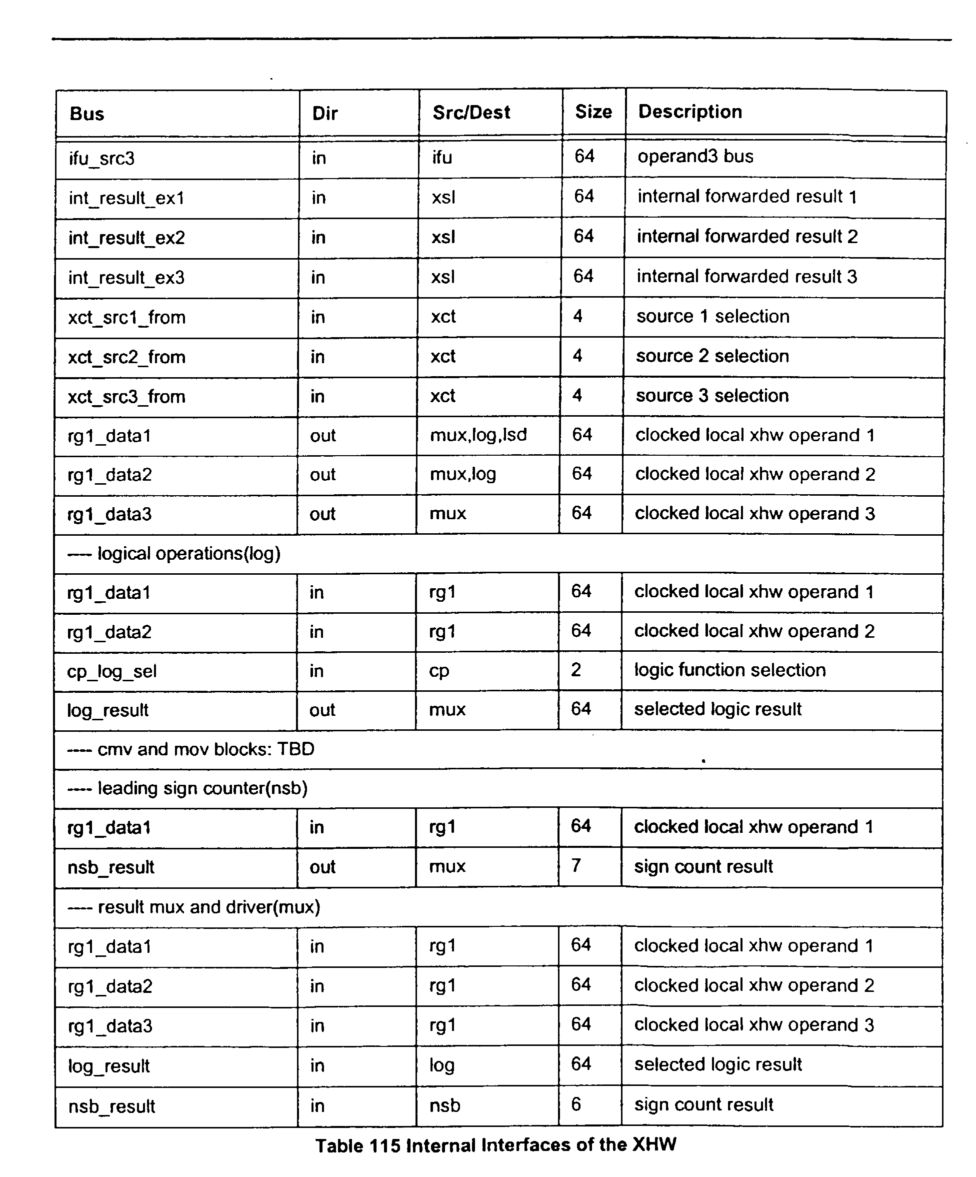

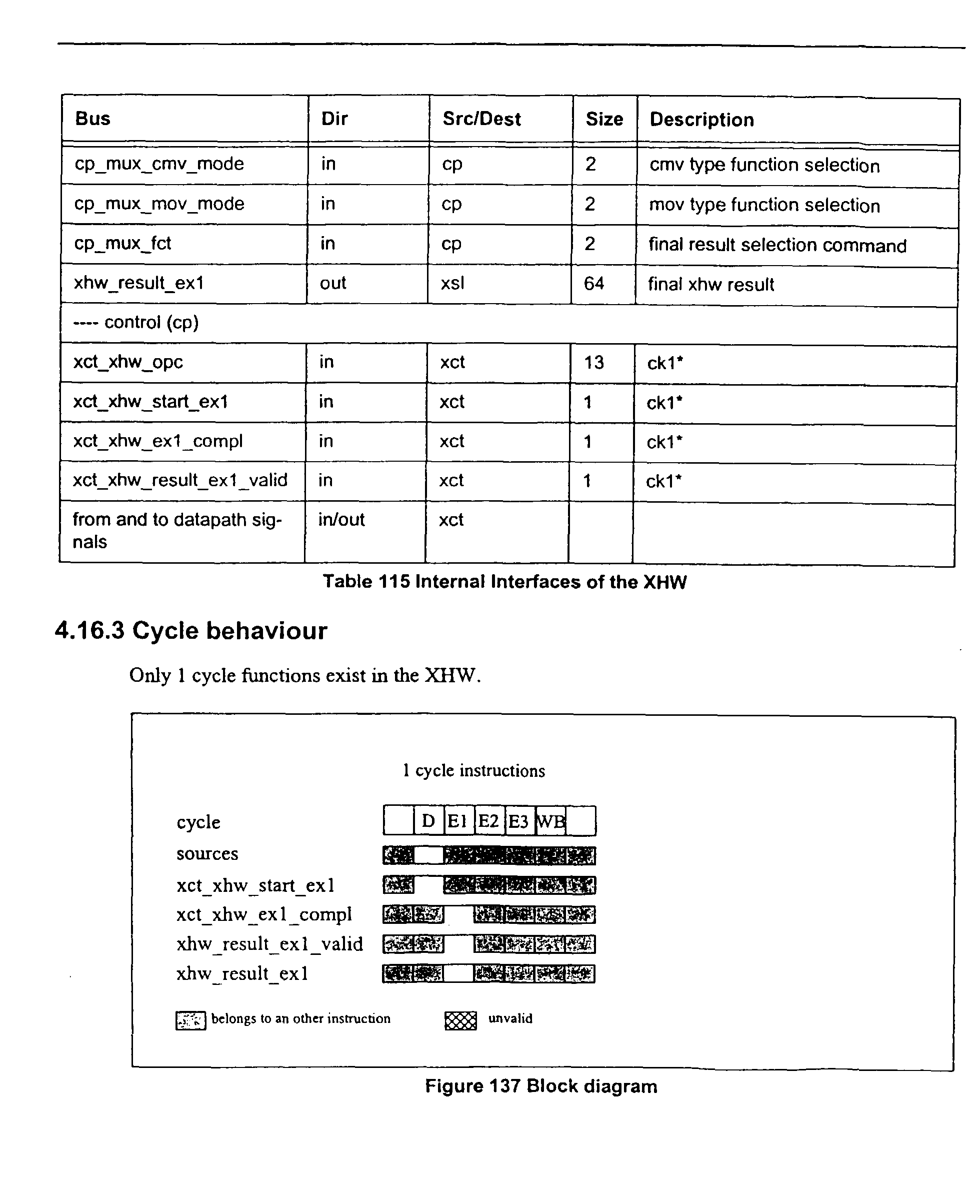

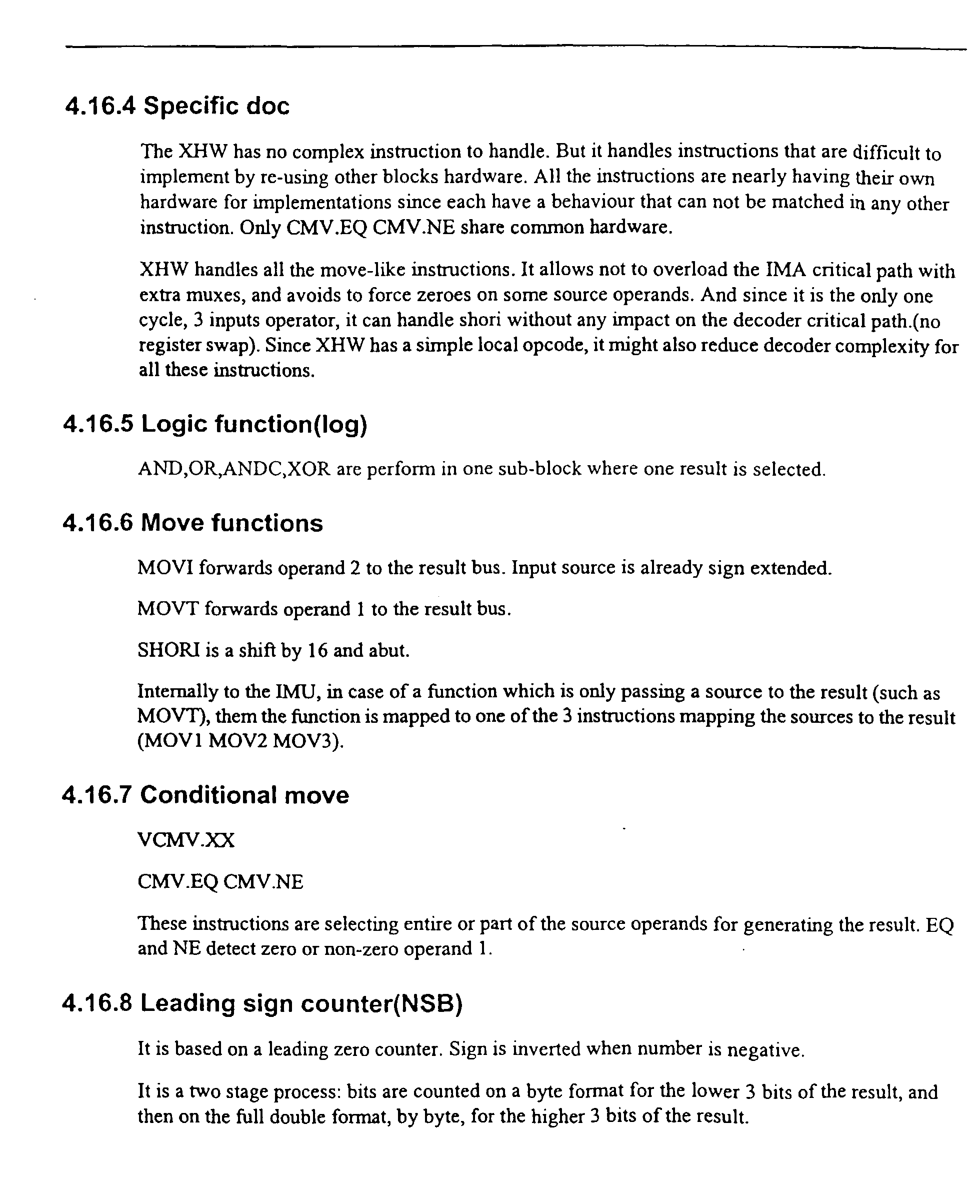

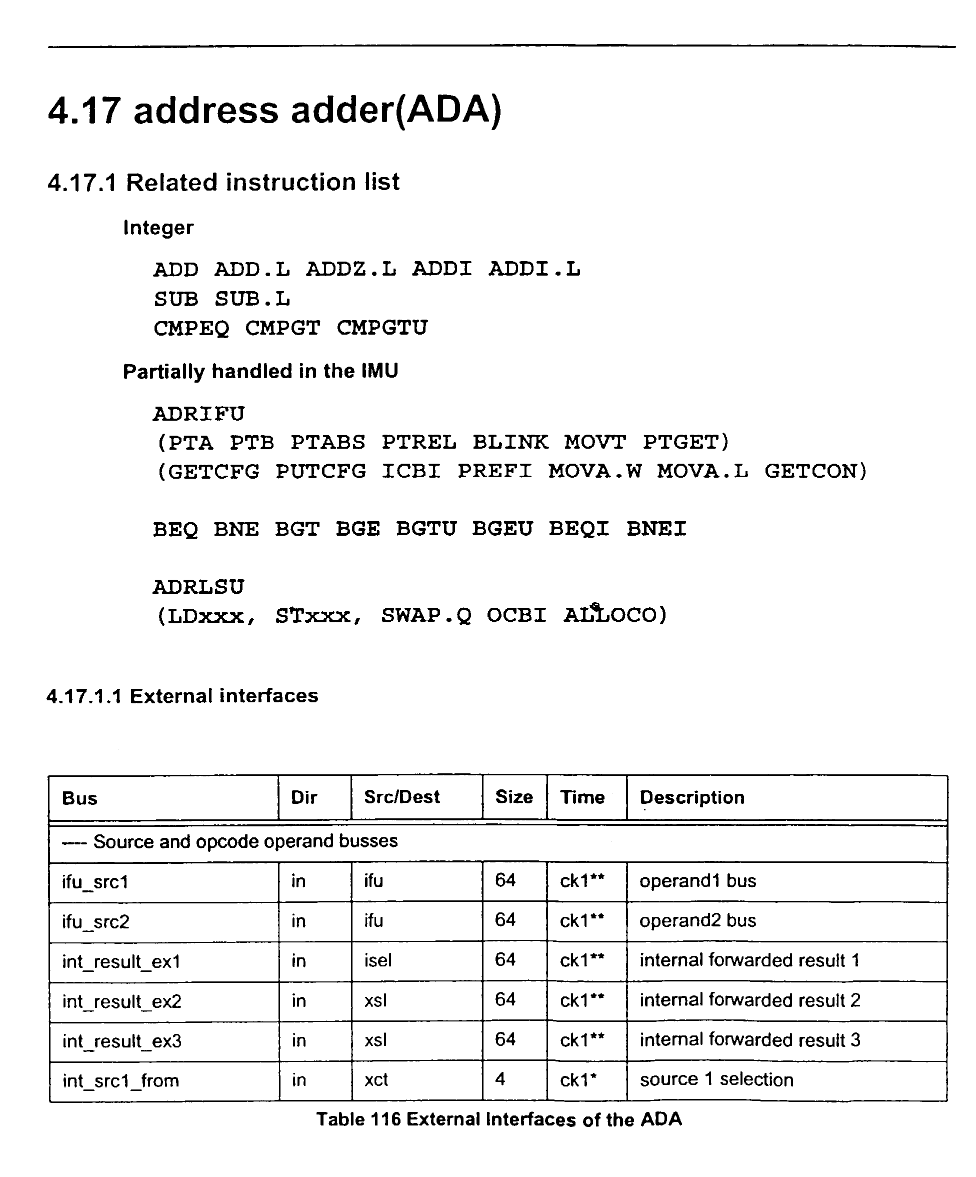

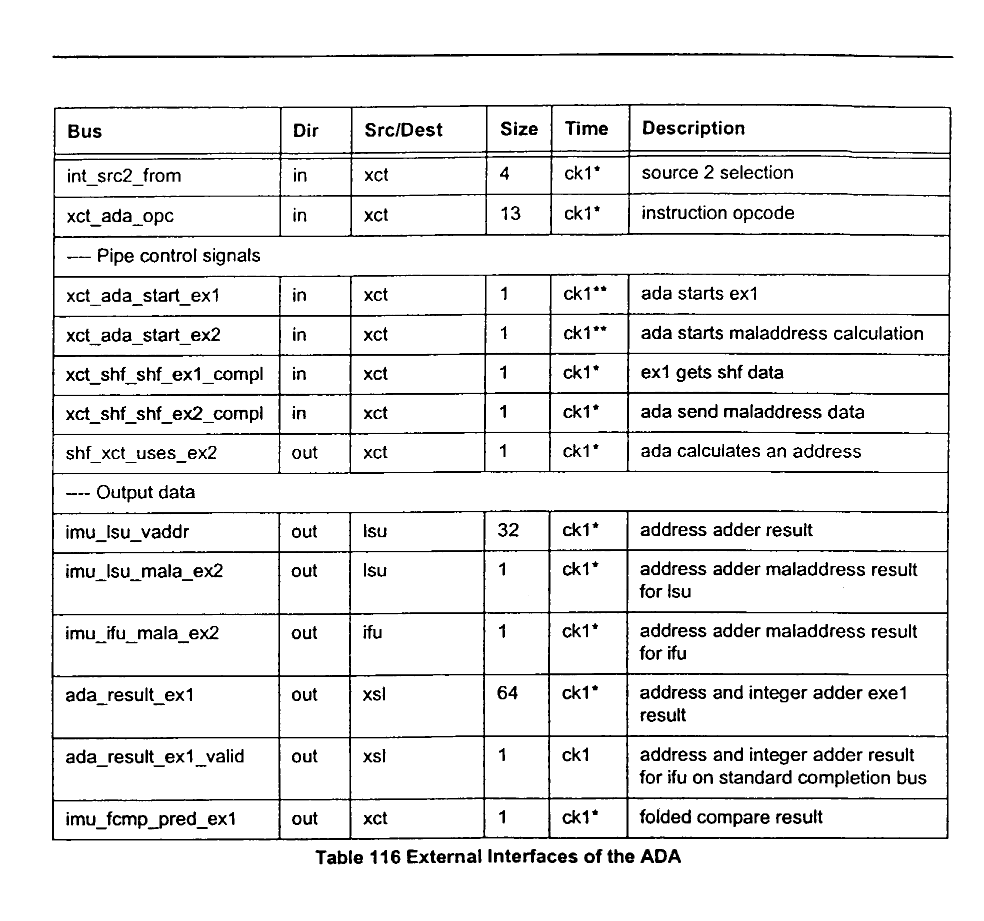

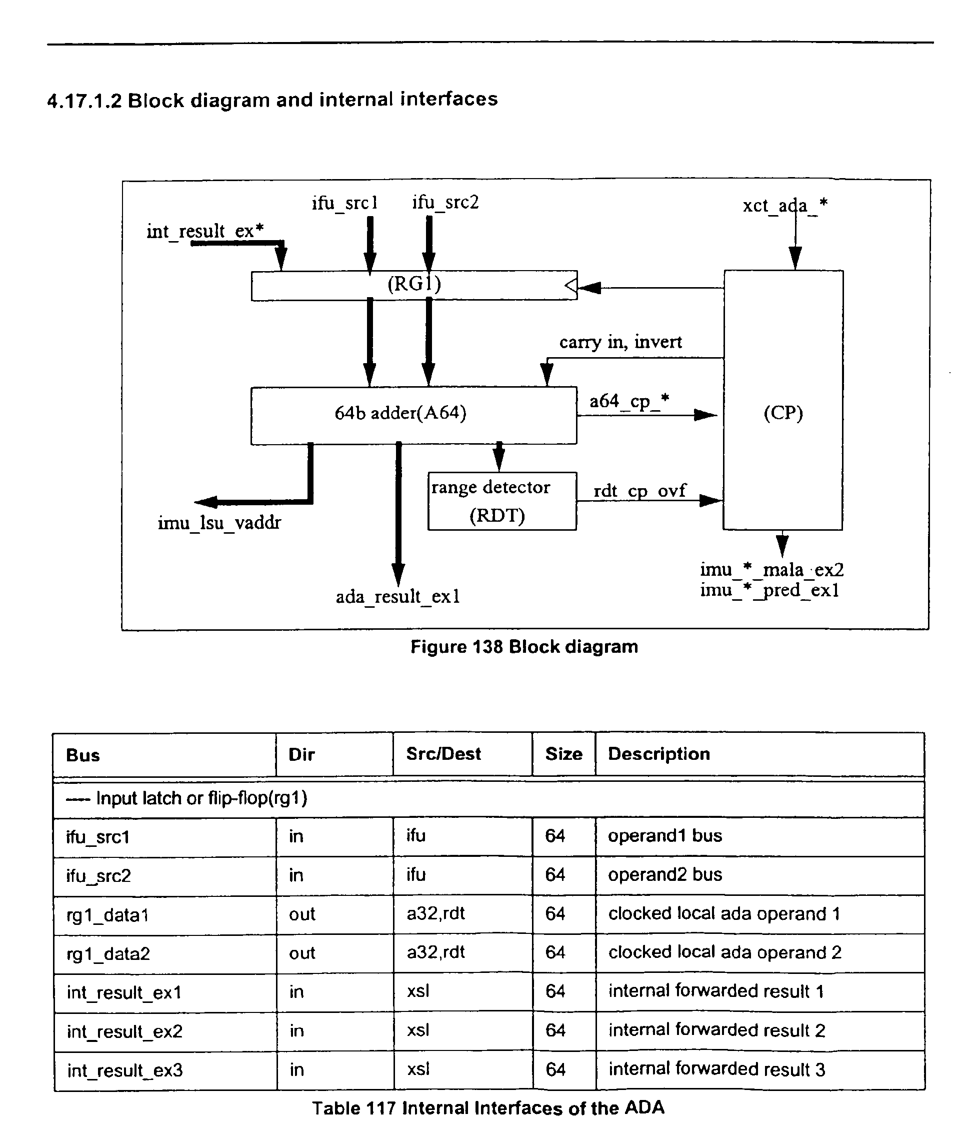

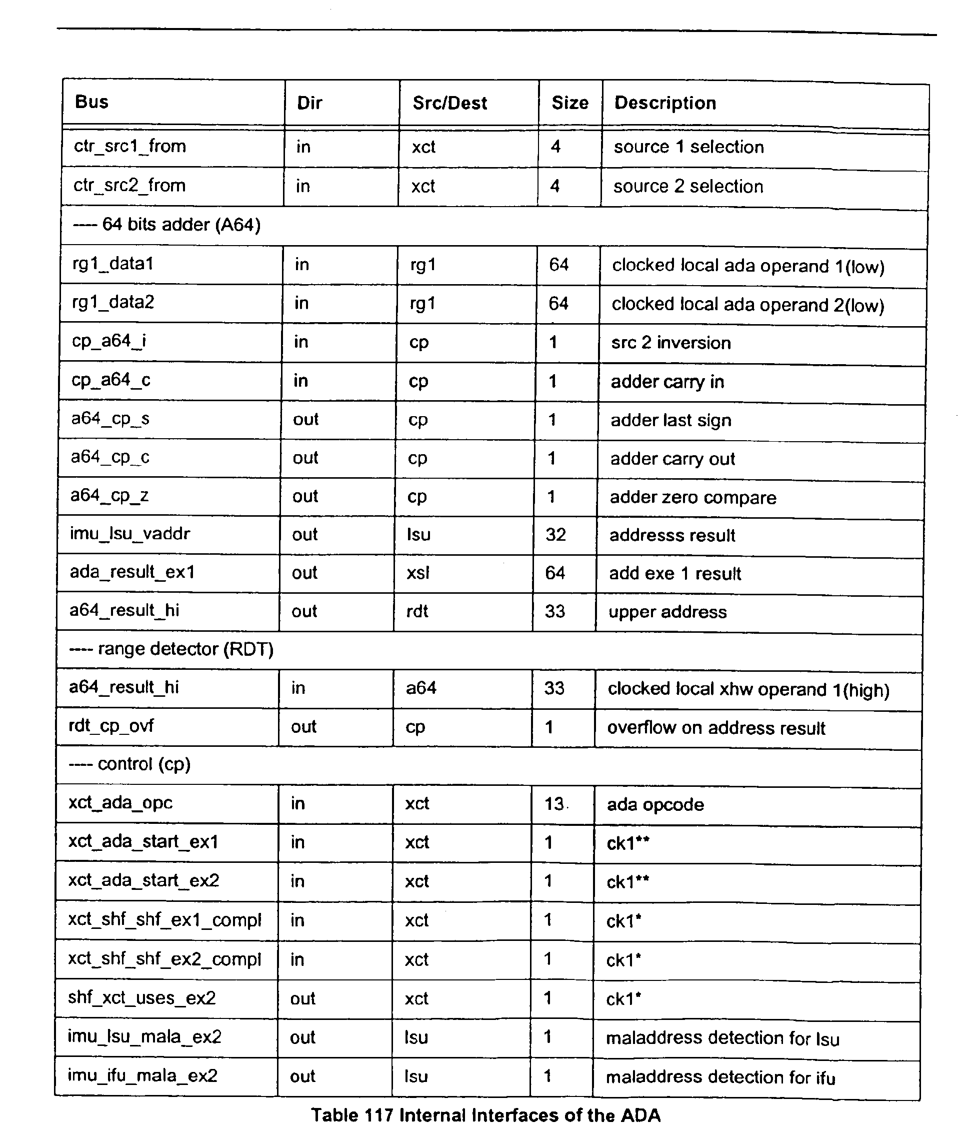

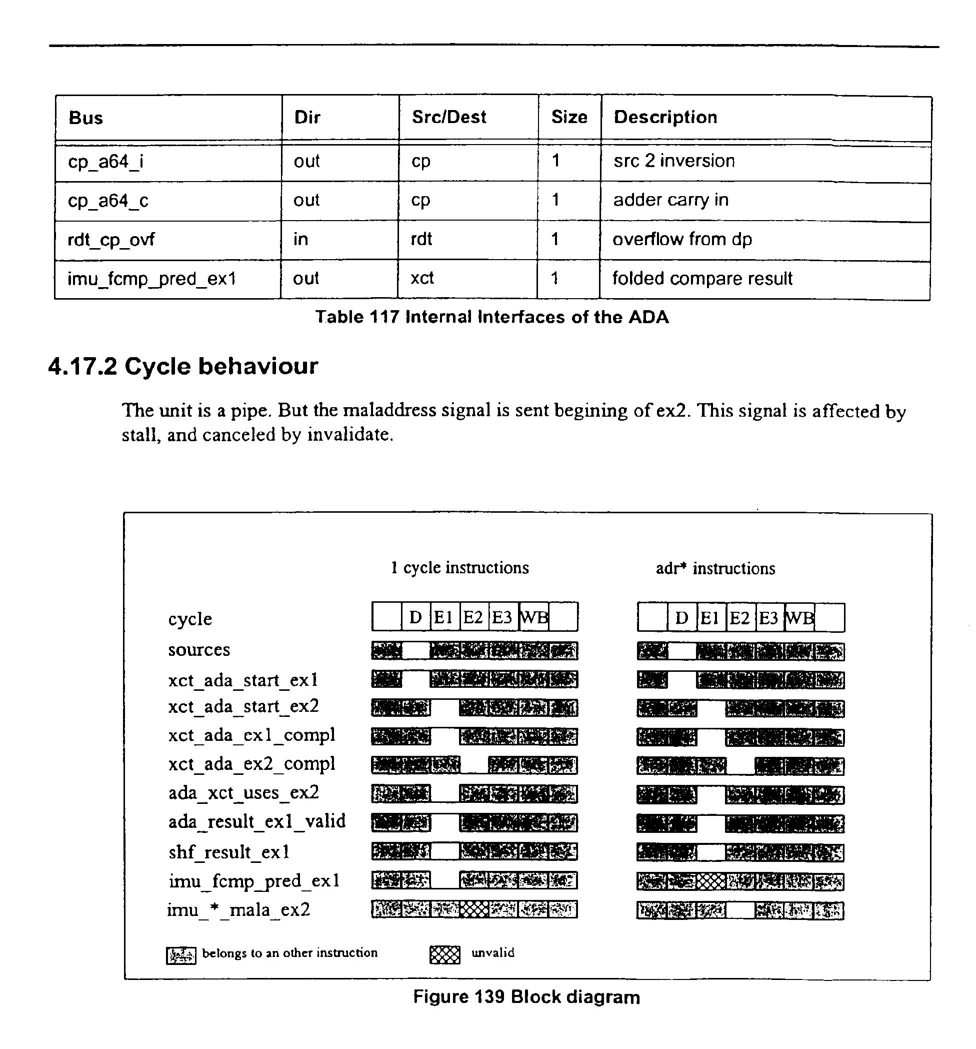

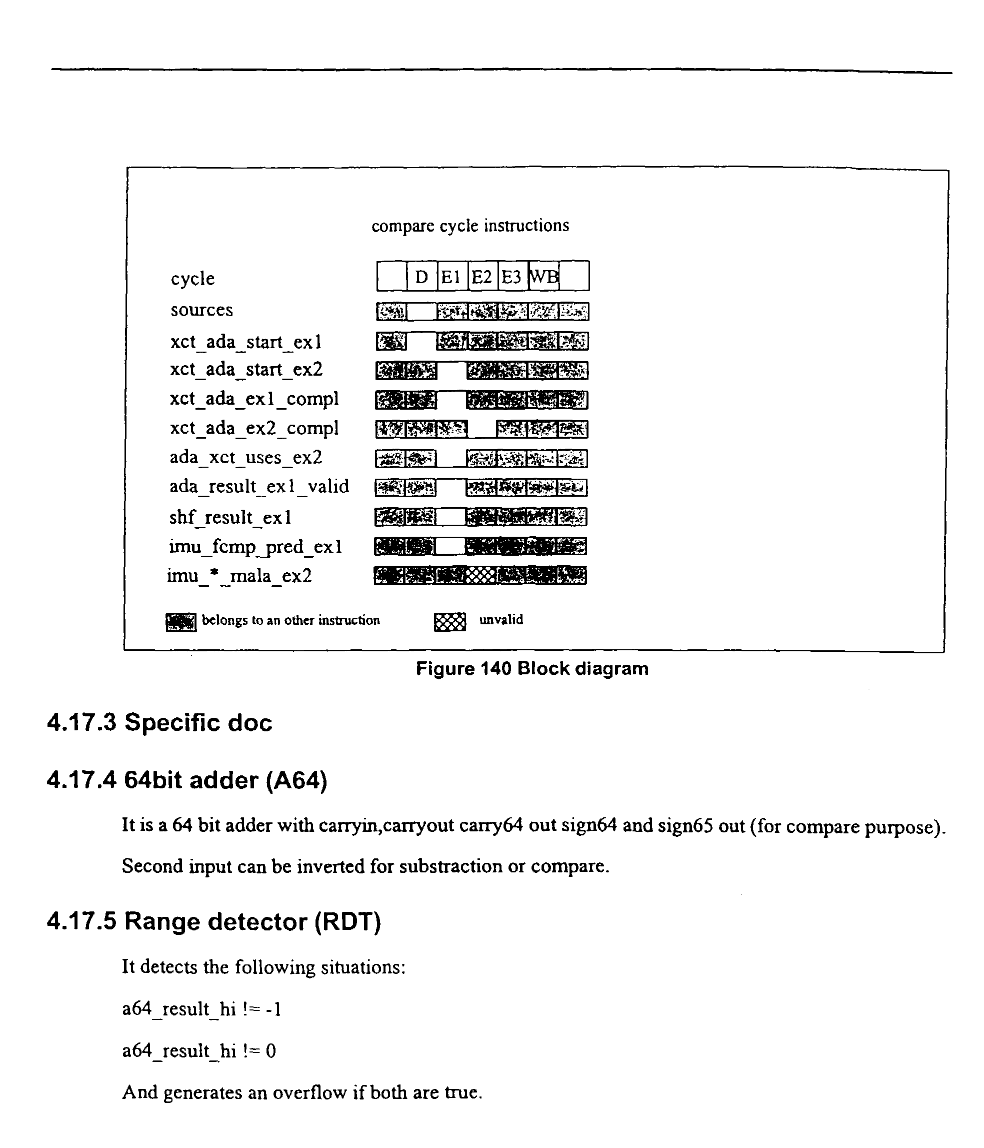

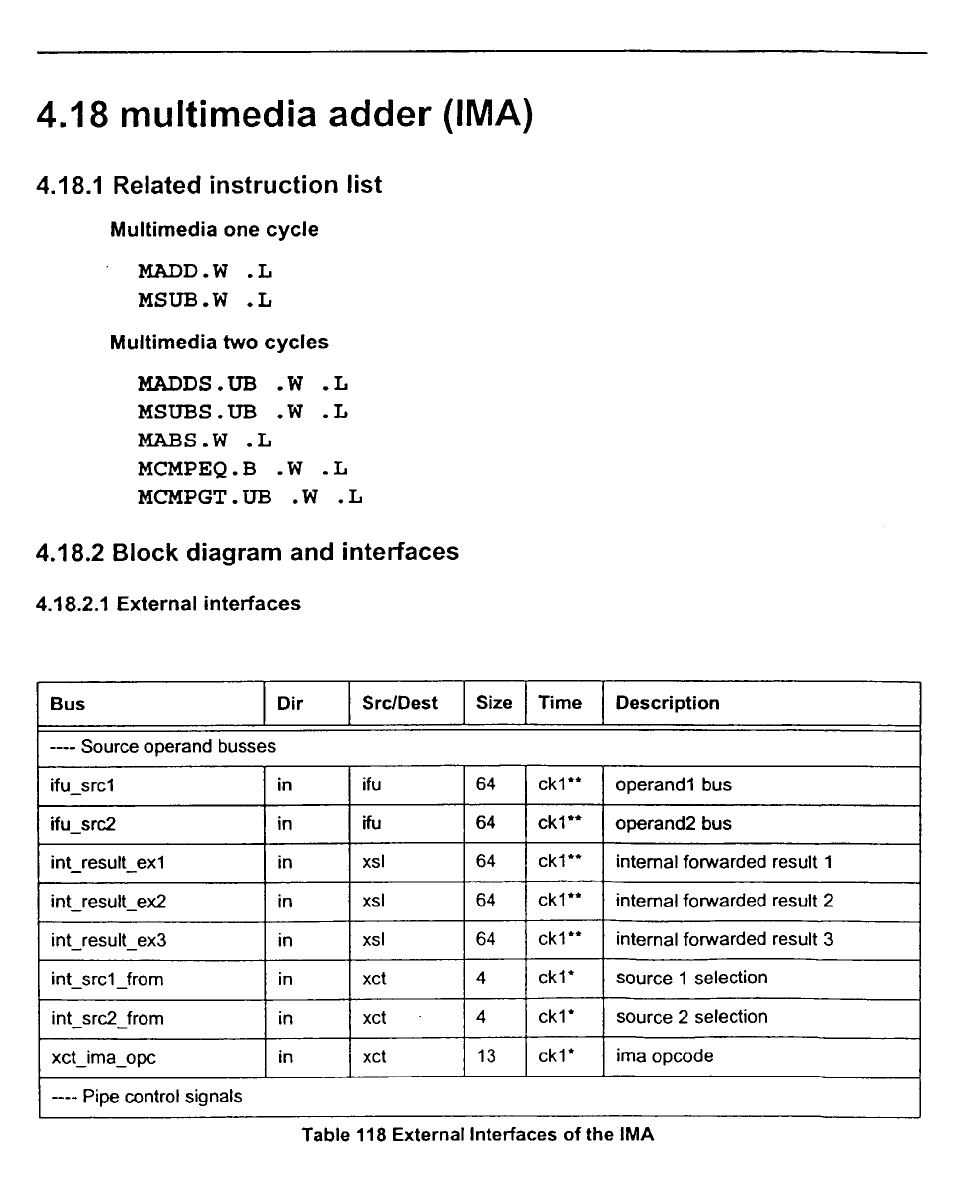

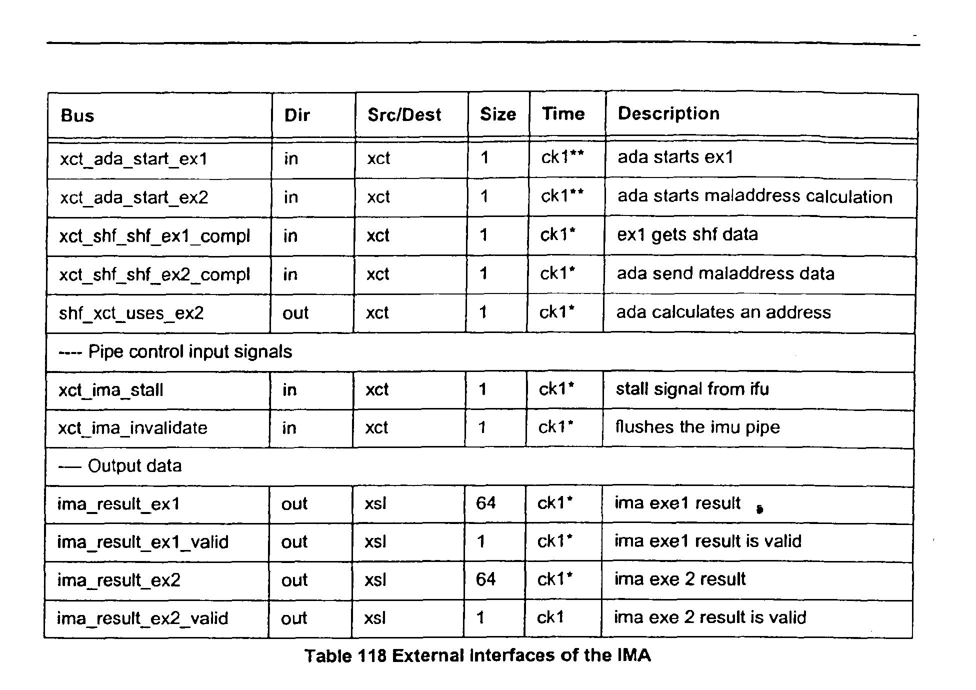

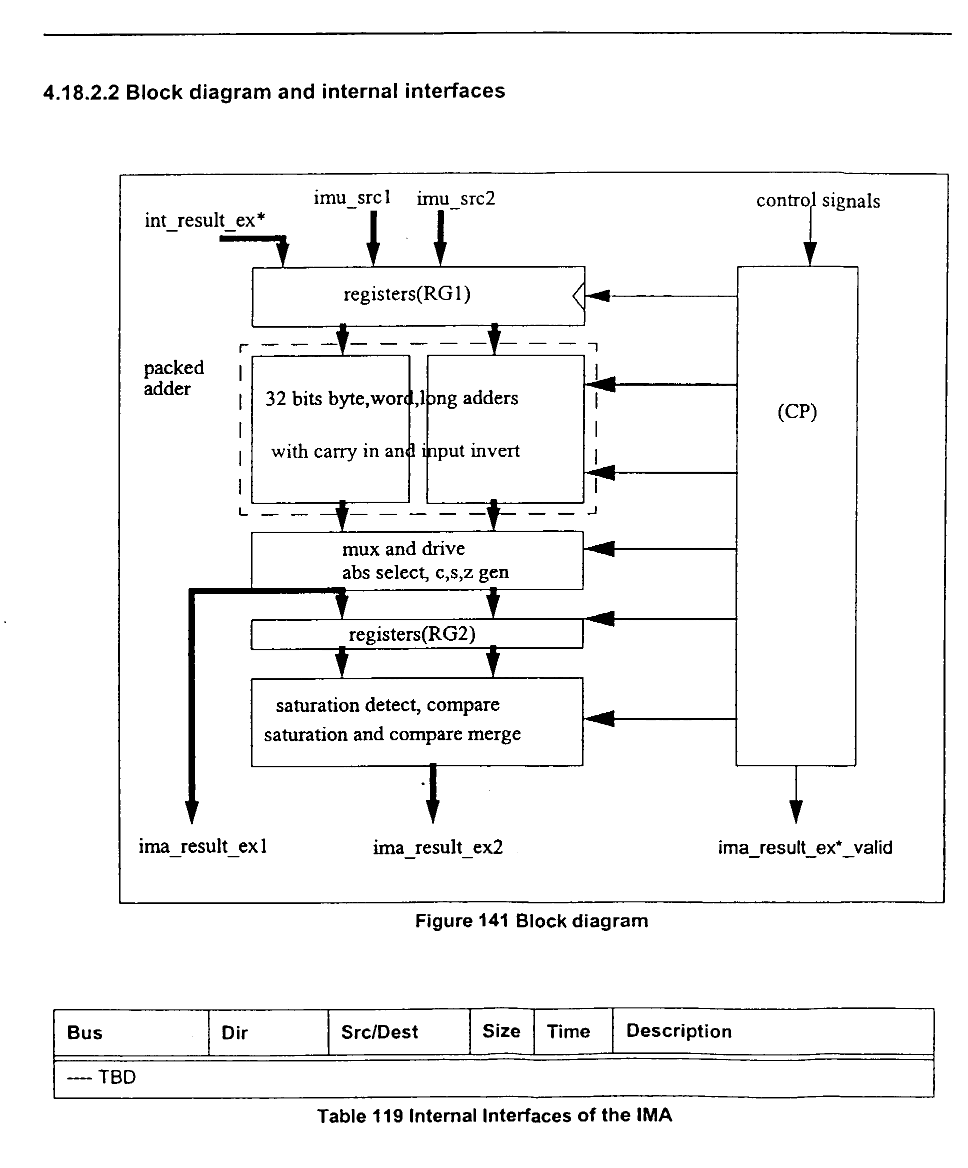

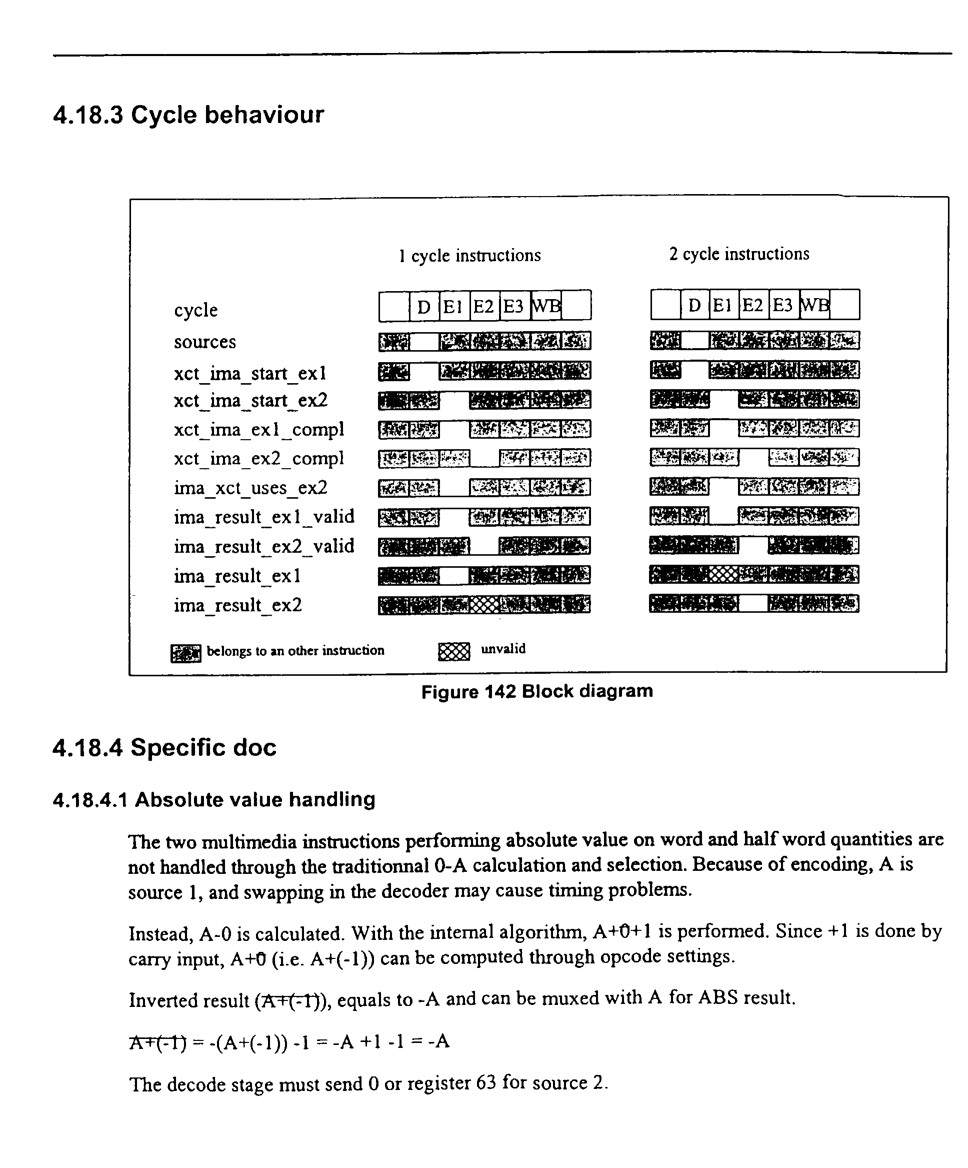

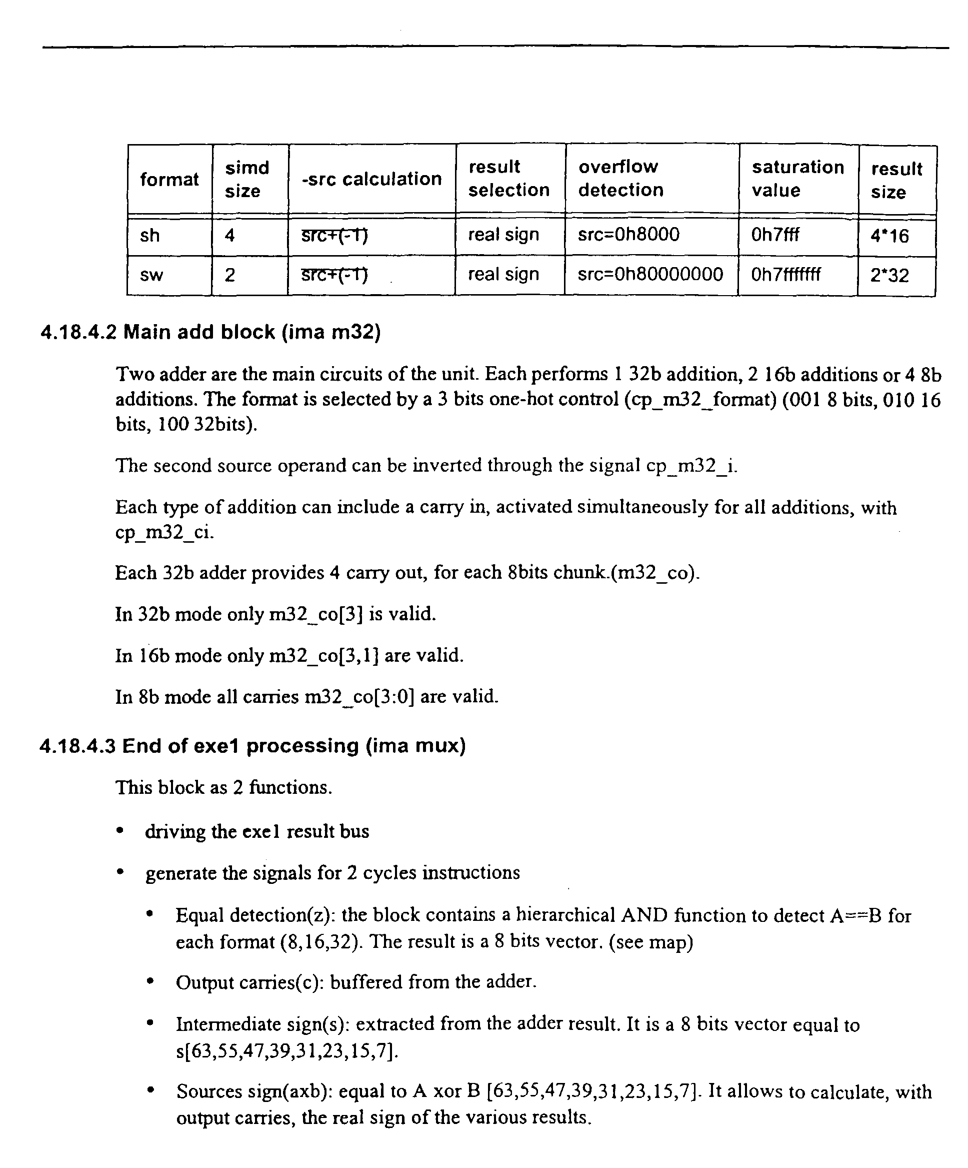

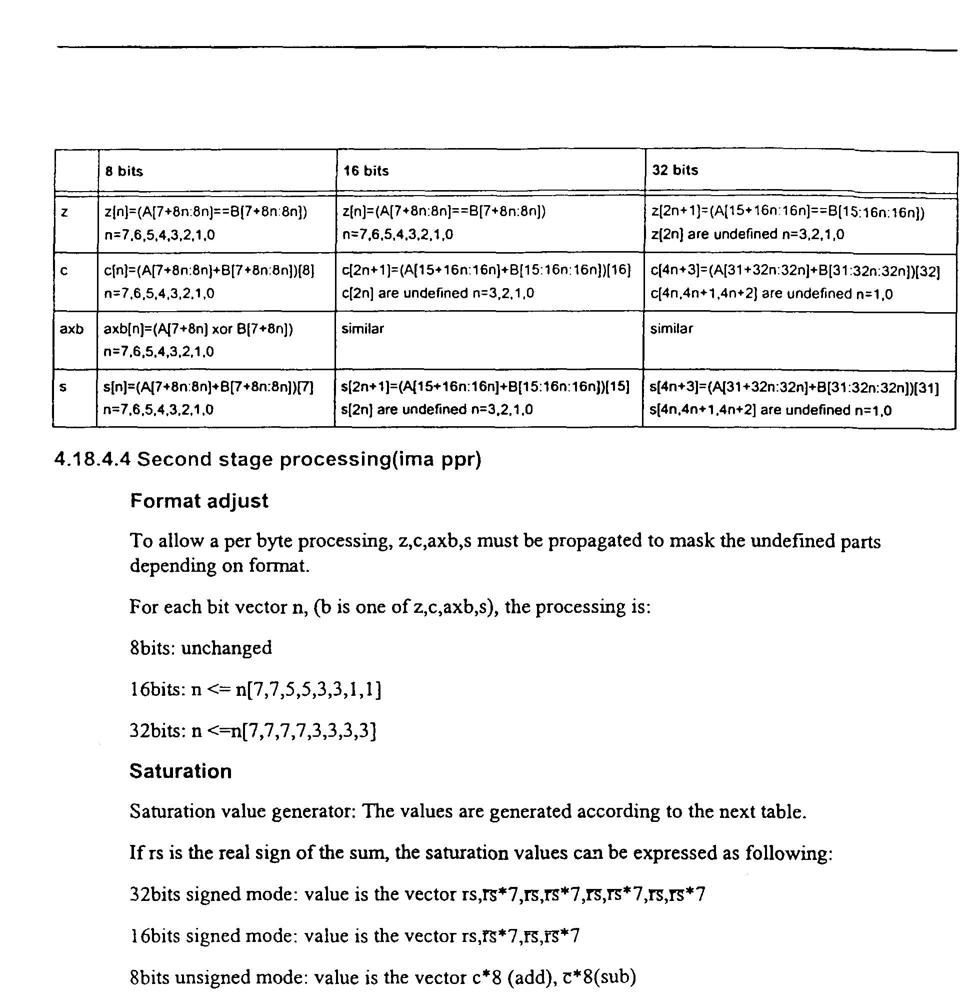

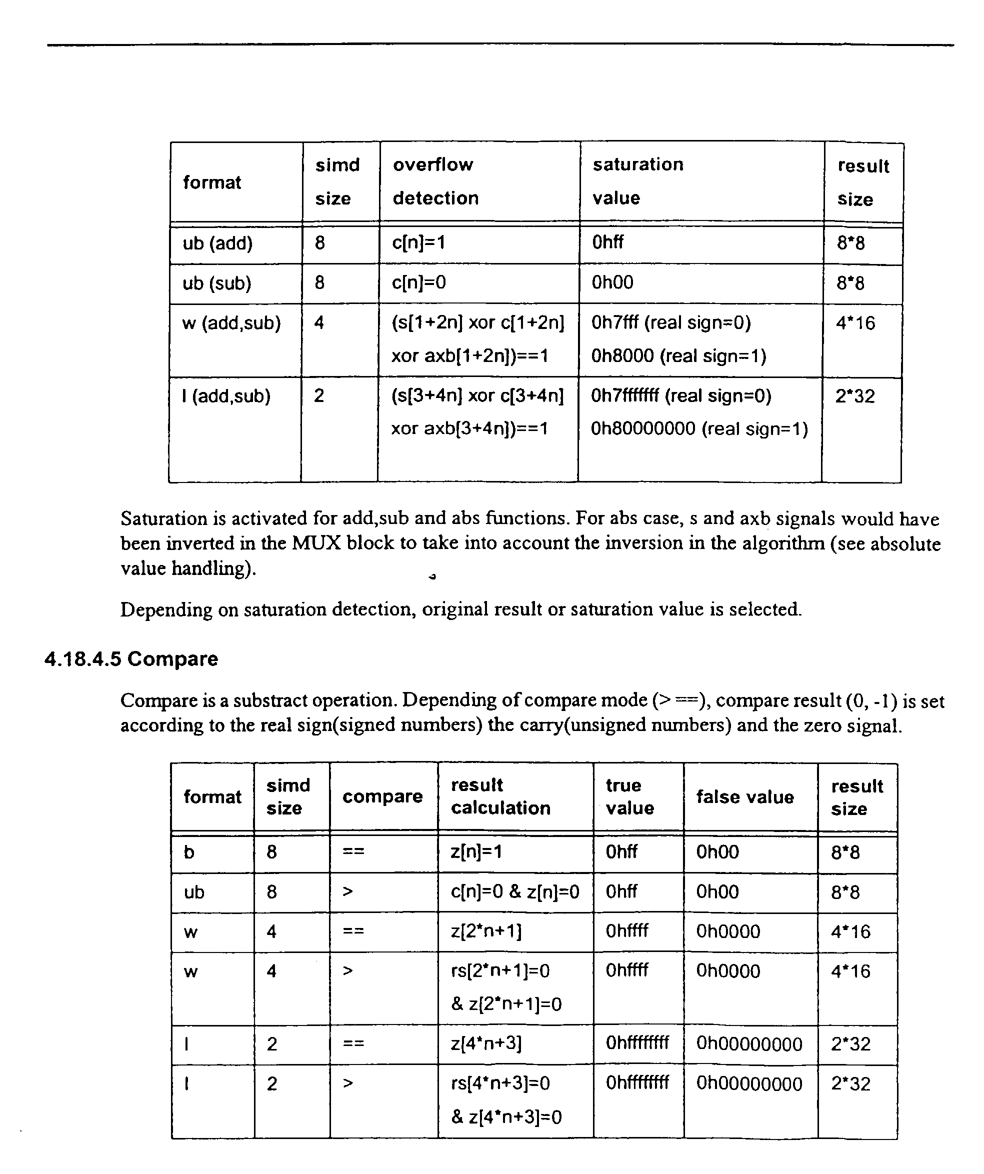

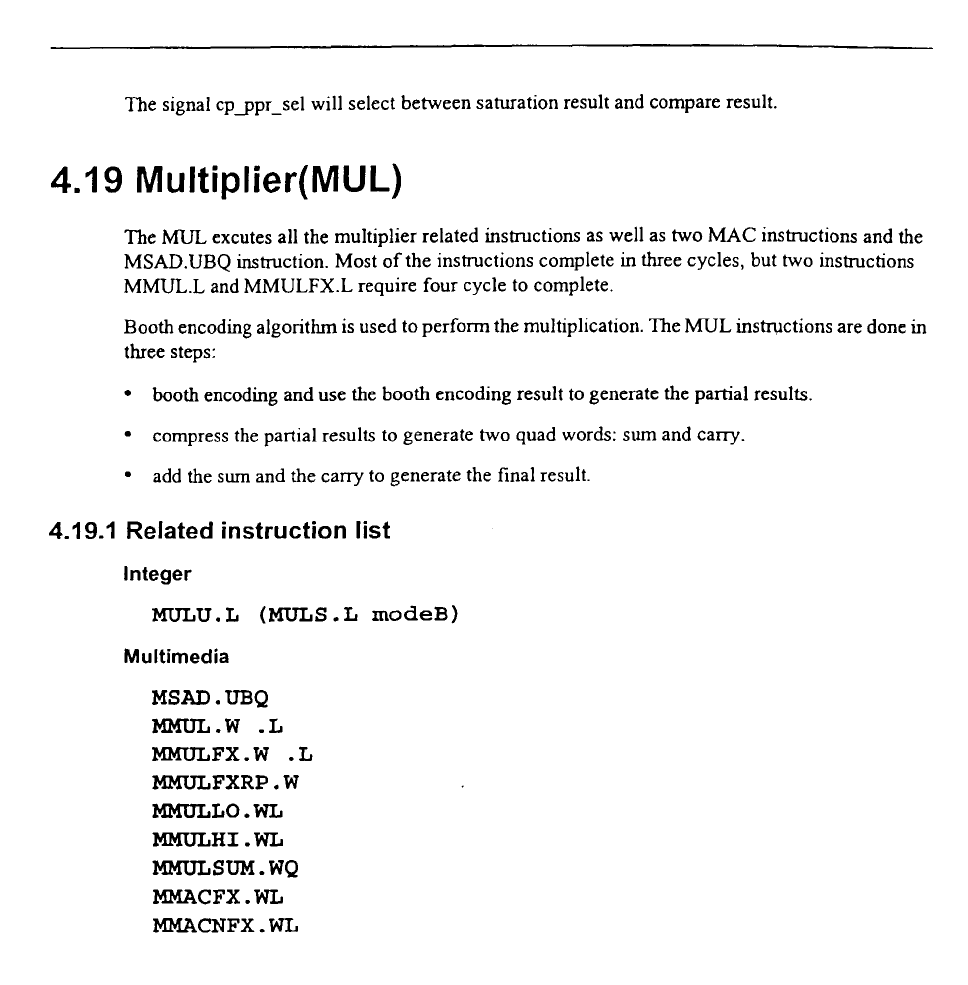

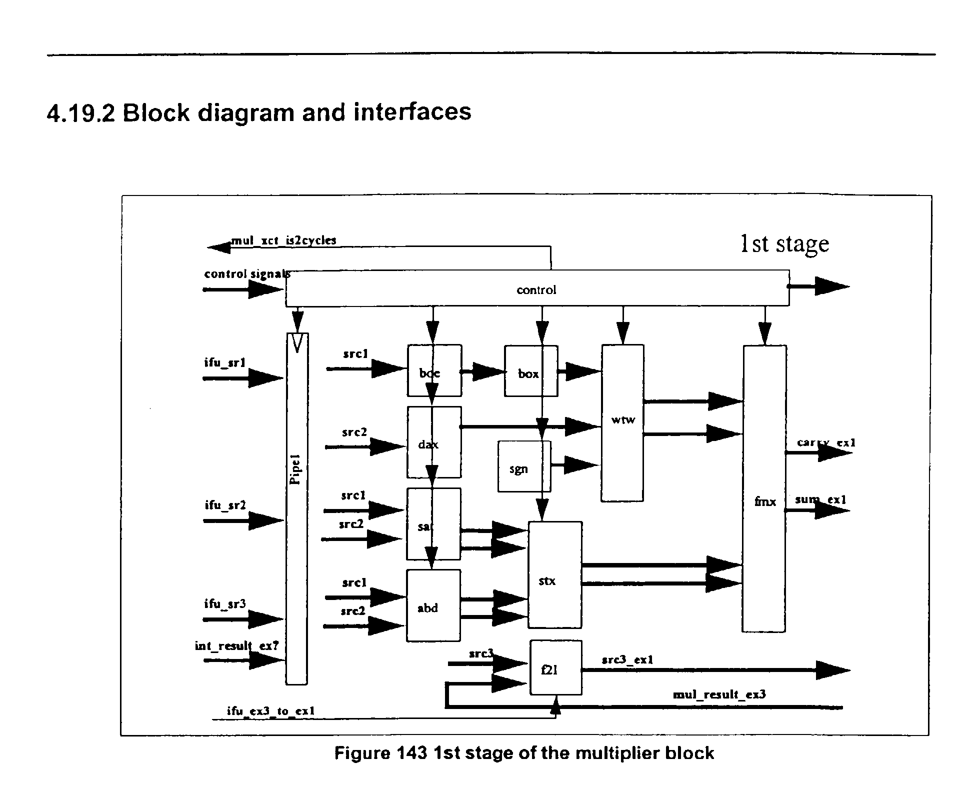

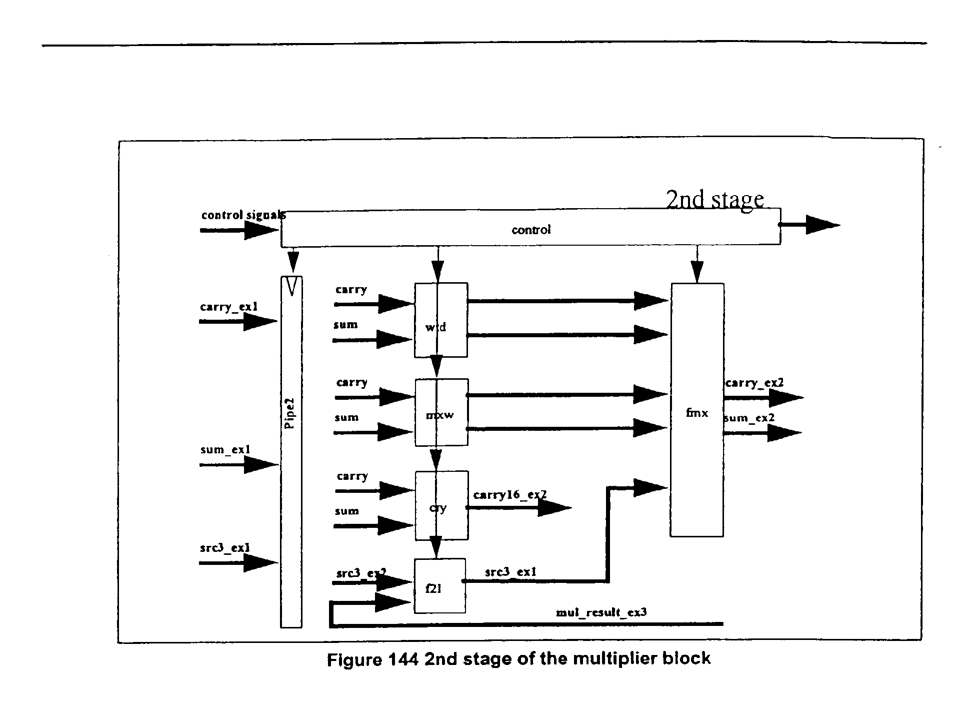

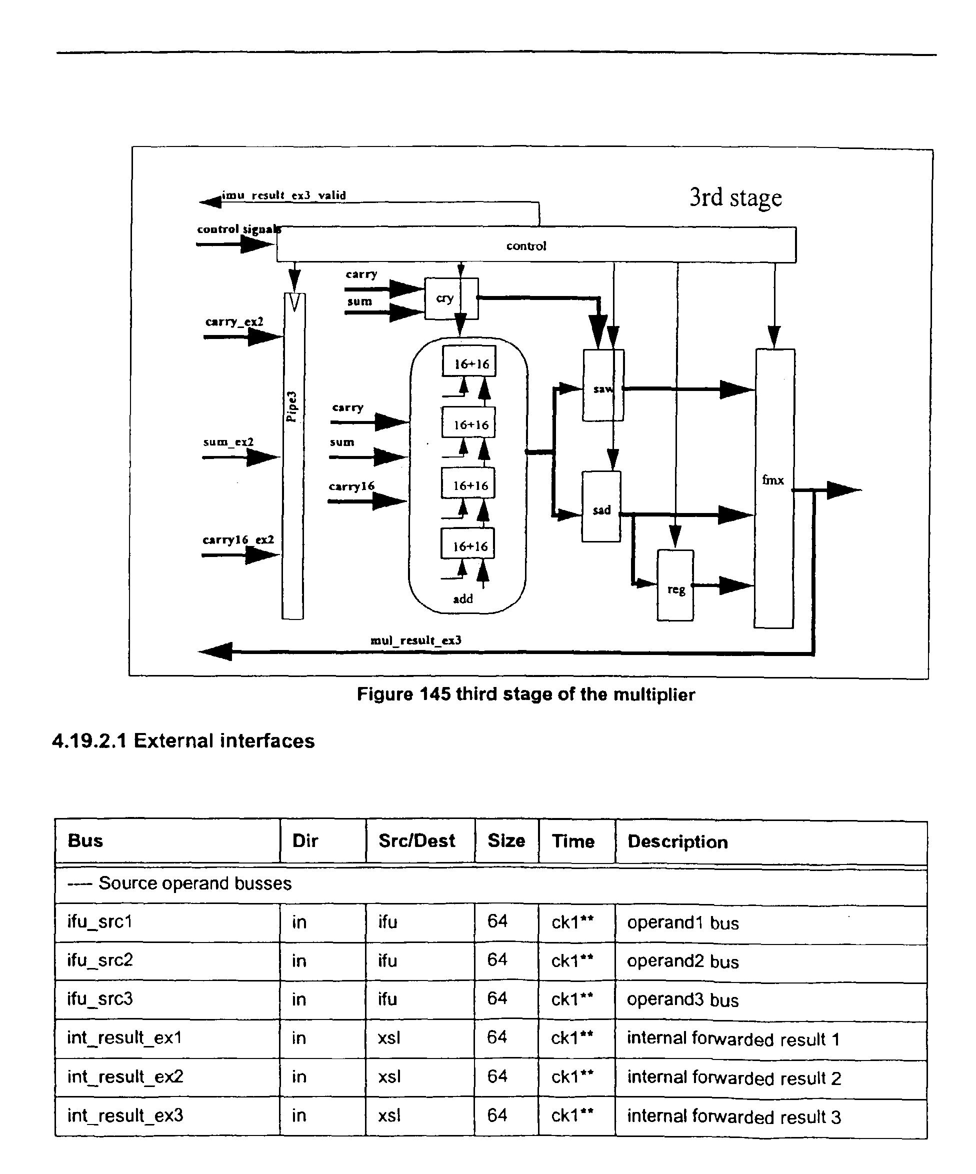

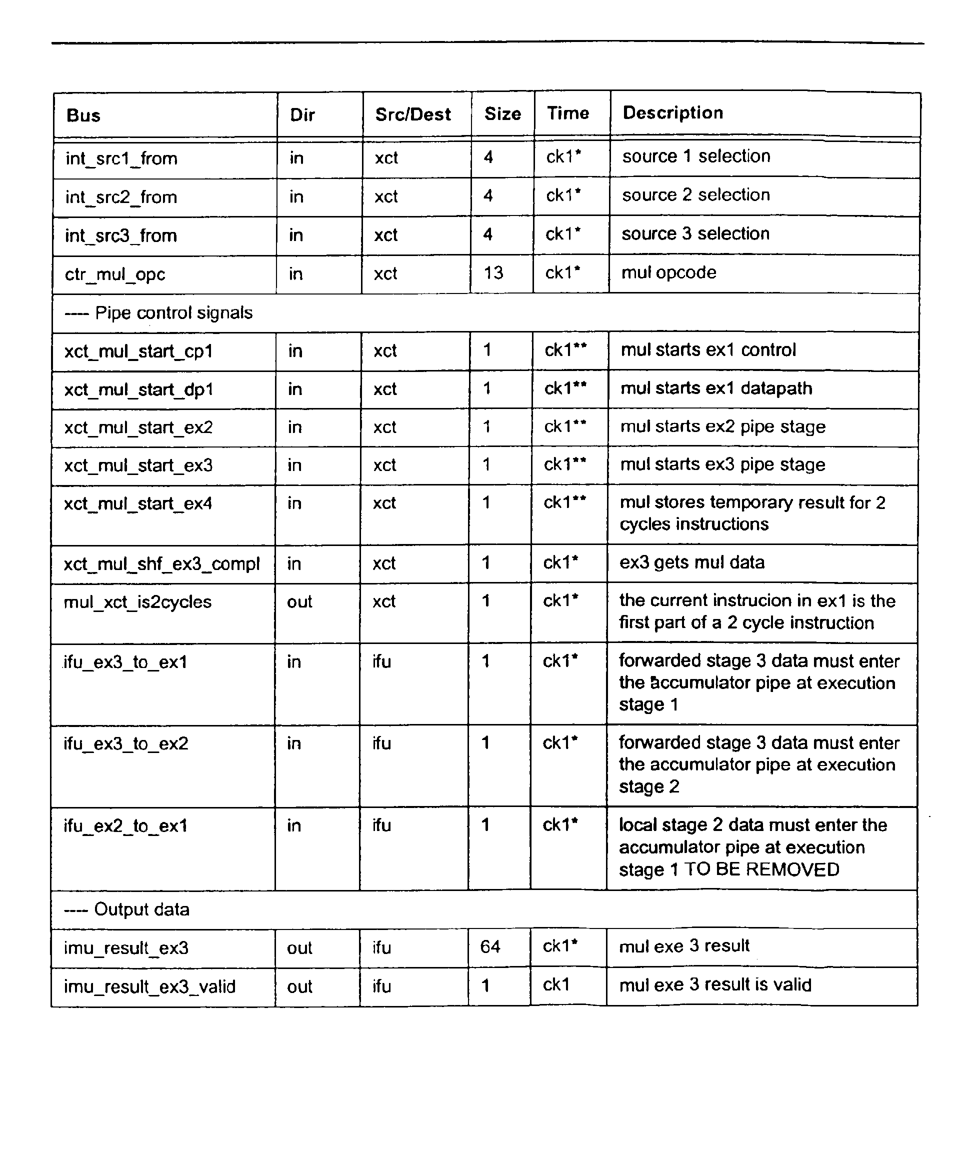

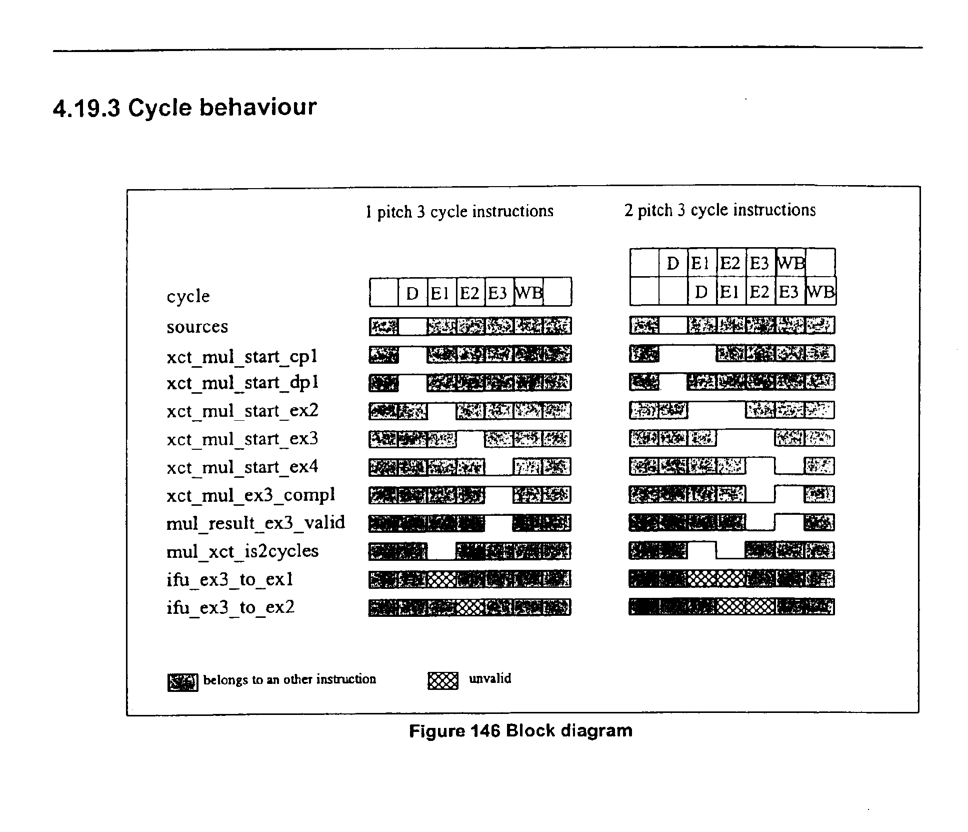

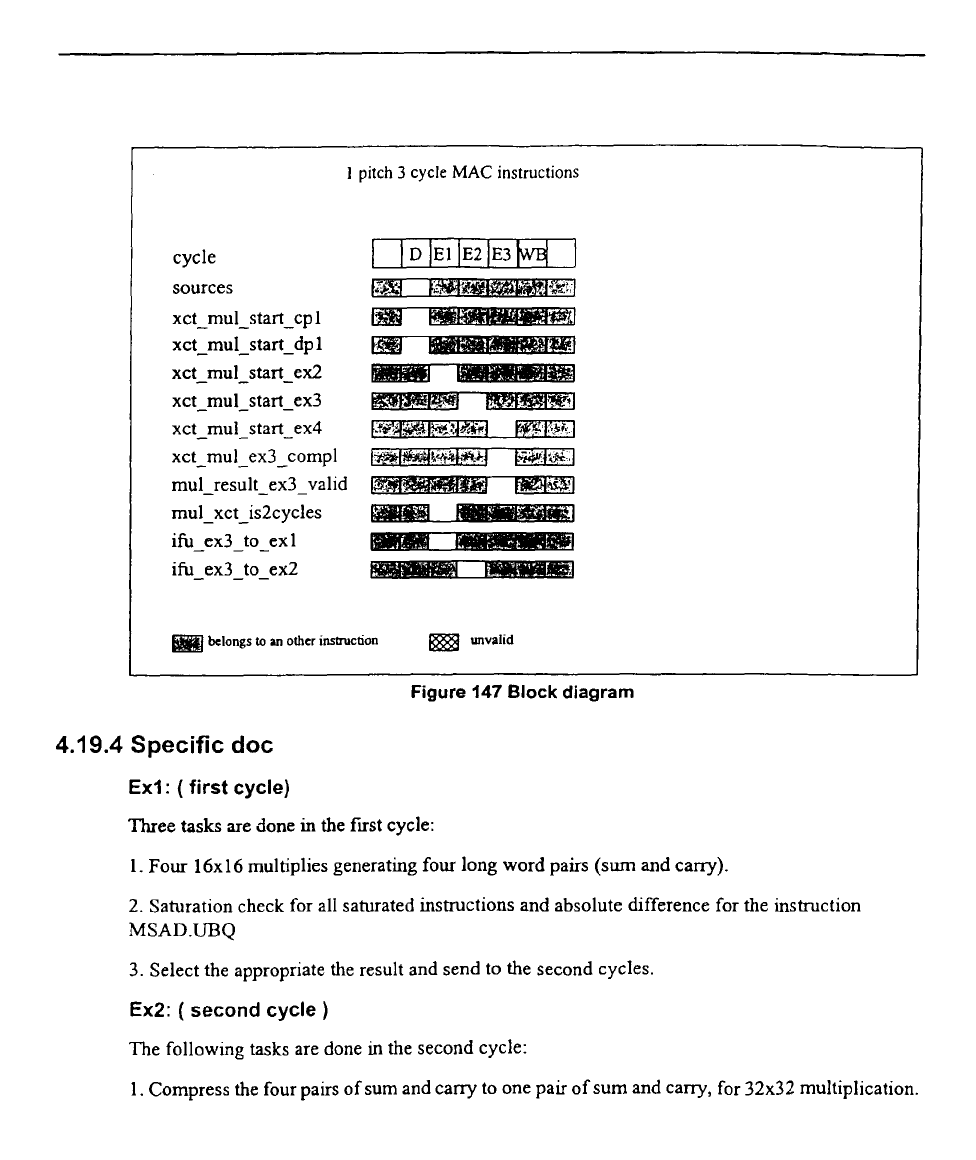

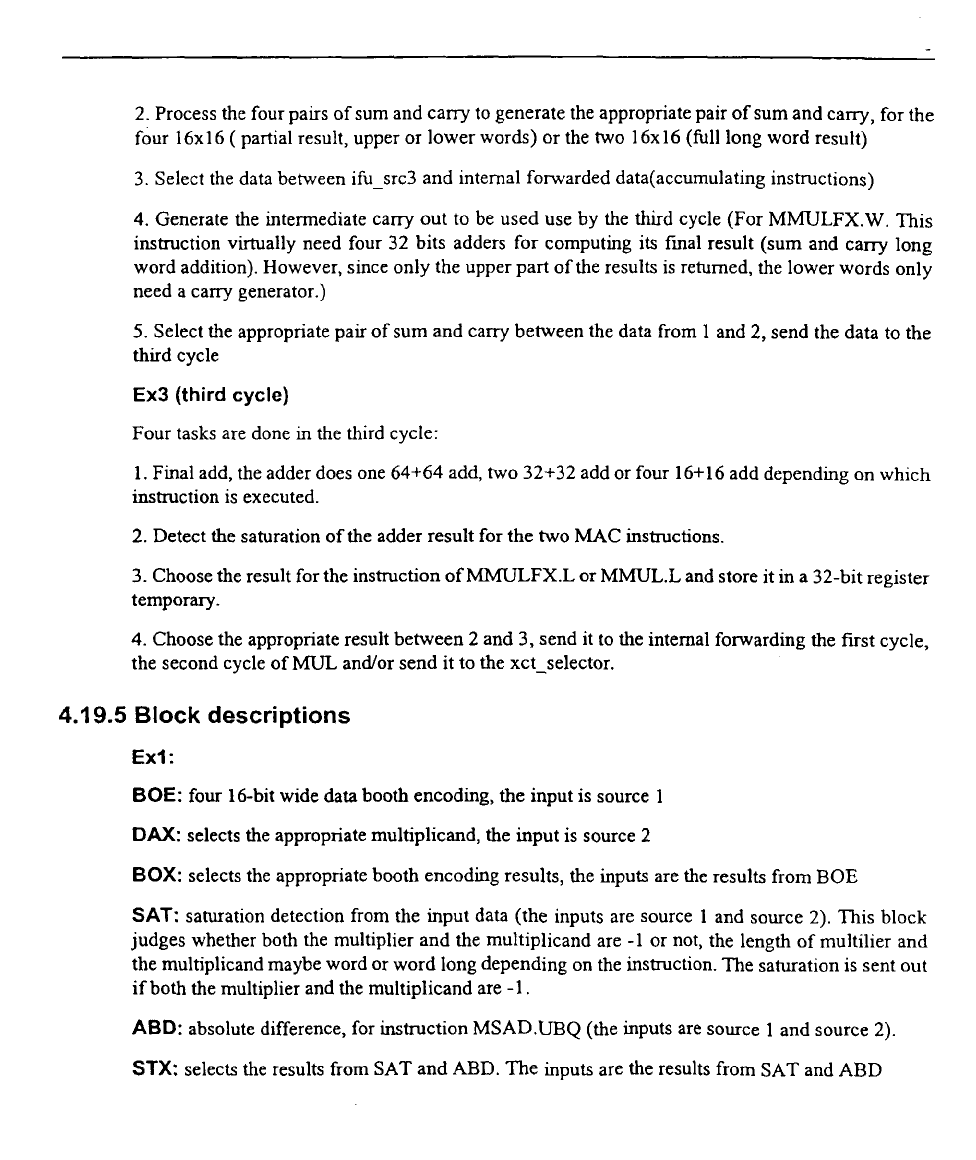

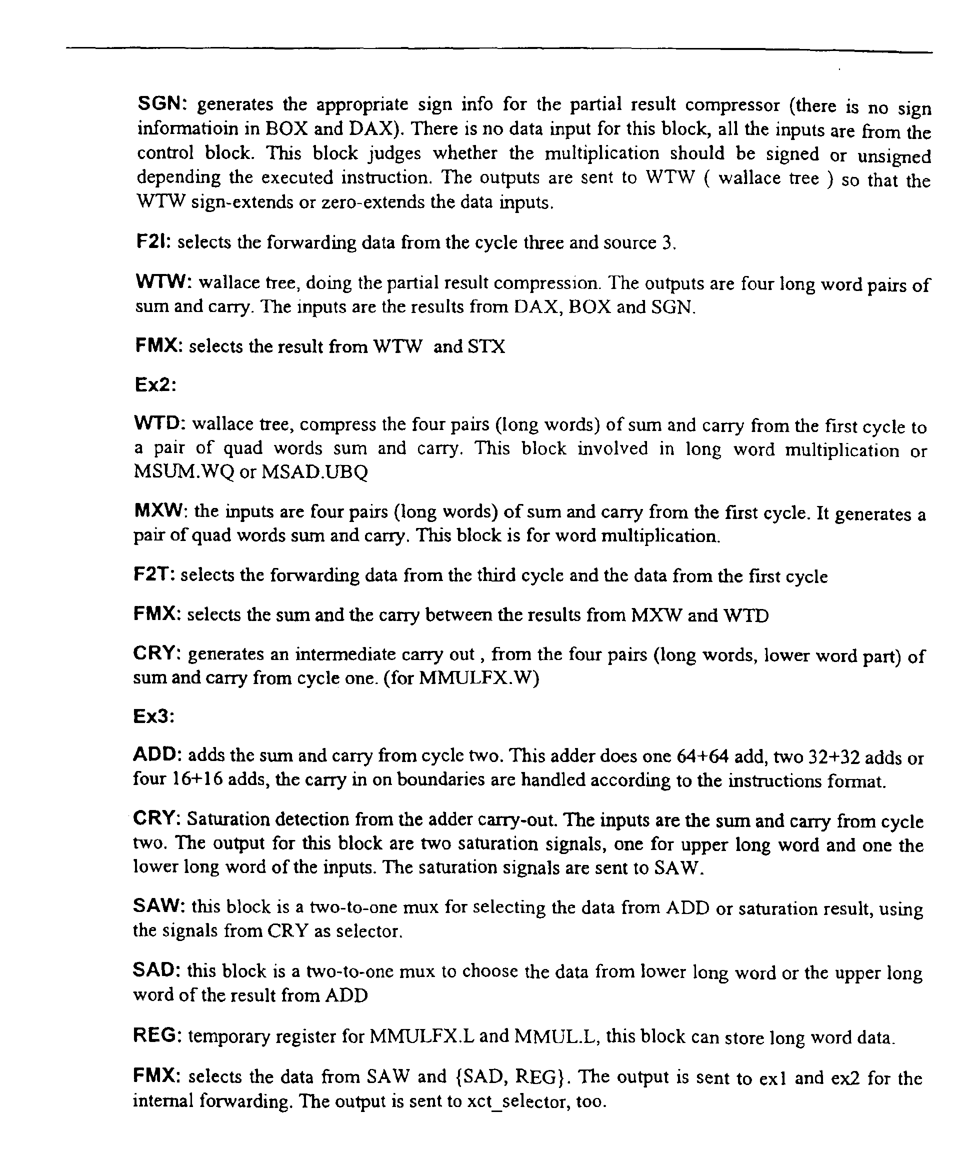

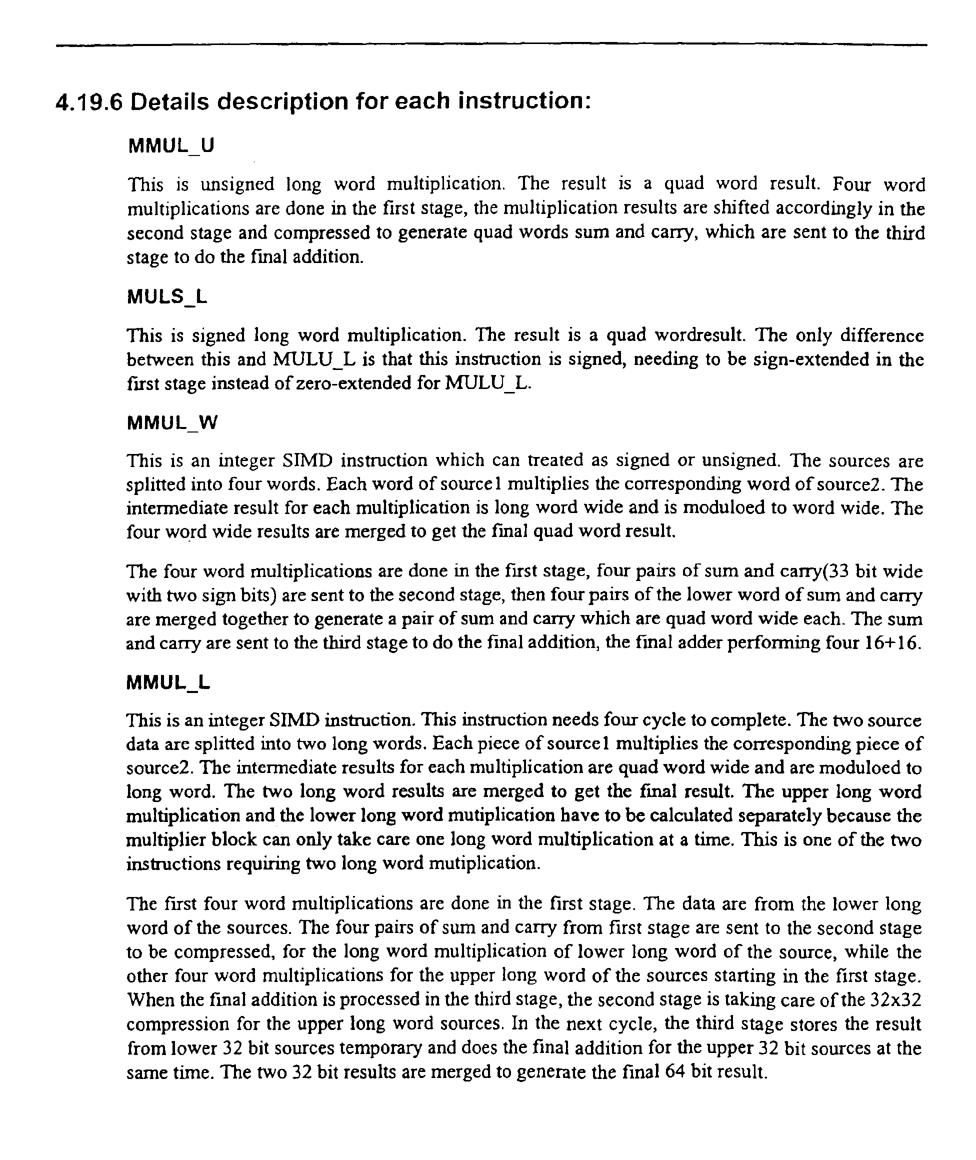

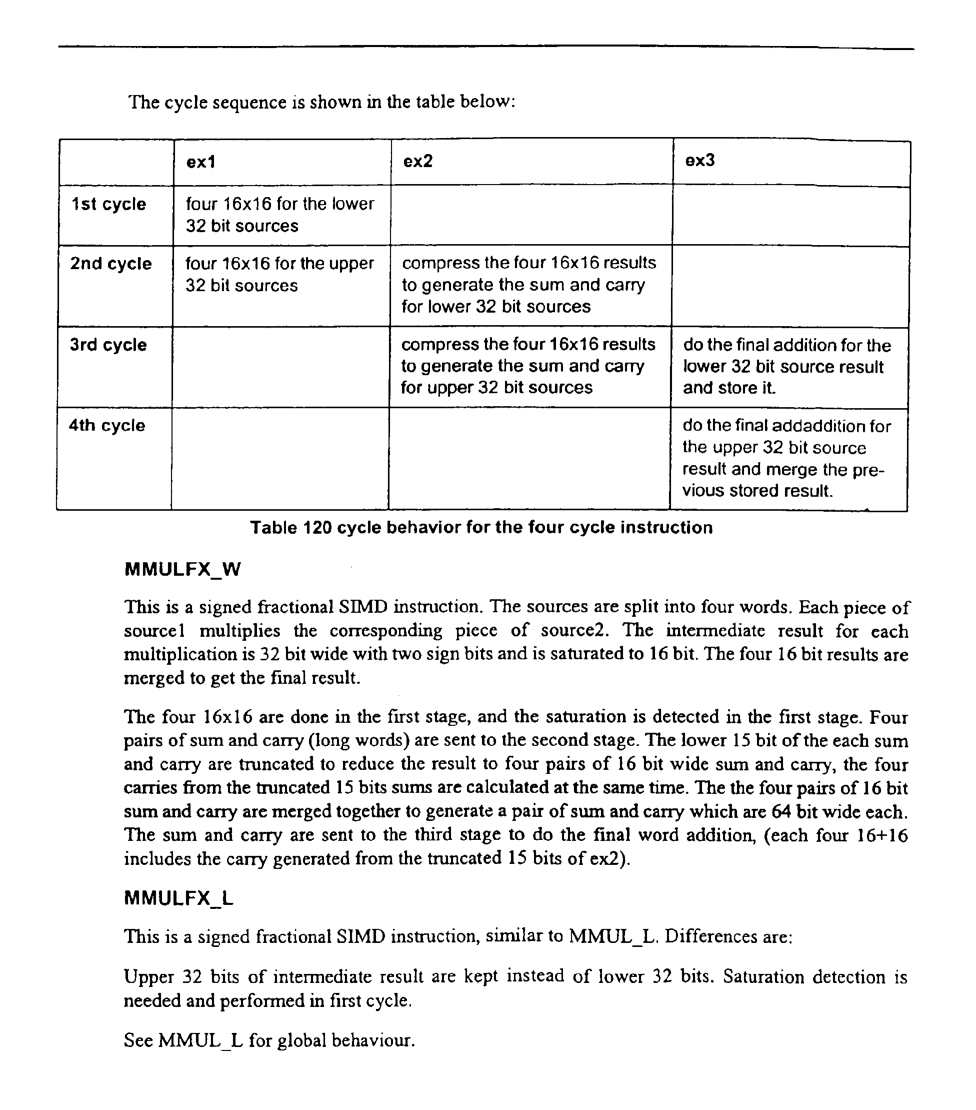

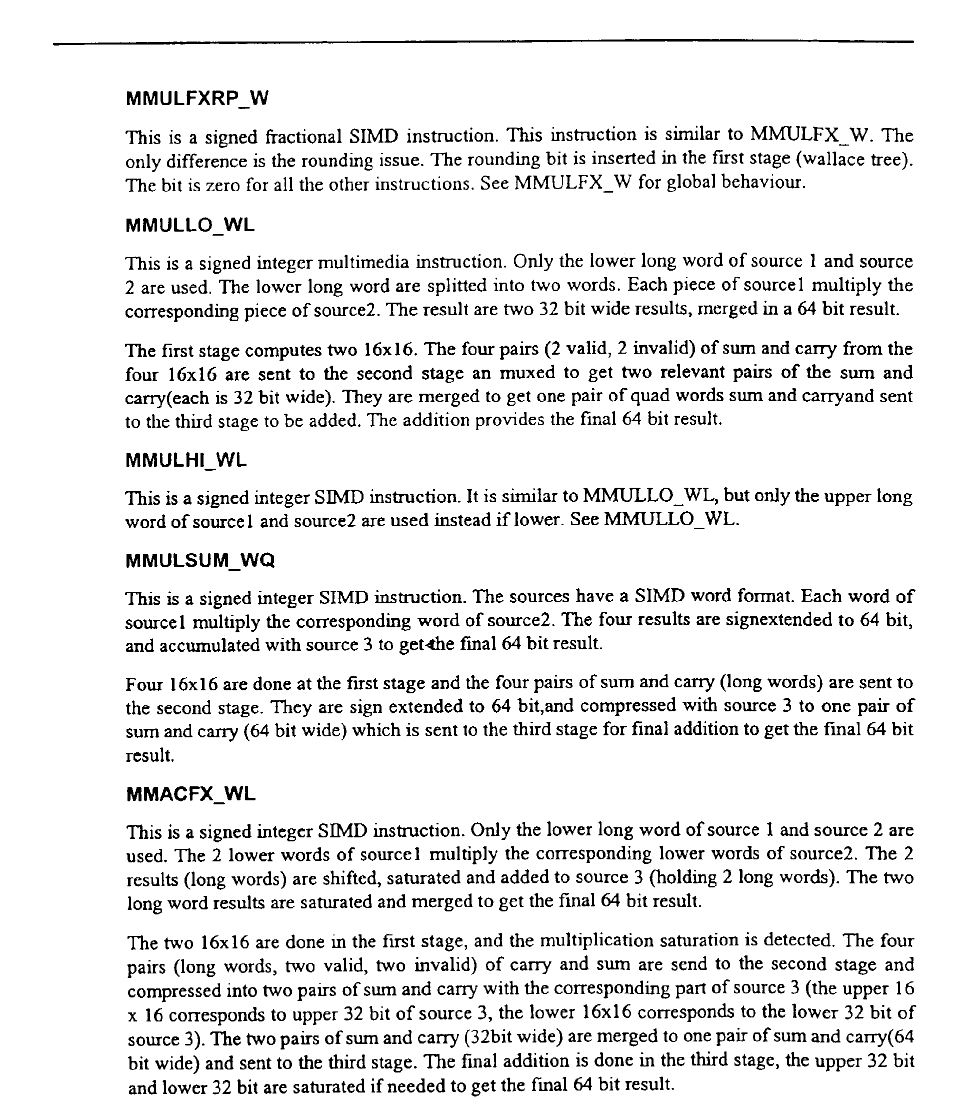

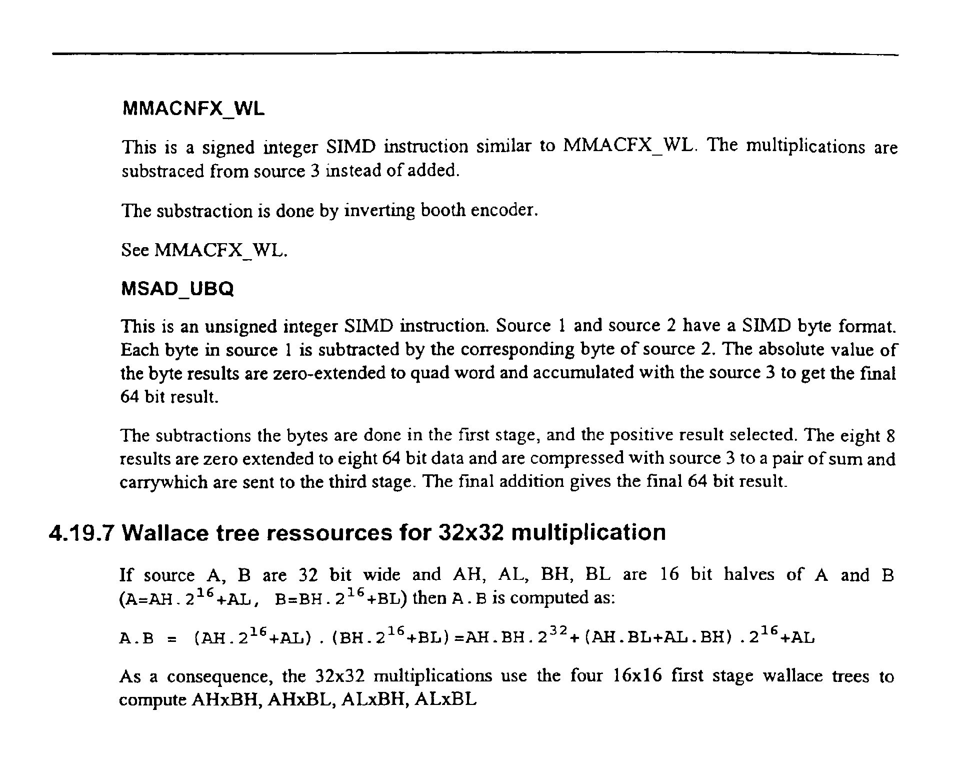

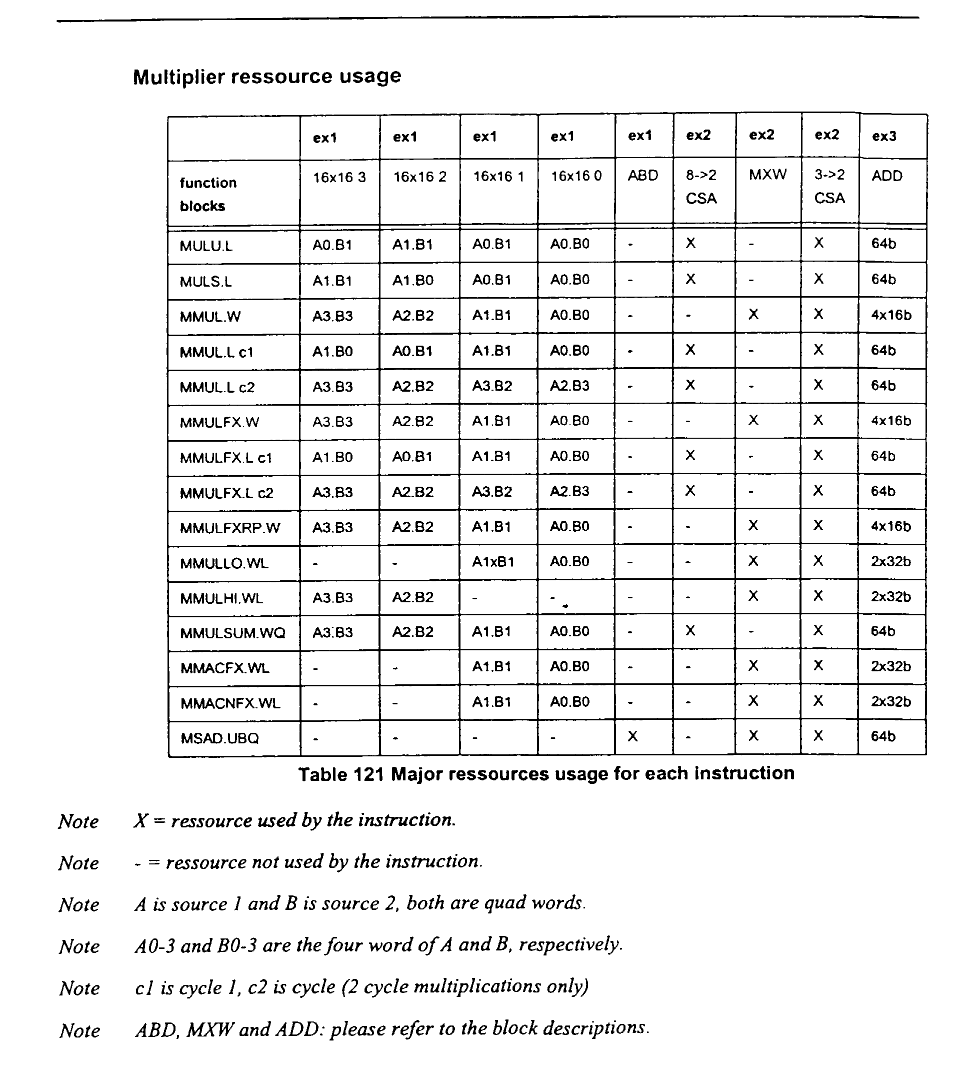

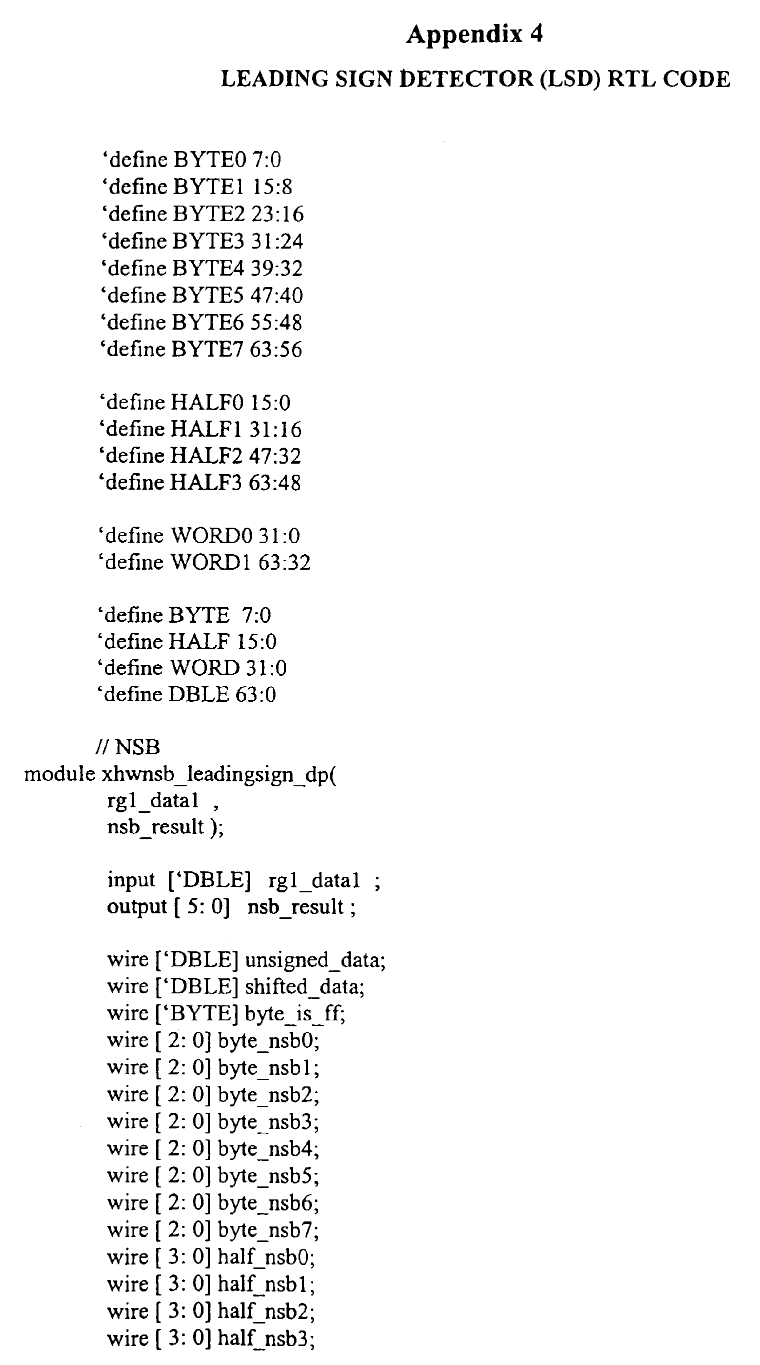

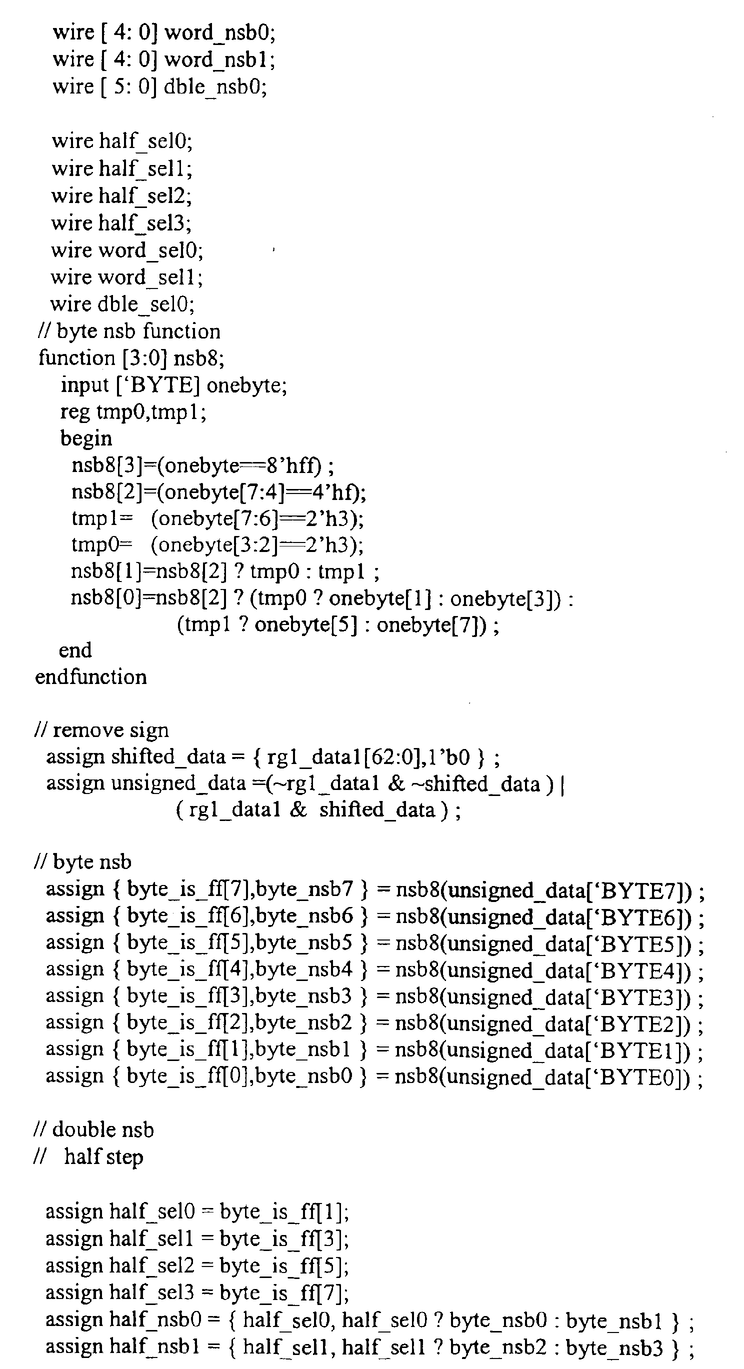

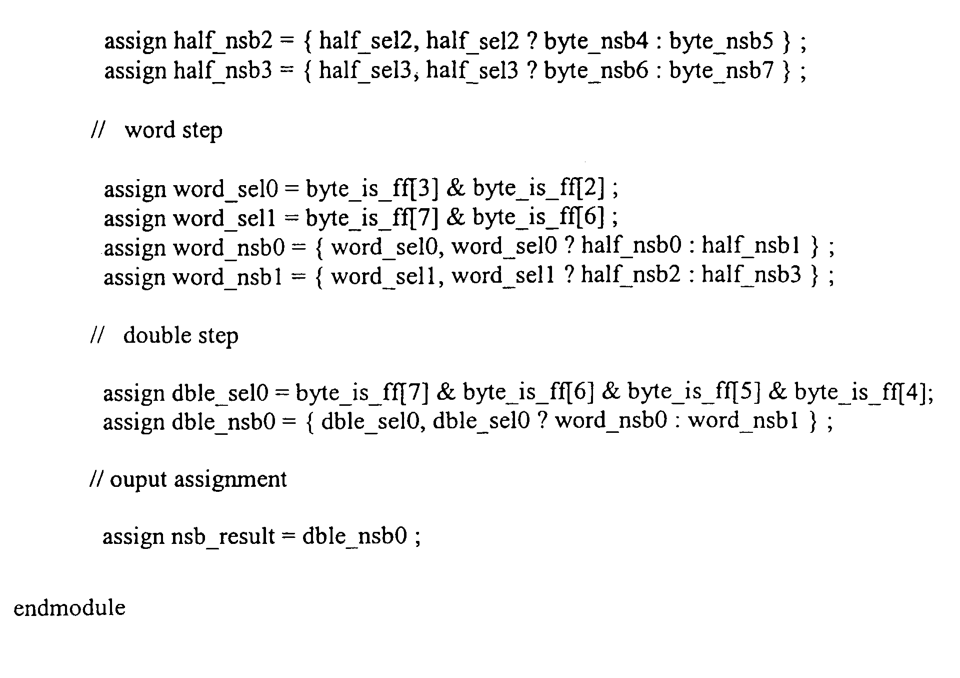

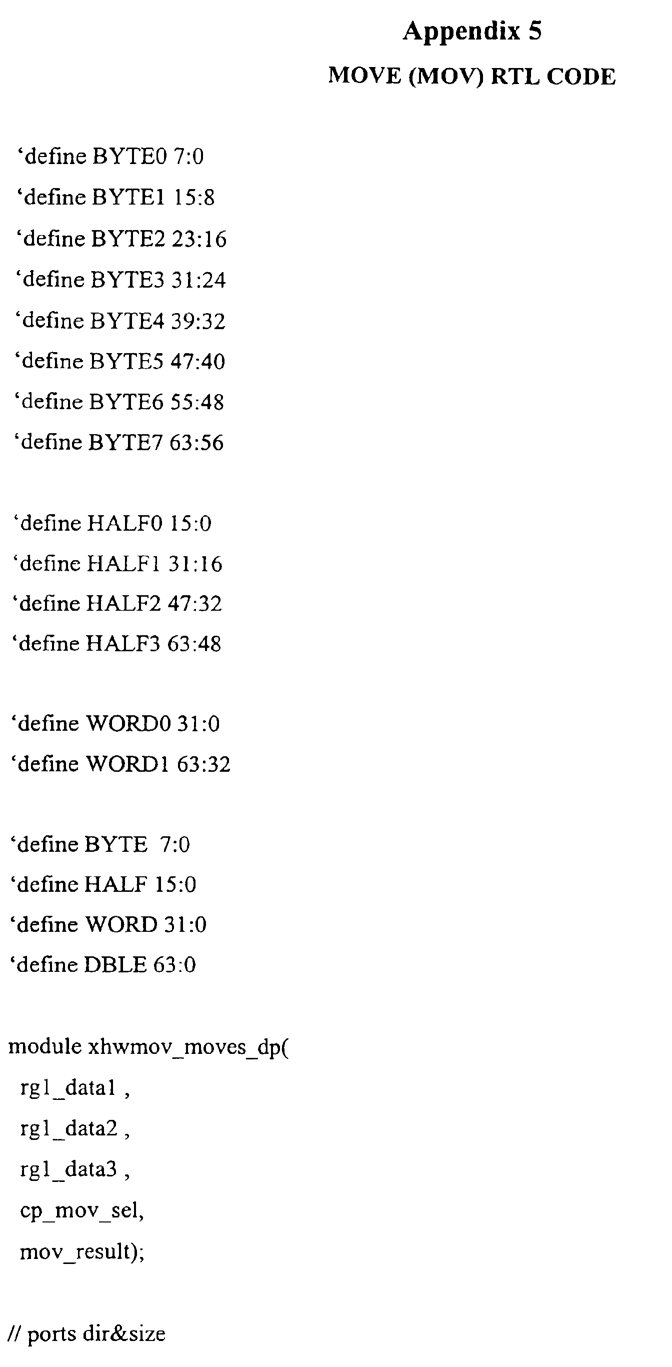

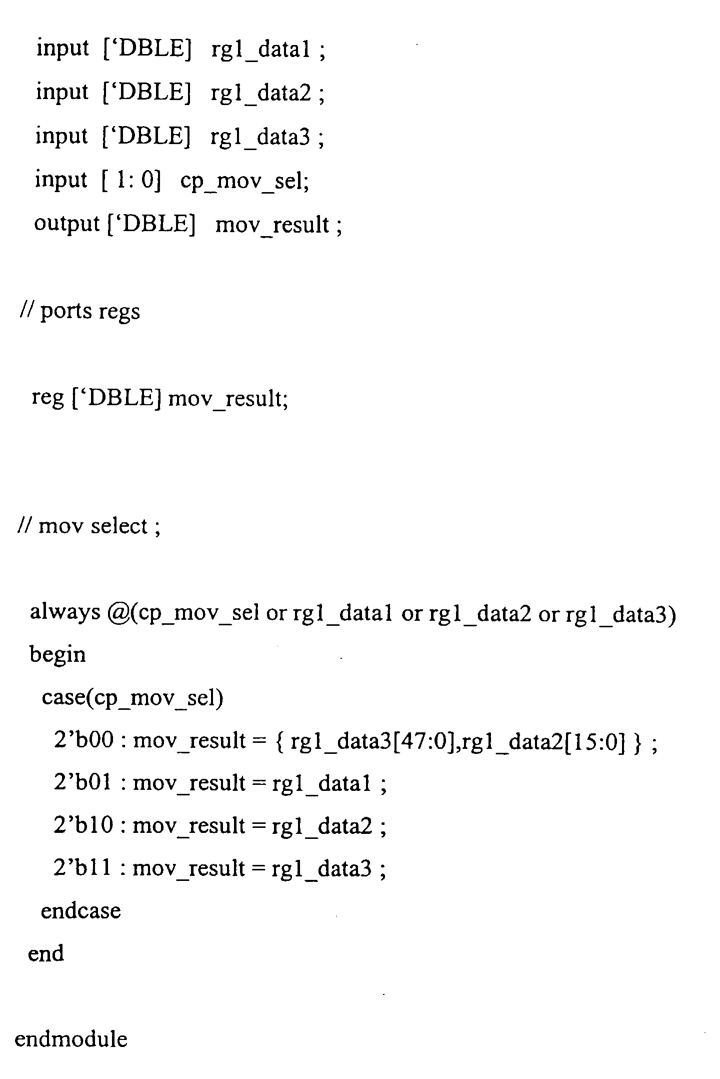

## Claims

1. A method for loading a constant number into a memory location, wherein the memory location comprises a plurality of sequential sections, comprising:
segmenting the constant number into a plurality of parts;
loading a first part of the plurality of parts into a first section of the plurality of sequential sections;
moving the first part in the first section to a second section of the plurality of sequential sections; and
loading a second part of the plurality of parts into the first section.

2. The method of claim 1 wherein the memory location comprises a register.

3. A method for loading a constant number comprising a plurality of parts, into a destination memory location, comprising:
shifting a first memory location comprising a plurality of sequential sections by a total number of bits in a section of the first memory location;
loading a part of the constant number into a section of a second memory location comprising a second plurality of sequential sections;
determining a result by logically combining the first memory location and the second memory location; and
storing the result in the destination memory location.

4. The method of claim 3 wherein the logically combining is bit-wise ORing.

5. The method of claim 3 wherein the shifting is left-shifting with zeros being shifted in at the right end of the first memory location.

6. The method of claim 3 further comprising loading a first part of the constant number into the first memory location before the shifting of the first memory location.

7. The method of claim 6 wherein loading a first part of the constant number comprises sign-extending the first part in the first memory location.

8. The method of claim 3 wherein the loading a part of the constant number into a section of a second memory location comprises loading a second part of the constant number into a first section of the second memory location and zero-extending the second part.

9. A method for loading a constant number into a register from a plurality of instructions, wherein an instruction data field from the plurality of instructions comprises a part of the constant number, comprising:
loading a first part of the register with a first instruction data field from the plurality of instructions;
moving the first instruction data field from the first part of the register to a second part of the register, such that the second part of the register comprises the first instruction data field and the first part of the register is zero-filled;
performing a logical OR operation on a second instruction data field from the plurality of instructions with the first part of the register to produce a first result; and
storing the first result in the first part of the register.

10. The method of claim 9 wherein the shifting the first instruction data field, performing a logical OR operation, and storing the first result are processed in a cycle.

11. The method of claim 9 wherein the register is 64 bits in length, and each instruction data field comprises an intermediate field of upto 16 bits in length.

12. The method of claim 9 further comprising:
moving the first instruction data field from the second part of the register to a third part of the register, such that the third part of the register comprises the first instruction data field;
moving the first result from the first part of the register to the second part of the register, such that the second part of the register comprises the first result, and the first part of the register is zero-filled;
performing a logical OR operation on a third instruction data field from the plurality of instructions and the first part of the register to produce a second result; and
storing the second result in the first part of the register.

13. The method of claim 12 wherein the moving the first instruction data field, moving the first result, performing a logical OR operation, and storing the second result are processed in a timing cycle.

14. A method, using a computer, for determining a number of sign bits comprising:
counting a total number of sign bits in the binary number stored in a first memory location;
determining a result by subtracting one from the total number; and
storing the result in a second memory location;

15. The method of claim 14, wherein the sign bits are counted on a byte format for a first plurality of bits of the result, and then by byte on a full double format for a second plurality of bits of the result.

16. The method of claim 14, wherein the result is determined in one pipeline execution cycle.

17. A method, using a computer, for normalizing a binary number comprising:
counting a total number of sign bits in the binary number stored in a first memory location;
determining a result by subtracting one from the total number;
storing the result in a second memory location; and
obtaining a normalized number by shifting the binary number by the result.

18. The method of claim 17, wherein one instruction comprises:
counting the total number of sign bits; determining the result by subtracting one from the total number; and storing the result in the second memory location.

19. The method of claim 17, wherein the sign bits are counted on a byte format for a lower plurality of bits of the result, and then by byte on a full double format for a higher plurality of bits of the result.

20. The method of claim 17, wherein counting the total number of sign bits comprises counting the total number of consecutive bits with the same bit value as a most significant bit, wherein the counting starts at the most significant bit and continues to the least significant bit with the same bit value as the most significant bit.

21. The method of claim 17, wherein the normalized number is used in a Digital Signal Processing (DSP) application.

22. An instruction in a computer system comprising:
determining a result by counting the number of consecutive sign bits in a first register;
subtracting one from the result; and
storing the result in a second register.

23. The method of claim 22, wherein the instruction comprises 32 bits and the first and second registers comprise 64 bits.
